# EUROPEAN PATENT SPECIFICATION

(11) **EP 2 691 908 B1**
(45) Date of publication and mention of the grant of the patent: **05.12.2018**
(21) Application number: 12763250.3
(22) Date of filing: 27.03.2012
(51) Int. Cl.: G06F 21/55, G06F 21/52, G06F 21/30, G06F 11/30, G06F 21/10, G06F 13/14

(54) **SYSTEM AND METHOD FOR VIRTUAL MACHINE MONITOR BASED ANTI-MALWARE SECURITY**
SYSTEM UND VERFAHREN FÜR EINEN VIRTUELLEN GERÄTEMONITOR MIT SICHERHEIT GEGEN MALWARE
SYSTÈME ET PROCÉDÉ POUR SÉCURITÉ ANTI-MALICIELS BASÉE SUR UN MONITEUR DE MACHINE VIRTUELLE

(30) Priority: 28.03.2011 US 201113073810; 28.03.2011 US 201113073791; 28.03.2011 US 201113073842; 28.03.2011 US 201113073853; 28.03.2011 US 201113073864; 29.03.2011 US 201113074741; 29.03.2011 US 201113074925; 29.03.2011 US 201113074947; 29.03.2011 US 201113075049; 29.03.2011 US 201113075072; 29.03.2011 US 201113074831; 29.03.2011 US 201113075101; 31.03.2011 US 201113077270; 31.03.2011 US 201113076537; 31.03.2011 US 201113077305; 31.03.2011 US 201113077227; 31.03.2011 US 201113076512; 31.03.2011 US 201113076480; 31.03.2011 US 201113076473; 31.03.2011 US 201113076493
(43) Date of publication of application: 05.02.2014
(73) Proprietor: McAfee, LLC, Santa Clara, CA 95054 (US)
(72) Inventor: SALLAM, Ahmed Said, Cupertino, California 95014 (US)
(74) Representative: Goddar, Heinz J.
(86) International application number: PCT/US2012/030702
(87) International publication number: WO 2012/135192

(56) References cited:
- US-A- 6 049 289
- US-A1- 2003 229 794
- US-A1- 2007 056 030
- US-A1- 2007 067 590
- US-A1- 2009 165 133
- US-A1- 2009 328 195
- US-B1- 6 693 965
- US-B1- 7 239 709

## Description

### TECHNICAL FIELD

The present invention relates generally to computer security and malware protection and, more particularly, for a system and method virtual-machine-monitor-based anti-malware security.

### BACKGROUND

Native operating system services can prevent security software from installing arbitrary hooking within the kernel of operating systems. Security software is thus prevented from filtering all behaviors of an electronic device, including potentially malicious actions by malware. Malware may include, but is not limited to, spyware, rootkits, password stealers, spam, sources of phishing attacks, sources of denial-of-service-attacks, viruses, loggers, Trojans, adware, or any other digital content that produces malicious activity.

The filtering functionality provided by the operating system may be limited, and only available on timelines decided by the operating system vendor. Malware can operate and reside at the same level as security software, particularly in the operating system kernel and thus compromise both the operating system and the integrity of the security software itself.

Many forms of aggressive kernel mode malware tamper with user mode memory to accomplish malicious tasks such as injecting malicious code dynamically, modifying user mode code sections to alter execution paths and redirect into malicious code, and modify user mode data structures to defeat security software. Additionally, some malware may attack anti-malware applications and processes from the kernel by tampering with process memory code and data sections to deceive the detection logic.

Kernel mode rootkits and other malware employ various methods to hide their presence from user mode applications and kernel mode device drivers. The techniques used may vary depending upon where the infection takes place. For example, malware attacking the kernel active process list of an operating system to delist or unlink a rootkit or other malware process. Other malware may tamper with the code sections of process access and enumeration functions. US2009/328195 A1 discloses authenticating, during a boot process, boot logic modules with reference to corresponding secure authentication values. Memory access requests are trapped into a hypervisor logic in order to control memory access in accordance with a policy.

US2007/067590 A1 discloses accessing a first address of a first protected region of memory in a registry and in response to a second program making a request to access a second address of a second protected region of memory, and deciding whether the second program is registered in the registry. If the second program is registered, the second address is translated to a physical address, and the validity of a control register associated with a page table is checked.

US2003/229794 A1 discloses permitting the execution of system management mode (SMM) code during secure operations in a microprocessor system. A system management interrupt (SMI) is directed to a handler in a secure virtual machine monitor (SVMM). The SMI is then redirected to SMM code located in a virtual machine (VM) that is under the security control of the SVMM.

US2007/056030 A1 discloses network security and network traffic monitoring through processing of network traffic in accordance with provisioned rules and policies.

### SUMMARY

In one embodiment, a system for securing an electronic device includes a memory, a processor, one or more operating systems residing in the memory for execution by the processor, a resource of the electronic device communicatively coupled to the operating system, a virtual machine monitor configured to execute on the electronic device at a level below all of the operating systems of the electronic device accessing the resource, and a security agent configured to execute on the electronic device at a level below all operating systems of the electronic device accessing the resource. The virtual machine monitor is configured to intercept a request of the resource made from a level above the virtual machine monitor and inform the security agent of the request. The security agent is configured to determine whether the request is indicative of malware.

In another embodiment, a system for securing an electronic device includes a memory, a processor, one or more operating systems residing in the memory for execution by the processor, a resource of the electronic device communicatively coupled to the operating system, a virtual machine monitor configured to execute on the electronic device at a higher priority than all of the operating systems of the electronic device accessing the resource, and a security agent configured to execute on the electronic device at a higher priority than all of the operating systems of the electronic device accessing the resource. The priority is defined by the processor. The virtual machine monitor is configured to intercept a request of the resource made from an entity with less priority than the virtual machine monitor and inform the security agent of the request. The security agent is configured to determine whether the request is indicative of malware.

In yet another embodiment, a system for securing an electronic device includes a memory, a processor, one or more operating systems residing in the memory for execution by the processor, a resource of the electronic device coupled to the operating system, a virtual machine monitor configured to execute on the electronic device on a more privileged ring of execution than all of the operating systems of the electronic device accessing the resource, and a security agent configured to execute on the electronic device on a more privileged ring of execution than all operating systems of the electronic device. The virtual machine monitor is configured to intercept a request of the resource, the request made from a less privileged ring of execution than the virtual machine monitor and inform the security agent of the request. The security agent is configured to determine whether the request is indicative of malware.

In still yet another embodiment, a method for securing an electronic device includes, at a level below all of the operating systems of the electronic device accessing a resource, intercepting a request of the resource of the electronic device made from a higher level and determining whether the request is indicative of malware. The resource is communicatively coupled to the operating system.

In a further embodiment, a method for securing an electronic device includes, at a higher priority than all of the operating systems of the electronic device accessing a resource, intercepting a request of the resource made from an entity with less priority and determining whether the request is indicative of malware. Such priority is defined by a processor of the electronic device:
In another further embodiment, a method for securing an electronic device includes, comprising on a more privileged ring of execution than all of the operating systems of the electronic device accessing a resource, intercepting a request of the resource and determining whether the request is indicative of malware. The request is made from a less privileged ring of execution.

In yet another further embodiment, an article of manufacture includes a computer readable medium and computer-executable instructions carried on the computer readable medium. The instructions are readable by a processor. The instructions, when read and executed, for cause the processor to, at a level below all of the operating system of an electronic device accessing a resource, intercept a request of the resource of the electronic device made from a higher level and determine whether the request is indicative of malware. The resource is communicatively coupled to the operating system.

In still yet another further embodiment, an article of manufacture includes a computer readable medium and computer-executable instructions carried on the computer readable medium. The instructions are readable by a processor. The instructions, when read and executed, for cause the processor to, at a higher priority than all of the operating systems of the electronic device accessing the resource, intercept a request of the resource made from an entity with less priority and determine whether the request is indicative of malware. The priority is defined the processor.

In an additional embodiment, an article of manufacture includes a computer readable medium and computer-executable instructions carried on the computer readable medium. The instructions are readable by a processor. The instructions, when read and executed, for cause the processor to, on a more privileged ring of execution than all of the operating systems of the electronic device accessing a resource, intercept a request of the resource and determine whether the request is indicative of malware. The request is made from a less privileged ring of execution.

### BRIEF DESCRIPTION OF THE DRAWINGS

For a more complete understanding of the present invention, and the advantages thereof, reference is now made to the following written description taken in conjunction with the accompanying drawings, in which:
FIGURE 1 is an example embodiment of a system for protecting an electronic device from malware;
FIGURE 2 is an example embodiment of a system for a virtual-machine-monitor-based and security-rule-based configurable security solution for protecting an electronic device from malware;
FIGURE 3 is an example embodiment of a method for virtual machine monitor-based protection for an electronic device from malware;
FIGURE 4 is an example embodiment of a firmware-based and security-rule-based system for protecting an electronic device from malware;
FIGURE 5 is a more detailed view of an example embodiment of a firmware-based solution for protecting an electronic device from malware;
FIGURE 6 is an example embodiment of a method for firmware-based protection for an electronic device from malware;
FIGURE 7 is an example embodiment of a microcode-based system for protection of an electronic device against malware;
FIGURE 8 is an example embodiment of a method for microcode-based protection for an electronic device from malware;
FIGURE 9 is an example embodiment of a system for regulating software access to security-sensitive processor resources on an electronic device;
FIGURE 10 is an example embodiment of a processor resource control structure;
FIGURE 11 is an example embodiment of a method for regulating software access to security sensitive processor resources of an electronic device;
FIGURE 12 an example embodiment of a system for regulating software access for securing memory using below-operating system trapping on an electronic device;
FIGURE 13 is an illustration of example embodiments of memory maps;
FIGURE 14 is an example embodiment of a method for securing memory using below-operating system trapping of attempted access of an electronic device;
FIGURE 15 is an example embodiment of a system for protecting an operating system kernel of an electronic device;
FIGURE 16 is an example embodiment of an access map of trusted accesses to operating system and trusted driver components;
FIGURE 17 is an example embodiment of virtual memory further illustrating the access map of FIGURE 16;
FIGURE 18 is an example embodiment of a system for generating an access map of trusted accesses to operating system and trusted driver components; and
FIGURE 19 is an example embodiment of a method for protecting an operating system kernel of an electronic device;
FIGURE 21 is an example embodiment of a launching module in a system for providing a secured operating system execution environment;
FIGURE 22 is an example embodiment of an operating system execution environment for securely executing an operating system;
FIGURE 23 is an example embodiment of a disk mapping bitmap for use in a system or method of providing a secured operating system execution environment;
FIGURE 24 is an example embodiment of a method for launching a secured operating system execution environment;
FIGURE 25 is an example embodiment of a method of providing an operating system execution environment for securely executing an operating system;
FIGURE 26 is an example embodiment of a system for protecting a storage device from unauthorized access;
FIGURE 27 is an example embodiment of security rules for use with a system or method for protecting a storage device from unauthorized access;
FIGURE 28 is an example embodiment of a method for protecting a storage device from unauthorized access;
FIGURE 29 is an example embodiment of a system for securing an input/output path for write accesses between an application and an input/output device;
FIGURE 30 is an example embodiment of a method for securing an input/output path for write accesses between an application and an input/output device;
FIGURE 31 is an example embodiment of a system for securing an input/output path for read accesses between an application and an input/output device;
FIGURE 32 is an example embodiment of a method for securing an input/output path for read accesses between an application and an input/output device;
FIGURE 33 is an example embodiment of a system for detecting and repairing hidden processes on an electronic device;
FIGURE 34 is an example embodiment of a method for detecting and repairing hidden processes on an electronic device;
FIGURE 35 is an example embodiment of another system for detecting and repairing hidden processes on electronic device;
FIGURE 36 is an example embodiment of another method for detecting and repairing hidden processes on an electronic device;
FIGURE 37 is an example embodiment of yet another method for detecting and repairing hidden processes on an electronic device;
FIGURE 38 is an example embodiment of a system for securing access to the system calls of an operating system;
FIGURE 39 is an example embodiment of a system call table for use with a system or method of securing access to the system calls of an operating system;
FIGURE 40 is an example embodiment of a method for securing access to the system calls of an operating system;
FIGURE 41 is an example embodiment of a system for regulation and control of malicious, or potentially malicious code, on an electronic device;
FIGURE 42 is an example embodiment of a method for regulation and control of self-modifying code on an electronic device;
FIGURE 43 is an example embodiment of a method for modifying of malicious code on an electronic device;
FIGURE 44 is an example embodiment of a method for monitoring and tracking of related threads on an electronic device;
FIGURE 45 is an example embodiment of a system for securing memory and storage of an electronic device;
FIGURE 46 is an example embodiment of a method for securing memory and storage of an electronic device;
FIGURE 47 is an example embodiment of a system for securing access to the objects of an operating system;
FIGURE 48 is an example embodiment of a behavioral state map for use with a system or method of securing access to the objects of an operating system;
FIGURE 49 is an example embodiment of a method for securing access to the objects of an operating system;
FIGURE 50 is an example embodiment of a system for securing communication between drivers on an electronic device;
FIGURE 51 is an example illustration of interdriver communication;
FIGURE 52 is an additional illustration of example portions of an electronic device that a below-O/S security agent may protect;
FIGURE 53 is an example embodiment of a method for below-operating-system trapping and securing of interdriver communication in an electronic device;
FIGURE 54 is an example embodiment of a system for securing the attachment and detachment of driver filters on an electronic device;
FIGURE 55 is a more detailed illustration of the operation of an example device stack;
FIGURE 56 is an example illustration of device stacks that may have been compromised by malware acting to attach or detach driver filters;
FIGURE 57 is an example embodiment of a method for below-operating-system trapping of driver filter attachments in an electronic device;
FIGURE 58 is an example embodiment of a system for securing the loading or unloading of drivers on an electronic device;
FIGURES 59A and 59B are an example embodiment of a method for securing the loading or unloading of drivers on an electronic device;
FIGURE 60 is an example embodiment of a system for below-operating system trapping and securing loading of code into memory;
FIGURE 61 is an example illustration of how injected code may be gathered by an application to place inside a memory for execution;
FIGURE 62A shows an example illustration of the loading of an image of an application from disk to memory;
FIGURE 62B shows an example illustration of possible actions conducted after an image of an application is loaded in memory;
FIGURE 63 illustrates an additional example of malicious attacks on swapped content to inject code;
FIGURE 64 is an example embodiment of a memory map after a portion of memory has been determined to be malicious; and
FIGURE 65 is an example embodiment of a method for below-operating-system trapping of loading and executing of code in memory.

### DETAILED DESCRIPTION OF THE INVENTION

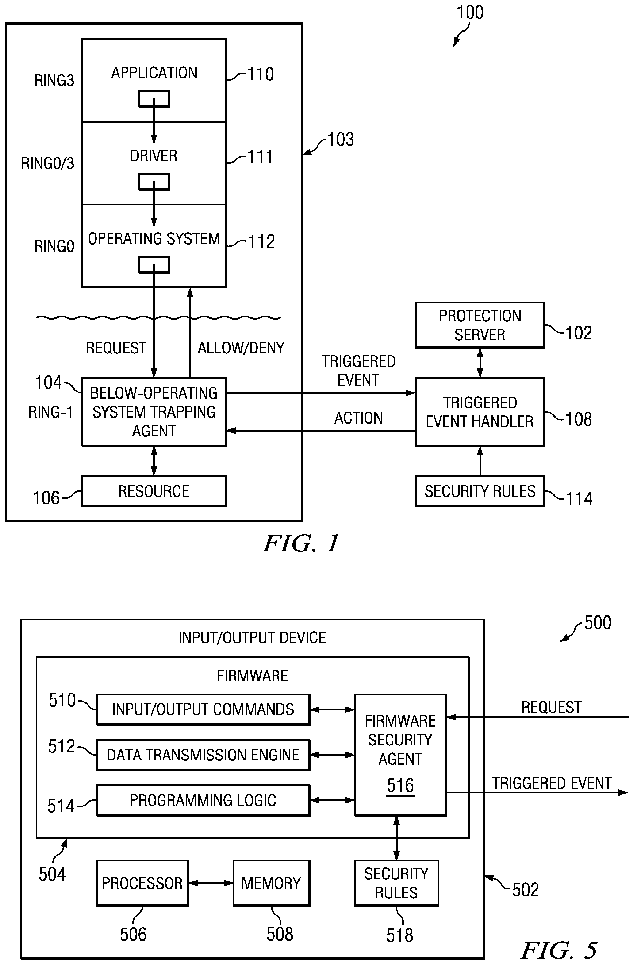

FIGURE 1 is an example embodiment of a system 100 for protecting an electronic device from malware. System 100 may include a below-operating system ("O/S") trapping agent 104 communicatively coupled to a triggered event handler 108. Below-O/S trapping agent 104 may be configured to trap various attempted accesses of a resource 106 of an electronic device 103. Below-O/S trapping agent 104 may be configured to create a triggered event associated with the trapped attempted access, and to send the triggered event to a triggered event handler 108. Triggered event handler 108 may be configured to consult one or more security rules 114 or a protection server 102 to determine how to handle the triggered event. Triggered event handler 108 may also be configured to evaluate the triggered event's propensity to be an indication of malware, or a malicious attempt to subvert the resources or operation of electronic device 103. Furthermore, triggered event handler 108 may be configured to provide a determination to below-O/S trapping agent 104 of whether the triggered event should be allowed or denied, or may be configured to yield another corrective action.

Below-O/S trapping agent 104 may be implemented at a lower functional level than the operating systems in electronic device 103. For example, below-O/S trapping agent 104 may intercept attempted accesses of resource 106 by an operating system 112, a driver 111, or an application 110. Below-O/S trapping agent 104 may be running on a processor of electronic device 103 without use of an operating system. In one embodiment, below-O/S trapping agent 104 may be operating on a bare-metal environment or execution level. In addition, below-O/S trapping agent 104 may be running at a higher execution priority, as defined by a processor of electronic device 103, than all operating systems of electronic device 103. For example, in the context of a hierarchical protection domain model using protection rings, wherein a lower number represents a higher priority, operating system 112 may be operating at "RingO" while below-O/S trapping agent 104 may be operating at "Ring -1." Drivers 111 and applications 110 may be operating at "RingO" or "Ring3." In some embodiments of processors, the concept of "Ring -1" may be known as "RingO privileged mode," and the concept of "RingO" may be known as "RingO non-privileged mode." Operation in "Ring -1" or "RingO privileged mode" may entail additional overhead and expense than "RingO" or "RingO privileged mode." Operating systems of electronic device 103 may run at Ring0.

Below-O/S trapping agent 104 may operate transparently to entities running at Ring0 or higher. Thus the attempted access of resource 106 may be requested by operating system 112 or another entity in the same manner whether below-O/S trapping agent 104 is present or not. Below-O/S trapping agent 104, when enforcing a received action, may allow the request to happen, may deny the request, or take other corrective action. To deny the request, below-O/S trapping agent 104 may simply not pass the request to the resource 106 or processor, or may provide a spoofed or dummy reply to the request to convince operating system 112 that the action has occurred.

By running at "Ring -1," at a higher priority than the pertinent operating systems of electronic device 103, or below the pertinent operating systems of electronic device 103, below-O/S trapping agent 104 may avoid much of the malware that plagues operating systems such as operating system 112. Malware may trick operating system 112 or even anti-malware software running at "RingO," as malware may also be running at "RingO" priority. However, malware on electronic device 103 must still make requests of resource 106 if it is to carry out malicious activities. Thus, trapping operations linked to sensitive resources may be better accomplished by a trapping agent running below the level of operating systems in electronic device 103.

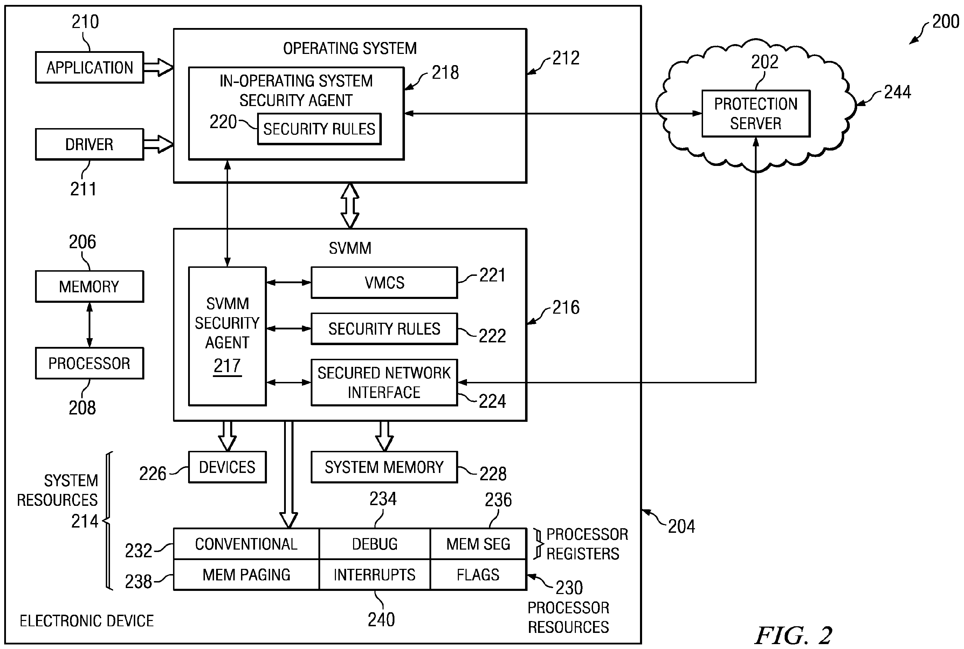

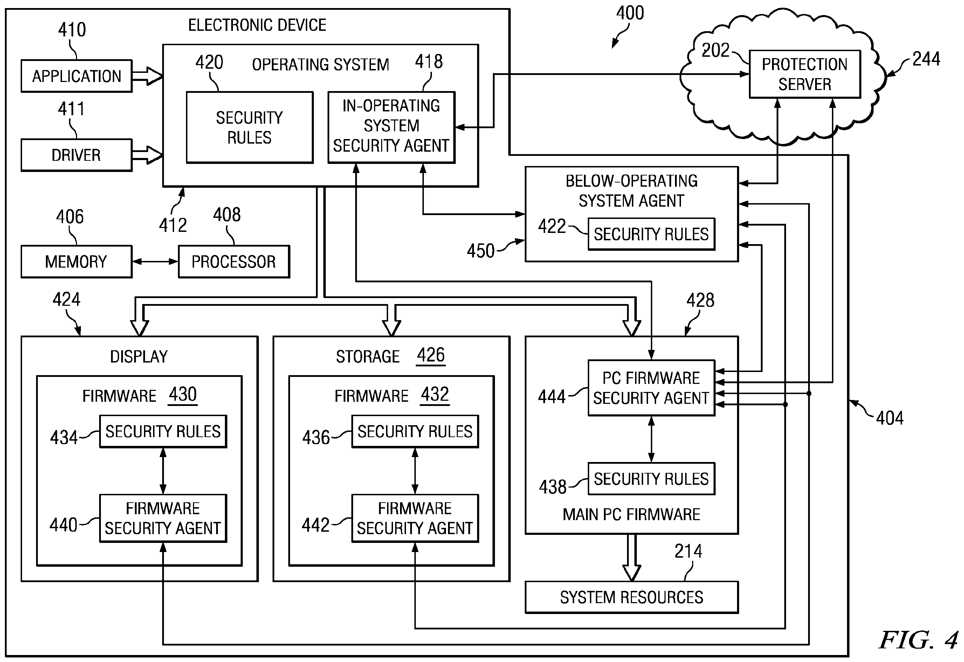

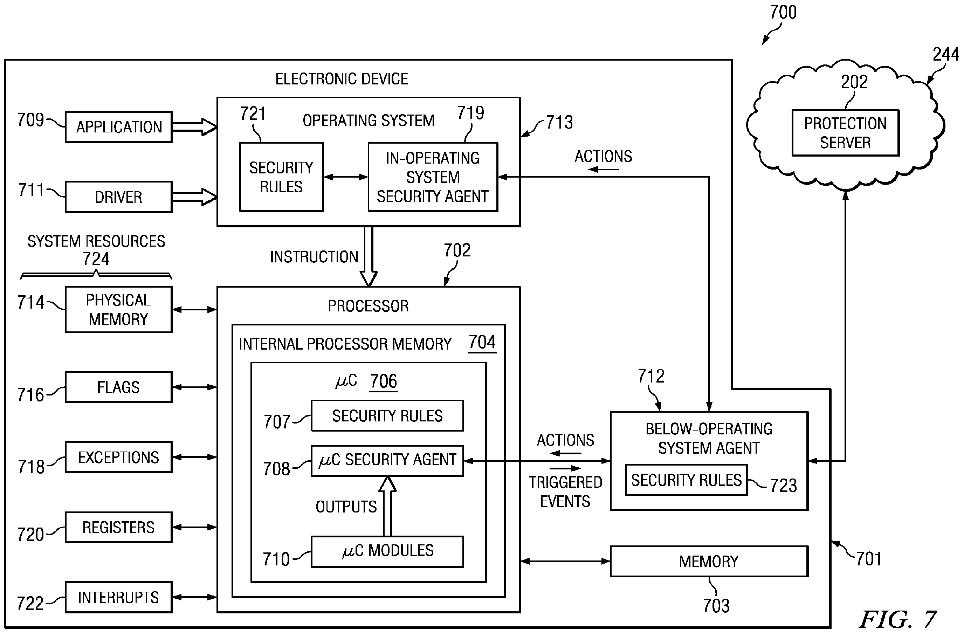

Below-O/S trapping agent 104 may be implemented in any suitable manner. In one embodiment, below-O/S trapping agent 104 may be implemented in a virtual machine monitor. Such an embodiment may operate below the level of operating systems as described for below-O/S trapping agent 104. Descriptions of an example of such an embodiment may be found in, for example, discussions of FIGURE 2, below, of a security virtual machine monitor 216. In another embodiment, below-O/S trapping agent 104 may be implemented in firmware. Such an embodiment may operate below the level of operating systems as described for below-O/S trapping agent 104. Descriptions of an example of such an embodiment may be found in, for example, discussions of FIGURES 4 and 5, below, of a firmware security agent 440, 516, or PC firmware security agent 444. In yet another embodiment, below-O/S trapping agent 104 may be implemented in microcode. Such an implementation may operate below the level of operating systems as described for below-O/S trapping agent 104. Descriptions of an example of such an embodiment may be found in, for example, discussions of FIGURE 7, below, of a microcode security agent 708. Below-O/S trapping agent 104 may be implemented in a combination of these embodiments.

Triggered event handler 108 may be embodied by one or more event handlers or security agents communicatively coupled together. Triggered event handler 108 and below-O/S trapping agent 104 may be implemented in the same security agent. In one embodiment, triggered event handler 108 may be operating at the same priority ring as below-O/S trapping agent. In another embodiment, triggered event handler 108 may be operating at the same priority as operating system 112, driver 111, or application 110. In still yet another embodiment, triggered event handler 108 may be implemented by two or more triggered event handlers wherein at least one triggered event handler operates at the same priority ring as below-O/S trapping agent, and at least one triggered event handler operates at the level of operating system 112, driver 111, or application 110. By running at the level of below-O/S trapping agent 104, triggered event handler 108 may similarly avoid the problems of "RingO" or "Ring3" malware infecting the agent itself. However, a triggered event handler 108 running at "RingO" or "Ring3" with operating system 112, driver 111, or application 110 may be able to provide context information about an attempted access of resource 106 that may be unavailable from the viewpoint of "Ring -1" agents.

Triggered event handler 108 may be implemented in any suitable manner. In one embodiment, triggered event handler 108 may be implemented in a virtual machine monitor or virtual machine monitor security agent. Such an embodiment may operate below the level of operating systems as described for triggered event handler 108. Descriptions of an example of such an embodiment may be found in, for example, discussions of FIGURE 2, below, of a security virtual machine monitor 216 or security virtual machine monitor security agent 217. In another embodiment, triggered event handler 108 may be implemented fully or in part in firmware. Such an embodiment may operate below the level of operating systems as described for triggered event handler 108. Descriptions of an example of such an embodiment may be found in, for example, discussions of FIGURES 4 and 5, below, of a firmware security agent 440, 516, or PC firmware security agent 444. Triggered event handler 108 may also be implemented in the below-O/S agent 450 in FIGURE 4, which may itself be implemented in such ways as in a virtual machine monitor, firmware, or microcode. In yet another embodiment, triggered event handler 108 may be implemented in microcode. Such an implementation may operate below the level of operating systems as described for triggered event handler 108. Descriptions of an example of such an embodiment may be found in, for example, discussions of FIGURE 7, below, of a microcode security agent 708. Triggered event handler 108 may also be implemented in the below-O/S agent 712 of FIGURE 7, which may itself be implemented in such ways as in a virtual machine monitor, firmware, or microcode. Triggered event handler 108 may be implemented in a combination of these embodiments.

In one embodiment, below-operating system trapping agent 104 and/or triggered event handler 108 may operate in a bare metal layer of electronic device 103. Below-operating system trapping agent 104 and/or triggered event handler 108 may operate without use of an operating system between them and the resource 106 that they are configured to protect. The resource 106 may include a processor, features of the processor, memory, the entities residing in the memory such as data structures, or the entities residing in the memory for execution by the processor such as functions, processes, or applications. Below-operating system trapping agent 104 and/or triggered event handler 108 may operate directly on the hardware of electronic device 103. Below-operating system trapping agent 104 and/or triggered event handler 108 may not require the use of an operating system such as operating system 112 to execute nor gain full access to resource 106.

Other operating systems may exist on electronic device 103 which do not participate in the relationship between entities at the level operating system 112, below-operating system trapping agent 104 and triggered event handler 108, and resource 106. For example, a pre-boot operating system may securely launch portions of electronic device, but not participate in the normal operation of electronic device in terms of handling requests from application 110, driver 111, and operating system 112 made of resource 106. In another example, electronic device 103 may contain motherboard components, plug-in cards, peripherals, or other components which contain their own sets of operating systems and processors to perform functions outside of the relationship between entities at the level operating system 112, below-operating system trapping agent 104 and triggered event handler 108, and resource 106. These operating systems may be embedded operating systems. Any of these operating systems might not be used for the execution of below-operating system trapping agent 104 and triggered event handler 108. Further, any of these operating systems might not access the resource 106 protected by trapping agent 104 and triggered event handler 108.

System 100 may include any combination of one or more below-operating system trapping agents 104 and one or more triggered event handlers 108. Descriptions of the below-operating system trapping agents 104 and triggered event handlers 108 may be found in descriptions of trapping agents, event handlers, and security agents in the figures that follow.

Resource 106 may include any suitable resource of an electronic device. For example, resource 106 may include registers, memory, controllers, or I/O devices. Descriptions of example embodiments of resource 106 may be found in descriptions of, for example, the system resources 214 of FIGURE 2, components such as display 430 and storage 432 as shown in FIGURE 4, or the system resources 724 of FIGURE 7 below.

Security rules 114 may include any suitable rules, logic, commands, instructions, flags, or other mechanisms for informing below-O/S trapping agent 104 about what actions to trap, or for informing triggered event handler 108 to handle an event based on a trapped action. Triggered event handler 108 may be configured to provide one or more of security rules 114 to below-O/S trapping agent. Descriptions of example embodiments of some or all of security rules 114 may be found, for example, in descriptions of security rules 222 of FIGURE 2, security rules 422, 434, 436, 438 of FIGURE 4, security rules 518 of FIGURE 5, or security rules 707, 723 of FIGURE 7 below.

Kernel mode and user mode entities such as application 110, driver 111, and operating system 112 of system 100 may be implemented in any suitable manner. Descriptions of example embodiments of application 110, driver 111, and operating system 112 of system 100 may be found in descriptions of, for example, application 210, driver 211 and operating system 212 of FIGURE 2; application 410, driver 411, and operating system 412 of FIGURE 4; and application 709, driver 711, and operating system 713 of FIGURE 7 below.

Electronic device 103 may be implemented in any suitable manner, such as in a computer, a personal data assistant, a phone, mobile device, server, or any other device configurable to interpret and/or execute program instructions and/or process data. Descriptions of example embodiments of electronic device 103 may be found in discussions of, for example, electronic device 204 of FIGURE 2, electronic device 404 of FIGURE 4, or electronic device 701 of FIGURE 7.

System 100 may be implemented in any suitable system for trapping attempted access of resources at a level underneath the operating systems of electronic device 103. System 100 may also be implemented in any suitable means for handling the attempted access by consulting security rules to determine whether the attempted access is malicious or not. For example, system 100 may be implemented by the systems and methods 200, 300, 400, 500, 600, 700, and 800 as described in FIGURES 2-8 below.

FIGURE 2 is an example embodiment of a system 200 for a virtual-machine-monitor-based and security-rule-based configurable security solution for protecting an electronic device from malware. System 200 may be an example embodiment of a system 100, implementing certain elements of system 100 in a virtual machine monitor. System 200 may include an electronic device 204 which is to be protected against malware by a configurable security solution. The configurable security solution of system 200 may include a security agent running below all operating systems, a security virtual machine monitor, a cloud-based security agent and an in-O/S behavioral security agent. The below-O/S security agent and security virtual machine monitor may be configured to guard access to system resources of the electronic device 204, including the resources used by the in-O/S behavioral security agent. The below-O/S security agent may be running in the security virtual machine monitor. The cloud-based security agent may be configured to provide malware detection information to the below-O/S security agent and to the in-O/S behavioral security agent, and to receive information regarding suspicious behavior possibly - associated with malware from the security virtual machine monitor and in-O/S behavioral security agent. The in-O/S behavioral security agent may be configured to scan the electronic device 204 for evidence of malware operating on the electronic device. System 200 may include one or more below-O/S security agents configured to trap attempted use of access to the resources of the electronic device 204, generate a triggered event corresponding to the attempt, consult security rules regarding the triggered event, and take corrective action if necessary regarding the attempt.

In one embodiment, system 200 may include protection server 202 communicatively coupled to one or more in-O/S security agents 218 and a security virtual machine monitor ("SVMM") security agent 217. SVMM security agent 217 may reside in a SVMM 216. SVMM 216 may reside and operate upon electronic device 204. In-O/S security agent 218 and SVMM security agent 217 may be communicatively coupled. Protection server 202, in-O/S security agent 218, SVMM security agent 217 and SVMM 216 may be configured to protect electronic device 204 from infections of malware.

SVMM security agent 217 may be an example embodiment of the triggered event handler 108 of FIGURE 1. SVMM 216 may be an example embodiment of the below-O/S trapping agent 104 of FIGURE 1.

Electronic device 204 may include a memory 208 coupled to a processor 206. Electronic device 204 may include one or more applications 210 or drivers 211 executing on electronic device for any suitable purpose. Electronic device 204 may include an operating system 212. Operating system 212 may be configured to provide access to system resources 214 of electronic device 204 to applications 210 or drivers 211. SVMM 216 may be configured to intercept such calls of operating system 212 of system resources 214. SVMM 216 and SVMM security agent 217 may operate below the level of operating system 212. For example, SVMM 216 and SVMM security agent 217 may operate directly on processor 206 in a privileged mode such as "Ring -1."

Processor 206 may comprise, for example a microprocessor, microcontroller, digital signal processor (DSP), application specific integrated circuit (ASIC), or any other digital or analog circuitry configured to interpret and/or execute program instructions and/or process data. In some embodiments, processor 206 may interpret and/or execute program instructions and/or process data stored in memory 208. Memory 208 may be configured in part or whole as application memory, system memory, or both. Memory 208 may include any system, device, or apparatus configured to hold and/or house one or more memory modules; for example, memory 208 may include read-only memory, random access memory, solid state memory, or disk-based memory. Each memory module may include any system, device or apparatus configured to retain program instructions and/or data for a period of time (e.g., computer-readable non-transitory media).

Protection server 202 may be operating on a network 244. Protection server 202 operating on network 244 may implement a cloud computing scheme. Protection server 202 may be configured to communicate with elements of electronic device 204 to update malware detection rules and information. Protection server 202 may be configured to receive information regarding suspicious activities originating from electronic device 204 and determine whether or not such suspicious activities are indications of malware infection. Operating system 212 may include one or more in-O/S security agents 218. In-O/S security agent 218 may be configured to receive monitoring and detection rules from protection server 202, such as in-O/S security rules 220. In-O/S security agent 218 may be configured to use the in-O/S security rules 220 received by protection server 202 to monitor and prevent suspicious activities on electronic device 204. In-O/S security agent 218 may be configured to report detected suspicious activities back to protection server 202. In-O/S security agent 218 may be configured to prevent malware operations and to report such preventions to protection server 202. If more than one in-O/S security agent 218 is present in system 200, each in-O/S security agent 218 may be configured to perform a designated portion of the trapping, validating, or other tasks associated with in-O/S security agent 218. Such portions may be defined by below-operating-system security agents. For example, one in-O/S security agent 218 may validate or investigate MOV instructions, while another in-O/S security agent 218 may validate or investigate JMP instructions. In-O/S security agent 218 may be configured to determine the life cycle of a particular page in memory. For example, in-O/S security agent 218 may know the processes and steps typically used by operating system 212 to allocate a page of memory. Similarly, in-O/S security agent 218 may know the processes and steps typically used by operating system 212 to load an image of an application in its loader. Such processes may follow a static pattern of operation. Thus, in-O/S security agent 218 may be configured to track the operation of operating system 212 to determine whether for a given action standard procedures were followed. In-O/S security agent 218 may communicate with SVMM security agent 217 to determine whether or not an operation trapped by SVMM security agent 217 generated the corresponding expected actions observed by in-O/S security agent 218. A discrepancy may indicate that malware has attempted to perform a system function outside of the normal operation of the operating system 212. Thus, for example in-O/S security agent 218 and SVMM security agent 217 may determine whether a page in question was loaded in memory directly by malware or was loaded by the operating system loader. Such a behavior may cause in-O/S security agent 218 or SVMM security agent 217 to report information to protection server 202, employ more aggressive trapping and checking, or take any other corrective measures.

In one embodiment, in-O/S security agent 219 may be configured to provide contextual information by embedding itself within operating system 212. For example, in-O/S security agent 219 may be configured to register itself or a subcomponent as a driver filter, and attach itself to a main driver to determine what the driver sees or does not see. By attached as a filter to NDIS.SYS, for example, in-O/S security agent 219 may be configured to report the file I/O operations seen by the operating system 212 drivers.

In another embodiment, in-O/S security agent 219 may be configured to provide such information observed from within operating system 219 to SVMM security agent 216 or other below-O/S security agents for comparison with information observed below the operating system. Discrepancies between the two sets of information may indicate a presence of malware attempting to hide itself. For example, in-O/S security agent 219 may hook or filter NDIS.SYS, and monitor for file writes to a particular file. SVMM security agent 216 may monitor input and output commands. If SVMM security agent 216 determined more writes than should have been seen based on the list of function calls seen by in-O/S security agent 219, then malware may be clandestinely writing to disk outside of the functions provided by operating system 212.

Network 244 may be implemented in any suitable network for communication, such as: the Internet, an intranet, wide-area-networks, local-area-networks, back-haul-networks, peer-to-peer-networks, or any combination thereof. Protection server 202 may use the reports submitted from various security agents 218 running on various electronic devices 204 to further detect malware by applying prevalence and reputation analysis logic. For example, a suspicious behavior identified on electronic device 204 may be synthesized into a rule for protection server 202 to proactively protect other electronic devices 204. Such a rule may be determined, for example, based on the number of times that a suspicious driver has been reported. For example, an unknown driver with a narrow or slow distribution pattern may be associated with malware. On the other hand, an unknown driver with a wide and fast distribution may be associated with a patch of a popular and widely available application. In another example, such a detected driver may have been determined by security software running on another electronic device to have accessed a website known to host malware. Such a driver may be determined to be associated with malware.

SVMM 216 may implement some or all of the security virtual machine monitoring functions of system 200. SVMM 216 may be configured to intercept access to system resources-such as registers, memory, or I/O devices-to one or more operating systems running on an electronic device. The security virtual machine monitoring functions of system 200 may be implemented using SVMM 216, or any other virtual machine monitor configured to protect electronic device 204 according to the teachings of this disclosure. SVMM 216 may be configured to control and filter actions taken by operating system 212 while operating system 212 attempts to access system resources 214, on behalf of itself or on behalf of applications 210 running through operating system 212. SVMM 216 may run underneath operating system 212 on electronic device 204 and may have control over some or all processor resources made available to operating system 212 and application 210 or driver 211. Application 210 may comprise any application suitable to run on electronic device 204. Driver 211 may comprise any driver suitable to run on electronic device 204. The processor resources made available for control by SVMM 216 may include those resources designated for virtualization. In one embodiment, SVMM 216 may be configured to virtualize system resources 214 for access by operating system 212, application 210, or driver 211. As examples only, such system resources 214 may include input-output devices 226, system memory 228, or processor resources 230. As examples only, processor resources 230 may include conventional registers 232, debug registers 234, memory segmentation 236, memory paging 238, interrupts 240 or flags 242. I/O devices 226 may include access to such devices such as keyboard, display, mice, or network cards.

SVMM 216 may be configured to trap the execution of operations originating from operating system 212 to access system resources 214. SVMM 216 may include a control structure configured to trap specific attempted accesses of system resources 214. Any suitable control structure may be used. In one embodiment, such a control structure may include virtual machine control structure ("VMCS") 221. SVMM 216 may be configured to trap such execution by manipulating flags inside of VMCS 221. SVMM 216 may be configured to trap any suitable operation of operating system 212, application 210, or driver 211 involving an access of system resources 214. Such trapped operations may include, for example: reading, writing and execution of particular pages of memory in system memory 228; loading and storing a value to or from a processor register 230; or reading and writing to or from I/O devices 226. Any such operations may cause a Virtual Machine Exit ("VM Exit"), which may be trapped by SVMM 216. SVMM 216 may be configured to trap the generation of interrupts 240, which may be generated by the processor 208 or initiated by elements of operating system 212. SVMM 216 may be configured to trap the attempted reading and writing to or from I/O device 226 by trapping IN and OUT instructions. SVMM may be configured to trap such instructions by trapping access to mechanisms, for example, of Virtualization Technology Directed I/O ("VTd"). VTd may allow I/O device virtualization according to processor 208. By accessing VTd facilities, SVMM security agent 217 may be configured to determine devices connected by VTd, determine meta information from operating system 212, ports on the I/O device, or other suitable information. SVMM security agent 217 may be configured to control or trap the operation of such virtualized device access. For example, SVMM security agent 217 may be configured to determine I/O permission maps, containing I/O assignments given to programmable I/O ports. SVMM security agent 217 may be configured to trap access to such permission maps, which may be done by malware, or use such permission maps to determine the relationship of entities on operating system 212 and a request of an I/O device.

In one embodiment, SVMM security agent 217 may be operating in SVMM 216. In another embodiment, SVMM security agent 217 may be operating outside of SVMM 216, but may be communicatively coupled to SVMM 216. In such an embodiment, SVMM security agent 217 may be operating below the level of operating systems of electronic device 204 such as operating system 212. SVMM security agent 217 may be operating at the same level and/or the same priority of SVMM 216. SVMM security agent 217 may be configured to handle events triggered by or trapped by SVMM 216. SVMM security agent 217 may be configured to access contents of memory 228 or a disk at a level below the operating system 212 so as to examine the contents free of interference of kernel-level rootkits. Furthermore, some operations of SVMM security agent 217 may be implemented by SVMM 216, and some operations of SVMM 216 may be implemented by SVMM security agent 217.

SVMM security agent 217 may be configured to set the operation of SVMM 216 in terms of what actions will cause a trap or trigger. In one embodiment, SVMM 216 may be configured to communicate the detection of trapped actions to SVMM security agent 217. SVMM security agent 217 may be configured to consult security rules 222 to determine whether the trapped actions indicate malware or malicious activities, and based upon security rules 222 may provide indications to SVMM 216 about what subsequent action to take. Such subsequent action may include allowing the attempted action, disallowing the attempted action, or taking other corrective steps.

The operation of trapping the attempted access and execution of system resources 214 by SVMM 216 and SVMM security agent 217 may be coordinated through information gathered by in-O/S security agent 218. In-O/S security agent 218 may be configured to provide context to the trapping and handling operations of SVMM 216 and SVMM security agent 217. For example, a particular operating system data structure may normally only be written to by a specific application or service. In-O/S security agent 218 may determine what applications or processes are currently visibly running on operating system 212 and communicate the information to SVMM security agent 217. If the specific application or service is not listed as visibly running, then the attempted write to the data structure may have come from an unauthorized application or process.

In-O/S security agent 218 may be configured to communicate with SVMM 216 and/or SVMM security agent 217 via hypercalls. Hypercalls may be implemented with a descriptor table defining available requests that may be used, as well as associated input and output parameters. Such a descriptor table may define one or more requests possible for in-O/S security agent 218 to communicate with SVMM 216 and/or SVMM security agent 217. Such a descriptor table may also define where input and output parameters for such a request may be located in memory.

In-O/S security agent 218, SVMM security agent 217, and protection server 202 may be configured to authenticate each other. Each of security agent 212, SVMM security agent 217 and protection server 202 may be configured to not continue communications with each other unless each of the entities is authenticated. SVMM 216 may be configured to locate the in-O/S security agent 218 image in memory 206, and use cryptographic signing algorithms to verify the in-O/S security agent 218 image in memory 206. Authentication between protection server 202, in-O/S security agent 218 and SVMM security agent 217 may use any suitable method, including cryptographic hashing and/or signing algorithms. In one embodiment, such authentication may involve the exchange of a private secret key. In-O/S security agent 218 may be configured to receive a secret key from protection server 202 to verify the instance of SVMM security agent 217.

In-O/S security agent 218 may have contextual information regarding the operation of operating system 212. In-O/S security agent 218 may be configured to communicate with SVMM security agent 217 to provide such contextual information. SVMM security agent 217 may instruct SVMM 216 on, for example, how to define certain pages of memory, or which registers to trap.

SVMM 216 may be configured to trap access attempts to system resources 214 defined by SVMM security agent 217. For example, for traps of memory access, SVMM 216 may be configured to trap operations such as read, write or execute. For trapping access to processor registers 230, SVMM 216 may be instructed to trap operations including load, store, or read register values. For trapping I/O operations, I/O devices 226, SVMM 216 may be instructed to trap operations such as input or output to keyboards, mice, or other peripherals. SVMM security agent 217 and/or other below-operating system security agents in the figures below may, in conjunction with in-operating system security agents, may be configured to determine for an I/O operation, the identity of a target I/O device 226, target operation to be performed upon the I/O device 226, and the data to be transferred.

SVMM security agent 217 may be configured to determine contextual information, such as what entity of operating system 212 has attempted to access a resource of electronic device 204, or to what entity of operating system 212 a resource may belong. SVMM security agent 217 may be configured to make such determinations through any suitable method. In one embodiment, SVMM security agent 217 may be configured to access contextual information for such determinations from in-operating system security agent 218. In another embodiment, SVMM security agent 217 may be configured to, directly or indirectly, access a call stack of operating system 212 and/or an execution stack of processor 208 to determine the order of calls made by different processes or applications of operating system 212. An Execution Instruction Pointer may point to the instruction causing the trigger, while an Execution Stack Pointer and Execution Base Pointer may point to the stack frames. By walking through the Execution Base Pointer through the stack, previous function calls may be identified providing context for the operation at hand. Such stacks may indicate the operation that was attempted as well as a source memory location. In yet another embodiment, SVMM security agent 217 may be configured to use a memory map in conjunction with security rules 222 to determine whether an attempt is malicious or indicative of malware. Such a memory map may, for example, indicate the entity that made an attempted access of resources, given a memory location of the attempted access. Such a memory map may be defined, for example, in virtual memory page identifiers and/or physical memory addresses. Such a memory map may, in another example, indicate the entity corresponding to the memory location of the target of the attempt. Using the memory map, SVMM security agent 217 may be configured to determine the identities of the source and targets, or entity owners thereof, of an attempted access. The memory map may be created in part by SVMM security agent 217 or other below-O/S security agents in the figures below in conjunction with in-operating system security agents through monitoring the execution of the system. SVMM security agent 217 and/or other below-operating system security agents in the figures below may, in conjunction with in-operating system security agents, determine for a given memory page or physical address whether such a location belongs to a particular code section or data section; to which module, process, application, image, or other entity it belongs; or whether it is associated with user mode or kernel mode entries. SVMM security agent 217 and/or other below-operating system security agents in the figures below may, in conjunction with in-operating system security agents, determine metadata for the mapping of virtual memory and physical memory indicating the identification, location, and permissions of various entities running on the electronic device 204. Similarly, SVMM security agent 217 and/or other below-operating system security agents in the figures below may use a mapping of sectors in a mass storage device to determine the location of images of such entities in the mass storage device. SVMM security agent 217 and/or other below-operating system security agents in the figures below may, in conjunction with in-operating system security agents, determine for a given entity the sectors, files, directories, and volumes on which they reside.

SVMM security agent 217 may be configured to allocate memory such as system memory 228 as required for operation of in-O/S security agent 218, SVMM security agent 217, and SVMM 216. SVMM security agent 217 may be configured to request that SVMM 216 secure such allocated memory against unauthorized read and write operations. SVMM 216 may be configured to initialize the allocated memory after protection of the memory is established to eliminate the opportunity for malware to add malicious code between the time when the memory is allocated by in-O/S security agent 218 and the protection is established by SVMM 216.

SVMM security agent 217 may be configured to communicate with protection server 202 to securely receive SVMM security rules 222. SVMM security rules 222 may comprise instructions, logic, rules, shared libraries, functions, modules, or any other suitable mechanism for instructing SVMM 216 about what security policies to employ. SVMM security agent 217 may be configured to transfer information to protection server 202 regarding suspicious activities and detected malware from electronic device 204.

In-O/S security agent 218 may be configured to communicate with protection server 202 to receive in-O/S security rules 220. In-O/S security rules 220 may comprise instructions, logic, rules, shared libraries, functions, modules, or any other suitable mechanism for in-O/S security agent 218 to detect malware on electronic device 204. In-O/S security agent 218 may be configured to transmit information to protection server 202 regarding suspicious activities and detected malware on electronic device 204.

In-O/S security rules 220 and SVMM security rules 222 may each comprise protection rules for protecting electronic device 204 against malware infections, and for detecting suspicious activities that may comprise malware. In-O/S security agent security rules may contain rules executed by and within in-O/S security agent 218. SVMM security rules 222 may contain rules executed by and within SVMM 216 and/or SVMM security agent 217.

SVMM security rules 222 may be configured to provide information to SVMM security agent 217 with definitions of how to observe and detect malware infections of electronic device 204. For example, SVMM security rules 222 may include categorizations of what types of function calls or behaviors from entities such as application 210 or driver 211 that SVMM security agent 217 may monitor for indications of malware. As another example, SVMM security rules 222 may include definitions of how SVMM security agent 217 may process such triggered function calls, including what parameters to use, how to extract values from such calls, or how to validate the operation of such calls. Furthermore, SVMM security rules 222 may include information for in- SVMM security agent 217 on how to monitor the behavior of entities electronic device such as application 210 or driver 211, as well as exceptions to such behavioral detection rules. As yet another example, SVMM security rules 222 may include information for SVMM security agent 217 on how to prevent and repair malicious behaviors detected by such behavioral detection rules. SVMM security rules 222 may include details of what data that SVMM security agent 217 should monitor, collect, and send to protection server 202.

Similarly, in-O/S security rules 220 may be configured to provide information to in-O/S security agent 218 with definitions of how to observe and detect malware infection of electronic device 204, as well as how to coordinate such activities with SVMM security agent 217.

SVMM security rules 222 may also include rules regarding what actions SVMM 216 will trap. SVMM security agent 217 may be configured to apply such rules to SVMM 216. For example, SVMM security agent 217 may be configured to convert the address for a function to be trapped into an identifiable virtual or physical page of memory, create a request for SVMM 216 to trap the execution of such a page, and subsequently call the security agent 217 after trapping the execution. SVMM security agent 217 may be configured to receive SVMM security rules 222 through its interface with the SVMM 216. Such an interface may comprise a hypercall-based interface. SVMM security agent 217 may be configured to push any resulting detections or reports to SVMM 216 through the same hypercall based interface.

In one embodiment, SVMM 216 may be configured to process triggered actions without consulting SVMM security agent 217. In such an embodiment, SVMM 216 may be configured to install additional triggers that are processed within SVMM 216 which might not be passed to SVMM security agent 217. Such additional triggers may be defined by SVMM security rules 222. In one embodiment SVMM security rules 222 may define memory pages scanning rules for SVMM 216. Such rules may include a listing of entities or modifications which are malicious and should not be allowed to reside in memory. Such rules may also include a whitelist, configured to include a listing of pages that are specifically allowed to exist within system memory 228. In another embodiment, SVMM security rules 222 may define to the SVMM 216 memory pages access rules. Such rules may include definitions of what code pages are allowed, or conversely, prohibited to access a given code or data page. Consequently, SVMM security rules 222 may be configured to instruct SVMM 216 to act as a memory scanner, and/or control access to memory pages.

SVMM 216 may be configured to protect SVMM security agent 217, SVMM 216, and in-O/S security agent 218 by preventing unauthorized read and write access to their respective code and data pages in system resources 214. For example, if application 210 or driver 211 make a request to a portion of system memory 228, processor registers 230 or I/O devices 226 which would result in affecting the integrity or operation of SVMM security agent 217, SVMM 216, and in-O/S security agent 218, then SVMM 216 may be configured to intercept such an attempted request, and subsequently re-route the request, deny it, or take other appropriate action. In another example, SVMM 216 may be configured to authorize read access for portions of system memory 228, processor registers 230 or I/O devices 226 affecting SVMM security agent 217, SVMM 216, and in-O/S security agent 218 for memory security software applications, such as SVMM security agent 217 itself, or other corresponding or affiliated programs. Such an authorization may be defined within SVMM security rules 222, which may define to SVMM 216 how to handle access to system resources 214 such as system memory 228. In one embodiment, SVMM security rules 222 may include a whitelist of trusted security programs, which may include SVMM security agent 217.

To communicate with protection server 202, SVMM 216 may include a secured network interface 224. Secured network interface 224 may be configured to provide secure access between a network server such as protection server 202 and an element of electronic device 204 such as SVMM 216 or SVMM security agent 217. SVMM 216 may include a logical TCP/IP driver or other communication interface, which may implement secured network interface 224. The protection server 202 may be configured to communicate via secured network interface 224 to instruct SVMM 216 or SVMM security agent 217 to update itself, as well as provide protection rules such as SVMM security rules 222 or in-O/S security rules 220. Protection server 202 may be configured to deliver customized rules for a particular electronic device 204, or a particular SVMM 216. Such customization may include the type of malicious activities that have been reported on electronic device 204, along with other protection mechanisms within electronic device 204 such as an anti-virus program, firewall, or other protection mechanism. In one embodiment, protection server 202 may be operated by an administrator of electronic device 204 on, for example, a local network. In such a case, the administrator may set global or personalized policies for handling suspicious behavior that may be implemented by rules received from protection server 202. SVMM 216 may include an update engine that informs SVMM 216 or SVMM security agent 217 how to update itself through a new image delivered securely via protection server 202.

In-O/S security rules 220 and SVMM security rules 222 may each be configured to request that particular or classes of observed actions or operations on electronic device 204 be passed to protection server 202. There, protection server may examine and verify the observations before the action is allowed to proceed on electronic device 204. Protection server 202 may be configured to accept such an action to be examined synchronously or asynchronously. In one embodiment, in-O/S security agent 218 may be configured to pass questionable activities, segments of code or data, or actions to SVMM 216 for verification by protection server 202. For example, in-O/S security agent 218 may detect a suspected instance of malware by detecting an unsigned driver loaded within memory. SVMM 216 may receive the information about the suspicious software from in-O/S security agent 218, and may provide it to protection server 202.

SVMM security rules 222 may be configured to allow or deny access to any suitable system resource of electronic device. Such resources available to be monitored may depend upon the resources exposed by processor 206. For example, in one embodiment SVMM security rules 222 may be configured to allow SVMM 216 to restrict access to system memory 228, I/O devices 226, and interrupts 140. Such a restriction may prevent unauthorized access to I/O devices such as keyboard displays or removable discs. In another embodiment, SVMM security rules 222 may be configured to allow SVMM 216 to restrict access to interrupt descriptor table entries, including entries in processor registers such as interrupt 240. In yet another embodiment, SVMM security rules 222 may be configured to allow SVMM 216 to restrict access to Extended Page Tables ("EPT"), or any other mechanism handling the mapping of virtual memory (real memory from the perspective of a guest operating system) to host physical memory.

If electronic device 204 contains one or more processors besides processor 208 that support virtualization, SVMM 216 or another instance of SVMM 216 may be configured to intercept attempts to access the virtualized resources of such other processors. If electronic device 204 contains, for example, a quad-processor containing processor 208, the resources of the quad-processor may be protected by SVMM 216. If the one or more other processors do not support virtualization, SVMM 216 might not be able to secure access to their resources. If the one or more other processors support a different virtualization technology from processor 208, SVMM 216 may be configured to secure access to their resources if SVMM 216, but in a different manner than as processor 208 is secured, since the manner in which resources are virtualized may differ.

In operation, protection server may be running on network 244. In-O/S security agent 218 may be running on electronic device 204 to protect electronic device 204 from malware infections, by scanning electronic device 204 for malware, observing the behavior of entities such as application 210 and driver 211 on electronic device 204 for suspicious behavior, and by repairing any such infections that were found. In-O/S security agent 218 may be running at the same priority or level as operating system 212, and may be running in operating system 212. SVMM 216 may be operating on electronic device 204 to protect electronic device 204 from malware infection by trapping the attempted access of system resources of electronic device 204. SVMM security agent 217 may be running on electronic device 204, or another suitable electronic device, to set the trapping operation of SVMM 216 and to handle some or all of the trapped attempted accesses of system resources. SVMM 216 and SVMM security agent 217 may be running below the operating system 212 with a priority of "Ring -1." SVMM security agent 217 may be running on SVMM 216.

Protection server 202 may send security rules, such as SVMM security rules 222 and in-O/S security rules 220, to electronic device 204. Such rules may be received by SVMM security agent 217, which may provide in-O/S security rules 220 to SVMM 216. Such rules may be received by in-O/S security agent 218.

Protection server 202, security agent 218 and SVMM security agent 217 may each authenticate each other. SVMM security agent 217 may locate the image of security agent 218 in memory and use cryptographic signing algorithms to verify the image of security agent 218 resident in memory. Protection server 202 and SVMM security agent 217 may authenticate each other using cryptographic hashing and signing algorithms to correctly identify each other. SVMM security agent 217 and protection server 202 may also exchange a private secret key to authenticate the identity of each other. Security agent 218 may receive a secret key from protection server 202 to verify the instance of SVMM security agent 217. Communication between security agent 218, SVMM security agent 217, and 202 may not be fully established unless each of the agents is authenticated with each other. Similarly, SVMM security agent 217 and SVMM 216 may verify and authenticate each other if they are running as separate entities.

SVMM 216 and SVMM security agent 217 may be running underneath operating system 212 and all operating systems of electronic device 204. SVMM 216 may monitor access to system resources 214, including I/O devices 226, system memory 228, and processor registers 230 by operating system 212, security agent 218, application 210, and driver 211. SVMM 216 may trap the execution of key operations requested by operating system 212, security agent 218, application 210, driver 211, or any other entity of electronic device 204. SVMM 216 may trap such execution by manipulating flags inside of VMCS 221. When VMCS 221 intercepts a request for a protected resource, operation may be handed off to SVMM 216 for further operation, diagnosis and repair. In one embodiment, operation may be subsequently handled by SVMM security agent 217. In another embodiment, handling of the trapped operation may be conducted by SVMM 216 itself. SVMM 216 may trap any necessary operation of electronic device 204 to provide protection against malware. Such operations may include, but are not limited to: reading, writing and execution of particular code or data pages in system memory 228; loading and storing of value from a system register and processor registers 230; or reading to or from I/O devices 226. The specific operations which will be trapped by SVMM 216 may be defined by SVMM security rule 222.

Protection server 202 may communicate with SVMM security agent 217 or in-O/S security agent 218 to provide security rules to each. In one embodiment, protection server 202 may deliver SVMM security rules 222 to SVMM security agent 217. In another embodiment, protection server 202 may deliver in-O/S security rules 220 to in-O/S security agent 218. In yet another embodiment, protection server 202 may deliver in-O/S security rules 220 to SVMM security agent 217, which may then provide the rules to in-O/S security agent 218.

Application 210, driver 211 or other entities operating an electronic device 204 may be observed by in-O/S security agent 218. In-O/S security agent 218 may use in-O/S security rules 220 to observe the behavior of such processing entities to determine whether their behavior constitutes suspicious behavior indicating a possible infection of malware. Upon such a detection of suspicious activities, in-O/S security agent 218 may provide the suspicious information to protection server 202 for further analysis and instruction. In-O/S security rules 220 may indicate to in-O/S security agent 218 that such behaviors are suspicious, as well as indicate corrective action. For example, application 210 may communicate with a network destination which is known to host malware. In-O/S security agent 218 may notice the activity of application 210, and subsequently block the network access of application 210 to the network destination. In-O/S security agent 218 may also scan electronic device 204 for malware. For example, in-O/S security agent 218 may examine the contents of memory 206, or system memory 228 for patterns that correspond to signatures of malware. Such an examination may reveal that, for example, application 210 contains a block of code corresponding to a known segment of malware. In-O/S security agent 218 may then clean electronic device 204 of the infection of malware by repairing application 210, removing application 210, or taking any other suitable action. In-O/S security agent 218 may communicate with protection server 202 regarding any detected suspicious behaviors, or other indications of malware, and may receive instructions from protection server 202 on how to deal with such malware.

In one embodiment, SVMM security agent 217 may be configured to evaluate a trapped operation based on the origin of the entity that made the attempted operation. For example, if a driver was downloaded from an unknown domain, or has a certificate from an unknown guarantor, then the ability of the driver to subsequently operate may be limited. For example, a driver whose status is unknown may be denied the ability to attach itself to another driver. If the driver was downloaded from a domain known to host malware or contains fraudulent credentials, then the driver may be not permitted to even load. Similarly, if a driver is known to be from a particular domain or created by a particular author, then SVMM security agent 217 may be configured to recognize services in electronic device 204 authorized to update the driver, and to limit the ability to write or access the driver to those services. For example, a kernel driver from Company X may only be written to from Company X's update service software resident on electronic device 204. SVMM security agent 217 may be configured to validate the operation and integrity of the update service. In another embodiment, SVMM security agent 217 may be configured to evaluate a trapped operation based on the target of the attempt. For example, an attempt to update software from a service may be trapped for kernel drivers, but not for application software.

Once an entity has been determined to be suspicious, or an attempt determined to indicate malware, the process causing the attempt and the memory housing the process may be linked. Other processes accessing the same portion of memory may similarly be determined to be malware. A trapped attempt to access a resource may be stored, and a subsequent attempt to access a protected resource may be evaluated in light of the original event. For example, a malicious operation may require that code be written to a data segment then executed. Thus, SVMM security agent 217 may trap the original write access to the data segment, allow the write, but record the source of the write access. Subsequently, SVMM security agent 217 may trap a subsequent attempt to execute the data segment, and evaluate the malicious status of the attempt in light of the previously trapped operation, the entity which attempted it, or other suitable forensic information.

SVMM security agent 217 may instruct SVMM 216 concerning which of system resources 214 that SVMM 216 is to trap through a control structure such as VMCS 221. SVMM 216 may then trap access requests to system resources 214 originating from entities of electronic device 204 such as operating system 212, application 210 or driver 211. For example, if a request is made to read, write or execute portions of system memory 228, SVMM 216 may intercept such a request through a flag set for the designated portion of system memory in VMCS 221. In another example, access requests made of I/O devices 226 may be intercepted by VMCS 221, such as input or output operations. In yet another example, requests of process registers 230, such as load or store commands, may be trapped by VMCS 221. Any such traps may result in the notification of SVMM 216 of the attempted access. Once SVMM 216 has trapped an attempted operation upon system resources 214, SVMM 216 may communicate such a trapped execution to SVMM security agent 217.

In-O/S security agent 218 and SVMM security agent 217 may communicate to determine the context of operations conducted within operating system 212. For example, a trapped system call from operating system 212 to a particular resource of electronic device 204 may have originated from a particular part of memory. SVMM security agent 217 may communicate with in-O/S security agent 218 to determine what application, process, or other entity resides within the particular part of memory.

Based on SVMM security rules 222, and the trapped operation and/or contextual information from in-O/S security agent 218, SVMM security agent 217 may then determine whether such an access constituted a suspicious action such as those indicative of an infection of malware. For example, an attempted change of system memory 228 of a protected memory space by an unauthorized application may be a suspicious activity, and thus such an attempted change detected by SVMM 216 may be interpreted by SVMM security agent 217 to be an operation of malware. Such an activity may be reported to protection server 202 for further instruction, or action may be directed by in-O/S security rules 220. The result of such a detection may be to block the attempted change in system memory 228, or triggering additional cleaning operations upon the entity of electronic device 204 which generated the attempted change.

SVMM 216 may monitor additional calls to system resources 214 to protect the integrity of the SVMM 216, SVMM security agent 217 and/or in-O/S security agent 218. SVMM 216 may conduct scanning operations, defined by SVMM security rules 222, to scan portions of system memory 228 to determine whether portions of such memory have been modified by malware. SVMM 216 may make use of signatures, hashes, or other rules indicating that a given pattern of memory is known as unsafe or safe.

For example, SVMM 216 may protect in-O/S security agent 218 by preventing unauthorized read and write access to code and data pages corresponding to in-O/S security agent 218 in system memory 228. Some malware may attempt to attack in-O/S security agent 218 by making memory modifications or other modifications to system resources 214 associated with system memory 228. SVMM 216 may read a whitelist contained in SVMM security rules 222 of authorized applications and other entities of electronic device 204 that may be permitted to alter the code or data or other system resources 214 corresponding to in-O/S security agent 218. If a modification originates from an entity not contained within the whitelist, then SVMM 216 may determine that such a modification is associated with malware. Unauthorized access to system resources 214 corresponding to in-O/S security agent 218 may be handled by SVMM in any suitable manner, including blocking access, creating a honeypot process, reporting violations to protection server 202, or any other suitable remedy.

SVMM 216 may also trap access to system resources 214 belong to other entities of electronic device 204. For example, a target memory page in system memory 228 may contain sample code or data belonging to a part of the kernel operation of operating system 212. SVMM 216 and SVMM security rules 222 may limit access to such a target page to only code sections that are authorized. Consequently, if a code page in system memory 228 attempts to read or alter the target memory page, and the code page belongs to a non-authorized entity of electronic device 204, such an access may be blocked by SVMM 216. Thus, SVMM 216 may act to control access to memory pages in system memory 228.

SVMM security agent 217 may be able to update SVMM security rules 222 or in-O/S security rules 220 by contacting protection server 202 for updated rules. Protection server 202 may configure the rules to be delivered to SVMM security agent 217 based upon the particular malware observed, administrator settings, or other characteristics of electronic device 204. SVMM security agent 217 may update the rules of electronic device 204 upon demand by a user, periodically, or upon the occurrence of a significant event, such as the encounter of new suspicious activities that may be linked to malware.

SVMM security agent 217 may set flags in VMCS corresponding to compound conditions. Such flags may span across different types of resources to be trapped. For example, VMCS may be configured to trap the combination of a write of a certain value to page in memory, and a subsequent move of the page to a buffer of an I/O device.

System 200 may contain one or more advantages over other implementations of anti-malware systems and software. For example, some anti-malware solutions may hook various portions of an operating system to trap and evaluate low-level operations of the applications. However, these solutions themselves may operate inside of the operating system, or in another operating system in the case of two guest operating systems. By operating within the confines of the operating system, even at a kernel-level priority, the anti-malware solution may be susceptible to malware attacks from malware also running on the same operating system, perhaps running at the same priority. If trapping or triggering upon certain events is conducted at the level of an operating system, such trapping or triggering may be phished, hooked, reverse engineered, compromised, or otherwise defeated by malware running at the same or lower priority for the operating system. For example, an anti-malware solution running on an operating system that detects and removes a malicious hook in the operating system may be observed by malware running at the same priority. In another example, an anti-malware solution registering as a filter driver to detect the operation of a certain routine may be defeated by malware that registers a malicious filter driver lower on the driver stack than the anti-malware solution. Similarly, if handling of certain trapped or triggered events occurs at the level of an operating system, malware may be able to affect the such handling. For example, the malware may undo the corrections of the anti-malware solution, or even disable the operation of the anti-malware solution.

In another example, hypervisors may work to virtualize access to system resources such as system memory 228, but may not conditionally guard access to the system resources and thus act as a security hypervisor. Such hypervisors may not have access to anti-malware rules, such as behavioral rules in security rules 222, to identify malicious activities, entities, or malicious attempted access of system resources. Such hypervisors may be running within an operating system themselves, which may be prone to malware running at the same priority level as the operating system. Such hypervisors may not be running in a "RingO privileged mode," because such a mode may require the hypervisor to intercept too many attempted accesses of system resources. The hypervisor may be tasked with virtualizing all aspects of a guest operating system, and the demands of such virtualization may be too expensive to simultaneously access security rules to check for malicious behavior.

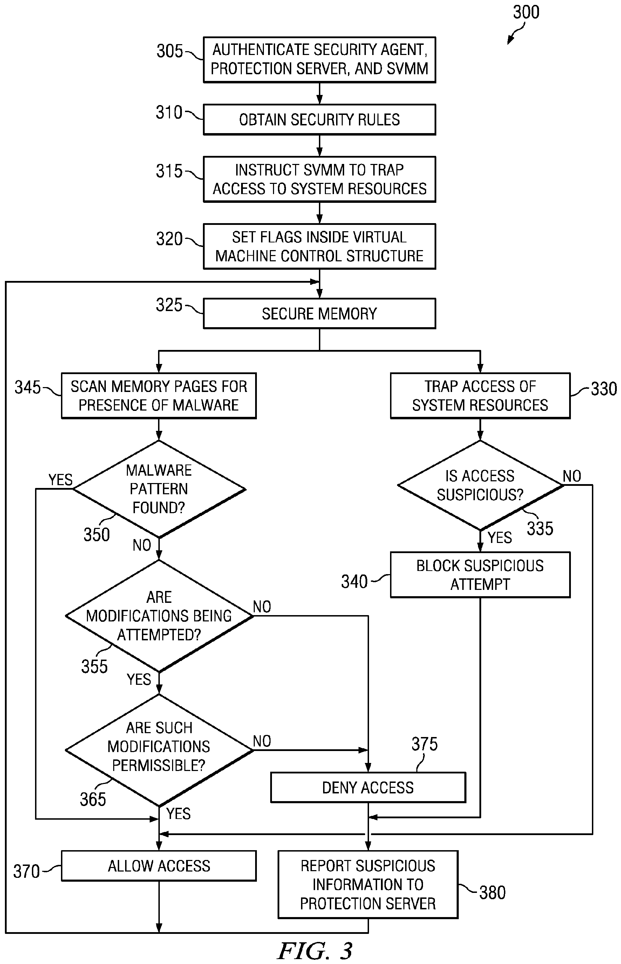

FIGURE 3 is an example embodiment of a method 300 for virtual machine monitor-based protection for an electronic device from malware. In step 305, the identity and security of a below-O/S security agent, in-O/S security agent, protection server, and virtual machine monitor may be authenticated. Such authentication may be done through any suitable method, including by locating and verifying the images of each located in memory, cryptographic hashing, or secret keys. Until step 305 is completed, operation of other steps may be withheld.

In step 310, a protection server may be accessed to determine security rules. Such security rules may be used to make decisions in steps 315-380. In step 315, the virtual machine monitor may be instructed to trap access to system resources. Such access may arise from applications, drivers, or operating systems running on the electronic device. The virtual machine monitor may be instructed as to what system resources of the electronic device are to be monitored. The virtual machine monitor may also be instructed as to what operations on the monitored system resources are to be trapped. For example, read, write or execute operations on system memory may be trapped. In another example, load or store operations on registers may be trapped. In yet another example, input or output actions on I/O devices may be trapped.

In step 320, flags corresponding to such operations to be trapped may be set inside a control structure such as a virtual machine control structure. Such trapped operations may generate a VM exit, wherein a triggered event is created upon the access of the flagged resource. In step 325, as system memory is allocated for the virtual machine monitor, the in-O/S security agent, and the below-O/S security agent, such memory may be secured against unauthorized read and write operations.

The electronic device may operate and be protected by one or more of the trapping of access of system resources in steps 330-340, scanning memory for the presence of malware in steps 345-355, and scanning memory for attempted memory modifications in steps 360-365. Each of trapping the access of system resources, scanning memory for the presence of malware, and scanning memory for attempted memory modifications may be conducted in parallel. Further, each of these may be repeated as necessary to protect the operation of the electronic device.

In step 330, the access of a system resource such as system memory, registers, or I/O devices may be trapped. The access may be trapped using a VMCS flag generating a VM exit. Such trapping may be conducted below the level of operating systems running on the electronic device. In step 335, the access may be analyzed to determine whether the requesting entity has permission to access the requested resource. Contextual information associated with the attempted access may be accessed to make such a determination. Security rules may be accessed to make such a determination. An unauthorized access may be determined to be suspicious. Such handling and determinations may be made below the level of operating systems running on the electronic device. If the access is suspicious, then in step 340, a suspicious attempted access of the system resources may be blocked. Such an attempt may be reported to the protection server. If the access is not suspicious, then the access may be allowed in step 370.

In step 345, memory pages of the electronic device may be scanned for the presence of malware. While scanning the memory of electronic device, a whitelist may be used to determine whether patterns of memory, reflecting entities resident on electronic device, are known to be safe. If a pattern of memory known to be safe is encountered, then in step 370, the memory may be allowed to continue to have access to electronic device and may remain. While scanning the memory of electronic device, a blacklist may be used to determine whether patterns of memory are known to comprise or be associated with malware. The whitelist and blacklist may be accessed by accessing the security rules. In step 350, if a pattern of memory known to be associated with malware is found, then in step 375 the pattern of memory may be denied access to electronic device by being repaired, removed, or neutralized.

In step 355, memory may be scanned to determine whether modifications to memory have been or are being attempted. Such scanning may be conducted below the level of operating systems in the electronic device. Such memory may include kernel memory, system data structures, or any other portion of memory of the electronic device that may be modified by malware. For example, a list of active threads running on the electronic device may be modified to hide the presence of a malicious process. If a modification is detected, then in step 365 it may be determined whether such modifications are permissible. Whether such modifications are permissible may be defined by the security rules. For example, the code or data page of an anti-malware process may be protected against modification or access by any other process. If the memory modification is deemed as authorized, then in step 370, the modification may be allowed. If the memory modification is determined to be unauthorized and not allowed, then in step 375, the modification may be denied.

In step 370, if an access or modification is allowed, then the access or modification may be stored for later reference. Some detections of malware may utilize information regarding past accesses or modifications to determine whether such past access and a presently detected access together comprise a malicious access of a resource.

In step 375, if a modification, access, or other operation is denied, then such an event may be reported to the protection server in step 380. Such a report may include information regarding any associated malware or suspicious behavior.

The steps of method 300 may be repeated as necessary to protect the electronic device continuously, periodically, or upon demand.

FIGURE 4 is an example embodiment of a firmware-based and security-rule-based system 400 for protecting of an electronic device 404 from malware. System 400 may be an example embodiment of system 100, wherein certain elements of system 100 are implemented in firmware. The trapping operations of system 400 may be conducted below the level of operating systems of electronic device 404. System 400 may include one or more below-O/S security agents configured to trap requests, such as I/O commands, for use or access to resources of the electronic device 404. Such below-O/S security agents may be configured to manage the exchange of input and output data between devices or with the main processor of electronic device 404. Such below-O/S security agents may be embodied in firmware of components, such as device controllers, of electronic device 404 or in the firmware of electronic device 404 itself. Such firmware may reside in non-volatile memory. Such resources of electronic device 404 may include the system resources 106 of FIGURE 1 or its various possible embodiments, or resources coupled to or embodied by devices in system 400. System 400 may include one or more below-O/S security agents configured to trap attempted use of access to the resources of the electronic device 404, generate a triggered event corresponding to the attempt, consult security rules regarding the triggered event, and take corrective action if necessary regarding the attempt.

In one embodiment, the below-O/S security agents of system 400 may be embodied only in firmware of components of electronic device 404, as described below and in the discussions of FIGURE 5. In another embodiment, the below-O/S security agents of system 400 may be embodied in firmware of electronic device 404 itself such as main PC firmware 428. In such an embodiment, main PC firmware 428 may be implemented on a motherboard of electronic device 404. In yet another embodiment, the below-O/S security agents of system 400 may also be embodied in below-O/S agent 450. Below-O/S agent 450 may be implemented in any suitable manner for providing triggering of access of resources, or handling of such triggers, below the level of operating systems of electronic device 404 such as operating system 412. For example, below-O/S agent 450 may be an embodiment of SVMM 216 or SVMM security agent 217 of FIGURE 2. Below-O/S agent 450 may include security rules 422.

Electronic device 404 may include one or more components for conducting input and output operations from electronic device 404. Electronic device 404 may include any suitable number of such components and types of components. Such components may be implemented by devices with their own processor, memory, and software embedded in firmware. An example embodiment of such a component may be the I/O device 502 of FIGURE 5.

Electronic device 404 may include, for example, display 424 and storage 426. Each such component 424, 426 may include firmware 430, 432. Firmware 430, 432 may each embody the firmware 504 of FIGURE 5. As described above, each such component 424, 426 may include a firmware-based security agent, such as firmware security agent 440, 442. Firmware security agents 440, 442 may each partially or fully embody the firmware security agent 516 of FIGURE 5. In one embodiment, each of firmware security agents 440, 442 may be implemented in their respective firmware 430, 432. In another embodiment, each of firmware security agents 440, 442 may be implemented outside of firmware 430, 432 in each of their respective components 424, 426. Each of such device firmware security agents 440, 442 may be communicatively coupled to a respective set of security rules 434, 436. Each such security rules 434, 436 may embody the security rules 518 of FIGURE 5.

Electronic device 404 may include firmware. In one embodiment, electronic device 404 may include main PC firmware 428. Main PC firmware 428 may be embodied by a Basic Input/Output System ("BIOS"). In one embodiment, main PC firmware 428 may be configured as the BIOS of a computer. In such cases, main PC firmware 428 may be configured to initialize the operation of the processor 406 of the computer. Main PC firmware 428 may be configured to allow the main processor 406 to communicate with I/O devices such as display 424 and storage 426. In such embodiments, the computer may also contain a programmable I/O controller, which may be programmed by the firmware or BIOS, and communicates with the firmware of the I/O devices such as 424 and storage 426.

Main PC firmware 428 may include a below-O/S security agent. In one embodiment, main PC firmware 428 may include a PC firmware security agent 444. PC firmware security agent 444 may be configured to intercept requests of system resources 414. To accomplish such functionality, PC firmware security agent 444 may embody fully or in part the functionality of the SVMM security agent 217 or SVMM 216 of FIGURE 2, and/or firmware security agent 516 of FIGURE 5. PC firmware security agent 444 may embody the functionality of SVMM security agent 217 or SVMM 216 of FIGURE 2 to accomplish below-O/S triggering and handling of access to system resources 414, verification and validation of below-O/S agents and in-O/S security agents such as in-O/S security agent 418, and distribution of security rules such as security rules 420, 422. PC firmware security agent 444 may embody the functionality of firmware security agent 516 of FIGURE 5 to accomplish below-O/S triggering and handling in firmware, updating of security rules, and to evaluate IN and OUT commands sent to portions of electronic device 404.

Electronic device 404 may include security rules 438. Security rules 438 may be an example embodiment of the security rules 114 of FIGURE 1. In one embodiment, security rules 438 may reside in main PC firmware 428. In another embodiment, security rules 438 may reside outside main PC firmware 428, and PC firmware security agent 444 may be coupled to security rules 438.

The security agents of system 400 may be configured to work together to prevent malware and its malicious operations. Attempted access of resources may be trapped, and subsequent events triggered for handling in firmware security agents in devices such as display 424 or storage 426, or in main PC firmware 428. The firmware security agents in such devices or firmware may be configured to handle the triggered events or to pass the triggered event to another security agent for handling. Due to limited execution and update capabilities, some firmware security agents may be limited in handling their own triggered events, and thus it may be advantageous to pass such triggered events to other security agents. The security agents to which firmware security agents may pass events may include, for example, in-O/S security agents such as in-O/S security agent 418, a below-O/S security agent such as below-O/S security agent 450, or another firmware security agent such as PC firmware security agent 444. These other security agents may be configured to receive the triggered event, consult security rules, contextual information, or permissions, and send back a resulting action to be implemented.

Accordingly, while FIGURE 4 illustrates an example number of elements for conducting below-O/S triggering and handling by firmware-based security agents, more or less elements may be used in various embodiments. As more or less elements are used, the functionality of each element and of system 400 may change accordingly. In one embodiment, the security agents of system 400 below the level of the operating system 412 may be limited to one or more in-O/S security agents 418 and firmware security agents 440, 442. In such an example, the firmware security agents 440, 442 may rely upon protection server 402 for updates to security rules 434, 436. Firmware security agents 440, 442 may rely upon in-O/S security agent 418 for updates or handling of triggered events, but the operation of the in-O/S security agent 418 may be less secure unless a below-O/S security agent validates in-O/S security agent. Firmware security agents 440, 442 may provide triggering based upon firmware security rules 434 established at installation, manufacture, or configuration. Such security rules may be relatively static. In such a case, firmware security agents 440, 442 may be configured to provide relatively basic event triggering, with little analysis. Such firmware security agents 440, 442 may nonetheless be useful, as such triggering is accomplished below the operating systems of electronic device 404, thus better detecting some malicious or suspicious operations.

In another embodiment, the security agents of system 400 may include either PC firmware security agent 444 or below-O/S agent 450, but not both. In such a case, the functionality of PC firmware security agent 444 may be implemented by below-O/S agent 450, and vice-versa. Either PC firmware agent 444 or below-O/S agent 450 may be coupled to protection server 402 and configured to obtain information such as security rules 420, 422, 438, 434, 436, and to share such information with other security agents in system 400. Such security rules may be tailored to each respective security agent for the purposes of communication, update, or storage expense. Either PC firmware agent 444 or below-O/S agent 450 may be configured to receive triggered events from other security agents such as firmware security agents 440, 442, apply security rules and other information, and take corrective action such as sending a resulting event to the firmware security agents 440, 442 or information to protection server 402. Either PC firmware agent 444 or below-O/S agent 450 may be configured to trap attempted accesses of system resources 414. Either PC firmware agent 444 or below-O/S agent 450 may be configured to communicate with in-O/S security agent 418 to determine the context of triggered events. If more than one in-O/S security agent 418 is present in system 400, each in-O/S security agent 418 may be configured to perform a designated portion of the trapping, validating, or other tasks associated with in-O/S security agent 418. Such portions may be defined by below-operating-system security agents. For example, one in-O/S security agent 418 may validate or investigate MOV instructions, while another in-O/S security agent 418 may validate or investigate JMP instructions.

In yet another embodiment, security agents of system 400 may include both PC firmware security agent 444 and below-O/S agent 450. Nevertheless in such an embodiment, some or all of the functionality of PC firmware security agent 444 may be implemented by below-O/S agent 450, and vice-versa. The delineation of tasks between PC firmware security agent 444 and below-O/S agent 450 may take into account several factors. For example, the operation of a security agent within firmware such as PC firmware security agent 444 may be more secure than the operation of another below-O/S agent 450. However, updating the security rules and the software of below-O/S agent 450 may be simpler and faster than in a PC firmware security agent 444.

In still yet another embodiment, one or more firmware security agents 440, 442 may reside on system 400 independent of a PC firmware security agent 444 or a below-operating system agent 422. In such an example, the firmware security agents 440, 442 may validate the instance of in-operating system security agent 418.

Each of firmware security agents 440, 442, 444 may be configured to reside within firmware logic sufficient to be able to monitor and control firmware logic for external communication. Firmware security agents 440, 442, 444 may thus be configured to trap and/or the communication of specific information or with specific other entities. Firmware security agents 440, 442, 444 may be configured to determine the operation request received, as well as the data to be sent or received. Furthermore, firmware security agents 440, 442, 444 may be configured to control the data to be sent or received, and may be configured to cause additional operations on the data, such as encryption, compression, embedding of watermarks, or decoding of watermarks in the data. Other security agents of system 400 in communication with firmware security agents 440, 442, 444 may be configured to embed watermarks in data to be trapped by firmware security agents 440, 442, 444, or to decode watermarks put into data by firmware security agents 440, 442, 444.

Communication with a firmware security agent 440, 442 or PC firmware security agent 444 may be conducted, for example, through programmable input-output interrupts or programmable input-output registers. Such interrupts or registers may be defined and provided by the maker of the firmware or device in which the firmware security agent 440, 442, 444 resides.

One or more of the below-O/S security agents of system 400 may be configured to serve as a main security agent to coordinate the anti-malware activities of the firmware-based security agents of electronic device 404. In one embodiment, PC firmware security agent 444 may be configured as the main security agent of system 400. In another embodiment, below-O/S agent 450 may be configured to serve as the main security agent. The security agent may be configured to handle triggered events from firmware security agents 440, 442. The main security agent may be configured to validate the operation of firmware security agents 440, 442, as well as other security agents such as in-O/S security agent 418. The main security agent may be configured to notify other security agents about whether one of the security agents has noticed suspicious behavior or detected malware, whether the system 400 is under a malware attack, or whether an administrator of system 400 has changed preferences or settings affecting security. The main security agent may share information about the attack with the other security agents of system 400.

By trapping access to resources of system 400 and/or handling the resulting triggered events below the level of the operating systems of system 400, system 400 may provide increased security against malware. Operation of a security agent in firmware may reduce the opportunity for malware to affect the operation of the security agent. Trapping operations in firmware or at the device level may reduce the ability of malware to spoof or phish elements of system 400 in order to disguise its operation. For example, no matter what portions of operating system 412 are compromised by malware, a request to a component 424, 426 might not be disguised from the device itself.

FIGURE 5 is a more detailed view of an example embodiment of a firmware-based solution for protecting an electronic device from malware. A device such as I/O device 502 may be configured to receive and trap requests for use or access to resources of the device. In one embodiment, I/O device 502 may be configured to process such trapped requests to determine whether the requests indicate a presence of malware. In another embodiment, I/O device 502 may be configured to pass such a trapped request as a triggered event to another portion of a system in which I/O device resides. Such another portion of the system may include a below-O/S security agent. I/O device 502 may include firmware 504 and a processor 506 coupled to a memory 508, wherein the firmware 504 may include instructions that reside in memory 508 for execution by processor 506.

I/O device 502 may include any suitable portion of an electronic device for controlling access to a resource for the electronic device. In one embodiment, I/O device 502 may embody some or all of a peripheral for an electronic device. I/O device 502 may be embodied by, for example, a display controller card, computer bus controller, cache device, I/O controller device, disk controller, memory device, network controller, motherboard, or keyboard controller. I/O device 502 may reside in an electronic device. In one embodiment, I/O device 502 may be coupled to physical components. Such physical components may include, as just examples, a display, a computer bus, memory, I/O controllers, a disk, a network card, or a keyboard. In another embodiment, I/O device 502 may reside separately from the coupled physical components. For example, a keyboard controller may be coupled through a serial interface with a keyboard. In such embodiments, I/O device 502 may reside in an electronic device while such physical components may be communicatively coupled to the electronic device but reside outside the electronic device.

Firmware 504 may be configured to control the operation of I/O device 502. Firmware 504 may include a below-O/S security agent 516 configured to trap requests for resources, operate below the level of operating systems in I/O device 502 or in systems in which I/O device 502 resides. Below-O/S security agent 516 may be configured to handle events resulting from the trapped requests to determine whether to allow, deny, or otherwise handle the request, in order to protect I/O device 502 or systems in which I/O device 502 resides from malware. In one embodiment, firmware 504 may include a firmware security agent 516. Firmware security agent 516 may incorporate some or all of the functionality of SVMM 216 or SVMM security agent 217 of FIGURE 2, but is embodied in firmware 504. In such a case, the functionality of SVMM 216 or SVMM security agent 217, such as trapping access to resources and/or handling the trapped request, may be conducted by firmware security agent 516. In one embodiment, firmware security agent 516 may be configured to reside in firmware 504.

Firmware 504 may include I/O commands 510, a data transmission engine 512, and programming logic 514. I/O commands 510 may include instructions for sending or receiving information to the device. Such commands may include variations of IN or OUT commands. The execution of I/O commands 510 may be operable to perform the desired actions of the device. Requests received by the device may be translated into I/O commands. Trapping or triggering upon particular requests for resources may be accomplished by trapping or triggering upon the associated I/O commands 510. Data transmission engine 512 may be configured to handle the communication of requests to the device, and subsequent responses. Data transmission engine 512 may be coupled to the processor 506 and to a programmable I/O controller over an I/O bus, over which I/O commands 510 and data are exchanged. Programmable logic 514 may be configured to provide instructions for firmware 504 to operate I/O commands 510 and data transmission engine 512. The programming logic 514 may be loaded into a processor such as processor 506.

Firmware security agent 516 may be configured to modify the operation of programming logic 514 to detect attempted malicious operations. Firmware security agent 516 may also be configured to monitor the communication of requests to the device to intercept requests of I/O device 502 through data transmission engine 512 and to determine whether such requests are malicious. Firmware security agent 516 may include a control structure in which flags may be set corresponding to operations that are to be trapped. In one embodiment, flags may be set in the structure according to memory address of commands which are to be trapped. Firmware security agent 516 may be configured to set flags for the interception of requests to I/O device 502. Such flags may correspond to, for example, specific commands of I/O commands 510 or such specific commands in combination with specific parameters. Such flags may be configured to intercept particular requests or categories of requests. Upon the triggering of a particular flag corresponding to a trapped attempted operation of an I/O command 510, firmware security agent 516 may be configured to process the event and take a resulting action, pass resulting information to another security agent through the data transmission engine 512, or pass the triggered event through data transmission engine 512.

I/O device 502 may also include security rules 518. Security rules 518 may implement some or all of security rules 222 of FIGURE 2. Security rules 518 may be implemented in memory 508. In one embodiment, security rules 518 may reside outside of firmware 504. In another embodiment, security rules 518 may reside inside of firmware 504. Firmware security agent 516 may be communicatively coupled to security rules 518 and configured to access security rules 518 to determine what flags to set in firmware 504 to trap particular requests or categories of requests made to I/O device 502 for access to its resources. For example, firmware security agent 516 may be configured to access security rules 518 to determine whether a triggered event is malicious or not. In one embodiment, security rules 518 may contain instructions for firmware security agent 516 to process the triggered event. Firmware security agent 516 may be configured to use such instructions to determine whether to allow or deny the request, or to take another corrective action. In another embodiment, firmware security agent 516 may be configured to use such instructions to determine whether to report the request to another security agent. Such corrective actions may also include waiting for a response from the other security agent, which may contain instructions on whether to allow or deny the request.

In some embodiments, firmware security agent 516 may reside in firmware 504, which may make it relatively difficult to update firmware security agent 516. In addition, the ever-changing nature of malware attacks may require anti-malware solutions to be flexible. Consequently, firmware security agent 516 may use any suitable mechanism for receiving information for determining what requests to I/O device to trap, and what subsequent actions to take.

In one such embodiment, such a mechanism may include accessing security rules 518 as described above. Firmware security agent 516 may be configured to receive new and updated security rules 518 from other security agents or protection servers. To achieve flexibility, firmware security agent 516 may be configured to store security rules 518 in memory 508 separate from firmware 504, if-for example-storage of such rules in firmware 504 would make updating security rules 518 difficult.

In another such embodiment, firmware security agent 516 may be configured to update security rules 518 upon an update or flash of firmware. In such an embodiment, the flexibility of updating the requests to be trapped may be limited. Consequently, security rules 518 may be directed to very specific, protected resources. For example, security rules 518 of a disk device may include instructions to trap all write requests to the boot sector of the device. In some cases, where communication with other security agents is inexpensive, security rules 518 may include instructions to trap a wide variety of requests, wherein processing may be largely offloaded to other security agents.

In yet another such embodiment, firmware security agent 516 may be configured to receive instructions from other security agents. In one case such instructions may take the form of parameters to function calls of the firmware 504 or firmware security agent 516. For example, another security agent may call a function of firmware security agent 516 named "*UpdateRule*(*trigger*, *action*)" wherein a request to trap for is detailed in *trigger* and a subsequent action to take is detailed in *action*. Firmware security agent 516 may thus update security rules 518 by receiving instructions concerning updates to security rules. In another case, another security agent may write updates for security rules 518 to a reserved memory space of device 502 which may be subsequently accessed by firmware security agent 516. The instructions to be received from other security agents may also direct firmware security agent 516 to use specific sets of security rules 518. For example, during a time-critical operation firmware security agent 516 may be configured by such instructions to use a minimal, core set of security rules 518. If I/O device 502 is a disk device, such a minimal, core set of rules may include instructions to trap access to the boot sector of the disk. In another example, if time-critical operations are not being presently conducted, firmware security agent 516 may be configured by such instructions to employ rules from security rules 518 to trap a much broader range of access attempts and to send corresponding events to other security agents for handling.

Firmware security agent 516 may be configured to control I/O commands 510, scan content or data received or to be sent, and apply access control over the commands and content. Firmware security agent 516 may be implemented as an extension of existing device firmware.

The implementation of firmware security agents 516 may depend upon the type of device 502. For example, display devices and disk devices may trigger on different kinds of content or attempted commands. The creation of firmware security agents 516 in various devices may be tailored to the specific kind of interface with the device. For example, if device 502 is configured to communicate through a Serial Advanced Technology Attachment ("SATA") bus, it may be equipped with firmware security agents 516 similar to other devices communicating through SATA busses. Firmware security agent 516 may be customized to support the architecture of device 502, support an external bus I/O of device 502, or other interfaces of device 502.

Firmware security agent 516 may be configured to trap attempted access of resources in device 502 by intercepting particular read and write commands, which may make up part of a request of a resource. A read or write command may be intercepted, evaluated, and blocked or allowed based on a rule such as one in security rules 518. Security rules 518 for a firmware security agent 516 may include any suitable rules for detecting evidence of malware. Such a read and write command may be the result of, for example, a function call to a driver or an interrupt.

For example, security rules 518 may include rules for firmware security agent 516 to scan data to be written to the device. The content of the data, or a hash of the data, may be evaluated to determine whether the data corresponds to malware data or code. Such evaluations may be made by comparing the content against data or signatures in a whitelist or blacklist. Successive writes may have to be evaluated together to properly evaluate the full scope of the data or content to be written, in order to correctly identify the contents or data as malware or not. For example, a file may be written to in repeated successive calls to device 502. The data to be written may be queued such that a proper scan of the contents of the write command may be evaluated.

In another example, security rules 518 may include rules for firmware security agent 516 to scan existing data in the device. The device 502 may contain content received from outside the system such as in a network card. The contents of the received information, as it resides with the device 502, may be scanned for evidence of malware. Firmware security agent 516 may make evaluations by comparing the content against data or signatures in a whitelist or blacklist.

In yet another example, security rules 518 may include rules for firmware security agent 516 to evaluate a command based upon time or permissions. A device 502 such as a network device or disk may be protected from reads or writes during times when no legitimate activity should be conducted. For example, certain malware may attack disk drives during boot. Thus, firmware security agent 516 may prevent any writes to the device during the time that the disk is being booted. Similarly, permissions may be set by an administrator of the system in which device 502 resides about when or how devices or systems can be used. For example, an administrator of the system in which device 502 resides may set a device to be unusable outside of business hours. A network device on the system may have no legitimate purpose to transport activity outside of business hours, and thus based on the permissions in security rules 518, reads and writes of the network device may be blocked by firmware security agent 516. Such use may block, for example, deliberate activity by an actual user of the device, or by malware using the network device to conduct a denial-of-service attack.

In still yet another example, security rules 518 may include rules for firmware security agent 516 to evaluate a command based upon parameters used with the I/O commands. Such parameters may include, for example, the address to which a write command will write. Security rules 518 may include a rule indicating that a particular portion of a disk device is read-only. Thus, firmware security agent 516 may examine the parameters associated with an OUT command for writing data to the disk to determine the address to which the data will be written, and block the command if the attempted write is to a portion of disk that is write-protected by a rule in security rules 518. Firmware security agent 516 may consider such a parameter in conjunction with other bases such as content or the entity which originated the call. For example, scanning the content of data to be written may be expensive, and accordingly a security rule 518 may configure firmware security agent 516 to scan data to be written only if data is to be written to certain ranges of addresses. In another example, security rules such as security rule 518 may only allow certain calling entities to write or read from certain portions of the disk device. Thus, firmware security agent 516 may trap the attempted write or read and not allow the attempt until the identity of the calling entity may be securely determined. Such a determination may be made by evaluating information in the parameters used to call the device function, as some such functions may identify the calling device driver or application. In such a case, firmware security agent 516 may take any appropriate steps to determine the validity of the call. In one embodiment, firmware security agent 516 may consult a whitelist or blacklist in security rules 518 to determine whether the calling entity is authorized to make such a call. In another embodiment, firmware security agent 516 may communicate with other security agents in the system containing device 502 to determine whether the calling application or device driver is valid. Such other security agents may have validated the operation of the calling application or device driver, or may communicate with in-O/S security agents that may have verified such operations. In yet another example, the existing driver calls to a device such as device 502 may not identify the calling entity. Accordingly, no parameters may be available. In such an example, firmware security agent 516 may be configured to pass the triggered event or otherwise consult with other security agents in the system to determine the context of the call which resulted in the attempted access. Such other security agents may be able to provide suitable context for the call to determine whether an authorized entity made the attempt.

In a further example, security rules 518 may include rules for firmware security agent 516 to evaluate a command based on information from the environment in which device 502 resides. Other security agents in the system may have detected a malware infection that is difficult to remove, or may require direct intervention from an administrator to clean. The other security agents in the system may have observed suspicious behavior, and the nature of the behavior has not yet been completely analyzed. In such a case, firmware security agent 516 may receive notification of such an existing threat from the other security agents. Security rules 518 may thus dictate preventative actions for firmware security agent 516 depending upon the type of infection. For example, firmware security agent 516 in a keyboard device may receive notification that evidence of a particular type of malware known for keylogging has been detected but cannot yet be removed. Security rules 518 may thus dictate that firmware security agent 516 disallow all reads and writes from the keyboard device to prevent a compromise of the information being communicated with the keyboard.

Firmware security agents 516 may protect the I/O of different types of devices in different ways. For example, a firmware security agent 516 of a display device may shut down portions of the display, depending upon the malware threat. Firmware security agent 516 may block the display of certain patterns, causing a watermark to be produced on the screen. Firmware security agent 516 may trap the attempted display of a particular pattern. Firmware security agent 516 may intercept attempted reads of information from the device in order to prevent screen-captures.

In another example, a firmware security agent 516 for a keyboard device may optionally encode or decode its results in communication with the rest of the system. Such encryption may be set by the firmware security agent 516 upon notification that a malware threat such as a keylogger is present.

In yet another example, a firmware security agent 516 for a network device may trap based upon source Internet Protocol ("IP") address, source port number, data to be sent or received, destination IP address, or destination port number. Once such an attempt to use the network device is trapped, firmware security agent 516 may scan the data payload of packets to be sent or received for evidence of malware. In one embodiment, such data payloads may be sent to another security agent or a protection server, wherein the contents may be scanned for evidence of malware. The contents of the data payload may be encrypted such that a packet sniffer may not successfully intercept the contents. Attempted operations on the network device may be trapped due to security risks associated with communicating with unsafe network destinations, wherein network communication with a malicious destination may compromise the security of the system in which device 502 resides. Attempted operations may be trapped due to the sensitive nature of particular sets of data, such as a banking website. In such a case, upon receipt of data from such a website, the data may be encrypted by firmware security agent 516 before being passed to another security agent or to the calling entity. Such encryption may prevent a packet sniffer or filter in the system of device 502 from successfully intercepting the information.

The specific I/O commands 510 to be trapped may depend on the specific device and the operations of that device. Thus, the maker of device 502 may decide how to configure the operation of a firmware security agent 516 for a particular device 502. The maker of device 502 may decide how much to expose the functionality of device 502 to other security agents. For example, device 502 may be configured to require validation with other security agents before handing off triggered events to such security agents.

In operation, one or more below-O/S security agents may be running in the firmware of system 400 or of the components of system 400. Firmware security agent 440 may be operating in display 424, firmware security agent 442 may be operating in storage 426, and PC firmware security agent 444 may be operating in main PC firmware 408. Below-O/S agent 450 and in-O/S agent 412 may be operating in system 400. Each security agent may communicate with one or more other security agents in system 400. Each such security agent may validate the instance of another security agent before accepting communication. Protection server 402 may communicate with one or more of the security agents after validating the security agent.

PC firmware security agent 444 or below-O/S agent may be designated as a main security agent. The main security agent may communicate with protection server 402 to determine security rules. The main security agent may store the security rules locally to the main security agent. The main security agent may distribute security rules to each of the security agents, wherein the security rules may be stored locally to the security agent. The security rules may be customized for the type, make, or model of the device to reduce the expense of a large set of security rules.

Upon receipt of security rules such as rules 434, a device such as display 424 may set flags in a control structure within the device firmware 430 corresponding to operations of the device that are to be trapped. Similar tasks may be performed by storage 426.

An application 410 or driver 411 may try to access a device such as display 424 or storage 426. Application or driver 411 may make such an attempt by calling the kernel of operating system 412, which in turn may call operating system device drivers, which in turn may send the request to the component 424, 426.

The request may arrive at a device such as storage 426. Firmware security agent 442 running on the device may filter such a request through monitoring data transmission engine 412 of the storage 426 with a control structure. The request may take the form of an I/O command 510 made available by the storage 426. If the request matches any flags that have been set by firmware security agent 442, the request may be trapped and a resulting event may be triggered. Firmware security agent 442 may consult security rules 436 to determine how to handle the triggered event.

In one embodiment, the triggered event may be handled by firmware security agent 442, and based upon the information available such as associated data, the command, contextual information, time, or environmental information, corrective action many be taken. Such corrective action may include allowing or denying the request, removing malicious code or data, or encrypting data to be transferred. Other corrective action may include sending information to be passed to protection server 402 concerning the trapped event. Firmware security agent 442 may inform other security agents about the status of the trapped event, so that other such agents may also take corrective action after consulting their respective security rules. For example, if firmware security agent 442 detects a malware attack of unknown origin, firmware security agent 440 may lock out additional access to the display 424.

In another embodiment, the triggered event may be transferred to another security agent for handling, such as in-O/S security agent 418, PC firmware security agent 444, or below-O/S agent 450. The receiving security agent, for example, PC firmware security agent, 444, may handle the triggered event by consulting security rules 438. Based upon the information available such as the data, command, contextual information, time, or environmental information, the request represented by the triggered event may be allowed or denied by PC firmware security agent 444. PC firmware security agent 444 may communicate with in-O/S security agent 418 to determine contextual information concerning the attempted access of resources. PC firmware security agent 444 may communicate with protection server 402 for additional information on how to handle the triggered event. PC firmware security agent 444 may send instructions for resulting action back to the originating firmware security agent 442. PC firmware security agent 444 may send information concerning the triggered event to protection server 402 to be analyzed or recorded. Such analysis or recording may be conducted when the malicious nature of a triggered event is unknown. PC firmware security agent 444 may notify the security agents of system 400 that a particular kind of malware has been detected, a kind of suspicious activity has been detected, or that the system 400 is under a malware attack.

Upon receipt of information from PC firmware security agent 444, firmware security agent 440 may take corrective action. Such action may include allowing or denying the attempted access, encrypting data to be transferred, or removing malicious code or data.

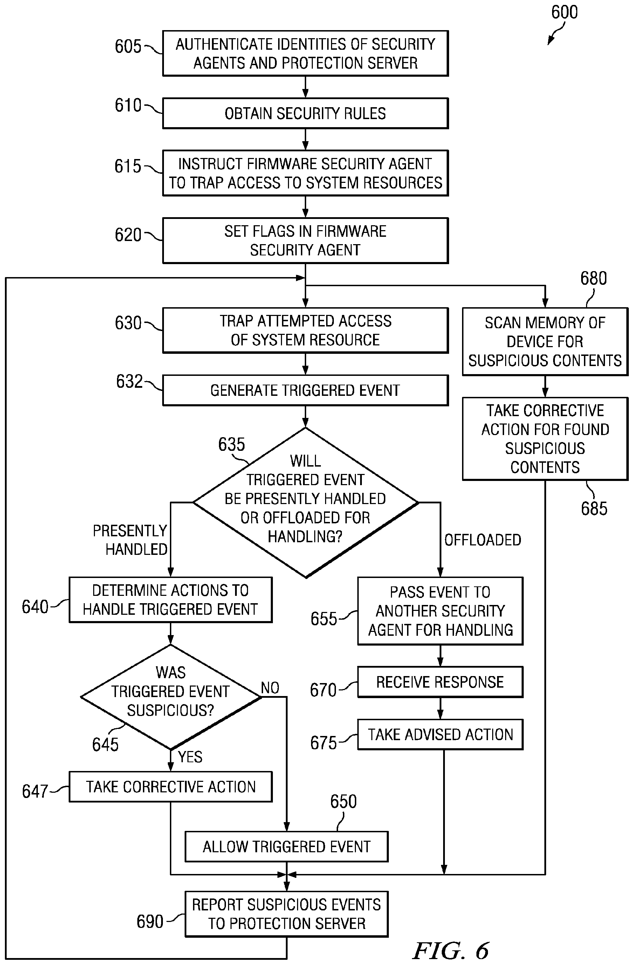

FIGURE 6 is an example embodiment of a method 600 for firmware-based configurable protection for an electronic device from malware. In step 605, the identity and security of a below-O/S security agent, in-O/S security agent, protection server, and firmware security agent may be authenticated. Such authentication may be done through any suitable method, including by locating and verifying the images of each located in memory, cryptographic hashing, or secret keys. Until step 605 is completed, operation of other steps may be withheld.

In step 610, a protection server may be accessed to determine security rules. Such security rules may be used to make decisions in the following steps. In step 615, the firmware security agent may be instructed to trap access to system resources. Such access may arise from applications, drivers, or operating systems running on the electronic device. The firmware security agent may be instructed as to what system resources of the electronic device are to be monitored. The firmware security agent may also be instructed as to what operations on the monitored system resources are to be trapped. For example, read and write commands to a device on which the firmware security agent is running may be identified to be trapped. In step 620, flags corresponding to such operations to be trapped may be set in a control structure. Such trapped operations may generate a triggered event.

The electronic device may operate and be protected by one or more of the trapping of access of system resources in steps 630-675, or scanning data for the presence of malware in steps 680-685. Each of trapping the access of system resources and scanning data for the presence of malware may be conducted in parallel. Further, each of these may be repeated as necessary to protect the operation of the electronic device.

In step 630, the access of a system resource such as system memory, registers, or I/O devices may be trapped. Such trapping may be conducted below the level of operating systems running on the electronic device. Such trapping may be conducted within firmware. In step 632, a resulting triggered event may be generated associated with the trapped attempt, as well as any associated information. In step 635, it may be determined whether the triggered event should be presently handled or passed to another security agent for handling. Such a determination may be made by accessing one or more security rules. If the triggered event should be presently handled, then in step 640 the security rules may be accessed to determine what actions to take based on the trapped event and other information, such as associated data, the command, contextual information, time, or environmental information. For example, the data to be written or read may be scanned for sensitive or malicious content; the calling entity may be identified to see if the entity has permission; the parameters used to call the command may be examined; or alerts about malware in the system from other security agents may be referenced.

In step 642 it may be determined whether the attempted access was suspicious or not. If accessing the security rules in combination with information associated with the attempted access yields a determination that the attempted access is not suspicious, then in step 645 the attempt may be allowed. If it is determined that such an attempt is suspicious, then in step 647 corrective action may be taken. Such corrective action may include removing malicious content from data, informing a protection server or other security agents about the presence of a malicious attempt, disallowing the attempted access, or encrypting data to be transferred. If the attempt is not suspicious, then in step 650 the triggered event may be allowed.

In step 655, if it is determined that another security agent is to handle the triggered event, the triggered event is passed to another security agent for handling. In step 670, a response from the security agent may be received indicating appropriate action to be taken. In step 675, such action may be taken, such as corrective action or allowing the operation of the triggered event.

In step 680, memory of a device may be scanned for the presence of malware. Such memory may contain contents that have arrived from another entity, such as another network card or the results of a previously executed file read. If the contents of the memory are known to be malicious, suspicious, or unknown, then in step 685, the contents of the memory may be removed.

In step 690, if an attempted access was denied, or if suspicious contents were found, then such an event may be reported to another security agent or a protection server. Such a report may include information regarding any associated malware or suspicious behavior.

The steps of method 600 may be repeated as necessary to protect the electronic device continuously, periodically, or upon demand.

FIGURE 7 is an example embodiment of a microcode-based system 700 for protection of an electronic device 204 against malware. System 700 may be an example embodiment of system 100, implementing certain elements of system 100 in a microcode. The trapping operations of system 700 may be conducted below the operating systems of electronic device 701. System 700 may include one or more below-O/S security agents configured to trap attempted use of access to the resources of the electronic device 204, generate a triggered event corresponding to the attempt, consult security rules regarding the triggered event, and take corrective action if necessary regarding the attempt. Such below-O/S security agents may be configured to intercept information generated from resources of the electronic device 701, generate a triggered event corresponding to the generation, consult security rules regarding the triggered event, and take corrective action if necessary regarding the attempt. One or more of such below-O/S security agents may be implemented fully or in part in a processor of system 700. The below-O/S security agents may be implemented fully or in part in microcode ("µC") of such a processor. The system resources 724 of electronic device 701 that may be protected by system 700 may include, for example, resources similar to the system resources 224 of FIGURE 2, physical memory 714, processor flags 716, exceptions 718, registers 720, or interrupts 722.

System 700 may include a microcode-based below-O/S security agent such as microcode security agent 708. Microcode security agent 708 may reside within the microcode 708 of a processor such as processor 704. In one embodiment, microcode security agent 708 may be configured to trap attempted access of system resources 724 made by portions of system 700 such as application 710, driver 711, or operating system 713. Microcode security agent 708 may be configured to create a triggered event based on such an attempted access of system resources 724. For example, operating system 713 may attempt to launch a program by attempting to execute a segment of code in an address in physical memory 714. In another example, operating system 713 may attempt to read or write an address in physical memory 714. Although physical memory 714 is shown, microcode security agent may be configured to trap an attempt to access virtual memory. In another embodiment, microcode security agent 708 may be configured to trap attempted communication of information from other portions of processor 702, such as microcode modules 710. Microcode modules 710 may include other portions of processor 702 configured to conduct the operation of processor 702 to execute instructions. Such attempted communication of information may include the results of operations from system resources 724. For example, during the processing of code, and divide-by-zero operation may be intercepted by a microcode module 710 and may attempt to generate and communicate an exception 718.

Microcode 706 may include hardware-level instructions for carrying out higher-level instructions received from elements of system 700 such as operating system 713. Microcode 706 may translate such higher-level instructions into circuit-level instructions to be executed by processor 702. Microcode 706 may be specific to the electronic circuitry or type of processor embodied by processor 702. Microcode 706 may be configured with the specific contents of microcode 706 upon the creation of processor 702. The ability to update or reprogram microcode 706 on processor 702 may be limited. Microcode 706 may reside in an internal processor memory 704. Internal processor memory 704 may be a high-speed memory separate from the system memory of system 700, such as memory 703. In one embodiment, internal processor memory 704 may be read-only-memory. In another embodiment, microcode 706 may reside in a programmable logic array included in internal processor memory 704. In yet another embodiment, internal processor memory 704 may include or be implemented as a memory store or a control store. In such an embodiment, internal processor memory 704 may be implemented partially or in full by static-random-access-memory or flash memory. In such an embodiment, microcode 706 may be configured to be loaded into the memory store from some other storage medium, such as memory 703, as part of the initialization of the processor 702, and may be configured to be updated, reinstalled, or receive new information such as security rules or machine instructions through data written to the memory store.

Microcode security agent 708 may be configured to access security rules 707 to determine what operations, commands, communications, or other actions to trap. Security rules 707 may reside within microcode 706, or another suitable portion of processor 702 or system 700. Security rules 707 may be implemented by functional calls from entities outside processor 702, such as other security agents making calls to microcode security agent 708 and passing information through parameters. Microcode security agent 708 may be communicatively coupled to security rules 707. In one example, a security rule 707 may have logic such as:
- If address (x) is executed by code in virtual memory range (X1-->X2) or physical memory range (Y1-->Y2), then generate a triggered event to below-O/S agent for handling;
- If address (x) is executed by code in physical memory range (Z1-->Z2), then skip instruction;
- If A, B, and C; then memory range (Y1-->Y2) may access memory range (X1-->X2); and
- Only code from memory ranges (Y1->Y2) and (T1->T2) may write to (Z1->Z2).

Microcode 706 may include a state machine to understand the context of instructions that have been received. Such information may be needed to carry out certain security rules 707 which, for example, evaluate successive operations within the context of each other. Such information may be passed with a triggered event.

One or more of the below-O/S security agents of system 700 may also be embodied in below-O/S agent 712. Below-O/S agent 712 may be implemented in any suitable manner for providing triggering of access of resources, or handling of such triggers, below the level of operating systems of electronic device 701 such as operating system 713. Below-O/S agent 712 may embody some or all of the functionality of SVMM 216 or SVMM security agent 217 of FIGURE 2; firmware security agent 440, 442 or PC firmware security agent 444 of FIGURE 4; or firmware security agent 516 of FIGURE 5. Below-O/S agent 712 may be communicatively coupled to security rules 723.

In one embodiment, one or more of the below-O/S security agents of system 700 such as below-O/S agent 712 may be configured to handle triggered events generated by microcode-based security agents such as microcode security agent 708. Below-O/S agent 712 may be configured to also trap access to resources or handle triggered events in a similar fashion as below-O/S agents in FIGURES 1-2 and 4-5. Below-O/S agent 712 and microcode security agent 708 may be communicatively coupled. Microcode security agent 708 may be configured to send triggered events to below-O/S agent 712. Below-O/S agent 712 may be communicatively coupled to other security agents such as in-O/S security agent 719, and may be communicatively coupled to protection server 202. Below-O/S agent 712 may be configured to receive contextual information from other security agents such as in-O/S security agent 719. Such information may provide information about the entity which generated an attempted access to system resources 724. If more than one in-O/S security agent 719 is present in system 700, each in-O/S security agent 719 may be configured to perform a designated portion of the trapping, validating, or other tasks associated with in-O/S security agent 719. Such portions may be defined by below-operating-system security agents. For example, one in-O/S security agent 719 may validate or investigate MOV instructions, while another in-O/S security agent 719 may validate or investigate JMP instructions.

Below-O/S agent 712 may also be configured to receive security rules or just-in-time information from protection server 202. Furthermore, below-O/S agent 712 may be configured to consult security rules such as security rules 723, any received contextual information from other security agents such as in-O/S security agent 719, or protection server 202 in order to determine how to handle a received triggered event from microcode security agent 708.

In particular embodiments, below-O/S agent 712 may contain a behavioral state machine, to understand the context of operations encountered in system 700. Below-O/S agent 712 may then be configured to determine an appropriate action to be executed by microcode security agent 708 based upon the context. Such action may include a corrective action, allowing an operation, denying an operation, or taking other steps in furtherance of the requirements of a security rule. Microcode security agent 708 may be configured to take such actions as received from below-O/S agent 712.

Below-O/S agent 712 may be also be configured to determine an appropriate action to be executed by another security agent, such as in-O/S security agent 719. For example, if a triggered event from microcode security agent 708 indicates a particular kind of malware threat, or a threat to a particular portion of the kernel or user mode of electronic device 701, below-O/S agent 712 may be configured to instruct in-O/S security agent 719 to take a corrective action. Thus, below-O/S agent 712 may control in-O/S security agent 719.

Below-O/S agent 712 may be configured to validate the instance of microcode security agent 708, and vice-versa. Below-O/S agent 712 may be configured to communicate with microcode security agent 708 to share or set security rules such as those from security rules 723 to be implemented in security rules 707, status information regarding system 700, administrator or environmental settings and preferences, or other suitable information for microcode security agent 708 to trap operations, generate triggers, and handle such triggers or send them to other security agents.

Below-O/S agent 712 may be configured to communicate such information to microcode security agent 708 through any suitable mechanism. Below-O/S agent 712 may call functions of the processor 702, microcode 706, or microcode security agent 708, and pass information as parameters to the functions. Such functions may be created specifically to pass such changes to microcode security agent 708. For example, to ban the access of a range of physical memory "A" from any entity operating from the memory from another range of physical memory "B," a function such as "Bar_Memory(*A*, *B*)" could be used. Microcode security agent 708, as a result of this function being called, may be configured to set parameters within microcode 706. Calling such microcode instructions may be privileged, such that microcode security agent 708 may be configured to validate below-O/S agent 712 before calling such microcode instructions on behalf of below-O/S agent 712. In another example, below-O/S agent 712 or microcode security agent 708 may communicate such information by writing data to a memory store, control store, or other writeable portions of processor 702 or microcode 706.

Processor 702 may have limited resources for microcode security agent 708 to fully implement all necessary trapping and handling to protect system 700 from malware. In one embodiment, microcode security agent 708 may be configured to implement only trapping of actions to be conducted by processor 702, and may offload triggers associated with such trapping to other security agents or components of system 700 for subsequent handling. Microcode security agent 708 may take subsequent action, such as allowing or disallowing a request or communication, or may take other action such as reporting information. In another embodiment, microcode security agent 708 may be configured to implement handling of a small portion of triggered events. Suitable triggered events for such handling may include those not requiring significant contextual information. For example microcode security agent 708 may receive information through security rules 707 that a particular range of memory addresses is to be protected from all reads and writes, unless an instance of below-O/S agent 712 has been validated. Such a security rule may be implemented because the contents are quite sensitive, and without the operational assistance of below-O/S agent 712, the identity of the entity accessing the memory contents cannot be identified. Thus, after validating the instance and operation of below-O/S agent, microcode security agent 708 may set a bit indicating such validation. If an attempted access of the memory is triggered, and the bit has not yet been set, then microcode security agent 708 may be configured to disallow the reading, writing, or execution of the contents of the memory range. If the bit has been set, then microcode security agent 708 may be configured to then trap the attempted access to the memory range, generate a triggered event to be sent to below-O/S agent 712, which would evaluate from contextual information and other settings whether the calling entity was allowed to access the memory range. Below-O/S agent 712 may then send a resulting action back to microcode security agent 708, perhaps indicating whether to allow or deny the access.

A triggered event may include any suitable information that may be used for identification of the source, method, or destination of the attempted action. The triggered event may be used by microcode security agent 708 or below-O/S security agent 712 to apply security rules. The triggered event may be generated by microcode security agent 708. For example, the triggered event may detail precisely what resource was accessed, what instruction was called, what instruction operands were used, from what memory address the attempt or instruction came from (i.e. the source memory), into what memory the operation's result was to be stored in (i.e. the target memory) or what memory will be affected, or any other information leading to identification of the source, method, or destination of the attempted action. Microcode security agent 708 may also be configured to include information regarding processor 702 such as processor states of active, sleep, idle, halt, and reset; interprocessor communications; and power consumption.

Another security agent such as below-O/S agent 712 may be configured to use such information in a triggered event to determine the scope of the event when applying a security rule 722. Below-O/S agent 712 may have access to additional clues such as information about the entities operating in operating system 713, new information in protection server 202, malware or other threats detected by other security agents, administrator settings, etc. For example, given a trapped request originating from a particular address in physical memory, below-O/S agent 712 may be able to determine the thread, process or application associated with the particular address. Then, below-O/S agent 712 may be configured to determine whether such an entity is authorized to take the action in question. Below-O/S agent 712 may be configured to determine the identity of the entity. Below-O/S agent 712 may be configured to classify the entity as known to be safe (e.g., by consulting a whitelist), known to be malicious (e.g., by observing behavior or consulting a blacklist of known malware), or unknown. Below-O/S agent 712 may be configured to report information about unknown and malicious entities to protection server 202.

Microcode security agent 708 may have access-for trapping purposes- to certain processor 702 resources and other system resources 724 that may be unavailable to other security agents. In one embodiment, implementation of microcode security agent 708 within the microcode 706 may avoid limitations created by limited exposure of such resources to calling entities outside of the processor. For example, a virtual machine monitor may be limited to trapping operations on resources which have been exposed by processor 702 for virtualization purposes. Take as a further example the ability to trap an attempted read, write, or execute upon memory. A virtual-machine-monitor-based security agent may only have access to memory as it is available to be virtualized, and, as a consequence, may only be able to trace attempted read, write, or execution attempts to a memory page. In contrast, microcode security agent 708 may be able to intercept and handle a read, write, or execute request to a specific physical memory address, and evaluate the request based upon security rules 707. The smaller granularity may provide greater flexibility in providing security solutions in system 700. The instruction-level awareness of what instruction was used in context with a specific physical memory address informs system 700 of which entity called what resource, and not merely that a memory page was accessed. This flexibility may be very valuable. For example, microcode security agent 708 may monitor two adjacent memory addresses for read, write, or execute attempts, but may be directed by security rules 707 to take completely different actions based upon which of the two memory addresses were accessed. With a view only into the memory page on which an attempt is made, such a distinction in rules may fail to be applied. In another example, other methods by hypervisors for monitoring and setting debug registers did not have the context of the instructions which were used to access the debug registers, as does system 700. In addition, some other entities for setting or watching such debug registers do not run below the level of the operating system, making them more prone to malware. Finally, some other entities for setting or watching such debug registers are not directed towards security, and are not capable of accessing security rules, evaluating the access, and taking a corrective action.

Corrective actions to be taken by microcode security agent 708 may include any suitable action determined by security rules 707 or received from below-O/S agent 712. Commands or instructions may be allowed or denied. Information generated from microcode modules 710 may be allowed or suppressed. Any such commands, instruction, or information may be modified.

Microcode security agent 708 may be configured to trap the generation of interrupts. The interrupts may be trapped by trapping, for example, an execution of an "INT" instruction, followed by reading relevant registers known to host information associated with an interrupt. For example, general purpose registers may be read to learn the code identifier of the interrupt, as well as the parameters used to call it. For example, interrupt 13 may be a disk interrupt, and a known set of registers may identify the interrupt as a read or write, as well as relevant sectors and locations of data.

Microcode security agent 708 may be configured to trap values being written to input and output ports of processor 702. Microcode security agent 708 may be configured to trap values being written to input and output devices by processor 702. Microcode security agent 708 may be configured to trap on instructions for making such writes or reads.

Microcode security agent 708 may also be configured to trap certain operations of an arithmetic logic unit ("ALU") of processor 702. A series of operations on the processor corresponding to the steps of a protected hashing algorithm may be trapped to determine unauthorized access of the function. Some arithmetic operations are used by malware to disguise or morph themselves. Certain arithmetic instructions, bitwise instructions, or MOV instructions are all instructions that might cause a change in the content of a memory page or address range. By trapping such instructions, changes to a code section or data section may be recorded. If subsequent analysis shows that the code section or data section was modified as part of self-modifying malware, then the trapped and recorded instructions may be used to track the encryption algorithm used by the malware. For example, it may be determined that the malware uses an XOR function with a particular key to morph itself. Such information may yield better security rules for detecting self-modifying malware. Further, by keeping track of memory modifications, repair logic may be achieved by reversing the application of the instructions.

In addition, microcode security agent 708 may be configured to conduct digital-rights-management operations. For example, microcode security agent 708 may be configured to receive a security rule 707 indicating that authorization to run a particular program is required. The particular program may be located at a specific address in memory. Such an authorization may take the form of the microcode security agent 708 receiving, for example, an authorization code, key, or byte from below-O/S security agent 712. Such an authorization may be accomplished by microcode security agent 708 trapping attempted access on the memory or loading of the programs instructions, and sending the triggered event to below-O/S security agent 712, which in turn may have access to the authorization code, key, or byte. The below-O/S security agent 712 may return the decision to the microcode security gent 712. Thus, operation of the program may be allowed or disallowed based on the authorization code.

Furthermore, microcode security agent 708 may be configured to stop the execution of specific code in memory based upon a hash or a checksum of the memory. Such a hash or checksum may be indicated by a security rule 707 as malicious. As the code is loaded from memory, microcode security agent 708 may conduct the hash or checksum of the contents, compare it with those of known malicious code, and then deny the attempt to load and load a repair function to eliminate the offending code.

Below-O/S agent 712 may be configured to inform other security agents of system 700, including microcode security agent 706 that it has been determined that system 700 has been infected with malware, encountered suspicious behavior, or otherwise been compromised. In such a case, microcode security agent 706 may be configured to disable operation of portions of processor 702. Microcode security agent 706 may be configured to disable such operations by trapping and denying requests to specific system resources 724, or generated communication from microcode modules 710. Portions of processor 702 may be disabled because they are sensitive, or likely to be misused by malware.

Microcode security agent 706 may be configured to protect a memory address or a range of memory addresses from attempts to load, read, write, or execute attempts. Such memory may include sensitive data, or may be the initialization point for a restricted, sensitive, or protected function. Microcode security agent 706 may prevent access to such memory where there is no verification that the accessing software is safe or neutral. In such a case, security agents such as below-O/S agent 712 may identify specific memory addresses to be protected, perhaps because such memory addresses may correspond to the example sensitive information or protected routines. Below-O/S agent 712 may send microcode security agent 708 information such as security rules 707 regarding which addresses to protect. Microcode security agent 708 may trap attempted loading, executing, reading or writing to such memory addresses and send a corresponding triggered event to below-O/S agent 712. Below-O/S agent 712 may determine whether the calling software is safe or neutral according to security rules 723, information from protection server 202, a whitelist, or any other suitable information source. Below-O/S agent 712 may return an action to be implemented back to microcode security agent 708. Microcode security agent 706 may be configured to protect a page or range in virtual memory and/or an address or range in physical memory. Microcode security agent 706 may be configured to translate virtual memory pages, locations, or addresses into physical memory locations or addresses. Thus, given a virtual memory location to trap, or a virtual memory location from where an attempt originated, microcode security agent 706 may be configured to determine the corresponding physical memory locations, or vice-versa.

Furthermore, microcode security agent 708 may be configured to protect the access of sensitive code. In one embodiment, microcode security agent 708 may be configured to protect the access of sensitive code in the manner described above by monitoring access of a particular address, wherein the address represents the beginning of the code as it is stored in memory. In another embodiment, microcode security agent 708 may be configured to monitor the execution of "JMP" or similar branching instructions which would move the operation of processor 304 into the middle of sensitive data or code. In such a case, microcode security agent 708 may be configured to trap the execution of "JMP" instructions in combination with the sensitive memory ranges. Microcode security agent 708 may be configured to analyze from where the "JMP" instruction originated. The microcode security agent 708 may be configured to generate a triggered event corresponding to the trapped "JMP" attempted execution, which may be handled by below-O/S agent 712. The below-O/S agent 712 may be configured to take into account where the "JMP" instruction originated, and whether such memory where the "JMP" instruction originated is authorized to access the memory in question.

Microcode security agent 708 itself, or the trapping functionality therein may also be configured to be enabled or disabled by other portions of system 700. Such capabilities may be useful if trapping and handling events are expensive, thus possibly harming system performance. Such enabling and disabling may be based upon the use of particularly sensitive programs or data, detection of a malware threat, administration preferences, or any other suitable reason. In one embodiment, microcode security agent 706 may be configured to receive a MSAOn signal, VMXOn signal, or other instruction from below-O/S agent 712 to begin security processing and trapping. Microcode security agent 708 may receive an MSAOff signal, "VMWrite VMXOff' signal, or other instruction to stop security processing and trapping. Before beginning or stopping security processing and trapping, microcode security agent 708 may validate the identity and instance of the security agent making the request.

Furthermore, microcode security agent 708 may be configured to intercept interprocessor messages and commands between processor 702 and other processors of electronic device 701. Such interprocessor commands may be received by an appropriate microcode module 710 or be attempted by an entity of electronic device 701 accessing particular system resources 724. In one embodiment, interprocessor commands may be sent from software accessing processor 702 from operating system 713 by way of a machine state register. Malware may try to send such messages, for example, to turn off processors or put them in sleep mode. Microcode security agent 708 may be configured to trap the attempted writes to, for example, the MSR register that correspond to interprocessor commands. A triggered event for the trapped command may be sent to below-O/S agent 712 for handling to verify the source of the attempt.

Microcode security agent 708 may be configured to intercept the generation and communication of messages from the processor such as software interrupts 722. Microcode security agent 708 may be configured to control the execution of an interrupt such that they may be accessed by authorized software only. For example, drivers without a known identity (such as determined by hashes, source of driver in memory, etc.) or a malicious identity will not be allowed to execute software interrupts. Microcode security agent 708 may trap the access of the interrupt and pass the triggered event to the below-O/S agent 712 for handling.

In another example, microcode security agent 708 may be configured to trap the generation of exceptions 718 by processor 702. Exceptions may include, for example, divide-by-zero operations, page faults, and debug signals. Read access to the memory addresses containing these may be trapped by microcode security agent 708 and handled by below-O/S agent 712.

Microcode security agent 708 may be configured to protect various data structures of the processor 702. For example, malware may attack the Interrupt Descriptor Table ("IDT"). In one embodiment, microcode security agent 708 may trap write access attempts to memory locations containing the IDT itself. In another embodiment, microcode security agent 708 may protect the memory locations where functions for changing the IDT are stored, such as "LOAD IDT" and "STORE IDT." In another example, microcode security agent 708 may be configured to protect the EFLABS or similar data structure, or flags associated with interrupt handlers. Malware may attempt to subvert the operation of interrupt handlers through the alteration of such resources by unauthorized sources.

Although microcode security agent 708 may be specific to the particular instances of a specific type of processor, as different circuitry arrangements may necessitate different microcode instructions, a set of security rules 707 may be valid for all processors using a given instruction set. This may be possible because microcode security agent 708 may trap certain instructions, which would not change between different processors implementing the same instruction set, but the circuitry where the associated resources may vary and depend upon the circuitry. For example, a main desktop central processing unit ("CPU") and an embedded system CPU may both be ISA processors from the same manufacturer, and thus security rules 707 may be shared at least in part between the two types of processors. In contrast, a graphics processing unit on a graphics processor or an automobile embedded processor with a different instruction set may not be able to share security rules 707.

In operation, microcode security agent 708 may be running in the processor 702 of electronic device 701 and below-O/S agent 712 may be running below the level of operating system of electronic device 104. Microcode security agent 708 and below-O/S agent 712 may authenticate each other. Microcode security agent 708 may initiate trapping of access to system resources 724 and outputs or communication generated by microcode modules 710. Microcode security agent 708 may be so initiated upon demand from below-O/S agent 712, upon a security rule 707, or upon startup of processor 702. Below-O/S agent 712 may send a security enablement request to microcode security agent 708 because of an occurrence in system 700, an administrator or system setting, or because of a triggered security rules 723. Such a request may be generated, for example, because a particular program is to be executed, sensitive data is to be accessed, or a malware threat has been detected elsewhere in system 700. In-O/S security agent 719 and/or below-O/S system agent 712 may authenticate itself to microcode security agent 708. To authenticate itself, in-O/S security agent 719 and/or below-O/S system agent may call a privileged instruction provided by processor 702 to initiate the authentication process. The call may cause microcode security agent 708 measure and authenticate, with a signature or hash, for example, in-O/S security agent 719 and/or below-O/S system agent 712.

Microcode security agent 708 may receive security rules 707 from below-O/S agent 712. Microcode security agent 708 may be updated by function calls, or by writes to shared memory such as a memory store. Microcode security agent 708 may apply flags based on security rules 707 to a control structure of microcode 706 configured to trap specific instructions, operands to such instructions, target addresses, source addresses, or any combination thereof. Microcode security agent 708 may trap attempted accesses of system resources by entities running above the processor, such as operating system 713, application 710, or driver 711. The operation of microcode security agent 708 may be transparent to such entities. Microcode security agent 708 may trap the generation of information such as outputs from instances of other microcode modules 710. Such microcode modules 710 may include other portions of microcode configured to perform various tasks for processor 702. For example, some of microcode modules 710 may detect when a processor exception or interrupt is to be generated, how to route input and output data, or perform mathematical operations. The operation of microcode security agent 708 may be transparent to such modules. Microcode security agent 708 may use a state machine to perform certain trapping predicated on previous events observed.

Upon trapping an access to a resource or a generation of information, microcode security agent 708 may created a triggered event associated with the trapping. Such a triggered event may contain information about the trapping, including contextual information such as the instruction trapped, parameters used, originating memory locations, and target memory locations.

In one embodiment, microcode security agent 708 may handle the triggered event. In another embodiment, microcode security agent 708 may pass the triggered event to below-O/S agent 712 or another security agent for handling. Microcode security agent 708 may consult security rules 707 to determine whether and how to handle the triggered event, or to pass the triggered event to below-O/S agent 712. Microcode security agent 708 may wait for a reply from below-O/S agent 712, or may allow the trapped action if no follow-up is required by security rules 707. Microcode security agent 708 may take corrective action based on security rules 707, such as allowing or denying an instruction, or replacing a value or parameter to be executed.

Below-O/S agent 712 may receive a triggered event from microcode security agent 708. Below-O/S agent 712 may consult security rules such as security rules 723 to determine an appropriate action to take based on the triggered event. Below-O/S agent 712 may use triggered event information from microcode security agent 708, contextual information from in-O/S security agent 719, information from protection server 202, determinations from other security agents, administrator settings, time, or other information to determine the appropriate action that should be taken. Below-O/S agent 712 may send actions to be taken to in-O/S security agent 719 and/or microcode security agent 708. Below-O/S agent 712 may send information regarding the triggered event and resultant actions to protection server 202.

Microcode security agent 708 may receive an action to be taken from another security agent, such as below-O/S agent 712. Microcode security agent 708 may execute the received action, such as allowing or denying an instruction, or replacing a value or parameter to be executed.

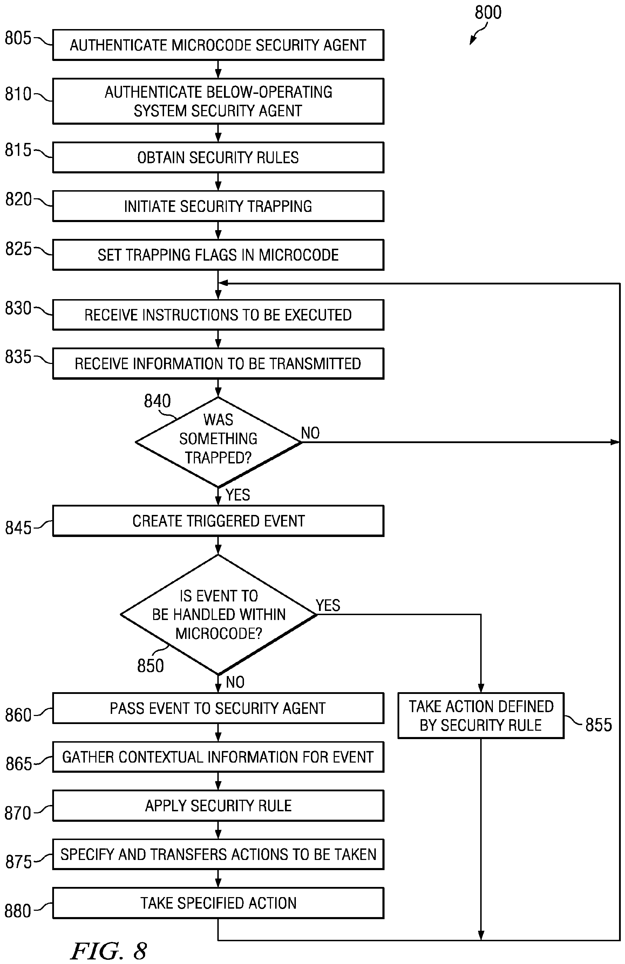

FIGURE 8 is an example embodiment of a method 800 for microcode-based, personalized and configurable protection for an electronic device from malware. In step 805, an instance of a microcode security agent may be validated. In step 810, an instance of another security agent may be validated. Such a security agent may include a below-O/S security agent. In step 815, one or more security rules for trapping at microcode level within a processor may be obtained, sent or received. Such security rules may be communicated by, for example, function calls or by writing parameters to a shared memory space. In step 820, security trapping of resources at the microcode level may be initiated. In one embodiment, such initiation may arise from receiving a signal to begin security trapping. In such an embodiment, a signal may be received because a malicious attack on a system has been detected, or because sensitive data may be present in a system. In another embodiment, such initiation may arise from consultation of a security rule. In yet another embodiment, such initiation may arise from the startup of a processor.

In step 825, flags corresponding to operations to be trapped may be set in microcode. Such flags may correspond to specific instructions, operands to such instructions, target addresses, source addresses, or any combination thereof. Such flags may be defined by security rules that were received. In step 830, instructions to be executed may be received and compared against the trapping flags. In step 835, information generated and to be sent from microcode may be received and compared against the trapping flags. Steps 830 and 835 may be implemented by way of a state machine, wherein the steps may be repeated, and the results from multiple iterations of step may be remembered and compared together against a flag or security rule.

In step 840, it may be determined whether an instruction or information has been trapped. If nothing was trapped, the method may return to monitoring instructions and generated information in steps 830 and 835. If something was trapped, then in step 845 a triggered event associated with the trapping may be created. Such a triggered event may contain information about the trapping, including contextual information such as the instruction trapped, parameters used, originating memory locations, and target memory locations.

In step 850, it may be determined whether the triggered event is to be handled within microcode, or whether a security agent outside microcode should handle the triggered event. If the triggered event is to be handled within microcode, then in step 855 an appropriate action for the triggered event may be taken. Such an action may be defined by consulting a security rule. Such an action may include allowing an instruction to be executed or information to be sent, denying the instruction or communication, replacing values in memory or in parameters, or any other corrective action required. The method 800 may then continue security monitoring in steps 830 and 835.

If the triggered event is to be handled outside of the microcode, then in step 860 the triggered event may be sent to a security agent for handling the triggered event. In step 865, additional information related to the triggered event may be gathered. Such information may include settings, preferences, contextual information, or malware status. Such information may be used in step 870 to apply a security rule to the triggered event. Such an application may yield a course of action to be taken with respect to the triggered event. In step 875 such a course of action may be specified and transferred to various security agents which may implement the specified action. Such actions may include corrective actions, allowing an operation or communication to take place, reporting the event to a protection sever, or any other suitable result. In step 880, the actions specified in step 875 may be taken. The method 800 may then continue security monitoring in steps 830 and 835.

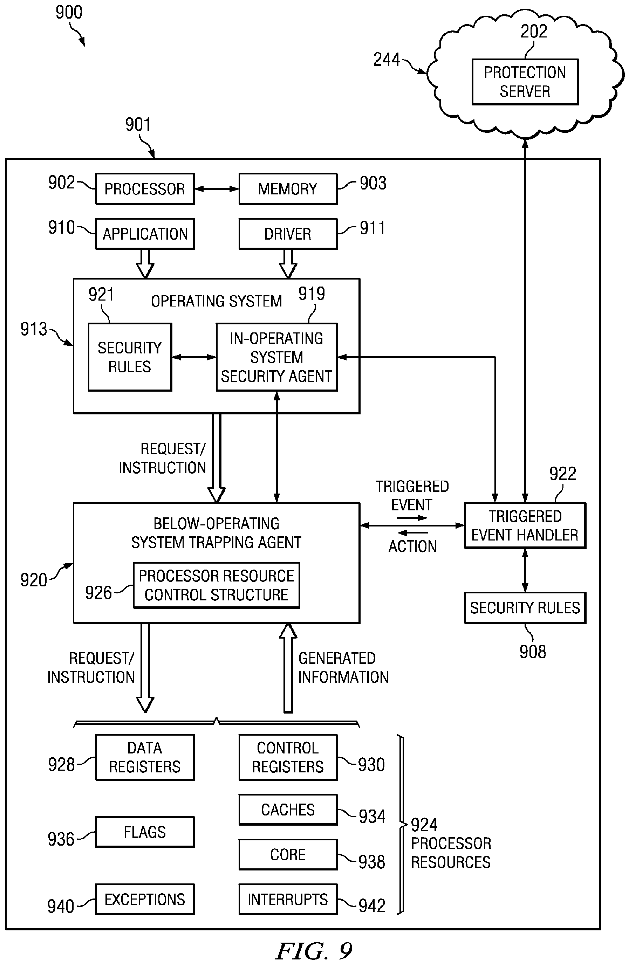

FIGURE 9 is an example embodiment of a system 900 for regulating software access to security-sensitive processor resources on an electronic device 901. System 900 may include a below-O/S trapping agent 920 and a triggered event handler 922 configured to operate on electronic device 901 to detect malicious attempts to access processor resources 924 from software-based entities running in operating systems of electronic device 901 such as operating system 913. Furthermore, below-O/S trapping agent 920 and triggered event handler 922 may be configured to use one or more security rules 908 to determine what attempted operations or generation of information to trap and how to handle a triggered event created corresponding to the trapped operation or information. Below-O/S trapping agent 920 and triggered event handler 922 may be configured to allow, deny, or take other corrective action for the triggered event.

Electronic device 901 may be implemented wholly or in part by or configured to implement the functionality of the electronic device 103 of FIGURE 1, electronic device 204 of FIGURE 2, electronic device 404 of FIGURE 4, electronic device 701 of FIGURE 7, and/or any combination thereof. Electronic device 901 may include one or more processors 902 coupled to a memory 903. Processor 902 may be implemented wholly or in part by or configured to implement the functionality of processor 208 of FIGURE 2, processor 408 of FIGURE 4, processor 702 of FIGURE 7, or any combination thereof. Memory 903 may be implemented wholly or in part by or configured to implement the functionality of memory 206 of FIGURE 2, memory 406 of FIGURE 4, memory 703 of FIGURE 7, and/or any combination thereof. Electronic device 901 may include an operating system 913, which may include an in-O/S security agent 919 coupled to one or more security rules 921. Operating system 913 may be implemented wholly or in part by or configured to implement the functionality of operating systems 112 of FIGURE 1, operating system 212 of FIGURE 2, operating system 412 of FIGURE 4, operating system 713 of FIGURE 7, and/or any combination thereof. In-O/S security agent 919 may be implemented wholly or in part by or configured to implement the functionality of in-O/S security agent 218 of FIGURE 1, in-O/S security agent 418 of FIGURE 4, and/or in-O/S security agent 719 of FIGURE 7, or any suitable combination thereof.

Below-O/S trapping agent 920 may be implemented by or configured to implement the functionality of below-O/S trapping agent 104 of FIGURE 1, SVMM 216 of FIGURE 2, firmware security agents 440, 442 or PC firmware security agent 444 of FIGURE 4, firmware security agent 516 of FIGURE 5, microcode security agent 708 of FIGURE 7, and/or any combination thereof. Triggered event handler 922 may be implemented by or configured to implement the functionality of triggered event handler 108 of FIGURE 1, SVMM security agent 217 of FIGURE 2, below-O/S agent 450 of FIGURE 4, below-O/S agent 712 of FIGURE 7, and/or any combination thereof. In various embodiments, some of the functionality of below-O/S trapping agent 920 may be accomplished by triggered event handler 922, or some of the functionality of triggered event handler 922 may be accomplished by below-O/S trapping agent 920. Furthermore, below-O/S trapping agent 920 and triggered event handler 922 may be implemented in the same software module.

Security rules 908 may be implemented by or configured to implement the functionality of security rules 114 of FIGURE 1, security rules 222 of FIGURE 2, security rules 434, 436, 438 of FIGURE 4, security rules 518 of FIGURE 5, security rules 707, 723 of FIGURE 7, and/or any combination thereof.. Security rules 921 may be implemented by or configured to implement the functionality of security rules 220 of FIGURE 2, security rules 420 of FIGURE 4, security rules 721 of FIGURE 7, and/or any combination thereof.

Below-O/S trapping agent 920 may be configured to intercept access to or information from any suitable resource, such as processor resources 924. For example, processor resources 924 may be implemented by or configured to implement the functionality of resource 106 of FIGURE 1, system resources 214 of FIGURE 2, portions of components such as display 424 and storage 426 of FIGURE 4, or system resources of FIGURE 7. Processor resources 924 may include resources available to a processor such as processor 902 for enabling the processor to load and execute instructions. Such resources may include, for example, data registers 928, control registers 930, caches 934, processor flags 936, processor cores 938, processor exceptions 940, or processor interrupts 942. An attempted access of such a resource may include an instruction such as an assembly language instruction with operands. The processor resources 924 on which trapping may be available may depend upon the resources exposed by the processor 902. For example, if below-O/S trapping agent 920 is implemented in a virtual machine monitor, the processor resources 924 available for the below-O/S trapping agent 920 to trap may be limited to processor resources 924 exposed by processor 902 for the purposes of virtualization. In such a case, processor 902 may include virtualization extensions for some of processor resources 924. In another example, if below-O/S trapping agent 920 is implemented in a microcode security agent, then processor 902 may have made nearly all resources of the processor 902 available for trapping.

Below-O/S trapping agent 920 may include a processor resource control structure ("PRCS") 926. PRCS 926 may be implemented in a record, data structure, table, or any other suitable structure. PRCS 926 may contain information specifying which instructions, information, or attempted access of processor resources 924 are to be trapped. Below-O/S trapping agent 920 or triggered event handler 922 may be configured to set flags in PRCS 926 corresponding to sensitive operations, information, or resources that are to be trapped. Below-O/S trapping agent 920 or triggered event handler 922 may be configured to set such flags in PRCS 926 according to information contained within security rules 908.

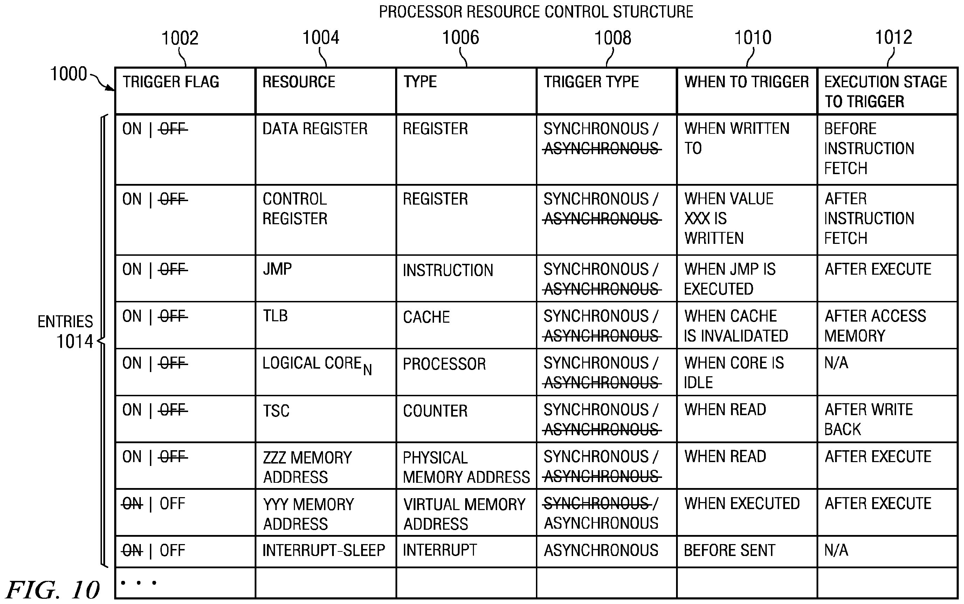

FIGURE 10 is an example embodiment of a PRCS 1000. PRCS 1000 may be an example embodiment of the PRCS 926 of FIGURE 9. PRCS 1000 may include a table of entries 1014 of various processor resources that are to be trapped. Each entry may have one or more fields 1004, 1006, 1008, 1010, 1012 identifying the resource and the conditions which may yield a triggered event. For example, PRCS 1000 may have fields for a trigger flag 1002, an identifier 1004 of a resource, a type 1006 associated with the resource, a trigger type 1008, when-to-trigger conditions 1010 about when to trigger an event, and an execution stage 1012 in which to trigger an event. The implementation of PRCS 1000 may depend upon the nature of the processor whose resources are identified, including the architecture (such as Industry Standard Architecture "ISA") or the resources exposed by the processor 902.

Trigger flag 1002 may include an indication of whether trapping and triggering for the associated entry 1014 is turned on or off. Such a flag may allow a trapping condition to be loaded in PRCS 1000 as an entry 1014 but yet remain dormant. Thus, PRCS 1000 may be loaded with embodiments of security rules without actively enforcing them. Trigger flag 1002 may be configured to be set by an entity such as the below-O/S trapping agent 920 of FIGURE 9. Such an operation may enable an anti-malware system using PRCS 1000 to operate much faster in contrast to a system which would require PRCS 1000 to be populated and depopulated each time trapping for a particular resource or condition was to be enabled or disabled. The ability to turn on and turn off an entry 1014 may enable an anti-malware system to selectively trap certain operations. Such selectivity may be advantageous if a particular trapping operation is expensive in terms of time or execution, and thus an entry 1014 might be enabled only when particular conditions are detected. For example, if a system normally writes many times to a particular register, trapping on access to that register may be turned off until another part of the antimalware system detects suspicious behavior indicating a possible malware infection. In such a case, the trigger flag 1002 of an entry 1014 corresponding to writes of the register may be set to "ON" to catch any additional malicious attempts to attack resources.

Resource identifiers 1004 may include an identification of a particular resource of the processor that is to be trapped. For example, an identifier 1004 may show that the resource is a register such as a particular data register, address registers such as EAX, a stack register, a control register, a vector register, stack pointers such as ESP, an instruction register, a program counter, an instruction register, a program status word, a constant register, a floating point register, or a conditional register. As other examples, identifier 1004 may identify that the resource is an instruction such as "JMP," "JZ" (jump if condition is equal to zero), "JNZ" (jump if condition is not equal to zero), "MOV" (move a value), or "SysEnter" (a fast call to a Ring 0 procedure). As yet further examples, identifier 1004 may identify that the resource is one of other resources like a cache such as a translation lookaside buffer; a counter such as a time stamp counter; a logical core such as processor0, processor1... processorN of the system; or processor exceptions such as "DIV/0" or interrupts such as an interprocessor interrupt or other global variables. Resource identifier 1004 may be translated into a representation of the address of the instruction, register, or other resource represented by resource identifier 1004. Resource type 1006 may include an identification of the class or type of resource that the entry 1014 includes. Some entries of PRCS 1000 may apply to all resources of a particular type.

Trigger type 1008 may include an identification of whether the handling of a resulting triggered event is synchronous or asynchronous. Synchronous triggers may cause the execution or communication of the trapped resource to halt until, for example, it is determined whether the attempt is indicative of malware. Asynchronous triggers may allow the execution or communication of the trapped resource to continue, while the trigger is, for example, recorded for future evaluation. In one embodiment, attempted accesses of resources triggered asynchronously may be used to build an evaluation of a larger series of actions, and the proper evaluation of such a series of actions may require multiple data points before a determination can be made. For example, whether a particular read of an instruction pointer register may not itself be malicious, but a subsequent use of the information returned may be malicious. Thus, a state machine may be used to first asynchronously trap the read of the instruction pointer register, but then synchronously trap its usage in another instruction.

When-to-trigger conditions 1010 may include logical rules or conditions under which a triggered event will be generated based on the access of the resource. For example, triggered events may be generated for a register when the resource is written to or read. Triggered events may be generated for an instruction such as "JMP" when the instruction is executed. Triggered events may be generated for a cache such as a Translation Lookaside Buffer when the cache is invalidated. Triggered events may be generated for a processor core depending upon the state of the processor, such as when the core is idle. An processor exception or processor flag may be triggered when the flag or exception is set or written. When-to-trigger conditions 1010 may include compound logical conditions, such as multiple conditions on a single resource (such as a value range), conditions on multiple resource (thus tying in multiple entries 1014), or a combination of both.

When-to-trigger conditions 1010 may contain conditions according to the type of resource that is to be trapped. For example, a register may be triggered when it is written, written with a particular value, or read. In another example, a cache or pointer may be similarly triggered when it is written, written with a particular value, or read. In yet another example, a processing core may be triggered when the core is idle. In still yet another example, interprocessor interrupts such as one used to command processor cores to halt, sleep, or activate may be triggered before the interrupt is sent (upon attempted access of the global space of the interrupt table) or after the interrupt is sent (after the interrupt table is written).

Execution stage to trigger 1012 may include an indication of in which stage of the execution of an instruction the attempted access will be trapped and a triggered event generated. Execution stage to trigger 1012 may be used in combination with when-to-trigger conditions 1010 as an additional requirement to trap a given resource. To trap a given entry, when-to-trigger conditions 1010 may be evaluated when the associated instruction reaches the stage of execution specified in execution stage to trigger 1012. Execution stage to trigger 1012 may include entries corresponding to, for example, five stages or steps of the execution of an instruction by a processor. In one embodiment, five such stages of execution of an instruction may include 1) fetching the instruction, 2) decoding of the instruction, 3) execution, 4) accessing a memory location for the results, and 5) writing a return value back to memory, register, or another location. In such an embodiment, execution stage to trigger 1012 may include the ability to trigger before or after any of the five stages. This provides a total of six different example triggering options-before fetching, after decoding (and thus before execution), after execution (and thus before accessing a memory location), after accessing a memory location (and thus before writing a return value), and after writing a return value. The ability to trap based upon the stage of execution may provide significant flexibility unavailable in other anti-malware systems. For example, the result of executing a particular instruction may be unknown beforehand, and thus an anti-malware system may set the value of execution stage to trigger 1012 to be after accessing a memory location for the results, but before writing a return value back to a register as commanded by the instruction. This may allow the anti-malware system to evaluate the results of the operation without allowing it to be written. If the results indicate a malicious operation, then a dummy value may be written back to the register instead of the value returned from the fourth stage of execution. Information about the attempted execution may be provided to a handler of the triggered event based on the attempted execution to help determine whether the attempt is malicious.

Each resource 1004 of PRCS 1000 may have multiple entries corresponding to combinations of the access of the resource 1004 with another 1004. Such combination of accesses may include a two-step or more process to be trapped. For example, entries 1014 may include separate entries for a) the access of a memory location corresponding to an interrupt descriptor table ("IDT") in combination with an access of control registers, and b) the access of a memory location corresponding to an interrupt descriptor table in combination with an access of general purpose registers. Furthermore, in FIGURE 9 such separate entries may be handled by separate portions of system 900. For example, specific in-O/S trapping agents 919 may handle gathering contextual information for trapped IDT-general register access, while other in-O/S trapping agents 919 may handle gathering contextual information for trapped IDT-control register access.

Returning to FIGURE 9, below-O/S trapping agent 920 may be configured to set flags or add entries in PRCS 926. Below-O/S trapping agent 920 may be configured to access one or more security rules such as security rules 908 to determine such flags or entries. In one embodiment, below-O/S trapping agent 920 may be configured to receive instructions to set such flags or entries from triggered event handler 922, which may call below-O/S trapping agent 920 after consulting security rules 908 or protection server 202. A set of specific privileged routines may be provided by processor 902 and/or below-O/S trapping agent 920 for setting flags or adding entries to PRCS 926.

If electronic device 901 includes more than one processor, each such processor may have a corresponding PRCS 926. In one embodiment, system 900 may include a below-O/S trapping agent 920 for each such PRCS 926. In another embodiment, below-O/S trapping agent 920 may be configured to trap resources represented in each such PRCS 926.

If system 900 supports virtualization, then PRCS 926 itself may be virtualized. The contents of a virtualized PRCS 926 may be limited to those resources which are virtualized by the corresponding processor 902. Such a virtualized PRCS 926 may be included in a virtual machine monitor. In such a case, below-O/S trapping agent 920 or triggered event handler 922 may be configured to control PRCS 926 in such a virtual machine monitor. In another embodiment, below-O/S trapping agent 920 may be configured to trap resources represented in each such PRCS 926. Furthermore, entries 1014 may be created in and trigger flags 1002 set in each such virtualized PRCS 926, on a per-PRCS or per-virtualized processor basis.

Below-O/S trapping agent 920 may be configured to send a triggered event resulting from a trapped attempt or communication to triggered event handler 922. Triggered event handler 922 may be configured to perform any suitable subsequent action based on the information of the triggered event and one or more security rules 908. For example, triggered event handler 922 may be configured to allow execution of an attempted instruction, but require notification of the results after execution. In another example, triggered event handler 922 may be configured to skip the execution of a command or communication altogether. Such an example may be applied if no return value is required. In yet another example, execution may be transferred to a new location by, for example, by using a "JMP" instruction to send execution to the address of a repair routine.

In operation, below-O/S trapping agent 920 and triggered event handler 922 may be operating on electronic device 901. Below-O/S trapping agent 920 may be operating below the level of the operating systems of electronic device 901. Furthermore, triggered event handler 922 may also be operating below the level of the operating systems of electronic device 901. Triggered event handler 922 may consult security rules 908 or protection server 202 to determine what flags 1002 or entries 1014 to set in PRCS 926. Triggered event handler 922 may instruct below-O/S trapping agent 920 what flags 1002 or entries 1014 to set in PRCS 926. Depending upon various conditions detected, such as applications 910 in use, other indications of malware detected, previously triggered events, or administrator settings for electronic device 901, below-O/S trapping agent 920 and triggered event handler 922 may change the trigger flags 1002 or add new entries 1014 in PRCS 926 dynamically during the operation of electronic device 901. Information to base such dynamic changes may come from, for example, below-O/S trapping agent 920 or in-O/S agent 919. Entries 1014 in PRCS 926 may be identified according to the resource 1004 or resource type 1006. The trigger type 1008 may be set to configure a subsequent trapped event to be synchronous or asynchronous. When-to-trigger conditions 1010 may be set to configure under what circumstances an intercepted request will generate a triggered event, as may execution stage to trigger 1012.

Entries in PRCS 926 may be dynamically enabled or disabled, depending upon various conditions encountered by system 900. For example, below-O/S trapping agent 920 may disable a trapping operation that is expensive because the attempted access that is trapped occurs frequently with many false-positives, until such a time that triggered event handler 922 receives an indication that the electronic device 901 is under a malware attack. Then, below-O/S trapping agent 920 may enable the trapping operation. In one embodiment, under such conditions extensive trapping on one or more processor resources 924 may be enabled to prevent unknown malware actions from harming electronic device 901 further. Such extensive trapping may extend to essentially shutting down the entire execution environment of a processor, virtualized processor, thread, process or application.

A request for a processor resource 924 may arise from an entity at the level of operating systems in system 900, such as from application 910, driver 911, or operating system 913. The request may be passed through to processor resources 924 but intercepted by below-O/S trapping agent 920. Furthermore, information or communication may be generated from the processor through various processor resources 924. The information or communication may be intercepted by below-O/S trapping agent 920.

Below-O/S trapping agent 920 may use PRCS 926 to trap an access of a resource if the information or communication matches any when-to-trigger 1010 fields of entries 1014 in PRCS 926, and subsequently generate a triggered event. Entries 1014 which have been enabled by trigger flags 1002 being set to "ON" may be matched to the attempted access or information or communication. The resource to be accessed may be compared to the resource field 1004 and/or resource type field 1006. If the resource to be accessed matches such fields, then when-to-trigger conditions 1010 may be evaluated. If the when-to-trigger conditions 1010 match system information or information about the request, then PRCS 926 may generate a triggered event. Execution stage to trigger 1012 may be used to determine when to generate the triggered event. For example, the triggered event may be created before an instruction fetch, after an instruction fetch, after execution, after memory is accessed for a subsequent write, or after another resource such as a register is accessed for a write back. Furthermore, a triggered event may be generated for an attempted communication or generation of information such as an interprocessor interrupt like "Interrupt_Sleep" before or after the interrupt is sent or written to an interrupt table. A generated triggered event may be synchronous or asynchronous, depending upon trigger type 1008. Below-O/S trapping agent 920 may halt execution of the attempted access of the resource or generation of the communication if a synchronous triggered event is generated, pending handling of the event. Below-O/S trapping agent 920 may allow execution of the attempted access of the resource or generation of the communication if an asynchronous triggered event is generated. Below-O/S trapping agent 920 may add additional context information about the attempt into the triggered event, such as the memory address from which the attempt originated, where results were to be written, or any other suitable information.

Below-O/S trapping agent 920 may include information related to the triggered event for the purposes of deciding whether the triggered event is suspicious. For example, below-O/S trapping agent 920 may determine information such as determining from what portion of memory the attempted access was made. The portion of memory may be correlated by triggered event handler 922 against known processes, applications, or programs running on electronic device 903. If the attempted access arose from an unknown or unauthorized process, application or program, then the attempt may be suspicious. Triggered event handler 922 may use information from in-O/S security agent 919 to determine such a correlation. In another example, below-O/S trapping agent 920 may provide information regarding previously triggered events, such as those recorded in a state machine. Such previously triggered events that are related to the presently triggered events may provide contextual information about whether the attempts are suspicious.

Below-O/S trapping agent 920 may pass the triggered event to triggered event handler 922, which may handle the event by evaluating information in the triggered event and/or contextual information from in-O/S agent 919 according to security rules 908. A resulting appropriate action may be determined and sent back to below-O/S trapping agent 920 to apply to the trapped attempt. Such an action may include allowing the attempt, denying execution of an instruction, or substituting different data or instructions to circumvent operation of malware.

Below-O/S trapping agent 920 may store triggered events for subsequent reference in trapping future attempted access. For example, a malicious operation may require multiple instructions to be executed by processor resources 924. Thus, each step of such malicious behavior may be reflected in a separate entry 1014 in PRCS 926. Below-O/S trapping agent 920 may trap a first step of a malicious operation, which by itself may not be malicious but only when in combination with subsequent steps. In such a case, the entry 1014 for such a step may be set to trigger asynchronously, as the condition is merely recorded into a state machine so that below-O/S trapping agent 920 or PRCS 926 may be aware of previously handled attempts. The trapping of a second step of a malicious operation may have as a when-to-trigger condition 1010 the trapping of the first step.

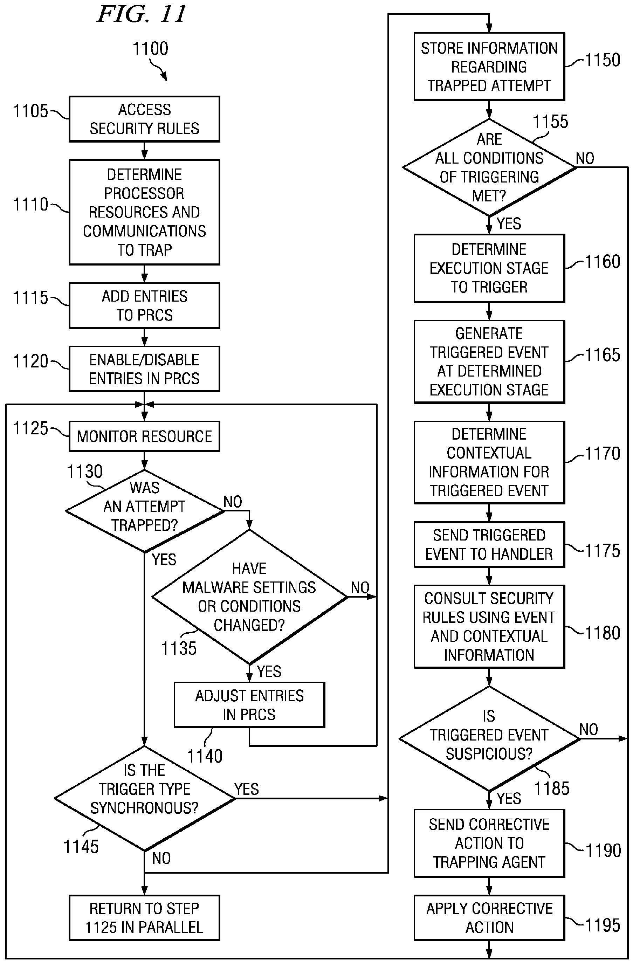

FIGURE 11 is an example embodiment of a method 1100 for regulating software access to security sensitive processor resources of an electronic device. In step 1105, security rules may be accessed to determine in step 1110 what processor resources or processor communications are to be secured. A trapping agent operating below the level of operating systems in the electronic device may determine what resources and communications to trap. Such a trapping agent may operate in, for example, a virtual machine monitor, firmware, or microcode of a processor.

In step 1115, entries corresponding to the resources or communications to be trapped may be written to a processor resource control structure, which may be configured to trap the operation, access, or other use of designated resources or communications under specified conditions. The entries in the PRCS may be written with identifications of the resource, the resource type, the conditions under which an event will be triggered, whether the trigger would be asynchronous or synchronous, and in/at what, if any, execution stage the attempted access or communication should yield a triggered event. In step 1120, entries in the PRCS may also be written with a trigger or enablement flag which indicates whether or not the entry is activated for trapping or not. If the trigger flag is not set, then the entry may be dormant and not be used to trap attempted accesses of resources.

In step 1125, access to resources or generation of communications may be monitored. Such a monitoring may take place through the PRCS. Entities in the electronic device may try to attempt to generate processor communications or attempt to access a processor resource. Such attempts to access a resource may originate from the level of operating systems of the electronic device. If an instruction, command, or other attempt to access the resource matches a resource identifier of an entry in the PRCS wherein the entry has been activated, then the attempt may be trapped. Similarly, if a processor communication is generated that matches a resource identifier of an entry in the PRCS wherein the entry has been activated, then the attempt may be trapped. In one embodiment, the attempt to access a resource or generate communication may be trapped if the additional criteria specifying when to trigger are met. For example, an attempted write of a control register may be trapped when the control register is ever written. In another example, an attempted write of a control register may be trapped when the control register is written with a specific value.

In step 1130, it may be determined whether an attempted access or communication was trapped. If no attempt has been trapped, then in step 1140 it may be determined whether entries in PRCS need to be adjusted. Such an adjustment may include enabling or disabling such entries, adding new entries, or adjusting criteria or settings of entries. Method 1100 may then return to step 1125. Such adjustment could be based on, for example, new malware threats detected in the electronic device, passage of time, previously trapped attempts, or an administrator's settings.

In step 1145, if an attempt has been trapped, it may be determined whether a resulting triggered event should be synchronous or asynchronous. If the trigger type is not synchronous, then method 1100 may return to step 1125 in parallel with proceeding to step 1150. If the trigger type is synchronous, then in step 1150 information about the trapped attempt may be stored. Such information may be used, for example, by a state machine in a future determination of whether a trapped attempt should yield a triggered event. In step 1155, it may be determined whether all conditions of the trigger are met. Such conditions may require, for example, certain values to be written to the resource, or the request originate (or not originate) from particular locations in memory. Furthermore, such conditions may require that other attempts were previously trapped. Information about such attempts may be accessed and stored in a state machine. If all conditions of triggering are not met, then method 1100 may return to step 1125.

If all conditions of triggering are met, then in step 1155 it may be determined in which, if any, specific stage of execution should the triggered event be generated. Such stages may include, for example, before an instruction in the attempt is fetched, after the instruction is fetched, after the instruction is executed, after memory is accessed to read a result, or after a value is written back. Furthermore, such stages may include before or after an interprocessor interrupt is executed. Once the designated execution stage is accomplished, a triggered event for the attempt may be generated in step 1165. Contextual information, such as source or destination address of the attempt, or the resources involved may be included with the triggered event in step 1170 for delivery to a handler in step 1175.

In step 1180, security rules may be consulted to determine in step 1185 whether the triggered event is suspicious, not permitted by administrator settings, or indicative of malware. Contextual information, such as that of the triggered event, other events in the operating system of the electronic device, or administrator settings may be used to evaluate the application of the security rules to the triggered event. If the triggered event is not suspicious, then in step 1187 the trapping agent may be notified and method 1100 may return to step 1125. If the triggered event is suspicious, then in step 1190 a resulting corrective action may be sent to the trapping agent. Such a corrective action may depend upon the specific attempt to access resources or generate processor communication. For example, a malicious instruction may have a value to be read or written spoofed, or a jump instruction may be redirected to a repair routine. In step 1195, the corrective action may be applied. The method 1100 may return to step 1125.

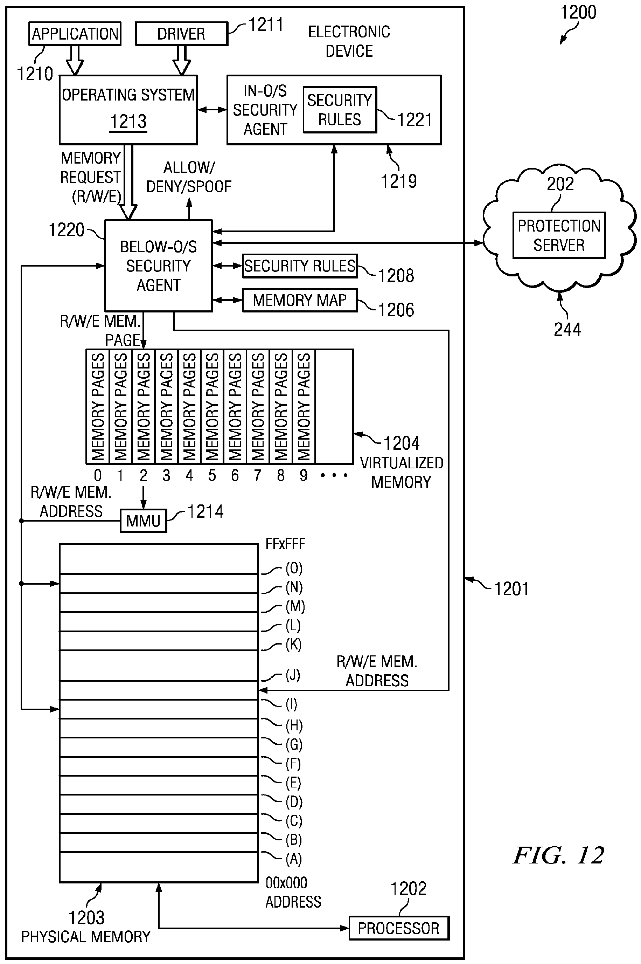

FIGURE 12 is an example embodiment of a system 1200 for regulating software access for securing memory using below-operating system trapping on an electronic device 1201. System 1200 may include a below-O/S security agent 1220 configured to operate on electronic device 1201 to detect malicious attempts to access memory from software-based entities running in operating systems of electronic device 1201, such as operating system 1213. Furthermore, below-O/S security agent 1220 may be configured to use one or more security rules 1208 and a memory map 1206 to determine what attempted accesses of memory to trap and how to handle a triggered event created corresponding to the trapped operation. Below-O/S security agent 1220 may be configured to allow, deny, or take other corrective action for the triggered event.

Electronic device 1201 may be implemented wholly or in part by or configured to implement the functionality of the electronic device 103 of FIGURE 1, electronic device 204 of FIGURE 2, electronic device 404 of FIGURE 4, electronic device 701 of FIGURE 7, electronic device 901 of FIGURE 9, and/or any combination thereof. Electronic device 1201 may include one or more processors 1202 coupled to a memory such as physical memory 1203. Processor 1202 may be implemented wholly or in part by or configured to implement the functionality of processor 208 of FIGURE 2, processor 408 of FIGURE 4, processor 702 of FIGURE 7, processor 902 of FIGURE 9, or any combination thereof. Physical memory 1203 may be implemented wholly or in part by or configured to implement the functionality of memory 206 of FIGURE 2, memory 406 of FIGURE 4, memory 703 of FIGURE 7, memory 903 of FIGURE 9, and/or any combination thereof. Electronic device 1201 may include an operating system 1213, which may include an in-O/S security agent 1219 coupled to one or more security rules 1221. Operating system 1213 may be implemented wholly or in part by or configured to implement the functionality of operating systems 112 of FIGURE 1, operating system 212 of FIGURE 2, operating system 412 of FIGURE 4, operating system 713 of FIGURE 7, operating system 913 of FIGURE 9, and/or any combination thereof. In-O/S security agent 1219 may be implemented wholly or in part by or configured to implement the functionality of in-O/S security agent 218 of FIGURE 1, in-O/S security agent 418 of FIGURE 4, and/or in-O/S security agent 719 of FIGURE 7, in-O/S security agent 919 of FIGURE 9, or any suitable combination thereof.

Below-O/S security agent 1220 may be implemented by or configured to implement the functionality of below-O/S trapping agent 104 or triggered event handler 108 of FIGURE 1, SVMM 216 or SVMM security agent 217 of FIGURE 2, firmware security agents 440, 442, below-O/S agent 450, or PC firmware security agent 444 of FIGURE 4, firmware security agent 516 of FIGURE 5, or microcode security agent 708 or below-O/S agent 712 of FIGURE 7, below-O/S trapping agent 920 or triggered event handler 922 of FIGURE 9, and/or any combination thereof.

Security rules 1208 may be implemented by or configured to implement the functionality of security rules 114 of FIGURE 1, security rules 222 of FIGURE 2, security rules 434, 436, 438 of FIGURE 4, security rules 518 of FIGURE 5, security rules 707, 723 of FIGURE 7, security rules 908 of FIGURE 9, and/or any combination thereof. Security rules 1221 may be implemented by or configured to implement the functionality of security rules 220 of FIGURE 2, security rules 420 of FIGURE 4, security rules 721 of FIGURE 7, security rules 921 of FIGURE 9, and/or any combination thereof.

Below-O/S security 1220 may be configured to intercept access to memory of electronic device 1201. Such memory may include, for example, attempted access of addresses of physical memory 1203 or attempted access of pages of virtualized memory 1204. Such an attempted access may originate from operating system 1213 or entities utilizing operating system 1213 to run on electronic device 1201, such as application 1210 or driver 1211.

In one embodiment, memory secured by below-O/S security 1220 may include virtualized memory 1204. Virtualized memory 1204 may include memory available to entities, such as operating system 1213, application 1210, or driver 1211, that have been abstracted from physical memory and/or storage. Virtualized memory 1204 may appear as a contiguous block of memory to entities such as operating system 1213, application 1210, or driver 1211, although the actual spaces used may be spread disparately across actual physical memory, such as physical memory 1203, and/or in storage such as on a disk. Virtualized memory 1204 may be virtualized according to extensions of processor 1202. The address space of virtualized memory 1204 maybe divided into memory pages. The memory pages may be each of equal size, such as four kilobytes. Electronic device 1201 may be configured to use page tables to translate the virtual addresses of virtualized memory 1204 into physical addresses of memory such as physical memory 1203 or addresses of storage. Electronic device 1201 may include a memory management unit 1214 ("MMU") configured to translate virtual addresses of virtual memory 1204 into physical addresses of memory such as physical memory 1203 and/or into addresses of a storage. The pages of virtual memory 1204 may be indexed. An attempted access of virtual memory 1204 pages may include an attempted read, write, or execution of the page, and below-O/S security agent 1220 may be configured to trap the attempt. In one embodiment, a page of virtual memory 1204 may correspond to a physical memory address or an address of a storage. In another embodiment, each page of virtual memory 1204 may correspond to a physical memory address. In yet another embodiment, pages containing certain contents such as specific portions of operating system 1213 may be pinned and may not change during the operation of electronic device 1201.

In another embodiment, memory secured by below-O/S security agent 1220 may include physical memory 1203. Physical memory 1203 may be accessed through addresses of the physical memory, as shown by markers (A), (B), (C), (D), (E), (F), (G), (H), (I), (J), and (K), which denote specific addresses in physical memory 1203 that may be the base address of a memory range containing a defined element. Physical memory 1203 may be accessed through an attempted read, write, or execution of a specific memory address, and below-O/S security agent 1220 may be configured to trap the attempt. For example, an attempted write may take the form of an instruction "MOV Addr1, Value" wherein a value represented by the variable "Value" is written to a specific memory address represented by "Addr1." Any instruction writing to a physical memory 1203 address may be used. An attempted read may take the form of an instruction such as "MOV Value, Addr1" wherein a value represented by the variable "Value" is read from a specific memory address represented by "Addr1." Any instruction reading from a physical memory 1203 address may be used. An attempted execution may take the form of an instruction loading an instruction pointer register such as "EIP" with a physical memory 1203 address, such as "MOV EIP, Addr1." Such an instruction may be configured to execute the code beginning at the address represented by "Addr1." Any instruction for executing an address in memory may be used.

Below-O/S security agent 1220 may be configured to intercept attempted access to virtual memory 1204. Furthermore, below-O/S security agent 1220 may be configured to intercept attempted access to physical memory 1203. In one embodiment, a request for virtual memory 1204 may not be intercepted, but a subsequent corresponding attempted access of physical memory 1203 after MMU has translated the virtual memory 1204 page to a physical memory 1203 address, below-O/S security agent 1220 may be configured to intercept the attempted access to physical memory. In another embodiment, an attempted access may be made directly of physical memory 1203 without being translated through virtual memory 1204, and below-O/S security agent 1220 may be configured to intercept the attempted access. In still yet another embodiment, an attempted access made to virtual memory 1204 may be intercepted, but below-O/S security agent 1220 may not be configured to intercept a subsequent access of a physical memory 1203 address.

Below-O/S security agent 1220 may be communicatively coupled to in-O/S security agent 1219. Below-O/S security agent 1220 may be configured to receive contextual information about an attempted access of memory of electronic device 1201 from in-O/S security agent 1219. The contextual information provided by in-O/S security agent 1219 may include the identity of entities that have attempted a particular access of memory of electronic device 1201.

Below-O/S security agent 1220 may be communicatively coupled to or include a memory map 1206. Memory map 1206 may be implemented in a file, record, data structure, or other suitable entity. Memory map 1206 may include information regarding the location of various entities of electronic device 1201 in memory. For example, if a process is loaded in memory of electronic device 1201 for execution, memory map 1206 may include information regarding which memory pages in virtualized memory 1204 or address ranges in physical memory 1203 contain the process. Depending upon the implementation of virtualization of memory in electronic device 1201, all of the contents of the process may or may not be loaded in physical memory 1203, as some contents may be loaded in storage such as a disk. For such contents to be accessed, they may be loaded into physical memory 1203. In such a case, memory map 1206 may contain information about addresses where the contents are stored, whether in physical memory 1203 or in a storage such as a disk. Below-O/S security agent 1220 may be configured to use memory map 1206 to determine the identity or the owner of any given content in a virtual memory 1204 page or a physical memory 1203 address. Below-O/S security agent 1220 may build memory map 1206 by, for example, profiling the operation of the operating system 1213, and then determining where in memory various sensitive components are located. As attempts to access memory are made-such as loading the operating system 1213 kernel, or executing kernel mode instructions-below-O/S security agent 1220 may be configured to communicate with in-O/S security agent 1219 to determine what portion of operating system 1213 is loading or being executed. In another example, below-O/S security agent 1220 may be configured to determine a hash or digital signature of the contents of a memory range of such a virtual memory 1204 page. The hash or digital signature may be compared against known values, which may be contained in security rules 1208 or obtained from protection server 202. The known values may be the result of a previous characterization, in which portions of, for example, operating system 1213 have been identified. Elements to be mapped may be determined by security rules 1208. Below-O/S security agent 1220 may be configured to track the movement of elements in memory map 1206 as the elements are copied from one place to another in the memory of electronic device 1201.

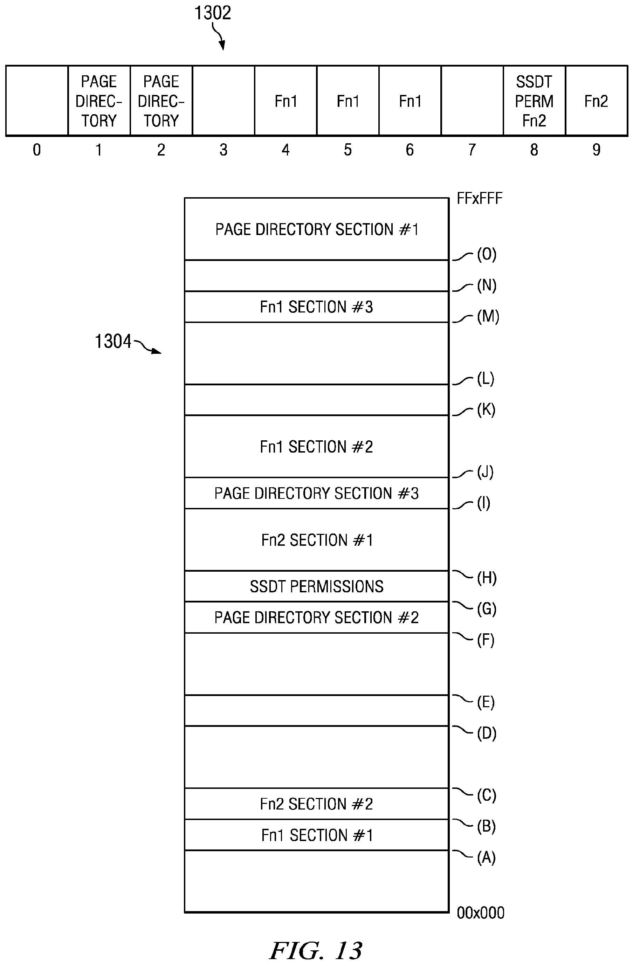

FIGURE 13 is an illustration of example embodiments of memory maps. In one embodiment, virtual memory map 1302 may include a mapping of elements to be tracked through their position in virtual memory. In another embodiment, physical memory map 1304 may include a mapping of elements to be tracked through their position in physical memory. In various embodiments, virtual memory map 1302 and physical memory map 1304 may be mapped together so that an element may be tracked in both mappings.

Virtual memory map 1302 may reflect ten different virtual memory pages. Virtual memory map 1302 may illustrate, for example, that a kernel operating system data structure such a page directory may be found in memory page 1 and memory page 2. In another example, the elements of a particular process, function, or routine called "Fn1," may be found in memory pages 4-6. In yet another example, data structures for permissions for a system service dispatch table ("SSDT") may be found in page 8. In still yet another example, elements of a particular process, function or routine called "Fn2" may be found in memory page 8 and memory page 9.

Physical memory map 1304 may reflect the location of elements with physical memory. Portions of elements in physical memory may be spread across the memory in non-contiguous segments or blocks. Furthermore, portions of elements in physical memory may be spread across the memory in arbitrary order. The size of each segment may vary in size. The segment may begin at an address at an offset from the base address. The example base address shown in FIGURE 13 is 00x000, terminating at address FFxFFF. Addresses denoting the start of various segments of the physical memory are denoted (A)-(O). For elements that are contained within multiple segments of the physical memory, the order of the elements may be noted. In physical memory multiple segments of an element may be linked together by pointers where the end of one segment of an element may point to the next segment of the element.

For example, Fn1 may be mapped to the segments between (A) and (B), (J) and (K), and (M) and (N). In another example, SSDT permissions may be mapped to the segment between (G) and (H). In yet another example, the page directory data structure may be mapped to the segments between (O) and FFxFFF, (F) and (G), and (I) and (J). In still yet another example, Fn2 may be mapped to the segments between (H) and (I), and (B) and (C).

Returning to FIGURE 12, below-O/S security agent 1220 may be configured to consult security rules 1208 to determine what portions of memory to protect, and how to protect them. For example, security rules 1208 may be configured to indicate that the page directory data structure may only be written to by certain privileged entities of electronic device 1201. Thus, attempts to write to the page directory data structure may be trapped, and elements attempting the write may be examined to determine whether they are safe, unknown, or known to be unsafe. Below-O/S security agent 1220 may be configured to consult memory map 1206 to determine where the page directory data structure is located in memory. If below-O/S security agent 1220 is implemented, for example, fully or in part in a virtual machine monitor, below-O/S security agent 1220 may be configured to set a flag in a control structure to trap any attempted write to memory pages 1 and/or 2 of virtual memory 1204. If below-O/S security agent 1220 is implemented, in another example, fully or in part in microcode, below-O/S security agent 1220 may be configured to set a flag in a control structure to trap any attempted write to memory addresses within the address ranges between addresses (O) and FFxFFF, (F) and (G), and (I) and (J) of physical memory 1203.

In another example, security rules 1208 may be configured to indicate that Fn1 may only be called by certain privileged entities of electronic device. Thus, attempts to execute Fn1 may be trapped, and elements calling Fn1 may be examined to determine whether they are safe, unknown, or known to be unsafe. Below-O/S security agent 1220 may be configured to consult memory map 1206 to determine where Fn1 resides in memory. If below-O/S security agent 1220 is implemented, for example, fully or in part in a virtual machine monitor, below-O/S security agent 1220 may be configured to set a flag in a control structure to trap an attempted execution of memory pages 4, 5, and/or 6 of virtual memory 1204. If below-O/S security agent 1220 is implemented, in another example, fully or in part in microcode, below-O/S security agent 1220 may be configured to set a flag in a control structure to trap any attempted execution of memory address (A) of physical memory 1203. In some cases, wherein different portions of Fn1 may be separately executed, below-O/S security agent 1220 may be configured to trap attempted execution of any memory address within the ranges between (A) and (B), (M) and (N), the addresses (O) and FFxFFF, (F) and (G), (J) and (K), or (I) and (J) of physical memory 1203.

In one embodiment, below-O/S security agent 1220 may be configured to consult in-O/S security agent 1219 to determine what entity has made the call to write to memory, which is then used to determine whether the entity is authorized or not to make the write. In another embodiment, below-O/S security agent 1220 may be configured to determine the memory page of virtualized memory 1204 from which the request came and consult memory map 1206 to determine whether such a memory page is associated with any elements mapped therein. In yet another embodiment, below-O/S security agent 1220 may be configured to determine a hash or signature of a memory page of the requesting element and compare it against hashes and signatures of known entities.

If below-O/S security agent 1220 is implemented fully or in part by microcode, below-O/S security agent 1220 may be configured to determine the address of the instruction which attempted the write. In one embodiment, below-O/S security agent 1220 may be configured to make such a determination by examining an instruction pointer to determine where in physical memory 1203 the instruction was made. In another embodiment, by accessing memory map 1206, below-O/S security agent 1220 may be configured to determine an element from the memory map 1206 associated with the address. In yet another embodiment, below-O/S security agent 1220 may be configured to determine a hash or signature of the requesting element and compare it against hashes and signatures of known entities.

Once an attempted access of memory has been trapped, below-O/S security agent 1220 may be configured to access security rules 1208 to determine how to handle the trapped attempt based on the identified requesting entity. Security rules 1208 may define that, for example, only certain specified kernel portions of operating system 1213 may call and execute Fn1 or that only entities that are known to be safe and on a whitelist may write to the permissions of the SSDT. Below-O/S security agent 1220 may then be configured to take any appropriate action, such as allowing the request to proceed, denying the request, spoofing a response or written value, or executing a corrective process.

In operation, below-O/S security agent 1220 may be running below the level of operating systems of electronic device 1201 such as operating system 1213. Below-O/S security agent 1220 may access security rules 1208 to determine what memory resources of electronic device 1201 to protect. Below-O/S security agent 1220 may determine, develop, and/or populate the contents of memory map 1206. To do so, below-O/S security agent 1220 may access security rules 1208, protection server 202, or any other suitable source of information for populating information in memory map 1206. Below-O/S security agent 1220 may intercept requests of physical memory 1203 or virtual memory 1204 from entities at the operating system level, such as operating system 1213, application 1210, or driver 1211, to map the ownership and contents of memory in memory map 1206. Below-O/S security agent 1220 may access in-O/S security agent 1219 to determine what entities are being loaded into memory so that memory map 1206 may be populated. Memory map 1206 may contain memory mapping for physical memory 1203, virtual memory 1204, and/or mappings between the two.

Below-O/S security agent 1220 may consult security rules 1208 to determine what portions of virtual memory 1204 and/or physical memory 1203 to protect. Security rules 1208 may specify that some portions of memory are to be secured on a dynamic basis, wherein protection for the memory may be enabled or disabled by below-O/S security agent 1220 depending upon a variety of considerations. Such considerations may include, for example, administrator settings, detection of malicious or suspicious behavior, time, previously detected accesses of memory, or any other suitable criteria. If protecting memory of electronic device 1201 is expensive in terms of computational resources, such dynamic enabling and disabling may allow below-O/S security agent 1220 to better secure critical portions of the memory of electronic device 1201 while lessening side affects on the ability of electronic device 1201 to carry out other tasks. For example, memory containing the contents of the kernel code of operating system 1213 may always be protected by below-O/S security agent 1220, while the memory containing the contents of the code of a third-party application 1210 may be protected only upon other indications that malware is present or may affect the third-party application 1210.

Below-O/S security agent 1220 may set a flag in a control structure to trap attempted access of physical memory 1203 and/or virtual memory 1204. In one embodiment, as a request is made from an entity in operating system 1213 for a memory page in virtual memory 1204 designated to be trapped, below-O/S security agent 1220 may intercept the attempted request. In another embodiment, as a request is made for a memory page in virtual memory 1204, below-O/S security agent may allow the request to be translated by MMU 1214 into a request for an address in physical memory 1203, whereupon below-O/S security agent may intercept the attempted request. In yet another embodiment, as a request from an entity in operating system 1213 may be made for an address in physical memory 1203 directly, below-O/S security agent 1220 may intercept the attempted request.

Once a request has been intercepted, below-O/S security agent 1220 may use any suitable mechanism to evaluate the intercepted request of memory. Security rules 1208 may be used to determine whether the attempt is suspicious, indicating a malicious attempt by malware to use the resources of electronic device 1201. Security rules 1208 may include considerations of, for example, whether a read, write, or execution was attempted; what entity made the attempt; the memory address or page that was accessed; previous attempts or actions by the same requestor; security settings by an administrator of electronic device 1201, such as rules that are more or less restrictive based upon the user of electronic device 1201; or the identity of the requestor, as determined by memory location and/or digital signature or hash, or upon related pages or memory addresses.

For example, an attempted write of the page directory data structure in page 2 of virtual memory 1204 or at address (J) of physical memory 1203 may be intercepted by below-O/S security agent 1220. If the write has come from a portion of memory of a process that is unknown, the write may be determined to be suspicious by below-O/S security agent 1220. However, if the attempted write has come from a known, verified part of the operating system 1213 kernel, then the attempt may be determined to not be suspicious. Likewise, an attempted execution of Fn2 at page 8 of virtual memory 1204 or at address (H) of physical memory 1203 may be intercepted. If the attempted execution was made from a user input, then the execution may be determined to not be suspicious. If the attempted execution was made from the memory of another program, and the program is not on an approved list, then the attempt may be determined to be suspicious or malicious.

In another example, if Fn1 is a web browser that normally exposes its cache to other applications for purposes of interoperability, below-O/S security agent 1220 may allow a specified portion of the memory pages or memory addresses of Fn1 to be read by other applications. However, if Fn1 contains metadata or other information that should be kept private, then below-O/S security agent 1220 may secure those portions of the memory pages or memory addresses of Fn1 from being read from any process other than Fn1 itself.

Once a program has been determined to be suspicious, malicious, or otherwise indicative of malware, then below-O/S security agent 1220 may take any suitable corrective action. Below-O/S security agent 1220 may, for example, deny a write request to memory page 2 of virtual memory 1204 or address (J) of physical memory 1203, yet return a result indicating that the value was written. The process generating the request may be monitored for additional attempts to access the resources of electronic device 1201, may be stopped, or may be cleaned from electronic device 1201. In another example, the attempted execution of page 8 of virtual memory 1204 or address (H) of physical memory 1203 may instead be directed to the execution of a honeypot process or a cleanup process.

The contents of the memory which are secured by below-O/S security agent 1220 may include data, code, or any other useful system resources which may be attacked by malware. Below-O/S security agent 1220 may protect the contents of memory against malware attempting to, for example, read, write, or hook mechanisms showing the processes running on electronic device 1201, inject its code into portions of applications loaded in memory, or change permission and access flags of mapping tables for virtual memory 1204. By operating below the level of operating system 1213, below-O/S security agent 1220 may avoid malware running at the kernel mode level in operating system 1213. Below-O/S security agent 1220 may accomplish zero-day detection, as in some cases it may not need knowledge that the identity of a requesting entity has been previously determined to be malicious-the fact that the entity is unknown may be used to deny access to some parts of the memory of electronic device 1201. If the operating system 1213 or antivirus or antimalware measures running in the operating system 1213 are completely compromised, the memory may be completely locked from entities running at the level of the operating system.

One application of below-O/S security agent 1220 may be to detect an attempted access of the contents of virtual memory 1204 even before a read, write, or execute of the specific contents is attempted by detecting a change to the permissions of the particular memory page. The memory tables used by MMU 1214 may be resident in memory, in a page of virtual memory 1204 itself, and/or address of physical memory 1203. An attempt to change the values of the memory table, for example, to change the permissions of a code section of a process from "read" to "write," may itself be trapped by below-O/S security agent 1220. The memory page of virtual memory 1204 or the address of physical memory 1203 may be secured by below-O/S security agent 1220, and upon a trapped attempt to write a new value to the permissions in such a location, below-O/S security agent 1220 may determine whether the requestor of the attempt is allowed to make such changes. For example, if the request to change the permissions of a code section of a process arose from a different process, the attempted change in permissions may be denied.

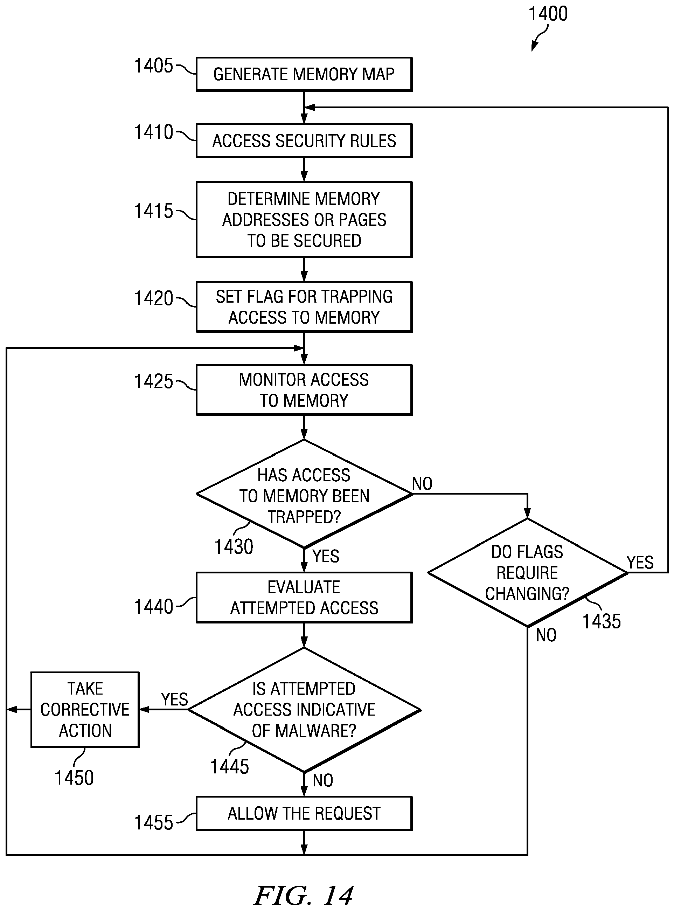

FIGURE 14 is an example embodiment of a method 1400 for securing memory using below-operating system trapping of attempted access of an electronic device. In step 1405, the virtual or physical memory of the electronic device may be mapped to determine the identity or owner of the contents of memory. In order to map the memory, for example, a protection server may be accessed; reads, writes, and execution of memory may be tracked; and/or contents of memory scanned and signatures generated for the contents.

In step 1410, security rules may be accessed to determine in step 1415 addresses of physical memory or pages of virtual memory to be secured. The memory to be secured may depend, for example, upon the security rules, the user of the electronic device, other observed behavior in electronic device such as indications of malware, previous attempts to access secured memory, or administrator settings. The memory to be secured may change dynamically, as conditions of the operation of the electronic device may change. The security rules may specify entities of electronic device to be protected, and the location in physical or virtual memory of the entities may be determined by accessing the memory map.

In step 1420, flags may be set in a control structure to trap attempted access of memory according to the requirements of the security rules. Such flags may be set for pages of virtual memory and/or addresses of physical memory. Flags may contain an indication of the memory that is to be secured, as well as the kind of access method (for example-read, write, or execute) that is to be flagged. In step 1425, access to the secured memory may be monitored to see if an attempted access of the designated type has been made to a designated address or page. In step 1430, it may be determined whether an attempt to access the memory has been trapped. If not, then in step 1435 it may be determined whether flags of the memory to be secured require changing. If so, then the method 1400 may return to step 1410 to access security rules to update the flags for guarding access to memory. If not, then the method 1400 may return to step 1425 to monitor for attempted access of secured memory.

If an attempt to access the memory has been trapped, then beginning in step 1440 the trapped attempt may be evaluated. To evaluate the attempt, the memory map may be consulted to determine from where the request was made, and identify the requestor. The values of data to be written may be determined and evaluated for their contents. The nature of the attempt-read, write, or execute-may be considered. These example considerations may be used in conjunction with the security rules to determine whether or not the attempted access is indicative of malware in step 1445. If the attempted access is indicative of malware, then in step 1450, corrective action may be taken. Such corrective action may include denying the requested access, returning a spoofed value, or initiating a honeypot or corrective process. If the attempted access in not indicative of malware, then in step 1455 the request may be allowed. Method 1400 may return to step 1425 as required to continue securing the memory of the electronic device.

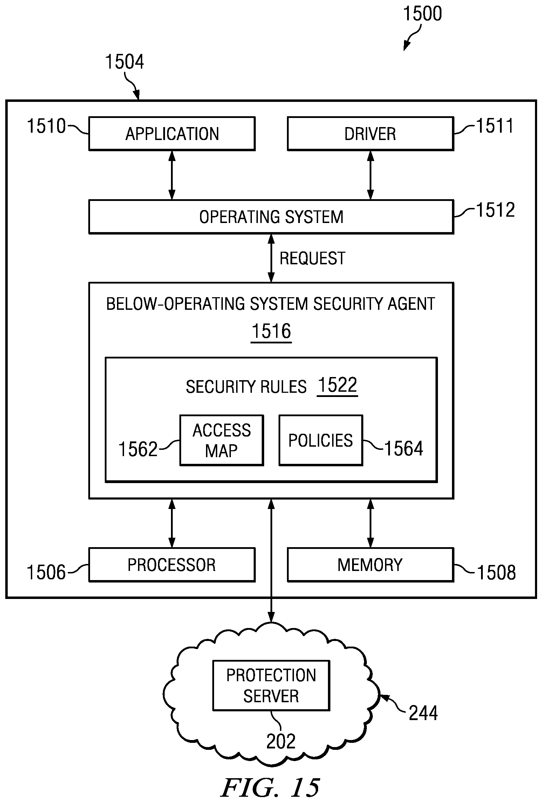

FIGURE 15 is an example embodiment of a system for protecting an operating system 1512 kernel of an electronic device 1504. System 1500 may include a below-O/S security agent 1516 configured to operate on electronic device 1504 to protect against attempts by malware to access components (e.g., function, data, and/or other components) of operating system 1512 and trusted drivers associated with the operating system. Furthermore, below-O/S security agent 1516 may be configured to use one or more security rules 1522 to determine what attempted operations to trap and how to respond to such trapped operation. Below-O/S security agent 1516 may be configured to allow, deny, or take other corrective action for the trapped operation.

As shown in FIGURE 1500, electronic device 1504 may include a processor 1506 coupled to a memory 1508, one or more applications 1510, one or more drivers 1511, an operating system 1512, below-O/S security agent 1516, and security rules 1522. Electronic device 1504 may be implemented wholly or in part by or configured to implement the functionality of electronic device 103 of FIGURE 1, electronic device 204 of FIGURE 2, electronic device 404 of FIGURE 4, electronic device 701 of FIGURE 7, electronic device 901 of FIGURE 9, electronic device of FIGURE 1201, and/or any combination thereof. Processor 1506 may be implemented wholly or in part by or configured to implement the functionality of processor 208 of FIGURE 2, processor 408 of FIGURE 4, processor 702 of FIGURE 7, processor 902 of FIGURE 9, processor 1202 of FIGURE 12, and/or any combination thereof. Memory 1508 may be implemented wholly or in part by or configured to implement the functionality of memory 206 of FIGURE 2, memory 406 of FIGURE 4, memory 703 of FIGURE 7, memory 903 of FIGURE 9, physical memory 1203 or virtualized memory of FIGURE 12, and/or any combination thereof. Application 1510 may be implemented wholly or in part by or configured to implement the functionality of application 110 of FIGURE 1, application 210 of FIGURE 2, application 410 of FIGURE 4, application 709 of FIGURE 7, application 910 of FIGURE 9, application 1210 of FIGURE 12, and/or any combination thereof. Driver 1511 may be implemented wholly or in part by or configured to implement the functionality of driver 111 of FIGURE 1, driver 211 of FIGURE 2, driver 411 of FIGURE 4, driver 711 of FIGURE 7, driver 911 of FIGURE 9, driver 1211 of FIGURE 12, and/or any combination thereof. Operating system 1512 may be implemented wholly or in part by or configured to implement the functionality of operating system 112 of FIGURE 1, operating system 212 of FIGURE 2, operating system 412 of FIGURE 4, operating system 713 of FIGURE 7, operating system 913 of FIGURE 9, operating system 1213 of FIGURE 12, and/or any combination thereof. Below-O/S security agent 1516 may be implemented wholly or in part by or configured to implement the functionality of below-O/S trapping agent 104 of FIGURE 1, SVMM security agent 217 or SVMM 216 of FIGURE 2, firmware security agents 440, 442, PC firmware security agent 444, or below-O/S system agent 450 of FIGURE 4, firmware security agent 516 of FIGURE 5, microcode security agent 708 of FIGURE 7, below-O/S trapping agent 920 of FIGURE 9, below-O/S security agent 1220 of FIGURE 12, and/or any combination thereof.

As shown in FIGURE 15, below-O/S security agent 1516 may include security rules 1522. Security rules 1522 may be implemented by or configured to implement the functionality of security rules 114 of FIGURE 1, security rules 222 of FIGURE 2, security rules 434, 436, 438 of FIGURE 4, security rules 518 of FIGURE 5, or security rules 707, 723 of FIGURE 7, security rules 908 of FIGURE 9, security rules 1208 of FIGURE 12, and/or any combination thereof. Security rules 1522 may be established in any suitable manner (e.g., policies set by a user of electronic device 1504, policies set by an administrator of an enterprise including electronic device 1504, policies set by a creator of below-O/S security agent 1516, etc.). In some embodiments, below-O/S security agent 1516 may request and/or receive updates or modifications to security rules 1522 from protection server 202 via network 244 (e.g., on account of updates to malware definitions).

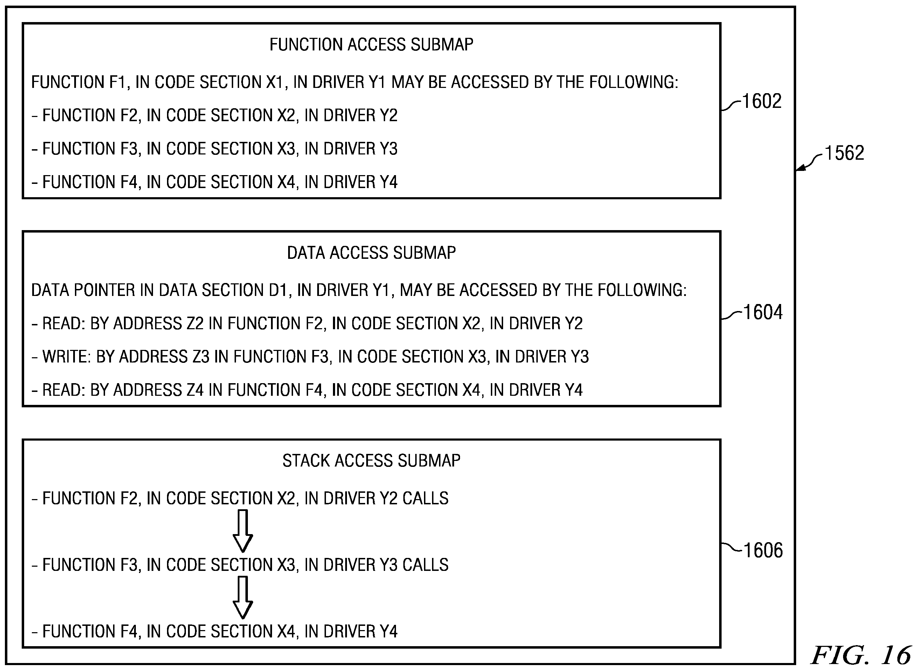

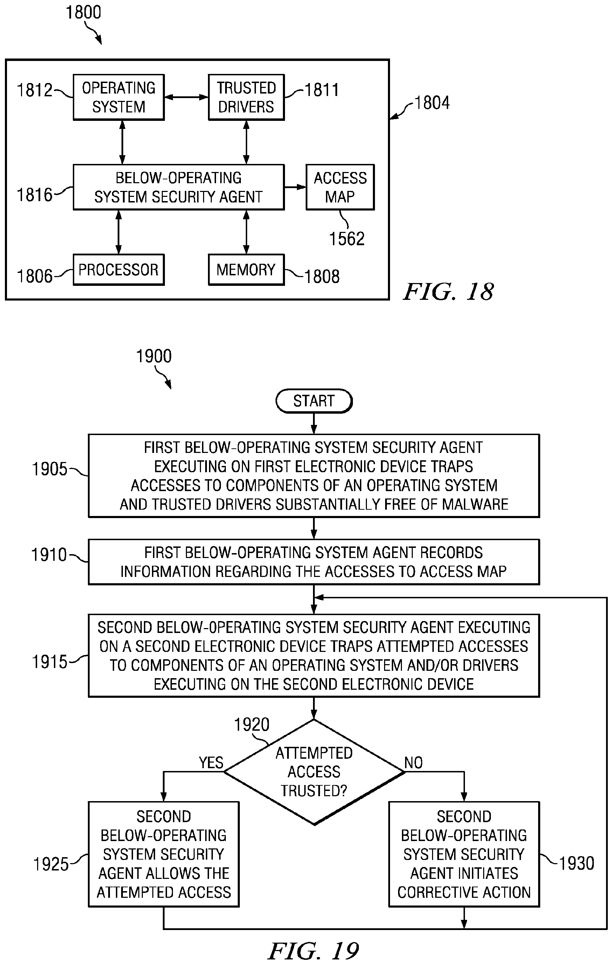

As shown in FIGURE 15, security rules 1522 may include access map 1562 and policies 1564. Access map 1562 may comprise a log, list, map, or other data structure setting forth one or more trusted accesses of various individual components (e.g., functions, data, and/or other components) of operating system 1512 and drivers 1511, along with contextual information regarding the one or more trusted accesses. FIGURE 16 is an example embodiment of access map 1562. In certain embodiments, access map 1562 may be created by simulating execution of a substantially malware-free operating system (e.g., operating system 1812 of FIGURE 18) and its substantially malware-free trusted drivers (e.g., trusted drivers 1811) on another electronic device (e.g., electronic device 1800 of FIGURE 18). Creation of access map 1562 in accordance with such embodiments is described in further detail below with respect to FIGURES 18 and 19. As shown in FIGURE 16, access map 1562 may include one or more function access submaps 1602, one or more data access submaps 1604, and/or one or more stack access maps 1606.

A function access submap 1602 may define, for a particular function of operating system 1512 or a trusted driver 1511, trusted accesses to the particular function by other trusted functions. Function access submap 1602 may also include contextual information associated with such a trusted access to a function, such contextual information including, in some embodiments, code sections (e.g., as identified by a memory location) in which a calling function of a trusted access is located within a particular driver.

A data access submap 1604 may define, for a particular item of data of operating system 1512 or a driver 1511, trusted accesses to the particular data by trusted functions. Data access submap 1604 may also include contextual information associated with such a trusted access to an item of data, such contextual information including, in some embodiments, a particular memory location associated with a trusted function, code sections (e.g., as identified by a memory location) in which the trusted function is located within a particular driver and/or whether a trusted access is a read or a write access.

A stack access submap 1606 may define a function stack describing permitted calling relationships among multiple functions. In stack access submap 1606, each particular function in the stack is trusted to access a function appearing below it in the function stack. Stack access submap 1606 may include contextual information similar to that of function access submap 1602. Stack access submap 1606 may show, for example, that a particular function F2 may call a function F3, and a function F3 may call F4, while F4 calling F3 and F3 calling F2 may not be a trusted function call path.

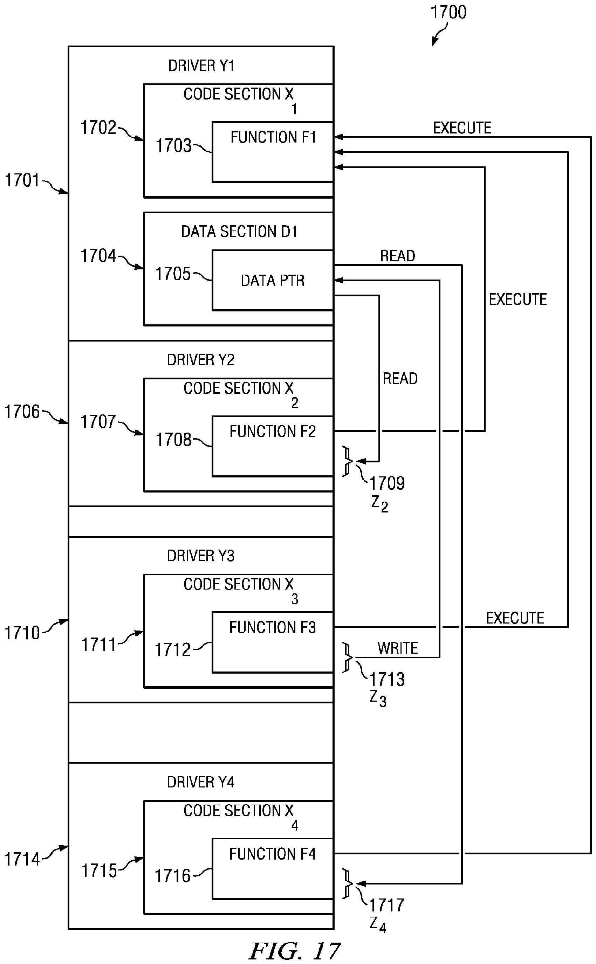

The identities of the various functions, data, code sections, drivers, and other entities set forth in access map 1562 may be defined by a memory location (e.g., physical memory address or virtual memory address) at which the particular function, data, code section, driver, or entity is stored in memory. FIGURE 17 is an example embodiment of a virtual memory 1700 further illustrating the interrelationships among functions and data defined in example access map 1562 of FIGURE 16. As depicted in FIGURE 17, memory 1700 may include drivers Y1, Y2, Y3, and Y4, located at memory addresses 1701, 1706, 1710, and 1714 respectively. Driver Y1 may include function F1 at address 1703 within code section X1 at address 1702. Driver Y1 may also include a data pointer 1705 within data section D1 at address 1704. Driver Y2 may include function F2 at address 1708 within code section X2 at address 1707. Driver Y3 may include function F3 at address 1712 within code section X3 at address 1711. Driver Y4 may include function F4 at address 1716 within code section X3 at address 1715. A memory address Z2 of function F2 may reside at memory location 1709. A memory address Z3 of function F3 may reside at memory location 1713. A memory address Z4 of function F4 may reside at memory location 1717. The various arrows in FIGURE 17 depict trusted accesses among functions and data set forth in access map 1562 of FIGURE 16. For example, the trusted accesses of function access submap 1602 are depicted by the arrow denoting a trusted execution call between function F2 at address 1708 and function F1 at address 1703, by the arrow denoting a trusted execution call between function F3 at address 1712 and function F1 at address 1703, and by the arrow denoting a trusted execution call between function F4 at address 1716 and function F1 at address 1703.

Returning to FIGURE 15, policies 1564 may comprise a log, list, or other data structure setting forth policies to be applied in order to define events to be trapped by below-O/S security agent 1516 and/or handling of trapped events. In a particular embodiment, a policy may dictate that in response to an attempted access (e.g., a read, write, execute, function call) by a driver function to a portion of memory storing a component of operating system 1512 or trusted drivers 1511, below-O/S security agent 1516 may allow such attempted access if an entry in access map 1562 indicates that such driver function has access to such component (including, in some embodiments, an indication that the driver function is present in a particular code section of a driver, as defined in access map 1562). In the same or alternative embodiments, a policy may dictate that in response to an attempted access (e.g., a read, write, execute, function call) by a driver function to a portion of memory storing a component of operating system 1512 or trusted drivers 1511, below-O/S security agent 1516 may deny such attempted access if no entry in access map 1562 indicates that such driver function has access to such component (including, in some embodiments, an indication that the driver function is present in a particular code section of a driver, as defined in access map 1562). In these and other embodiments, a policy may dictate that for attempted accesses to components of operating system 1512 or trusted drivers 1511 by an unknown driver function, certain attempted accesses may be allowed and other attempted accesses denied, and/or information regarding such access may be communicated to protection server 202 as forensic evidence for further analysis.

In operation, below-O/S security agent 1516 may trap upon attempted accesses to components of operating system 1512 and drivers 1511 in accordance with any trapping technique set forth in this disclosure. In some embodiments, below-O/S security agent 1516 may trap upon events in accordance with security rules 1522. In response to trapping an attempted access to a component of operating system 1512 and drivers 1511, below O/S security agent 1516 may compare contextual information associated with the attempted access to access map 1562 to determine if the attempted access is trusted. If the attempted access is trusted (e.g., if the attempted access has a corresponding entry in access map 1562), below-O/S security agent 1516 may allow the access. If the attempted access is not trusted (e.g., if the attempted access does not have a corresponding entry in access map 1562), below-O/S security agent 1516 may initiate corrective action. Corrective action may include denial of the attempted access, consulting policies 1564 to determine whether to allow or deny the access, and/or reporting forensic data (e.g., contextual information) regarding such accesses to protection server 202 for further processing. Accordingly, below-O/S security agent 1516, in connection with access map 1562 and policies 1564, may protect malicious attacks to components of operating system 1512 and drivers 1511.

In some embodiments, policies 1564 may dictate that corrective action initiated by below-O/S security agent 1516 in response to an untrusted attempted access may depend on whether the attempted access is by a potentially non-malicious entity or by a potentially malicious entity. A potentially malicious entity may be an application, driver or other entity that is unknown to below-O/S security agent 1516 (e.g., does not appear in any of a whitelist or a blacklist), that initiates an untrusted attempted access (e.g., does not have a corresponding entry in access map 1562), and that exhibits behavior indicating a potential presence of malware (e.g., attempting to access sensitive resources of electronic device 1504, attempting to access a subfunction without using a function routing provided by operating system 1512, etc.). A potentially non-malicious entity may be any entity not otherwise found to be a potentially malicious entity. In the case of a potentially non-malicious entity, policies 1564 may allow certain attempted accesses while denying others. For example, for potentially non-malicious entities, network calls and file system calls may be allowed, while attempted accesses to modify internal network dispatch routine pointers, modify internal Network Driver Interface Specification (NDIS) pointers, or write to a kernel code section, data section, or System Service Dispatch Table (SSDT) may be denied. On the other hand, for potentially malicious entities, all attempted accesses may be denied.

In other embodiments, policies 1564 may dictate that unknown entities (e.g., entities not appearing in a whitelist or blacklist) may be allowed to execute an attempted access once with restriction, after which information regarding the access may be communicated to protection server 202 and further evaluated to determine any further corrective action.

FIGURE 18 is an example embodiment of a system 1800 for generating access map 1562. System 1800 may include a below-O/S security agent 1816 configured to operate on an electronic device 1804 to generate entries in access map 1562 based on observed behavior of operating system 1812 and trusted drivers 1811. As shown in FIGURE 18, electronic device 1804 may include a processor 1806, a memory 1808, drivers 1811, operating system 1812, and below-O/S security agent 1816. Electronic device 1804 may be implemented wholly or in part by or configured to implement the functionality of electronic device 103 of FIGURE 1, electronic device 204 of FIGURE 2, electronic device 404 of FIGURE 4, electronic device 701 of FIGURE 7, electronic device 901 of FIGURE 9, electronic device of FIGURE 1201 of FIGURE 12, and/or any combination thereof.

Processor 1806 may comprise, for example a microprocessor, microcontroller, digital signal processor (DSP), application specific integrated circuit (ASIC), or any other digital or analog circuitry configured to interpret and/or execute program instructions and/or process data. In some embodiments, processor 1806 may interpret and/or execute program instructions and/or process data stored in memory 1808. Memory 1808 may be configured in part or whole as application memory, system memory, or both. Memory 1808 may include any system, device, or apparatus configured to hold and/or house one or more memory modules; for example, memory 1808 may include read-only memory, random access memory, solid state memory, or disk-based memory. Each memory module may include any system, device or apparatus configured to retain program instructions and/or data for a period of time (e.g., computer-readable non-transitory media).

Below-O/S security agent 1816 may be implemented wholly or in part by or configured to implement the functionality of below-O/S trapping agent 104 of FIGURE 1, SVMM security agent 217 or SVMM 216 of FIGURE 2, firmware security agents 440, 442, PC firmware security agent 444, or below-O/S system agent 450 of FIGURE 4, firmware security agent 516 of FIGURE 5, microcode security agent 708 of FIGURE 7, below-O/S trapping agent 920 of FIGURE 9, below-O/S security agent 1220 of FIGURE 12, below-O/S security agent 1516 of FIGURE 15, and/or any combination thereof.

Operating system 1812 may be implemented wholly or in part by or configured to implement the functionality of operating system 112 of FIGURE 1, operating system 212 of FIGURE 2, operating system 412 of FIGURE 4, operating system 713 of FIGURE 7, operating system 913 of FIGURE 9, operating system 1213 of FIGURE 12, operating system 1512 if FIGURE 15, and/or any combination thereof. Trusted drivers 1811 may be implemented wholly or in part by or configured to implement the functionality of driver 111 of FIGURE 1, driver 211 of FIGURE 2, driver 411 of FIGURE 4, driver 711 of FIGURE 7, driver 911 of FIGURE 9, driver 1211 of FIGURE 12, driver 1511 of FIGURE 15, and/or any combination thereof. However, in connection with use in electronic device 1804, operating system 1812 may be free from malware and trusted drivers 1811 may include only those drivers which are known to be non-malicious and free from malware. For example, care may be taken with respect to electronic device 1804 to ensure that operating 1812 and trusted drivers 1811 include no malicious entities. As a specific example, operating system 1812 and trusted drivers 1811 may be installed onto an empty or newly-formatted computer-readable medium of electronic device 1804, and care may be taken that no other entities, other than below-O/S security agent 1816, are installed upon electronic device 1804.

In operation, below-O/S security agent 1816 may trap upon attempted accesses to components of operating system 1812 and trusted drivers 1811 in accordance with any trapping technique set forth in this disclosure. In response to trapping an access to a component of system 1812 and trusted drivers 1811, below-O/S security agent 1816 may determine contextual information associated with the access and store a record of the access and the contextual information (e.g., as part of a function access submap 1602, a data access submap 1604, a function stack access submap 1606, or other suitable manner). Thus, execution of substantially malware-free electronic device 1804 and the trusted dependencies among operating system 1812 and its trusted drivers 1811 may be observed by below-O/S security agent 1816 to generate entries of access map 1562, wherein each entry defines a trusted access to a component of operating system 1812 or a trusted driver 1811. Because entries of access map 1562 are generated based on simulated execution of entities known to be substantially free from malware, access map 1562 may include a representation of standard expected behavior of operating system 1812 and its trusted drivers 1811, without additional entities. Thus, access map 1562 may include only entries having legitimate, non-malicious accesses to components of operating system 1812 and its trusted drivers 1811.

Consequently, once below-O/S security agent 1816 of electronic device 1804 generates access map 1562, access map 1562 may be made available to below-O/S security agent 1516 (e.g., by accessing access map 1562 via network 244, by downloading access map to electronic device 1504, by transfer to electronic device 1504 via a computer-readable storage medium, etc.), where below-O/S security agent 1516 may, as described above, trap attempted accesses to components of operating system 1512 and/or drivers 1511 to determine which of the attempted accesses are trusted or untrusted, and take further action based upon such determination. As a result, below-O/S security agent may protect operating system 1512 and trusted drivers 1511 from malicious accesses.

FIGURE 19 is an example embodiment of a method 1900 for protecting an operating system kernel of an electronic device. In method 1900, a first below-O/S security agent executing on a first electronic device having installed thereon an operating system and associated trusted drivers being substantially free from malware may be employed to create an access map (see, e.g., steps 1905-1910). In addition, a second below-O/S security agent executing on a second electronic device may, by reference to the access map, protect components of a second operating system and its related drivers installed on the second electronic device (see, e.g., steps 1915-1930).

In step 1905, a first below-O/S security agent executing on a first electronic device, the first electronic device having installed thereon an operating system and associated trusted drivers being substantially free from malware, may trap accesses to components (e.g., functions and data) of the operating system and/or the trusted drivers. At step 1910, the first below-O/S security agent may record information regarding the accesses, including contextual information associated with the accesses, to an access map. With respect to an access to a function by another calling function, such contextual information may include code sections (e.g., as identified by a memory location) in which a calling function of a trusted access is located within a particular driver. With respect to an access to an item of data by a calling function, such contextual information may include a particular memory register associated with a trusted function, code sections in which the trusted function is located within a particular driver and/or whether a trusted access is a read or a write access.

At step 1915, a second below-O/S security agent executing on a second electronic device may trap attempted accesses to components of an operating system and/or drivers executing on the second electronic device. At step 1920, in response to trapping an attempted access to a component, the second below O/S security agent may compare contextual information associated with the attempted access to the access map to determine if the attempted access is trusted. An attempted access may be trusted if the attempted access has a corresponding entry in the access map. If the attempted access is trusted, method 1900 may proceed to step 1925. If the attempted access is not trusted, method 1900 may proceed to step 1930.

At step 1925, in response to a determination that the attempted access is trusted, the second below-O/S security agent may allow the attempted access. After completion of step 1925, method 1900 may proceed again to step 1915.

At step 1930, in response to a determination that the attempted access is not trusted, the second below-O/S security agent may initiate corrective action. Corrective action may include denial of the attempted access, consulting policies to determine whether to allow or deny the access, and/or reporting forensic data (e.g., contextual information) regarding such accesses to a protection server for further processing. After completion of step 1925, method 1900 may proceed again to step 1915.

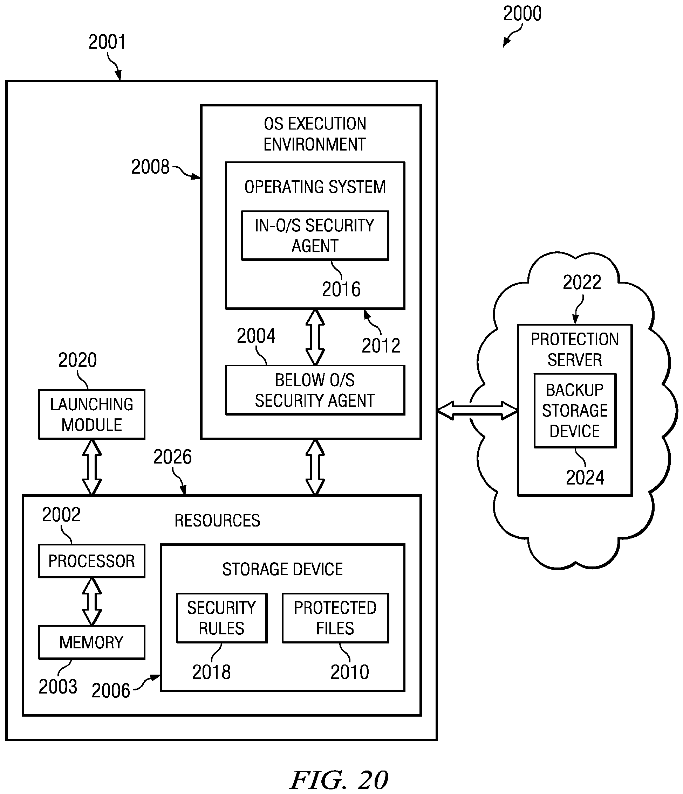

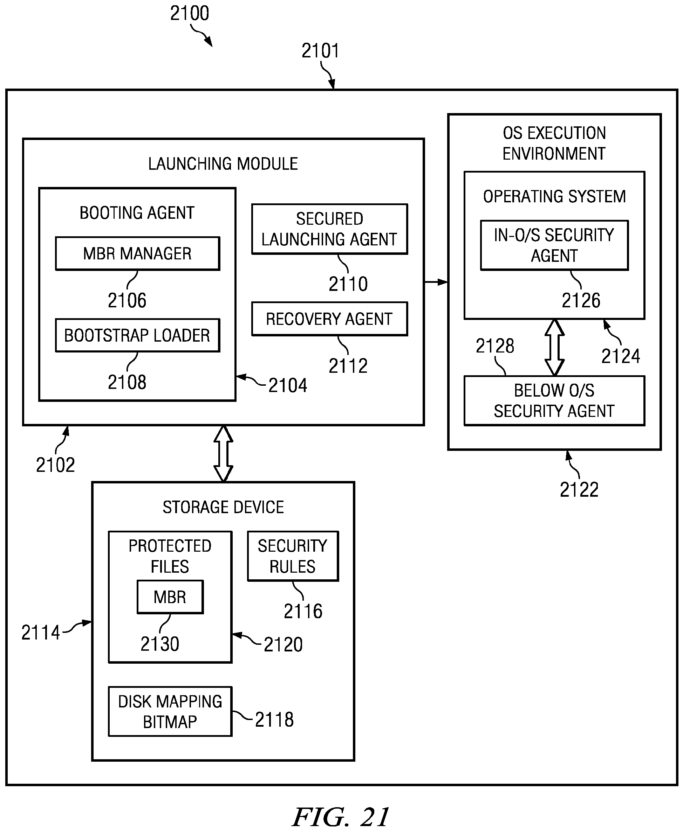

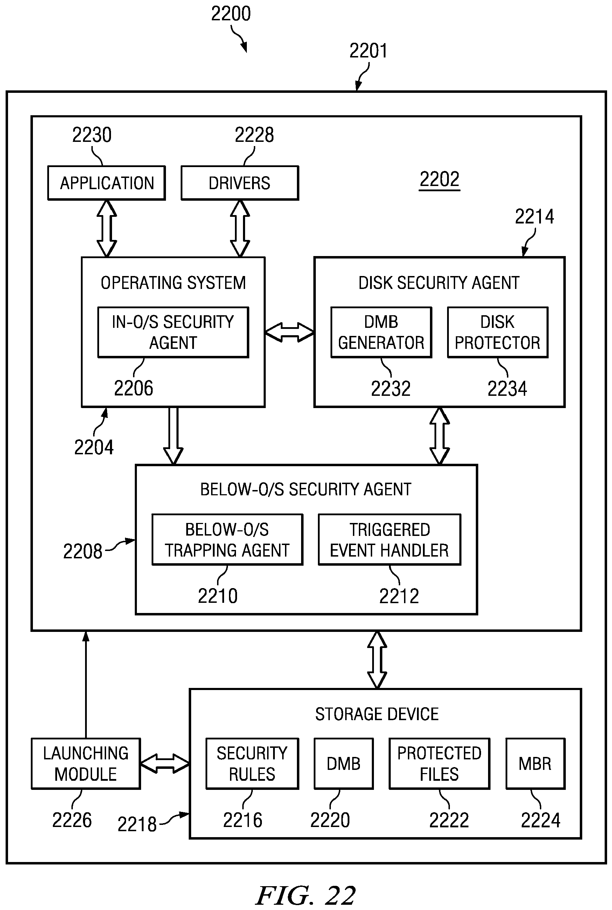

FIGURE 20 is an example embodiment of a system 2000 for providing an operating system execution environment for securely executing an operating system. configured to protect an electronic device 2001 from malware. The elements from FIGURE 20 may be the same as their commonly named counterparts from FIGURE 21 and FIGURE 22. System 2000 may include a launching module 2020 configured to provide a secured launch of an operating system execution environment 2008 ("OSEE"). Launching module 2020 may be configured to provide a secured launch of OSEE 2008 by ensuring that components of OSEE 2008, such as below-Operating System ("O/S") security agent 2004, operating system 2012, and in-O/S security agent 2016 are uninhibited by malware prior to being launched. After launching module 2020 successfully provides a secure launch of OSEE 2008, components of OSEE 2008, such as below-O/S security agent 2004 and in-O/S security agent 2016, may cooperate to prevent malware from infecting components of electronic device 2001, such as launching module 2020.

Electronic device 2001 may include a launching module 2020 configured to provide a secured launch of OSEE 2008. OSEE 2008 may include below-O/S security agent 2004 and in-O/S security agent 2016 to provide a secure environment for executing one or more operating systems 2012. Electronic device 2001 may also be communicatively coupled to a protection server 2022 to assist in providing a secure environment for executing one or more operating systems 2012. Protection server 2022 may include a backup storage device 2024. Electronic device 2001 may be implemented wholly or in part by or configured to implement the functionality of electronic device 103 of FIGURE 1, electronic device 104 of FIGURE 2, electronic device 404 of FIGURE 4, electronic device 701 of FIGURE 7, and/or any combination thereof. Electronic device 2001 may include resources 2026, such as one or more processors 2002, memory 2003, or storage devices 2006. Processor 2002 may be implemented wholly or in part by or configured to implement the functionality of processor 208 of FIGURE 2, processor 406 of FIGURE 4, processor 702 of FIGURE 7, and/or any combination thereof. Memory 2003 may be implemented wholly or in part by or configured to implement the functionality of memory 207 of FIGURE 2, memory 408 of FIGURE 4, memory 703 of FIGURE 7, and/or any combination thereof. Operating system 2012 may be implemented wholly or in part by or configured to implement the functionality of operating systems 112 of FIGURE 1, operating system 212 of FIGURE 2, operating system 412 of FIGURE 4, operating system 713 of FIGURE 7, and/or any combination thereof. Descriptions of example embodiments of in-O/S security agent 2016 may be found in discussions of in-O/S security agent 2206 from FIGURE 22. Descriptions of example embodiments of below-O/S security agent 2004 may be found in discussions of below-O/S security agent 2208 from FIGURE 22.

Storage device 2006 may be implemented by or configured to implement the functionality of resource 106 of FIGURE 1, system resources 214 of FIGURE 2, storage 426 of FIGURE 4, I/O device 502 of FIGURE 5, and/or any combination thereof. Storage device 2006 may include any suitable resource for storing data or other information. For example, storage device 2006 may include, without limitation, a direct access storage device (e.g., a hard disk drive or floppy disk), sequential access storage device (e.g., a tape disk drive), compact disk, CD-ROM, DVD, random access memory (RAM), and/or flash memory (e.g., a flash based solid-state drive). Storage device 2006 may be divided into one or more sectors that are each capable of storing a fixed amount of data. For example, storage device 2006 may be divided into sectors of 512 bytes each, although any suitable sector size may be used. In various embodiments, storage device 2006 may be located remotely from electronic device 2001, such as on a protection server 2022. In other embodiments, storage device 2006 may be a local resource 2026 of electronic device 2001.

Backup storage device 2024 may include any suitable resource for storing data or other information. For example, backup storage device 2024 may be implemented by or configured to implement the functionality of storage device 2006. Backup storage device 2024 may be implemented by a local storage device of electronic device 2001, such as storage device 2006. In other embodiments, backup storage device 2024 may be implemented by a remote storage device located over a network, such as on a protection server 2022. If backup storage device 2024 is located on a network, below-O/S security agent 2004 may use network connectivity to access backup storage device 2024. Network connectivity may be implemented at a priority level below operating system 2012 to avoid using the network device drivers of the operating system kernel, which may be infected with malware. Network connectivity may be implemented using Active Management Technology (AMT), which may allow use of an HTTPS, iSCSI, NFS, or CIFS client to access the backup storage device 2024 by directly accessing the network card of electronic device 2001. In such embodiments, although a network connection is required to access backup storage device 2024, backup storage device 2024 may be isolated from any malware executing on operating system 2012 of electronic device 2001.

Protection server 2022 may be located remotely from electronic device 2001 and may be configured to communicate with the components of electronic device 2001, such as launching module 2020, below-O/S security agent 2004, and in-O/S security agent 2001, to provide security rules 2018 or to send and receive other information. For example, protection server 2022 may receive information regarding suspicious attempts to access resources 2026 and may store this information for subsequent analysis. Protection server 2022 may be implemented by or configured to implement the functionality of protection server 102 of FIGURE 1, protection server 202 of FIGURE 2, and/or any combination thereof.

Security rules 2018 may include any suitable rules, logic, commands, instructions, flags, or other mechanisms for specifying events that require trapping and the appropriate response for each event. Security rules 2018 may be implemented by or configured to implement the functionality of security rules 114 of FIGURE 1, security rules 220, 222 of FIGURE 2, security rules 420, 422, 434, 436, 438 of FIGURE 4, security rules 518 of FIGURE 5, security rules 707, 721, 723 of FIGURE 7, and/or any combination thereof.

Launching module 2020 may be configured to provide a secured launch of OSEE 2008 by ensuring that components of OSEE 2008, such as below-O/S security agent 2004, operating system 2012, and in-O/S security agent 2016 are uninhibited by malware prior to being launched. Launching module 2020 may assess whether below-O/S security agent 2004, operating system 2012, and in-O/S security agent 2016 are inhibited by malware by verifying the integrity of one or more protected files associated with below-O/S security agent 2004, operating system 2012, and in-O/S security agent 2016. If launching module 2020 detects malware in any of the protected files, launching module 2020 may be configured to restore the protected files from a backup copy. After launching module 2020 verifies that components of OSEE 2008 are uninhibited by malware or launching module 2020 successfully restores any components of OSEE 2008 that are inhibited by malware, launching module 2020 may launch OSEE 2008. When launching OSEE 2008, launching module 2020 may launch below-O/S security agent 2004 prior to launching other components of OSEE 2008, such as operating system 2012.

After launching module 2020 successfully provides a secure launch of OSEE 2008, components of OSEE 2008, such as below-O/S security agent 2004 and in-O/S security agent 2016, may cooperate to prevent malware from infecting resources 2026 of electronic device 2001. For example, below-O/S security agent 2004 and/or in-O/S security agent 2016 may be configured to intercept attempts to access various protected files on storage device 2026, as specified by the security rules 2018. The protected files may include files associated with launching module 2020, below-O/S security agent 2004, or in-O/S security agent 2016, or core files of operating system 2012. Protecting these files from malware may help to ensure that the safeguards employed by these components are not subverted by malware. For example, by protecting launching module 2020 from malware while operating system 2012 is executing, launching module 2020 will be free from malware on the next startup of electronic device 2001. In this manner, the components of OSEE 2008, such as below-O/S security agent 2004, in-O/S security agent 2016, and operating system 2012, may be checked for malware by launching module 2020 when the electronic device 2001 is booted, and launching module 2020 may be protected from malware by components of OSEE 2008 while operating system 2012 is executing.

FIGURE 21 is an example embodiment of a launching module 2102 in a system for providing a secured operating system execution environment. The elements from FIGURE 21 may be the same as their commonly named counterparts from FIGURE 20 and FIGURE 22. Launching module 2102 may be used, for example, to implement functionality of launching module 2020 from the system of FIGURE 20 or launching module 2226 from the system of FIGURE 22. Launching module 2102 may be configured to provide a secured operating system execution environment 2122 by securely launching below-O/S security agent 2128, operating system 2124, and in-O/S security agent 2126.

Launching module 2102 may include booting agent 2104, secured launching agent 2110, and recovery agent 2112. Booting agent 2104 may be configured to ensure that when electronic device 2101 is initiated, secured launching agent 2110 is booted before operating system 2124 and any other software (e.g., malware). Secured launching agent 2110 may be configured to securely launch OSEE 2122. OSEE 2122 may be an execution environment for securely executing operating system 2124. Secured launching agent 2110 may provide a secured launch of OSEE 2122 by utilizing security rules 2116 to determine whether below-O/S security agent 2128, operating system 2124, and/or in-O/S security agent 2126 have been infected with malware. For example, secured launching agent 2110 may check components of OSEE 2122 for malware by scanning the disk image of each component on storage device 2114 for known patterns of malware, by comparing cryptographic hash values of the disk image of each component, and/or by using any other suitable method for detecting malware. If secured launching agent 2110 detects a malware infection, recovery agent 2112 may be utilized to recover from the malware infection. If no malware infection is detected by secured launching agent 2110, or if a successful recovery is accomplished by recovery agent 2112, secured launching agent 2110 may be configured to launch below-O/S security agent 2128, operating system 2124, and/or in-O/S security agent 2126. Below-O/S security agent 2128 may be implemented by or configured to implement the functionality of below-O/S security agent 2208 of FIGURE 22. In-O/S security agent 2126 may be implemented by or configured to implement the functionality of in-O/S security agent 2206 of FIGURE 22. Operating system 2124 may be implemented by or configured to implement the functionality of operating system 2012 of FIGURE 20. Storage device 2114 may be implemented by or configured to implement the functionality of storage device 2006 of FIGURE 20. Security rules 2116 may be implemented by or configured to implement the functionality of security rules 2018 of FIGURE 20.

Booting agent 2104 may include Master Boot Record ("MBR") manager 2106 and bootstrap loader 2108 and may be configured to ensure that when electronic device 2101 is initiated, secured launching agent 2110 is booted before operating system 2124 and any other software, such as malware. MBR manager 2106 may be configured to replace the existing MBR 2130 on storage device 2114 with the bootstrap loader 2108. MBR 2130 may be located on the first sector (i.e., sector 0) of a storage device and may be responsible for booting an operating system 2124 or other software when an electronic device 2101 is initiated. By replacing MBR 2130 with bootstrap loader 2108, bootstrap loader 2108 may become the new MBR 2130. The original MBR 2130 will not be executed, and accordingly, the operating system 2124 or other software associated with the original MBR 2130 will not be booted. Instead, when electronic device 2101 is initiated, bootstrap loader 2108 will be executed since it has become the new MBR 2130. Bootstrap loader 2108 may be configured to boot secured launching agent 2110, which is responsible for launching OSEE 2122. In this manner, secured launching agent 2110 may be booted prior to operating system 2124 and/or any other software, allowing secured launching agent 2110 to check for malware prior to loading below-O/S security agent 2128, in-O/S security agent 2126, and/or operating system 2124.

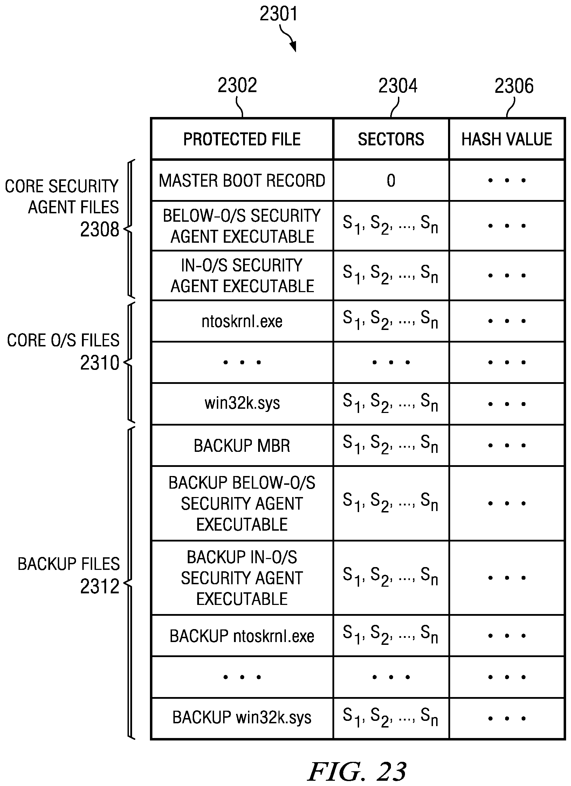

Secured launching agent 2110 may be configured to launch OSEE 2122. OSEE 2122 may be configured as an execution environment for securely executing an operating system 2124 and may include below-O/S security agent 2128, operating system 2124, and/or in-O/S security agent 2126. Secured launching agent 2110 may be implemented by a slim embedded operating system capable of providing disk I/O functionality, network I/O functionality, and basic console I/O functionality. In another embodiment, secured launching agent 2110 may be implemented by below-O/S security agent 2128. Secured launching agent 2110 may be configured to detect whether below-O/S security agent 2128, operating system 2124, and/or in-O/S security agent 2126 have been infected with malware. In order to detect a malware infection, secured launching agent 2110 may use a cryptographic hash algorithm to verify the integrity of various protected files 2120 associated with below-O/S security agent 2128, operating system 2124 and/or in-O/S security agent 2126. Protected files may include, for example, MBR 2130, core files of operating system 2124, and the executable images of below-O/S security agent 2128 and/or in-O/S security agent 2126. To verify the integrity of a protected file 2120, secured launching agent 2110 may use a hash algorithm to compute a hash value for the protected file 2120. The computed hash value may then be compared to a previously generated hash value for the protected file 2120. If the hash values differ, then protected file 2120 has been modified or altered, possibly by malware. In various embodiments, security agent 2110 may utilize a disk mapping bitmap ("DMB") 2118 to verify the integrity of protected files 2120. Disk mapping bitmap 2118 may specify the location of each protected file 2120 on storage device 2114 and may also provide a previously generated hash value for each protected file 2120. Descriptions of example embodiments of disk mapping bitmap 2118 may be found in discussions of disk mapping bitmap 2301 from FIGURE 23. Secured launching agent 2110 may consult disk mapping bitmap 2118 to identify the location of a protected file 2120 on storage device 2114, compute a hash value for the protected file 2120, and compare the computed hash value to the previously generated hash value provided by disk mapping bitmap 2118. If the hash values for a protected file 2120 do not match, the protected file 2120 has been altered or modified, possibly by malware. Secured launching agent 2110 may launch recovery agent 2112 to recover from the potential malware infection. If no potential malware infections are detected, or if all potentially infected files are successfully recovered by recovery agent 2112, secured launching agent 2110 may proceed to load below-O/S security agent 2128, operating system 2124, and in-O/S security agent 2126. Security launching agent 2110 may be configured to terminate after launching OSEE 2122.

Recovery agent 2112 may be configured to recover from a malware infection of one or more protected files 2120 associated with below-O/S security agent 2128, operating system 2124, and/or in-O/S security agent 2126. To recover from a malware infection, recovery agent 2112 may be configured to retrieve backup files from a backup storage device and replace the infected protected files 2120 with the corresponding backup files. Backup files may be stored locally on electronic device 2101, for example on storage device 2114. Backup files may also be stored in a remote location from electronic device 2101. For example, backup files may be stored over a network, such as on backup storage device 2024 of protection server 2022 from FIGURE 20. Metadata for the backup files may be maintained and may include a revision number and the date and time the backup file was created. Prior to using the backup files for recovery of the protected files 2120, recovery agent 2112 may be configured to verify the integrity of the backup files to ensure the backup files have not been infected with malware. Recovery agent 2112 may verify the integrity of the backup files similar to the manner in which secured launching agent 2110 verifies the integrity of protected files 2120. For example, recovery agent 2112 may compute a hash value for a backup file and may compare the computed hash value to the corresponding hash value for the backup file from disk mapping bitmap 2118. If the comparison of hash values indicates that a backup file may be infected with malware, the backup file may not be used and/or an older backup file may be used. Recovery agent 2112 may be configured to inform secured launching agent 2110 of a successful recovery to allow secured launching agent 2110 to proceed in launching below-O/S security agent 2128, operating system 2124, and in-O/S security agent 2126.

FIGURE 22 is an example embodiment of an operating system execution environment ("OSEE") 2202 for securely executing an operating system. The elements from FIGURE 22 may be the same as their commonly named counterparts from FIGURE 20 and FIGURE 21. OSEE 2202 may be used, for example, to implement functionality of OSEE 2008 from FIGURE 20 or OSEE 2122 from FIGURE 21. OSEE 2202 may be configured as an execution environment for securely executing operating system 2204, and may include operating system 2204, below-O/S security agent 2208, in-O/S security agent 2206, and/or disk security agent 2214. OSEE 2202 may be securely launched by launching module 2226. Thereafter, components of OSEE 2202, such as below-O/S security agent 2208, in-O/S security agent 2206, and disk security agent 2214, may cooperate to prevent malware from inhibiting components of electronic device 2201. For example, components of OSEE 2202 may cooperate to protect launching module 2226 from malware. Protection of launching module 2226 in this manner may help ensure that on the next initialization of electronic device 2201, the safeguards employed by launching module 2226 are not subverted to allow the launch of a malware infected operating system 2204, below-O/S security agent 2208, and/or in-O/S security agent 2206.

OSEE 2202 may include below-O/S security agent 2208, operating system 2204, in-O/S security agent 2206, and/or disk security agent 2214. OSEE 2202 may be securely launched by launching module 2226. After launching module 2226 successfully provides a secure launch of OSEE 2202, components of OSEE 2202, such as below-O/S security agent 2208, in-O/S security agent 2206, and disk security agent 2214 may cooperate to prevent malware from inhibiting components of electronic device 2201, such as launching module 2226.

Below-O/S security agent 2208 may include below-O/S trapping agent 2210 and triggered event handler 2212. Below-O/S trapping agent 2210 may be implemented by or configured to implement the functionality of below-O/S trapping agent 104 of FIGURE 1, SVMM 216 of FIGURE 2, firmware security agents 440, 442 or PC firmware security agent 444 of FIGURE 4, firmware security agent 516 of FIGURE 5, microcode security agent 708 of FIGURE 7, and/or any combination thereof. Triggered event handler 2010 may be implemented by or configured to implement the functionality of triggered event handler 108 of FIGURE 1, SVMM security agent 217 of FIGURE 2, below-O/S agent 450 of FIGURE 4, below-O/S agent 712 of FIGURE 7, and/or any combination thereof. In various embodiments, some of the functionality of below-O/S trapping agent 2210 may be accomplished by triggered event handler 2212, or some of the functionality of triggered event handler 2212 may be accomplished by below-O/S trapping agent 2210. In one embodiment, triggered event handler 2212 may be operating at the same priority level as below-O/S security agent 2208. In another embodiment, triggered event handler 2212 may be implemented as part of in-O/S security agent 2206 and may be operating at or above the priority level of operating system 2204. In still yet another embodiment, triggered event handler 2212 may be implemented by two or more triggered event handlers wherein at least one triggered event handler operates at the same priority level as below-O/S security agent 2208 and at least one triggered event handler operates at or above the priority level of operating system 2204.

Below-O/S security agent 2208 may be configured to use below-O/S trapping agent 2210 to intercept requests to access resources of electronic device 2201, such as storage device 2218. Upon intercepting a request to access storage device 2218, below-O/S trapping agent 2210 may be configured to create a triggered event associated with trapped access attempt, and may be configured to send the triggered event to triggered event handler 2212 to determine the appropriate action to take with respect to the event. A triggered event may include information such as the area (e.g., sector and/or file) of storage device 2218 associated with the request, the requesting entity, and the type of access requested. The requesting entity is the entity responsible for initiating the request, such as the operating system 2204, a driver 2228, or an application 2230. The type of access requested may include a request to read, write, or execute code from storage device 2218.

Triggered event handler 2212 may be configured to receive and process triggered events from below-O/S trapping agent 2210. Triggered events may contain information about a request to access storage device 2218 that has been trapped by below-O/S trapping agent 2210. Triggered event handler 2212 may be configured to utilize one or more security rules 2216, in conjunction with the contextual information associated with a triggered event, to identify attempts to access protected areas of storage device 2218 and to determine the appropriate response. After identifying an attempt to access a protected area, such as a protected sector and/or file, triggered event handler 2212 may be configured to consult security rules 2216 to determine whether the attempt to access the protected area is authorized. Triggered event handler 2212 may further be configured to provide a determination to below-O/S security agent 2208 of the appropriate action. For example, triggered event handler 2212 may inform below-O/S security agent 2208 whether the triggered event should be allowed or denied, or whether other corrective action should be taken.

In-O/S security agent 2206 may be implemented wholly or in part by or configured to implement the functionality of in-O/S security agent 218 of FIGURE 1, in-O/S security agent 418 of FIGURE 4, in-O/S security agent 719 of FIGURE 7, and/or any suitable combination thereof. In-O/S security agent 2206 may be executing at or above the priority level of operating system 2204 and may be configured to consult one or more security rules 2216 to protect electronic device 2201 from malware. For example, security rules 2216 may require in-O/S security agent 2206 to intercept attempts to access certain protected files 2222 on storage device 2218. Security rules 2216 may further specify whether a particular attempt to access a protected file 2222 is authorized. However, because in-O/S security agent 2206 is executing at or above the priority level of operating system 2204, in-O/S security agent 2206 may itself be infected with malware executing on operating system 2204 and the safeguards of in-O/S security 2206 may be circumvented. To help prevent this possibility, below-O/S security agent 2208 may be configured to protect in-O/S security agent 2206 from malware.

Disk security agent 2214 may include DMB generator 2232 and disk protector 2234, and may be used to protect components of electronic device 2201, such as launching module 2226 and components of OSEE 2202, from malware. Disk security agent 2214 may be implemented in any suitable manner. In one embodiment, disk security agent 2214 may be implemented as part of below-O/S security agent 2208 and/or may be executing at the same priority level as below-O/S security agent 2208. In another embodiment, disk security agent 2214 may be implemented as part of in-O/S security agent 2206 and/or may be operating at or above the priority level of operating system 2204. In still yet another embodiment, disk security agent 2214 may be implemented by two or more disk security agents wherein at least one disk security agent operates at the same priority level as below-O/S security agent 2208, and at least one disk security agent operates at or above the priority level of operating system 2204.

Disk protector 2234 may be configured to protect launching module 2226 and components of OSEE 2202 from malware by intercepting unauthorized attempts to access various protected files 2222 associated with these components. Protected files 2222 may include core operating system files (e.g., operating system kernel files), core security agent files (e.g., executable images of below-O/S security agent 2208 and in-O/S security agent 2206), and/or backup copies of these files. Disk protector 2234 may prevent unauthorized access to protected files 2222 by intercepting unauthorized attempts to access the sectors of storage device 2218 where the protected files 2222 are stored. In some embodiments, disk protector 2234 may use a disk mapping bitmap 2220 to identify protected files 2222 as well as the sectors on storage device 2218 where the protected files 2222 are stored. Descriptions of example embodiments of disk mapping bitmap 2220 may be found in discussions of disk mapping bitmap 2301 from FIGURE 23 Disk mapping bitmap 2220 may contain information associated with various protected files, including, for example, the sector or sectors of a storage device where each protected file is stored. Disk protector 2234 may consult disk mapping bitmap 2220 to identify the sectors of storage device 2218 where protected files 2222 are stored. Disk protector 2234 may then intercept attempts to access the sectors associated with protected files 2222 and may consult security rules 2216 to determine whether an attempt is authorized. For example, security rules 2216 may specify that a request to write to core operating system files shall be denied unless the request is from the operating system 2204.

In some embodiments, functionality of disk protector 2234 may be implemented by components of below-O/S security agent 2208. By implementing disk protector 2234 as a component of below-O/S security agent 2208, disk protector 2234 may execute at a level below the operating system 2204 and may avoid much of the malware that plagues operating system 2204. Functionality of disk protector 2234 may be implemented, for example, by below-O/S trapping agent 2210 and triggered event handler 2212. Below-O/S trapping agent 2210 may be configured to consult disk mapping bitmap 2220 to identify sectors of storage device 2218 that require protection. Below-O/S trapping agent may further be configured to trap attempts to access the identified sectors of storage device 2218 and may utilize security rules 2216 to determine if an attempt is authorized. In this manner, the protected files 2222 identified by disk mapping bitmap 2220 may be protected from unauthorized access.

In other embodiments, functionality of disk protector 2234 may be implemented as a component of in-O/S security agent 2206. For example, in-O/S security agent 2206 may include a disk filter driver to implement functionality of disk protector 1133. A filter driver may be a driver 2228 that may be inserted into the existing driver stack for a particular device of an operating system 2204 and may be used to supplement the functionality of the preexisting drivers. For example, a disk filter driver may be inserted into the existing driver stack for a disk (e.g., storage device 2218) and may supplement the functionality of the preexisting disk drivers. A disk filter driver may implement functionality of disk protector 1133 by consulting disk mapping bitmap 2220 to identify sectors of storage device 2218 that require protection. The disk filter driver may then intercept attempts to access the protected sectors of storage device 2218 and may utilize security rules 2216 to determine if an attempt is authorized. In this manner, the protected files 2222 identified by disk mapping bitmap 2220 will be protected from unauthorized access. However, because a disk filter driver executes at or above the priority level of operating system 2204, the disk filter driver may itself be infected with malware executing on operating system 2204 and the safeguards of the disk filter driver may be circumvented. Accordingly, in some embodiments, functionality of disk protector 2234 may be implemented by both below-O/S security agent 2208 and in-O/S security agent 2206. For example, in-O/S security agent 2206 may be configured to use a disk filter driver, as described above, to intercept unauthorized attempts to access storage device 2218, and below-O/S security agent 2208 may be implemented to prevent unauthorized attempts to modify the disk filter driver image in memory or on storage device 2218, thereby protecting the disk filter driver from being subverted by malware executing at the same priority level as the operating system 2204.

Disk protector 2234 may further be configured to verify the integrity of the MBR prior to a shut down of electronic device 2201. For example, when a shut down of electronic device 2201 is initiated, disk protector 2234 may be configured to compute a hash value for MBR 2224. Disk protector 2234 may then consult disk mapping bitmap 2220 to obtain a previously generated hash value for MBR 2224 and may compare the computed hash value to the previously generated hash value. If the hash values differ, then MBR 2224 has been altered, possibly by malware, and disk protector 2234 may be configured to replace MBR 2224 with a backup copy. In this manner, on the next startup of electronic device 2201, a malware infected MBR 2224 will not be booted.

DMB generator 2232 may be configured to generate and update disk mapping bitmap 2220. For example, DMB generator 2232 may be configured to determine the sectors on storage device 2218 where each protected file 2222 is stored and may further be configured to generate a hash value for each protected file 2222. DMB generator 2232 may store the corresponding sectors and hash value for each protected file 2222 in disk mapping bitmap 2220. DMB generator 2220 may be implemented in any suitable manner. For example, functionality of DMB generator 2220 may be implemented as part of below-O/S security agent 2208 or in-O/S security agent 2206, or functionality of DMB generator 2220 may be implemented by both below-O/S security agent 2208 and in-O/S security agent 2206.

In one embodiment, DMB generator 2232 may generate disk mapping bitmap 2220 by intercepting requests to access protected files 2222. For example, in-O/S security agent 2206 may include a file system filter driver configured to intercept requests to access protected files 2222. A file system filter driver intercepts requests targeted at a file system or another file system filter driver. By intercepting the request before it reaches its intended target, the filter driver can extend or replace functionality provided by the original target of the request. The file system filter driver from in-O/S security agent 2206 may intercept file I/O requests that are directed to a protected file 2222. The filter driver may then query the file system to obtain the sectors on a storage device 2218 where the contents of the protected file 2222 are stored. The filter driver may then access the Master Format Table (MFT) of the file system to determine the disk sector layout of the protected file 2222. Disk mapping bitmap 2220 may be updated to specify the identified sectors where the protected file 2222 is stored. If no hash value has been generated for the protected file 2222, a hash value may be generated and disk mapping bitmap 2220 may be updated to include the new hash value. A new hash value may also be generated and stored in disk mapping bitmap 2220 if the protected file 2222 is being updated. For example, if the file system filter driver intercepts a request to write to the protected file 2222, a new hash value may need to be generated using the modified contents of the protected file 2222.

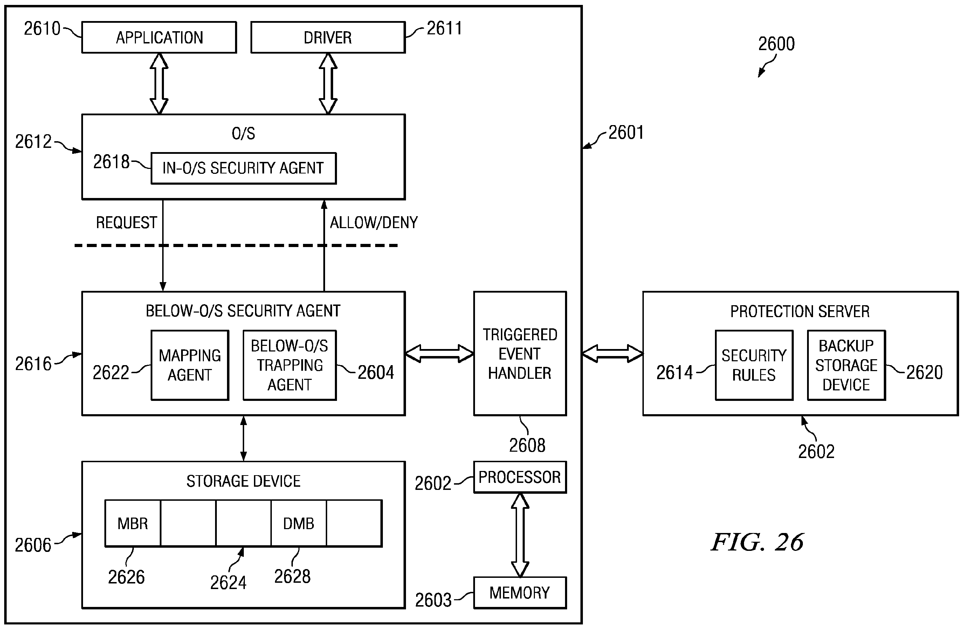

FIGURE 23 is an example embodiment of a disk mapping bitmap 2301 for use in a system or method for providing a secured operating system execution environment. Disk mapping bitmap 2301 may be used, for example, to implement functionality of disk mapping bitmap 2118 of FIGURE 21, disk mapping bitmap 2220 of FIGURE 22, or disk mapping bitmap 2628 of FIGURE 26. Disk mapping bitmap 2301 may be a file and may contain information associated with various protected files 2302. For example, disk mapping bitmap 2301 may identify the sectors 2304 of a storage device where each protected file 2302 is stored and may include a hash value 2306 for each protected file 2302. Disk mapping bitmap 2301 may be used to verify the integrity of various protected files 2302. For example, secured launching agent 2110 and/or recovery agent 2112 of FIGURE 21 may use the information from disk mapping bitmap 2301 to verify the integrity of protected files 2302. Disk mapping bitmap 2301 may be generated, for example, by DMB generator 2232 from FIGURE 22.

Disk mapping bitmap 2301 may be stored in designated sectors on a storage device. The designated sectors may reside on the same portion of a storage device used to implement the file system of an operating system. The designated sectors may be marked as occupied to prevent the sectors from being used by the operating system. A storage device may also be partitioned to allow disk mapping bitmap 2301 to be stored on designated sectors of a different partition than the operating system. Disk mapping bitmap 2301 may also be stored on a remote storage device located on a network. For example, disk mapping bitmap 2301 may be stored on a protection server such as protection server 2022 from FIGURE 20 or protection server 2602 from FIGURE 26.

Disk mapping bitmap 2301 may identify each protected file 2302, the sector or sectors 2304 of a storage device where the protected file 2302 is stored, and a hash value 2306 for the protected file 2302. Protected files 2302 identified by disk mapping bitmap 2301 may include core security agent files 2308, core operating system files 2310, and backup files 2312. Core security agent files 2308 may include the MBR and the below-O/S security agent and in-O/S security agent executables. Core operating system files 2310 may include operating system kernel files and other operating system files. For example, if the operating system is a variant of Microsoft Windows™, core operating system files 2310 may include ntoskrnl.exe, hal.sys, win32k.sys, ntfs.sys, disk.sys, and/or tcpip.sys. Core operating system files 2310 may vary depending on the particular operating system. Backup files 2312 may include a backup copy of each core security agent file 2308 and each core operating system file 2310. In various embodiments, backup files 2312 may not be stored on the same storage device as core security agent files 2308 and core operating system files 2310. In such embodiments, disk mapping bitmap 2301 may also identify the particular storage device where backup files 2312 are stored. Alternatively, a separate disk mapping bitmap 2301 may be used to store information associated with backup files 2312, such as sectors 2304 and hash values 2306.

For each protected file 2302, disk mapping bitmap 2301 may store a hash value 2306 generated using a cryptographic hash algorithm. A hash algorithm may include an algorithm that may receive a block of data as input and may generate a bit string, or hash value, as output. Hash values for different sets of data may normally be distinct. The hash value 2306 for each protected file 2302 is generated using the contents of each protected file 2302 as input to a hash algorithm. Any suitable cryptographic hash algorithm may be used, including, for example, the Secure Hash Algorithm 2 ("SHA-2") or Message-Digest Algorithm 5 ("MD5").

Disk mapping bitmap 2301 may be used, for example, by secured launching agent 2110 and/or recovery agent 2112 of FIGURE 21, or below-O/S security agent 2208, in-O/S security agent 2206, and/or disk security agent 2214 from FIGURE 22, by below-O/S security 2616 and/or in-O/S security agent 2618 of FIGURE 26 detect potential malware infections of protected files 2301. To detect a potential malware infection of a protected file 2302, a hash algorithm may be used to verify the integrity of the protected file 2302. Disk mapping bitmap 2304 may be consulted to identify the sectors 2304 on a storage device where the protected file 2302 is stored, and the contents of the protected file may then be retrieved from the appropriate sectors 2304 of the storage device. The chosen hash algorithm, such as SHA-2 or MD5, may then be used to generate a hash value using the contents of the protected file 2302, and the generated hash value may be compared to the corresponding hash value 2306 from disk mapping bitmap 2301. If the hash values differ, then protected file 2302 has been modified or altered, possibly by malware.

Disk mapping bitmap 2301 may be generated in any suitable manner. In one embodiment, disk mapping bitmap 2301 may be generated by intercepting requests to access protected files 2302, obtaining information associated with protected files 2302, and updating disk mapping bitmap 2301 with information about the protected files. In some embodiments, a request may be intercepted by software executing at a lower priority ring than an operating system, such as, for example, below-O/S security agent 2616 from FIGURE 26. In other embodiments, a request may be intercepted by software executing at the same priority ring as an operating system, such as, for example, in-O/S security agent 2618 from FIGURE 26. For example, in-O/S security agent 2618 from FIGURE 26 may include a file system filter driver. The file system filter driver may intercept file I/O requests that are directed to a protected file 2302. The filter driver may then query the file system to obtain the sectors 2304 on a storage device where the contents of the protected file 2302 are stored. The filter driver may then access the Master File Table (MFT) of the file system to determine the disk sector layout of the protected file 2302. Disk mapping bitmap 2301 may be updated to specify the identified sectors 2304 where the protected file 2302 is stored. If the file system filter driver intercepts a request to write to a protected file 2302, a new hash value may be generated using the updated contents of the protected file 2302, and disk mapping bitmap 2301 may be updated to store the new hash value

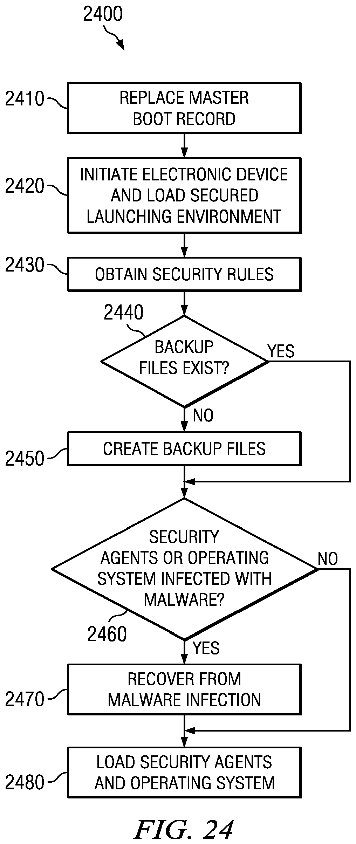

FIGURE 24 is an example embodiment of a method for launching a secured operating system execution environment. In step 2410, the existing MBR of a storage device may be replaced with an alternate MBR configured to boot a secured launching environment. The MBR may be located at the first sector of the storage device (i.e., sector 0) and may be executed upon the startup of an electronic device. In this manner, when the electronic device is initiated, the original MBR may not be executed, and accordingly, the operating system or other software associated with the original MBR may not be loaded. Instead, the alternate MBR may be executed and may load the secured launching environment. In step 2420, the electronic device may be initiated, and accordingly the alternate MBR from step 2410 may be executed. The alternate MBR may proceed to load the secured launching environment.

In step 2430, security rules may be obtained. Security rules may be stored locally on the storage device or may be stored remotely, for example on a protection server. Such security rules may be used to make decisions in steps 2440-2480. In step 2440, it may be determined whether backup copies of various protected files have been created. The protected files requiring backup may be specified in the security rules. Back up files may include, for example, the alternate MBR, files associated with the secured launching environment, files associated with one or more security agents, and core operating system files. If backup copies have not been created, then in step 2450 the backup copies are created. Backup copies may be stored locally on the storage device or may be stored remotely, for example on a protection server.

In step 2460 it may be determined whether the security agents or the operating system are infected with malware. Security agents may include a below-O/S security agent and/or and an in-O/S security agent. In one embodiment, security agents and operating system may be checked for malware by verifying the integrity of various protected files associated with the security agents and operating system. A hashing algorithm may be used to verify the integrity of the protected files. For example, a hash value may be computed for each protective file using the contents of the protected file, and the computed hash value may be compared to a previously generated hash value for the protected file. If the hash values for a protected file differ, then the protective file may have been modified, possibly by malware. In some embodiments, a disk mapping bitmap may identify the sectors where each protected file is stored on the storage device and may also include a previously generated hash value for each protected file. In such embodiments, the disk mapping bitmap may be consulted to determine the sectors where the contents of a protected file is stored, and a hash value may be computed using the contents of the protected file. The disk mapping bitmap may also be consulted to retrieve the previously generated hash value for the protected file so that the previously generated hash value may be compared to the computed hash value. If the hash values for a protected file differ, then a malware infection may be assumed, and in step 2470, the protected files may be recovered from the potential malware infection. If the hash values for the protected files match, then the protected files may not have been altered and accordingly may not have been infected with malware. In that case, the method may proceed to step 2480, where the security agents and the operating system may be loaded.

In step 2470, recovery may be performed for a potential malware infection. The recovery may be performed by retrieving backup copies of each protected file that may have been infected and replacing the potentially infected protected files with the corresponding backup copy. Backup copies may be located on a local storage device or may be located remotely, such as on a protection server. Before using the backup copies to replace the potentially infected protected files, the integrity of the backup files may also be verified to ensure that the backup files are not themselves infected with malware.

After the protected files have been recovered using the corresponding backup copies, in step 2480, the security agents and the operating system may be loaded. The security agents may include a below-O/S security agent and/or an in-O/S security agent. The below-O/S security agent may execute at a priority level below the operating system, and the in-O/S security agent may execute at a priority level at or above the operating system. The below-O/S security agent and in-O/S security agent may cooperate to protect the electronic device from malware. For example, the below-O/S security agent and/or the in-O/S security agent may protect resources of the electronic device, such as the storage device, from unauthorized access. In some embodiments, protection may be provided to the components of the electronic device that may be responsible for providing a secure launch of the below-O/S security agent, in-O/S security agent, and/or operating system. For example, the below-O/S security agent and/or in-O/S security agent may protect those components responsible for performing steps 2410-2470. In this manner, when the electronic device is next initiated, the secured launching environment that is loaded in step 2420 may be uninhibited by malware.

The steps of the method from FIGURE 24 may be repeated as necessary to protect the storage device continuously, periodically, upon demand, or upon the triggering of an event, which may include the detection of malware and/or other suspicious behavior.

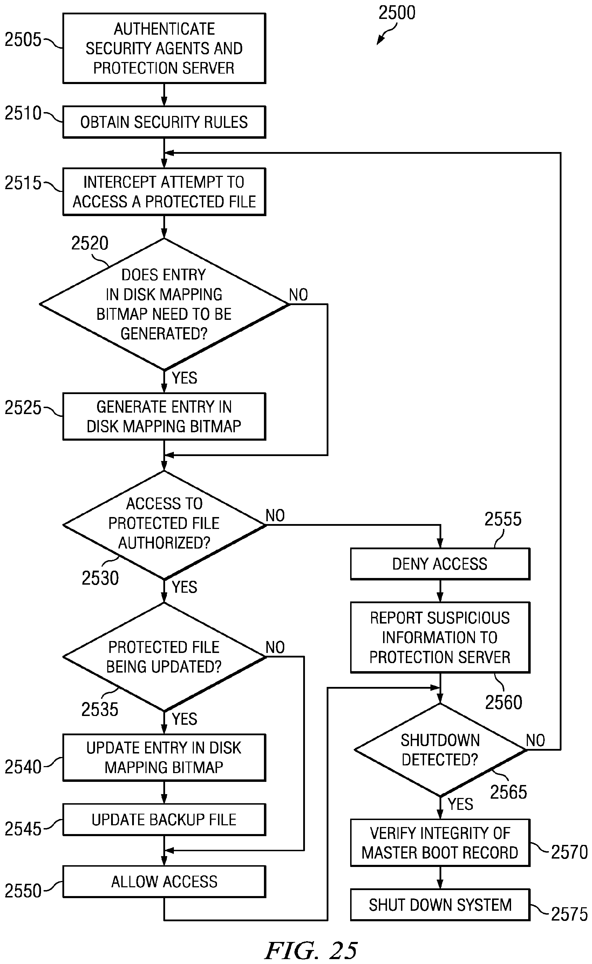

FIGURE 25 is an example embodiment of a method 2500 of providing an operating system execution environment for securely executing an operating system. In step 2505, the identity and security of a below-O/S security agent, in-O/S security agent, and protection server may be authenticated. Such authentication may be performed using any suitable method, including by locating and verifying the images in memory of each component, using cryptographic hashing, and/or using secret keys. Until step 2505 is completed, operation of other steps may be withheld. In step 2510, security rules may be obtained. Security rules may be stored locally on a storage device by below-O/S security agent and/or in-O/S security agent, or may be stored remotely, for example on the protection server. Such security rules may be used to make decisions in steps 2515-1475.

In step 2515, an attempt to access a protected file may be intercepted. The intercepted attempt may occur at or above the operating system level, such as by the in-O/S security agent, or it may occur at a level below the operating system, such as by the below-O/S security agent. Protected files may include the MBR, files associated with one or more security agents, files used to launch one or more security agents (e.g., loading module 2102 from FIGURE 21), and core operating system files. The protected files may be specified by the security rules. In step 2520, it may be determined whether an entry for the protected file needs to be added to a disk mapping bitmap. The disk mapping bitmap may be a implemented as a file or other data structure and may store certain information about the protected files, such as the sectors on the storage device where each protected file is located and a hash value associated with each protected file. If the disk mapping bitmap does not contain this information for the protected file that is being accessed in step 2515, an entry for the protected file may be added to the disk mapping bitmap. For example, the disk mapping bitmap may not specify the sectors where the protected file is stored, or may not specify a hash value for the protected file. If this information is missing from the disk mapping bitmap, then in step 2525 the disk mapping bitmap may be updated to include this information. To update the disk mapping bitmap, the sectors that store the contents of the protected file may be identified and a hash value may be generated using the contents of the protected file. Determining the sectors on the storage device where the protected file is stored may involve querying the file system and accessing the Master Format Table (MFT) to determine the sector layout of the protected file. The contents of the protected file may then be retrieved from the appropriate sectors of the storage device, and a hash value may then be computed using the contents of the protected file as input to a cryptographic hashing algorithm. The corresponding sectors and computed hash value of a protected file may then be stored in the disk mapping bitmap.

In step 2530, it may be determined whether access to the protected file is authorized. This determination may occur at or above the operating system level, such as by the in-O/S security agent, or it may occur at a level below the operating system, such as by the below-O/S security agent. Contextual information associated with the attempted request to access the protected file may be analyzed in conjunction with the security rules to determine whether the requesting entity may be authorized to access the protected file. For example, the security rules may specify that the operating system, a particular application, and/or a particular device driver may or may not be authorized to access the protected file. The security rules may also specify the access permissions, such as read, write, or execute, for a requesting entity that may be authorized to access the protected file. If access to the protected file is not authorized, then in step 2555, access may be denied. If access to the protected file is authorized, then in step 2535, it may be determined whether the protected file is being updated. If the protected file is being updated, then in step 2540, the disk mapping bitmap may also be updated. For example, if the update to the protected file results in a change in the sectors on the storage device that are used to store the file, the disk mapping bitmap may be updated to identify the proper sectors used to store the protected file. In addition, a new hash value for the protected file may be generated and stored in the disk mapping bitmap. In step 2545, the backup copy of the protected file may also be updated to reflect the recent update to the protected file.

If access to the protected file is authorized, then in step 2550, access to the protected file may be allowed. If access to the protected file is not authorized, then in step 2555, access may be denied, and in step 2560, any suspicious information regarding the access attempt may be reported to the protection server.

In step 2565, it may be determined if a shutdown of the electronic device is detected. If a shutdown is not detected, then the method may resume at step 2515 to continue to intercept attempts to access protected files. If a shutdown is detected, then the integrity of the MBR may be verified in step 2570 to ensure that on the next startup of the electronic device, a malware infected MBR is not booted. The integrity of the MBR may be verified by computing a hash value using the contents of the MBR and comparing the computed hash value to the previously generated hash value from the disk mapping bitmap. If the hashes differ, the MBR may have been altered and may be replaced with a backup copy. After the integrity of the MBR has been verified, in step 2575, the electronic device may be shut down.

The steps of the method from FIGURE 25 may be repeated as necessary to protect the storage device continuously, periodically, upon demand, or upon the triggering of an event.

FIGURE 26 is an example embodiment of a system 900 for protecting a storage device 2606 from unauthorized access. System 900 may include a below operating system ("O/S") security agent 2616 communicatively coupled to a triggered event handler 2608. Below-O/S security agent 2616 may include a below-O/S trapping agent 2604 configured to trap attempts to access a storage device 2606 of an electronic device 2601. Below-O/S trapping agent 2604 may be configured to create a triggered event associated with the trapped access request and send the triggered event to a triggered event handler 2608. Triggered event handler 2608 may be configured to consult one or more security rules 2614 or a protection server 2602 to determine how to handle the triggered event. Triggered event handler 2608 may also be configured to evaluate the triggered event's propensity to be an indication of malware or a malicious attempt to subvert storage device 2606. Furthermore, triggered event handler 2608 may be configured to provide a determination to below-O/S trapping agent 2604 of whether the triggered event should be allowed or denied or may be configured to yield another corrective action. Below-O/S security agent 2616 may be communicatively coupled to an in-O/S security agent 2618 running in an operating system 2612. System 900 may be configured to restore data on storage device 2606 using a backup storage device 2620.

Electronic device 2601 may be implemented wholly or in part by or configured to implement the functionality of the electronic devices 103 of FIGURE 1, electronic device 104 of FIGURE 2, electronic device 404 of FIGURE 4, and/or electronic device 701 of FIGURE 7, or any combination thereof. Electronic device 2601 may include one or more processors 2602 coupled to a memory 2603. Processor 2602 may be implemented wholly or in part by or configured to implement the functionality of processor 208 of FIGURE 2, processor 406 of FIGURE 4, and/or processor 702 of FIGURE 7, or any combination thereof. Memory 2603 may be implemented wholly or in part by or configured to implement the functionality of memory 207 of FIGURE 2, memory 408 of FIGURE 4, and/or memory 703 of FIGURE 7, or any combination thereof. Electronic device 2601 may include an operating system 2612, which may include an in-O/S security agent 2618. Operating system 2612 may be implemented wholly or in part by or configured to implement the functionality of operating systems 112 of FIGURE 1, operating system 212 of FIGURE 2, operating system 412 of FIGURE 4, and/or operating system 713 of FIGURE 7, or any combination thereof. In-O/S security agent 2618 may be implemented wholly or in part by or configured to implement the functionality of in-O/S security agent 218 of FIGURE 1, in-O/S security agent 418 of FIGURE 4, and/or in-O/S security agent 719 of FIGURE 7, or any suitable combination thereof.

Storage device 2606 may be implemented by or configured to implement the functionality of resource 106 of FIGURE 1, system resources 214 of FIGURE 2, storage 426 of FIGURE 4, or I/O device 502 of FIGURE 5. Storage device 2606 may include any suitable resource for storing data or other information. For example, storage device 2606 may include, without limitation, a direct access storage device (e.g., a hard disk drive or floppy disk), sequential access storage device (e.g., a tape disk drive), compact disk, CD-ROM, DVD, random access memory (RAM) disk, and/or flash memory (e.g., a flash based solid-state drive). Storage device 2606 may include a mass storage device. Storage device 2606 may include a storage device connected to electronic device 2601 regardless of connection type or interface method with a system bus, which may include but is not limited to PCI, serial ATA, USB, or Firewire. Storage device 2606 may include a persistent block device. Storage device 2606 may be divided into one or more sectors 924 that are each capable of storing a fixed amount of data. For example, storage device 2606 may be divided into sectors of 512 bytes each, although any suitable sector size may be used. Sectors 924 on storage device 2606 may be static or dynamic. The location of static sector is fixed, while a dynamic sector is not fixed. For example, the Master Boot Record 2626 (MBR) is static and is located at sector 0, the first sector on storage device 2606. Dynamic sectors that may require protection include sectors that store the Master File Table (i.e., a file containing meta data associated with all files stored on a file system), operating system kernel files, device drivers, and anti-malware applications such as the below-O/S security agent 2616 or in-O/S security agent 2618. Because dynamic sectors are not fixed, the files stored on dynamic sectors must be mapped from their conceptual existence on the file system to the physical sectors on storage device 2606 where the data from the files resides.

Below-O/S security agent 2616 may be implemented by or configured to implement the functionality of below-O/S trapping agent 104 of FIGURE 1, SVMM 216 of FIGURE 2, firmware security agents 440, 442 or PC firmware security agent 444 of FIGURE 4, firmware security agent 516 of FIGURE 5, or microcode security agent 708 of FIGURE 7. In embodiments that implement below-O/S security agent 2616 with the functionality of firmware security agents 440 or 442 of FIGURE 4, or firmware security agent 516 of FIGURE 5, below-O/S security agent 2616 may be implemented in the firmware of storage device 2606. Triggered event handler 2608 may be implemented by or configured to implement the functionality of triggered event handler 108 of FIGURE 1, SVMM security agent 217 of FIGURE 2, below-O/S agent 450 of FIGURE 4, or below-O/S agent 712 of FIGURE 7. In embodiments that implement triggered event handler 2608 with the functionality of firmware security agents 440 or 442 of FIGURE 4, or firmware security agent 516 of FIGURE 5, triggered event handler 2608 may be implemented in the firmware of storage device 2606. In various embodiments, some of the functionality of below-O/S security agent 2616 may be accomplished by triggered event handler 2608, or some of the functionality of triggered event handler 2608 may be accomplished by below-O/S security agent 2616. Furthermore, below-O/S security agent 2616 and triggered event handler 2608 may be implemented in the same software module.

Below-O/S security agent 2616 may be implemented at a lower functional level than the operating systems 2612 of electronic device 2601. For example, below-O/S security agent 2616 may intercept attempted accesses of storage device 2606 by an operating system 2612, a driver 2611, or an application 2610. Below-O/S security agent 2616 may be running on a processor of electronic device 2601 without use of an operating system. In one embodiment, below-O/S security agent 2616 may be operating on a bare-metal environment or execution level. In addition, below-O/S security agent 2616 may be executing at a higher priority ring, as defined by a processor of electronic device 2601, than all operating systems 2612 of electronic device 2601. For example, in the context of a hierarchical protection domain model using protection rings, wherein a lower number represents a higher priority, operating system 2612 may be operating at "RingO" while below-O/S security agent 2616 may be operating at "Ring -1." Drivers 2611 and applications 2610 may be operating at "Ring0" or "Ring3." Operating systems of electronic device 2601 may run at Ring0.

By running at "Ring -1", below-O/S security agent 2616 may avoid much of the malware that plagues operating systems such as operating system 2612. Below-O/S security agent 2616 may operate transparently to entities running at Ring0 or higher. Thus, an attempt to access storage device 2606 may be requested by operating system 2612 or another entity in the same manner regardless of whether below-O/S security agent 2616 is present. Below-O/S security agent 2616, when enforcing a request to access storage device 2606, may allow the request, deny the request, destroy the data on storage device 2606, destroy the media surface of storage device 2606, encrypt the data on storage device 2606, or take other corrective action. To deny the request, below-O/S security agent 2616 may simply prevent the request from reaching the storage device 2606 or processor 2602 or may provide a spoofed or dummy reply to the request to convince operating system 2612 that the action has occurred. To allow the request, below-O/S security agent 2616 may simply pass the request to the storage device 2606 or processor 2602. To destroy data, below-O/S security agent 2616 may be configured to overwrite or otherwise remove the data on storage device 2606. To destroy the media surface of storage device 2606, below-O/S security agent 2616 may perform an action to render storage device 2606 inoperable for reading or writing data. To encrypt the data on storage device 2606, below-O/S security agent 2616 may use any suitable encryption algorithm to encrypt the data on storage device 2606 and replace the unencrypted data on the storage device 2606 with the encrypted data.

Below-O/S security agent 2616 may include a below-O/S trapping agent 2604 configured to trap requests to access storage device 2606. Requests to access storage device 2606 may be initiated by operating system 2612, a driver 2611, or an application 2610. Below-O/S trapping agent 2604 may be configured to identify the requesting entity responsible for initiating the request. Below-O/S trapping agent 2604 may further be configured to create a triggered event associated with trapped access attempt and to send the triggered event to triggered event handler 2608 to determine the appropriate action to take with respect to the event. A triggered event may include information such as the area (e.g., sector and/or file) of storage device 2606 associated with the request, the requesting entity, and the type of access requested. The area of storage device 2606 associated with the request may be one or more sectors of storage device 2606, or may be a file stored on storage device 2606. The requesting entity may be the operating system 2612, a driver 2611, or an application 2610. For example, if an application 2610 or driver 2611 requests access to storage device 2606, the triggered event may indicate the particular application 2610 or driver 2611 that is requesting access. If the request is from the operating system 2612 rather than a particular application 2610 or driver 2611, the triggered event may indicate that the request is from the operating system 2612. The type of access requested may include a request to read from storage device 2606, write to storage device 2606, or execute code on storage device 2606.

In one embodiment, below-O/S trapping agent 2604 may be configured to trap requests to access storage device 2606 only after detecting an event, such as an attack on the system, a malware infection, or any other potential security threat. In such an embodiment, resources of system 100 are conserved until a potential security threat has been detected. In another embodiment, below-O/S trapping agent 2604 may be configured to trap requests to access storage device 2606 at all times, regardless of whether a potential security threat has been detected.

In another embodiment, below-O/S security agent 2616 may be configured to trap attempted accesses of storage device 2606 by trapping execution of calls to drivers or system functions for file input and output. Such trapping of calls may be accomplished at a virtual memory page level, wherein memory pages containing such drivers or system functions may be identified and secured by below-O/S security agent 2616. In such a case, below-O/S security agent 2616 may be implemented in part or in full, for example, by a virtual machine monitor or in microcode. Such trapping of calls may be accomplished at a physical memory address level, wherein memory addresses of the code sections of such drivers or system functions may be identified and secured by below-O/S security agent 2616. In such a case, below-O/S security agent 2616 may be implemented fully or in part, for example, in microcode. Malware may call such functions directly, in which case below-O/S security agent 2616 may determine the caller of such a function to identify whether the caller has permission to access the specific portion of storage device 2606. Malware may call such functions indirectly by, for example, calling undocumented subfunctions of the file functions, or branching directly into the code section of the function without calling the function at all. Such attempts may be used to hide the identity of the caller or to otherwise obscure the use of file I/O by malware. In such cases, below-O/S security agent 2616 may trap the attempted file I/O by trapping the execution of subfunctions or by trapping a JMP or branch instruction leading to the code section of file I/O functions. Such behavior is itself suspicious, so even if the caller is unknown, below-O/S security agent 2616 may be configured to determine that the host of such attempted access is suspicious and the attempt may indicate malware.

In yet another embodiment, below-O/S security agent 2616 may be configured to trap attempted access of storage device 2606 by trapping interrupts generated to access disks. Such interrupts may be called by a normal function for file I/O, or may be generated by malware avoiding use of the functions and attempting to directly write to storage device 2606. Below-O/S security agent 2616 may be configured to determine the source of the interrupt, identify the nature of the interrupt, identify any contextual information or parameters, identify the target of the interrupt, and determine whether the attempt is suspicious or not. Determinations of whether the attempt is suspicious may include the identity of the caller, for example, or whether the action was itself suspicious. For example, malware may execute a series of instructions wherein a count of sectors to be written (e.g. "MOV al, count"), an identification of a track to be written (e.g. "MOV ch, track"), an identification of a sector to be written (e.g. "MOV cl, sector"), an identification of a head to be written (e.g. "MOV dh, head"), an identification of a volume to be written (e.g. "MOV dl, drive"), an identification of a type of file I/O to be performed (e.g. "MOV ah, 03h"), and a memory location of data to be written to file (e.g. "MOV bx, buf') may be moved into general purpose registers. The assignment of such information to specific general purpose registers may be a known method for loading information for a subsequent file I/O interrupt. These assignments may be made with a "MOV" instruction. Subsequently, an instruction to generate an Interrupt 13 may be executed, such as "INT 13h". Below-O/S security agent 2616 may be configured to trap the command, and to examine the contents of the associated registers to determine the nature of the attempted file I/O, as well as the targeted portion of the storage device 2606. Below-O/S security agent 2616 may be configured to consult security rules to determine whether the caller of such an operation has permission to write to the specified portion of storage device 2606. Below-O/S security agent 2616 may be configured to examine the execution history to determine whether such a sequence of commands arose from an authorized file I/O driver, or whether they were executed directly by an unknown or malicious process. In such a case, the caller may be determined to be malicious, even if its status was not previously known to be malicious, based on such behavior. Finally, even if a standard file I/O driver call was made to execute the interrupt, the caller of the driver may be identified, and below-O/S security agent 2616 may be configured to determine whether the caller has permission to access the portion of storage device 2606 in question.

Below-O/S security agent 2616 may include a mapping agent 2622. Mapping agent 2622 may be configured to map a file from its conceptual existence on the file system to the sectors 924 on storage device 2606 where the file is stored. In one embodiment, mapping agent 2622 may be operating at the same priority ring as below-O/S security agent 2616. In another embodiment, mapping agent 2622 may be implemented as part of in-O/S security agent 2618 and may be operating at the same priority ring as operating system 2612, driver 2611, or application 2610. In still yet another embodiment, mapping agent 2622 may be implemented by two or more mapping agents wherein at least one mapping agent operates at the same priority ring as below-O/S security agent 2616, and at least one mapping agent operates at the priority ring of operating system 2612, driver 2611, or application 2610. Mapping agent 2622 may receive a request to map a file from below-O/S trapping agent 2604 or triggered event handler 2608, and may respond by providing the sectors on storage device 2606 where the file is stored. Such an embodiment may allow below-O/S trapping agent 2604 and/or triggered event handler 2608 to identify requests to access dynamically located files or data that may not always be stored on the same sectors of storage device 2606. For example, the location of the Master File Table, operating system kernel files, device drivers, and anti-malware software may not always be on the same sectors 924 of storage device 2606, and mapping agent 2622 may be used to identify the sectors where these files are stored. In some embodiments, mapping agent 2622 may query the file system to determine the sectors where a protected file is stored. Mapping agent 2622 may also use a disk mapping bitmap 2628 to identify the sectors 924 on storage device 2606 where a protected file is stored. Disk mapping bitmap 2628 may be implemented by or configured to implement the functionality of disk mapping bitmap 2301 of FIGURE 23. Disk mapping bitmap 2628 may contain information associated with various protected files, including, for example, the sector or sectors of a storage device where each protected file is stored. If a protected file is updated, the information from disk mapping bitmap 2628 may also be updated. In this manner, when mapping agent 2622 receives a request to map a protected file from its conceptual existence on the file system to the sectors 924 of storage device 2606 where the file resides, mapping agent 2622 may consult disk mapping bitmap 2628 to identify the sectors 924 corresponding to the protected file.

Triggered event handler 2608 may be embodied by one or more event handlers or security agents communicatively coupled together. Triggered event handler 2608 and below-O/S trapping agent 2604 may be implemented in the same security agent. In one embodiment, triggered event handler 2608 may be operating at the same priority ring as below-O/S trapping agent 2604. In another embodiment, triggered event handler 2608 may be implemented as part of in-O/S security agent 2618 and may be operating at the same priority ring as operating system 2612, driver 2611, or application 2610. In still yet another embodiment, triggered event handler 2608 may be implemented by two or more triggered event handlers wherein at least one triggered event handler operates at the same priority ring as below-O/S security agent 2616, and at least one triggered event handler operates at the priority ring of operating system 2612, driver 2611, or application 2610. By running at the priority ring of below-O/S trapping agent 2604, triggered event handler 2608 may similarly avoid the problems of "RingO" or "Ring3" malware infecting the agent itself. However, a triggered event handler 2608 running at "RingO" or "Ring3" with operating system 2612, driver 2611, or application 2610 may be able to provide context information about an attempted access of storage device 2606 that may be unavailable from the viewpoint of "Ring -1" agents.

Triggered event handler 2608 may be configured to receive and process triggered events from below-O/S trapping agent 2604. Triggered event handler 2608 may also be configured to provide security rules 2614 to below-O/S security agent 2616 and/or below-O/S trapping agent 2604. Triggered events may contain information about a request to access storage device 2606 that has been trapped by below-O/S trapping agent 2604. Triggered event handler 2608 may be configured to utilize one or more security rules 2614 or a protection server 2602, in conjunction with the contextual information associated with a triggered event, to identify attempts to access protected areas of storage device 2606 and to determine the appropriate response. For example, triggered event handler 2608 may use security rules 2614 to identify attempts to access protected areas of storage device 2606, such as protected sectors and/or files. Triggered event handler 2608 may use mapping agent 2622 to assist in identifying requests to access protected files. For example, triggered event handler 2608 may send mapping agent 2622 a request to map a protected file to the corresponding sectors on storage device 2606. Mapping agent 2622 may respond with the sectors corresponding to the protected file. Triggered event handler 2608 may identify attempts to access the protected file by identifying attempts to access the sectors corresponding to the file. After identifying an attempt to access a protected area, such as a protected sector and/or file, triggered event handler 2608 may be configured to consult security rules 2614 to determine whether the attempt to access the protected area is authorized. Triggered event handler 2608 may further be configured to provide a determination to below-O/S security agent 2616 of the appropriate action. For example, triggered event handler 2608 may inform below-O/S security agent 2616 whether the triggered event should be allowed or denied, whether particular data or the media surface should be destroyed, or whether the data should be encrypted.

Below-O/S security agent 2616, alone or in conjunction with components such as triggered event handler 2608 or in-O/S security agent 2618 may be configured to determine typical, trusted methods of accessing storage device 2606. For example, writes or reads to sectors storage device 2620 may be normally made through calls by file I/O drivers. Thus, a trapped attempt to write to a protected sector may be evaluated by below-O/S security agent 2616 examining the procedures or functions used to make the attempt. Deviations from expected behavior in accessing sectors may be observed and evaluated for indications of malware. If, for example, below-O/S security agent 2616 determines that an attempted write to a protected sector was made through a direct call to Interrupt 13 without using the normal file I/O functions or drivers, then such an attempted write may be suspicious.

Backup storage device 2620 may be used to backup and restore the data on storage device 2606. For example, below-O/S security agent 2616 and/or in-O/S security agent 2618 may be configured to back up data from storage device 2606 and restore the data under various circumstances. Security rules 2614 may specify particular sectors 924 of storage device 2606 that are authorized to be backed up. When data from storage device 2606 requires restoration, the appropriate sectors of storage device 2606 may be written using data from the corresponding sectors of backup storage device 2620. If necessary, multiple writes to storage device 2606 may be used during the restoration process. In some embodiments, data from storage device 2606 may be restored if the data is determined to be corrupt or otherwise infected with malware. This determination may be performed by scanning sectors of storage device 2606 to detect the presence of malware. While scanning sectors of storage device 2606, a blacklist may be used to identify patterns of data known to comprise or be associated with malware. The blacklist may be defined by security rules 2614. If a pattern of data known to be associated with malware is found, then the infected sectors are restored from backup storage device 2620. In some embodiments, a disk mapping bitmap 2628 may be used to determine whether various protected files may be infected with malware. Descriptions of example embodiments of a disk mapping bitmap 2628 may be found, for example, in the discussion of disk mapping bitmap 2301 of FIGURE 23. Disk mapping bitmap 2628 may specify the location of a protected file on storage device 2606 and may also provide a previously generated hash value for the protected file. Disk mapping bitmap 2628 may be consulted to identify the location of a protected file, a hash may be computed using the contents of the protected file, and the computed hash may be compared to the previously generated hash value from disk mapping bitmap 2628. If the hash values do not match, the protected file has been altered, possibly by malware, and the file is restored from backup storage device 2620. In some embodiments, backup storage device 2620 is also checked for malware before being used to restore data on storage device 2606. If backup storage device 2620 is infected, the backup data from backup storage device 2620 may not be used and/or an older backup may be used, or the request to access storage device 2606 may be denied.

Data from backup storage device 2620 may be written to storage device 2606 by below-O/S security agent 2616 to avoid using the file system mechanisms of operating system 2612, which may be infected with malware. However, any other secure process may be used to restore data to storage device 2606 with data from backup storage device 2620. Meta data for each backup may be maintained and may include a revision number, the date and time the backup was created, and an application 2610 or other entity that is associated with the backup. Backup storage device 2620 may be located remotely from storage device 2606, such as on a network. For example, backup storage device 2620 may be associated with protection server 2602. If backup storage device 2620 is located on a network, below-O/S security agent 2616 may use out-of-band network connectivity to access backup storage device 2620 to avoid using the operating system kernel network device drivers which may be infected with malware. This out-of-band network connectivity may be implemented in one embodiment using Active Management Technology (AMT), which may allow use of an HTTPS, iSCSI, NFS, or CIFS client to access the backup storage device 2620 by directly accessing the network card of electronic device 2601.

Protection server 2602 may be operating on a network and may implement a cloud computing scheme. Protection server 2602 may be configured to store security rules 2614 and communicate with elements of system 900, such as below-O/S security agent 2616, in-O/S security agent 2618 and/or triggered event handler 2608, to provide security rules 2614 and other information. Protection server 2602 may include a backup storage device 2620. Backup storage device 2620 may be used for storing security rules 2614 and/or to backup data from storage device 2606.

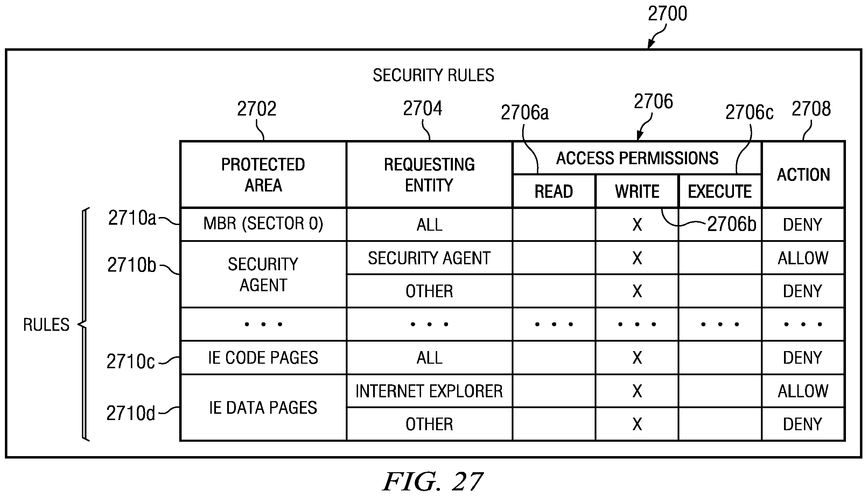

Security rules 2614 may be implemented by or configured to implement the functionality of security rules 114 of FIGURE 1, security rules 220, 222 of FIGURE 2, security rules 420, 422, 434, 436, 438 of FIGURE 4, security rules 518 of FIGURE 5, or security rules 707, 721, 723 of FIGURE 7. Descriptions of example embodiments of security rules 2614 may be found in discussions of FIGURE 27, below.

FIGURE 27 is an example embodiment of security rules for use with a system or method for protecting a storage device from unauthorized access. Security rules 2700 may include any suitable rules, logic, commands, instructions, flags, or other mechanisms for specifying events that require trapping and the appropriate response for each event. For example, security rules 2700 may be used by below-O/S security agent 2616, in-O/S security agent 2618, and/or triggered event handler 2608 from FIGURE 26 to identify events that require trapping and determine the appropriate response for each event. Security rules 2700 may require all requests to access a storage device to be trapped or may only require trapping of specific types of requests, such as read, write, and/or execute requests. Security rules 2700 may further include rules specifying protected areas 2702 of the storage device, such as specific sectors of the storage device or files on the storage device that require protection. For each protected area 2702, security rules 2700 may specify the requesting entities 2704, such as the operating system, applications, or drivers that may or may not be authorized to access each protected area 2702. Security rules 2700 may also specify the access permissions 2706, such as read 2706a, write 2706b, or execute 2706c, of a protected area 2702 for each entity 2704 authorized to access the protected area 2702.

Certain security rules 2700 may be application agnostic or application specific. Application agnostic rules apply regardless of the application that is requesting access to a protected area 2702 of the storage device. Application specific rules may authorize or prohibit access to a protected area 2702 depending on the application initiating the request. Rule 2710a is an example of an application agnostic rule specifying that a request by any entity to write to the Master Boot Record should be denied. Rule 2710b is an example of an application specific rule allowing a security agent to write to its own image on the storage device, while prohibiting any other entity to write to the security agent's image on the storage device. Rules 2710c and 2710d are also examples of application specific rules. Rule 2710c specifies that code pages of the Internet Explorer application may not be written to by any entity. Rule 2710d specifies that a request to write to the data pages of the Internet Explorer application may be allowed if the request is from the Internet Explorer application, while a request from any other entity to write to the data pages of the Internet Explorer application will be denied.

Security rules 2700 may be defined by applications or by the operating system to allow the applications and operating system to specify the requisite protection of their respective information, such as data or code pages. Security rules 2700 may also be set by an administrator and stored remotely, such as on protection server 2602 from FIGURE 26. Security rules 2700 may be retrieved and/or updated from the remote location.

In some embodiments, security rules 2700 may require network connectivity to a protection server, such as protection server 2602 from FIGURE 26, before allowing access to the storage device. If connectivity to protection server is unavailable, security rules 2700 may prohibit access to the storage device and may destroy the data or the media surface of the storage device. For example, security rules 2700 may specify that if a security agent, such as below-O/S security agent 2616 from FIGURE 26, is unable to connect to the protection sever for a specified number of days, the security agent may assume the security of the storage device has been compromised. In such embodiments, the data on the storage device is secured even if it has been physically compromised.

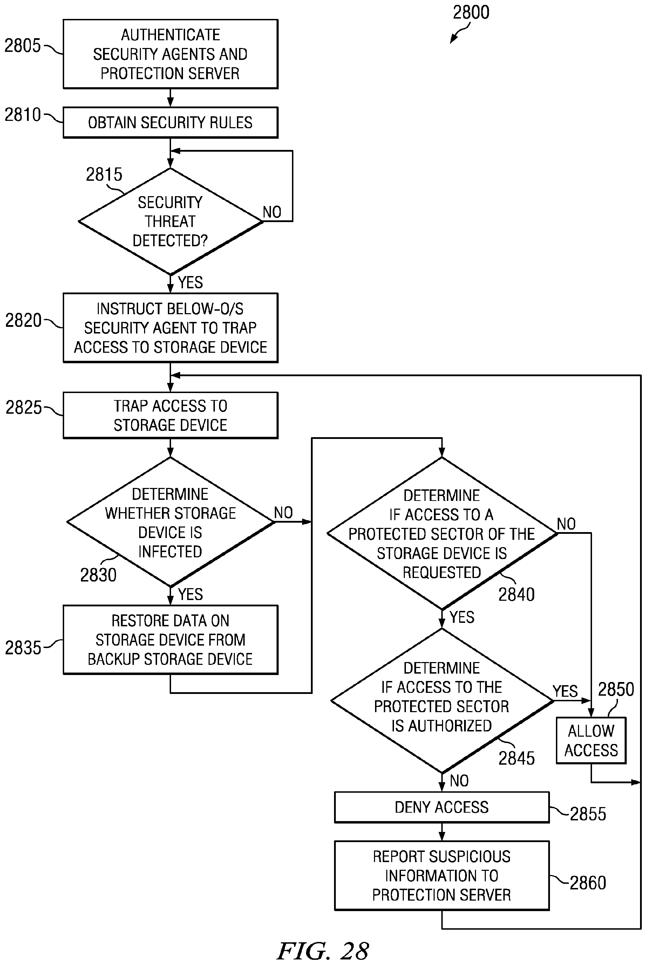

FIGURE 28 is an example embodiment of a method for protecting a storage device of an electronic device from unauthorized access. In step 2805, the identity and security of a below-O/S security agent, in-O/S security agent, triggered event handler, and protection server may be authenticated. Such authentication may be performed using any suitable method, including by locating and verifying the images in memory of each component, cryptographic hashing, or secret keys. Until step 2805 is completed, operation of other steps may be withheld in certain embodiments.

In step 2810, security rules are obtained. Security rules may be stored locally by below-O/S security agent, in-O/S security agent, or triggered event handler, or security rules may be stored remotely, for example on the protection server. Such security rules may be used to make decisions in steps 2815-2860. In step 2815, it is determined whether a security threat has been detected. For example, below-O/S security agent and/or in-O/S security agent may identify malware on the electronic device or may identify an attempt by malware to infect the electronic device. If a security threat has not been detected, then no action may be taken. If a security threat has been detected, then in step 2820, below-O/S security agent is instructed to trap access to the storage device. In some embodiments, the below-O/S security agent is instructed to trap access to the storage device after the authentication process regardless of whether a security threat has been detected.

In step 2825, a request to access the storage device is trapped. Such trapping may be conducted by software executing at a lower priority ring than the operating systems running on the electronic device. For example, the below-O/S security agent may perform trapping functionality. In step 2830, it is determined whether the sectors of the storage device associated with the trapped request have been infected with malware. This determination may be performed by scanning sectors of the storage device to detect the presence of malware. While scanning sectors of storage device, a blacklist may be used to identify patterns of data known to comprise or be associated with malware. If a pattern of data known to be associated with malware is found, then in step 2835 the infected sectors are restored from a backup storage device. In some embodiments, the backup storage device is also scanned for malware before being used to restore the storage device. If the backup storage device is infected, the backup may not be used and/or an older backup may be used, or the request to access the storage device may be denied.

In step 2840, it is determined whether access to a protected sector of the storage device has been requested. Protected sectors are defined by the security rules. Security rules may require specific sectors to be protected, or may require particular files and/or data that are dynamically located to be protected. For example, the security rules may require protection of the Master Boot Record, which is static and is located at the first sector (sector 0) of the storage device. As another example, security rules may also require protection of the Master File Table, the operating system kernel files, device drivers, or anti-malware software. These files may have dynamic locations and are not always stored on the same sectors. If a dynamically stored file or data requires protection, the file or data is mapped from its conceptual existence on the file system to the actual sectors on the storage device where the file or data resides. If the request to access the storage device does not involve a protected sector, then in step 2850, the request to access the storage device is allowed. If the request to access the storage device does involve a protected sector, then in step 2845 it is determined whether access to the protected sector is authorized. Contextual information associated with the attempted request to access the storage device may be analyzed in conjunction with the security rules to determine whether the requesting entity is authorized to access the protected sectors. For example, the security rules may specify that the operating system, a particular application, or a particular device driver may or may not be authorized to access a protected sector. The security rules may also specify the access permissions, such as read, write, or execute, for a requesting entity that is authorized to access a protected sector.

If access to the protected sector is authorized, then in step 2850, the request to access the storage device is allowed. If access to the protected sector is not authorized, then in step 2855, the request to access the storage device is denied. In some embodiments, other corrective action may be taken. For example, data on the storage device may be destroyed or encrypted, or the media surface of the storage device may be destroyed. If the request to access the storage device is not authorized, in step 2860 the attempt to access the storage device is reported to the protection server. Such a report may include information regarding any associated malware or suspicious behavior.

The steps of the method from FIGURE 28 may be repeated as necessary to protect the storage device continuously, periodically, upon demand, or upon the triggering of an event.

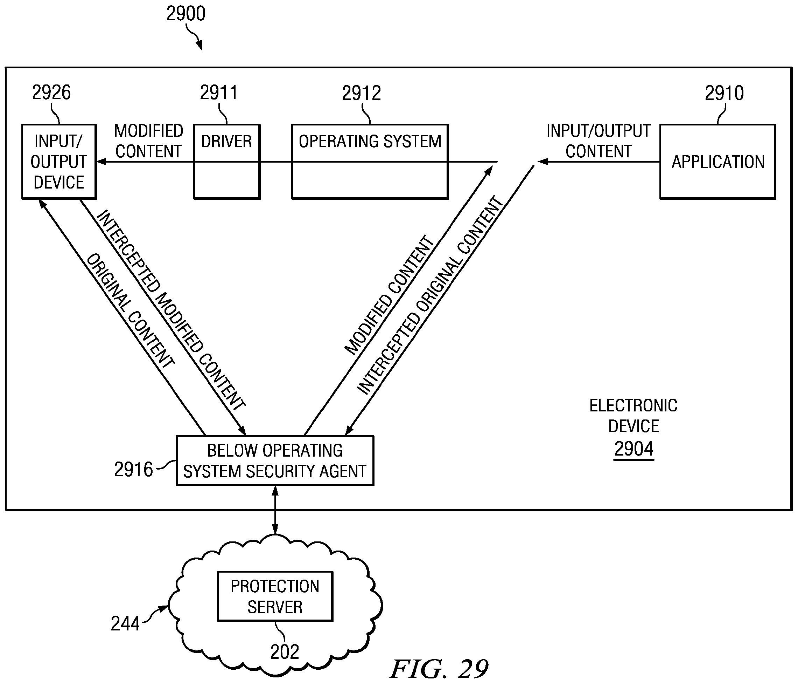

FIGURE 29 is an example embodiment of a system 2900 for securing an input/output path for write accesses between an application and an input/output device. System 2900 may include electronic device 2904 which is to be protected against malware attacks to application input/output (I/O) paths of the electronic device 2904. Electronic device 2904 may include a below-operating system security agent 2916, an I/O device 2926, an application 2910, an operating system 2912, and a driver 2911. Electronic device 2904 may be implemented wholly or in part by or configured to implement the functionality of electronic device 103 of FIGURE 1, electronic device 204 of FIGURE 2, electronic device 401 of FIGURE 4, electronic device 701 of FIGURE 7, and/or any combination thereof.

Below-O/S security agent 2916 may be implemented wholly or in part by or configured to implement the functionality of below-O/S trapping agent 104 of FIGURE 1, SVMM security agent 217 or SVMM 216 of FIGURE 2, firmware security agents 440, 442, PC firmware security agent 444, or below-O/S system agent 450 of FIGURE 4, firmware security agent 516 of FIGURE 5, microcode security agent 708 of FIGURE 7, and/or any combination thereof. Below-O/S security agent 2916 may be configured to secure application I/O paths of electronic device 2904 from malware. I/O device 2926 may be implemented wholly or in part by or configured to implement the functionality of a device 226 of FIGURE 2, display 424 or storage 426 of FIGURE 4, input-output device 502 of FIGURE 5, and/or any combination thereof. Application 2910 may be implemented wholly or in part by or configured to implement the functionality of application 110 of FIGURE 1, application 210 of FIGURE 2, application 410 of FIGURE 4, application 709 of FIGURE 7, and/or any combination thereof. Driver 2911 may be implemented wholly or in part by or configured to implement the functionality of driver 111 of FIGURE 1, driver 211 of FIGURE 2, driver 411 of FIGURE 4, driver 711 of FIGURE 7, and/or any combination thereof. Operating system 2912 may be implemented wholly or in part by or configured to implement the functionality of operating system 112 of FIGURE 1, operating system 212 of FIGURE 2, operating system 412 of FIGURE 4, operating system 713 of FIGURE 7, and/or any combination thereof.

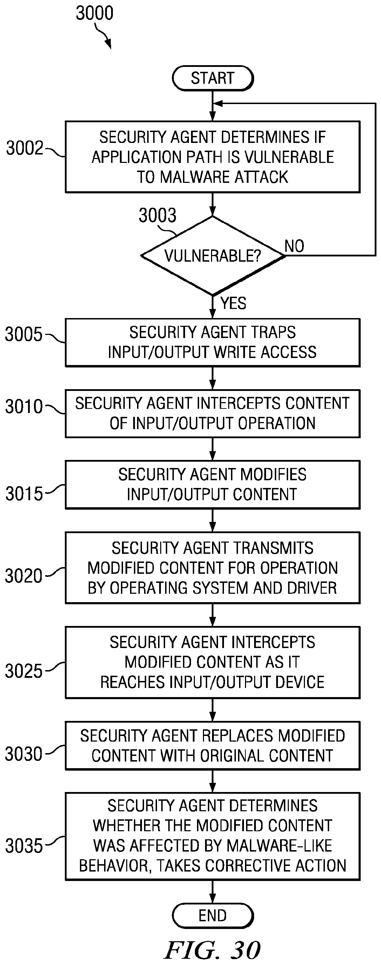

As shown by arrows in FIGURE 29, and as described in connection with FIGURE 30 below, below-O/S security agent 2916 may trap on a transmission of data via an application I/O path. Upon trapping, below-O/S security agent 2916 may intercept content to be delivered from application 2910 to I/O device 2926 in connection with an I/O write access. Below-O/S security agent 2916 may modify the intercepted I/O content and transmit the modified content through the normal I/O path (e.g., via operating system 3112 and driver 3111). Such modified content may include "spoofed" or "dummy" content, such that any malware capable of intercepting I/O path data will intercept the dummy data instead of actual user data. Below-O/S security agent 2916 may intercept the modified I/O content as it reaches the device driver for I/O device 2926, and replace it with the original content, thus securing the I/O transmission from malware attack. In addition, below-O/S security agent 2916 may, based on rules (e.g., security rules 114, 220, 222, 438, 434, 436, 518, 707, 721, and/or 723), detect whether the modified content transmitted over the normal I/O path was affected by malware-like behavior (e.g., behavior indicating that the modified content was sniffed, hooked, and/or otherwise attacked) and take corrective action if malware-like behavior is detected. In some embodiments, below-O/S security agent 2916 may communicate information regarding occurrence of malware-like behavior to protection server 202. For example, below-O/S security agent 2916 may communicate forensic information to protection server 202 that may assist protection server 202 to identify malware causing the malware-like behavior and/or prevent further infections to electronic device 2904 and/or other electronic devices. Such forensic information may include, without limitation, identity of the electronic device in which the behavior occurred, the below-O/S security agent identifying the malware-like behavior, the device 2926 and/or application I/O path in which the malware-like behavior occurred, the modified content placed into the I/O path by the below-O/S security agent, and/or the intercepted modified data (indicative of modifications made by potential malware to the modified data).

Although the path between application 2910 and input/output device 2926 is shown with a certain number of elements, such a path may include as many components as necessary to implement an input or output path between application 2910 and input/output device 2926. For example, operating system 2912 and driver 111 may include multiple subcomponents to pass information between application 2910 and input/output device 2926. Operating system 2912 and driver 111 and their subcomponents may be configured to call each other using system- or driver-defined functions. Below-O/S security agent 2916 may be configured to trap any such communications or operations along the input/output path between application 2910 and input/output device 2926. For example, in a Windows™ environment, to place an image in device 2926, application 2910 may be configured to call gdi32.dll using the BitBlt function, which may be configured to call ndtll.dll using the NtGDIBitBlt function, which may be configured to call win32k.sys using the NtGDIBitBlt function, which may be configured to call a graphics I/O driver, which may handle input and output to a display embodied by device 2926. Below-O/S security agent 2916 may be configured to trap the execution of any such function calls by, for example, trapping the execution of the memory locations containing the code sections of such functions. The memory locations may include, for example, a virtual memory page or an address range of physical memory.

Below-O/S security agent 2916 may be configured to determine the caller of such functions for communication of commands or information along the path between application 2910 and device 2926 and determine whether they have been executed by an authorized entity. For example, a function of driver 2911 may be called by a malicious process directly, instead of using the methods provided by the system (such as functions in operating system 2912) to access the function of 2911. Below-O/S security agent 2916 may be configured to trap the execution of the function of driver 2911 and determine based on the memory address where the access originated that, for example, that application 2910 called the driver 2911 directly, and that the call did not originate from an authorized entity within operating system 2912. Such an access may have been accomplished to avoid security measures within operating system 2912. Below-O/S security agent 2916 may be configured determine that such an access is indicative of malware, and deny the attempted access.

Furthermore below-O/S security agent 2916 may be configured to trap the communication of information between application 2910 and device 2926 by trapping the attempted read or write of information to memory locations corresponding to input and output buffers. For example, the operating system 2912 may write information to an I/O buffer and call a function of the driver 2911 to go retrieve the information within the buffer to send to device 2926. Such buffers may be used instead of passing information directly as parameters due to the size of the information. Thus, below-O/S security agent 2916 may be configured to trap read or write access to the, for example, virtual memory page or physical address range of the I/O buffer. Below-O/S security agent 2916 may be configured to determine the identity of the entity accessing the I/O buffer to determine whether the entity is authorized to read or write the I/O buffer. For example, below-O/S security agent 2916 may be configured to trap attempted access to a buffer for keyboard data. If application 2910 attempts to read the information from the buffer directly (i.e. outside of the scope of a normal call chain through operating system 2912) below-O/S security agent 2916 may be configured to deny the access since attempted direct access of keyboard data in a buffer is indicative of malware such as a keylogger. In another example, a buffer for display data may be protected from access to prevent screen-capture malware. In yet another example, a buffer for network output may be protected from access to prevent denial-of-service attack generation or packet modification.

Thus, in some embodiments below-O/S security agent 2916 may be configured to block all access to entities accessing I/O buffers who are not known to be authorized to read or write to the buffer. In such embodiments, an application 2910 or other entity whose malware status is unknown may be blocked, even though the entity was not previously identified as malware though, for example, scanning of the entity for a malicious signature. In other embodiments, below-O/S security agent 2916 may be configured to only allow access to buffers to drivers, interfaces, applications, or other entities that are directly below or above the buffer within a known call chain. Similarly, below-O/S security agent 2916 may be configured to only allow access to functions of driver 2911 or operating system 2912 to drivers, interfaces, applications, or other entities that are directly below or above the buffer within a known call chain. Such a known call chain may be defined by observing the typical operation of a known safe system to understand, profile, and benchmark what entities call each other along the path between application 2910 and device 2926. Characterizations of such known, safe operations may be embodied in security rules accessible to below-O/S security agent 2916. Any calls to components of drivers such as driver 2911 or operating system 2912 or calls to I/O buffers outside of such known chains may be denied.

Below-O/S security agent 2916 may trap a call within the path between application 2910 and device 2926, read the data to be passed, encrypt the data, reinsert the data into the path, and allow the operation to proceed. In one embodiment, device 2926 may contain a firmware security agent configured to decrypt such data. Such a firmware security agent and below-O/S security agent 2916 may be communicatively coupled to coordinate such encryption, and/or may each have similar security rules to coordinate such encryption. Conversely, below-O/S security agent 2916 may be configured to trap a call within the path, decrypt data coming from the device, reinsert the data into the path, and allow the operation to proceed. In another embodiment, below-O/S security agent 2916 may be configured to trap a call further down or up the path, read the data to be passed, decrypt the data, reinsert the data into the path, and allow the operating to proceed.

Furthermore, below-O/S security agent 2916 may be configured to examine the data to be passed along the path between application 2910 and device 2926 and scan the data for indications of malware. Below-O/S security agent 2916 may be configured to control the data passed between entities within the path or to substitute data (such as dummy data) passed as parameters.

FIGURE 30 is an example embodiment of a method 3000 for securing an input/output path for write accesses between an application and an input/output device. In step 3002, a below-O/S security agent may determine if an application I/O path is vulnerable to a malware attack. Because the systems and methods disclosed herein for protection of an application I/O path from may consume significant processor, memory, and/or other resources, it may be desirable to only employ such systems and methods when an application I/O path may be particularly susceptible to malware attacks. An application I/O path may be vulnerable to malware attack when the application or operating system is performing an I/O operation in which potentially sensitive information may be communicated. For example, the below-O/S security agent may determine that the application I/O path is vulnerable to malware attack if application is accessing a banking or other financial website, which may expose sensitive information on an application I/O path such as financial data, corporate personnel data, account numbers, usernames, passwords, social security numbers, and/or other identifying data of a user of an electronic device.

At step 3003, if an application I/O path is determined to be vulnerable, method 3000 may proceed to step 3005. Otherwise, method 3000 may return to step 3002, and the application I/O path protection may not be employed until such time as application I/O path is determined to be vulnerable.

In step 3005, the below-O/S security agent may trap on an I/O write access from an application to a device (e.g., a display, disk drive, keyboard, etc.). For example, if the I/O write access includes transmission of data from an application to a display device in a Windows operating system, the below-O/S security agent may trap on execution of the application's call to a bit-block transfer operation (e.g., BitBlt) or call to a library of display I/O functions (e.g., gdi32.dll, ntdll.dll, etc.). The I/O write or read access may include a series or chain of calls to and between drivers and functions of drivers to reach the end device. For example, in Windows™ the application may call gdi32.dll using the BitBlt function, which may call ntdll.dll using the NtGDIBitBlt function, which may call win32k.sys using NtGDIBitBlt, which may call the graphics I/O driver, which may access the display device.

In step 3010, the below-O/S security agent may intercept the content of the I/O operation (e.g., an image to be displayed on a display device, data to be written to a disk drive, etc.).

In step 3015, the below-O/S security agent may modify the I/O content. For example, the content may be modified with "spoofed" or "dummy" content such that malware attempting to attack an application I/O path may only be able to access the modified content instead of sensitive information making up the original content. The below-O/S security agent may modify I/O content in any suitable manner. For example, to replace an image to be displayed to a display device, the modified content may be passed as a parameter to a bit-block transfer operation instead of the original content. In a particular example, the below-O/S security agent may substitute text contents of a sensitive file or email with pre-determined dummy content.

In step 3020, the below-O/S security agent may transmit the modified content for normal operation through the application I/O path, including operation by the operating system upon which the application is executing, and drivers between the operating system and device. During this step, malware affecting the application I/O path may attempt to exploit I/O content. However, any data exploited may be modified dummy content inserted by the below-O/S security agent, thus protecting the original content from exploitation.

In step 3025, the below-O/S security agent may intercept the modified content as it reaches the I/O device (e.g., at communication ports of the device or the electronic device having the I/O device). In step 3030, the below-O/S security agent may replace the modified content with the original content. For example, if the I/O write access includes transmission of data from an application to a display device in a Windows operating system, replacing the image can be implemented by hooking I/O ports of the electronic device having the display device, memory hooking of the graphics I/O driver, or by hooking or triggering on the execution of a display command from the graphics I/O driver. Accordingly, the original content may be communicated out-of-band between the application and the device, remaining protected from malware attempting to exploit the content in the traditional application I/O path.

In step 3035, the below-O/S security agent may determine whether the modified content was affected by malware-like behavior. For example, based on rules (e.g., security rules 114, 220, 222, 438, 434, 436, 518, 707, 721, and/or 723), the below-O/S security agent may determine whether the intercepted modified content has characteristics indicating that it was affected by malware (e.g., if the modified data passed through the application I/O path as itself modified in the application I/O path). In addition, if the below-O/S security agent determines the modified content was affected by malware-like behavior, the below-O/S security agent may take corrective action (e.g., action to remove, quarantine, and/or otherwise neutralize the malware). In addition, in some embodiments, the below-O/S security agent may communicate information (e.g., forensic information) regarding occurrence of malware-like behavior to a protection server.

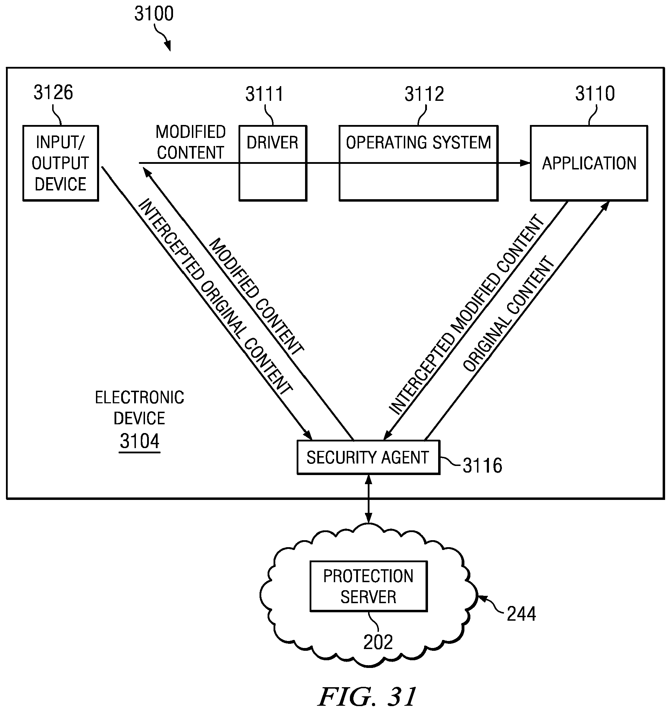

FIGURE 31 is an example embodiment of a system 3100 for securing an input/output path for read accesses between an application and an input/output device. System 3100 may include electronic device 3104 which is to be protected against malware attacks to application input/output (I/O) paths of the electronic device 3104. Electronic device 3104 may include a below-operating system security agent 3116, an I/O device 3126, an application 3110, an operating system 3112, and a driver 3111. System 3100 may include electronic device 3104 which is to be protected against malware attacks to application input/output (I/O) paths of the electronic device 3104. Electronic device 3104 may include a below-operating system security agent 3116, an I/O device 3126, an application 3110, an operating system 3112, and a driver 3111. Electronic device 3104 may be implemented wholly or in part by or configured to implement the functionality of electronic device 103 of FIGURE 1, electronic device 204 of FIGURE 2, electronic device 401 of FIGURE 4, electronic device 701 of FIGURE 7, electronic device 2904 of FIGURE 29, and/or any combination thereof.

Below-O/S security agent 3116 may be implemented wholly or in part by or configured to implement the functionality of below-O/S trapping agent 104 of FIGURE 1, SVMM security agent 217 or SVMM 216 of FIGURE 2, firmware security agents 440, 442, PC firmware security agent 444, or below-O/S system agent 450 of FIGURE 4, firmware security agent 516 of FIGURE 5, microcode security agent 708 of FIGURE 7, below-O/S security agent 2916 of FIGURE 29, and/or any combination thereof. Below-O/S security agent 3116 may be configured to secure application I/O paths of electronic device 3104 from malware. I/O device 3126 may be implemented wholly or in part by or configured to implement the functionality of a device 226 of FIGURE 2, display 424 or storage 426 of FIGURE 4, input-output device 502 of FIGURE 5, I/O device 2926 of FIGURE 29 and/or any combination thereof. Application 3110 may be implemented wholly or in part by or configured to implement the functionality of application 110 of FIGURE 1, application 210 of FIGURE 2, application 410 of FIGURE 4, application 709 of FIGURE 7, application 2910 of FIGURE 29, and/or any combination thereof. Driver 3111 may be implemented wholly or in part by or configured to implement the functionality of driver 111 of FIGURE 1, driver 211 of FIGURE 2, driver 411 of FIGURE 4, driver 711 of FIGURE 7, driver 2911 of FIGURE 29, and/or any combination thereof. Operating system 3112 may be implemented wholly or in part by or configured to implement the functionality of operating system 112 of FIGURE 1, operating system 212 of FIGURE 2, operating system 412 of FIGURE 4, operating system 713 of FIGURE 7, operating system 2912 of FIGURE 29, and/or any combination thereof.

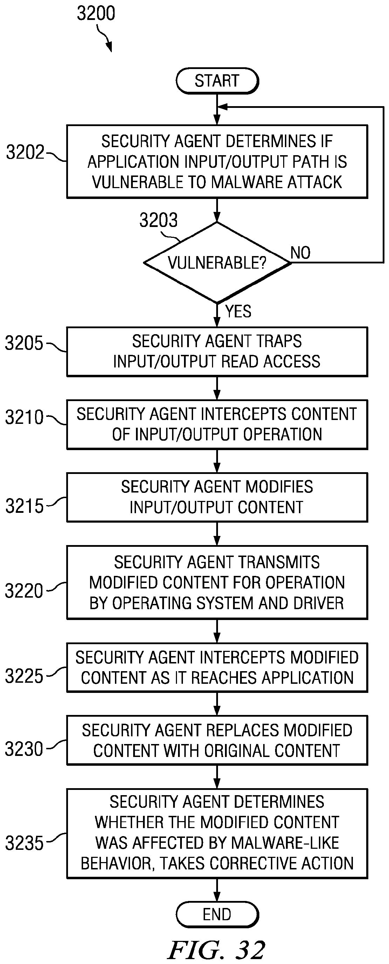

Below-O/S security agent 3116 may be configured to secure application I/O paths of electronic device 3104 from malware. As shown by arrows in FIGURE 31, and as described in connection with FIGURE 32 below, below-O/S security agent 3116 may trap on a transmission of data via an application I/O path. Upon trapping, below-O/S security agent 3116 may intercept content to be delivered from I/O device 3126 to application 3110 in connection with an I/O read access. Below-O/S security agent 3116 may modify the intercepted I/O content and transmit the modified content through the normal I/O path (e.g., via operating system 3112 and driver 3111). Such modified content may include "spoofed" or "dummy" content, such that any malware capable of intercepting I/O path data will intercept the dummy data instead of actual user data. Below-O/S security agent 3116 may intercept the modified I/O content as it reaches the device driver for I/O device 3126, and replace it with the original content, thus securing the I/O transmission from malware attack. In addition, below-O/S security agent 3116 may, based on rules (e.g., security rules 114, 220, 222, 438, 434, 436, 518, 707, 721, and/or 723), detect whether the modified content transmitted over the normal I/O path was affected by malware-like behavior (e.g., behavior indicated that the modified content was sniffed, hooked, and/or otherwise attacked) and take corrective action if malware-like behavior is detected. In some embodiments, below-O/S security agent 3116 may communicate information regarding occurrence of malware-like behavior to protection server 202. For example, below-O/S security agent 3116 may communicate forensic information to protection server 202 that may assist protection server 202 to identify malware causing the malware-like behavior and/or prevent further infections to electronic device 3104 and/or other electronic devices. Such forensic information may include, without limitation, identity of the electronic device in which the behavior occurred, the below-O/S security agent identifying the malware-like behavior, the device 3126 and/or application I/O path in which the malware-like behavior occurred, the modified content placed into the I/O path by the below-O/S security agent, and/or the intercepted modified data (indicative of modifications made by potential malware to the modified data).

FIGURE 32 is an example embodiment of a method 3200 for securing an input/output path for read accesses between an application and an input/output device. In step 3202, a below-O/S security agent may determine if an application I/O path is vulnerable to a malware attack. Step 3202 may be similar to step 3002 of method 3000. At step 3203, if an application I/O path is determined to be vulnerable, method 3200 may proceed to step 3205. Otherwise, method 3200 may return to step 3202, and the application I/O path protection may not be employed until such time as application I/O path is determined to be vulnerable. Step 3203 may be similar to step 3003 of method 3000.

In step 3205, a below-O/S security agent may trap on an I/O read access from a device to an application (e.g., a display, disk drive, keyboard, etc.). In step 3210, the below-O/S security agent may intercept the content of the I/O operation (e.g., keystrokes received from a keyboard, data to be read from a disk drive, etc.).

In step 3215, the below-O/S security agent may modify the I/O content. For example, the content may be modified with "spoofed" or "dummy" content such that malware attempting to attack an application I/O path may only be able to access the modified content instead of sensitive information making up the original content. The below-O/S security agent may modify I/O content in any suitable manner.

In step 3220, the below-O/S security agent may transmit the modified content for normal operation through the application I/O path, including operation by the operating system upon which the application is executing, and drivers between the operating system and device. During this step, malware affecting the application I/O path may attempt to exploit I/O content. However, any data exploited may be modified dummy content inserted by the below-O/S security agent, thus protecting the original content from exploitation.

In step 3225, the below-O/S security agent may intercept the modified content as it reaches the application. In step 3230, the below-O/S security agent may replace the modified content with the original content. Accordingly, the original content may be communicated out-of-band between the application and the device, remaining protected from malware attempting to exploit the content in the traditional application I/O path.

In step 3235, the below-O/S security agent may determine whether the modified content was affected by malware-like behavior (e.g., if the modified data passed through the application I/O path as itself modified in the application I/O path). For example, based on rules (e.g., security rules 114, 220, 222, 438, 434, 436, 518, 707, 721, and/or 723), the below-O/S security agent may determine whether the intercepted modified content has characteristics indicating that it was affected by malware. In addition, if the below-O/S security agent determines the modified content was affected by malware-like behavior, the below-O/S security agent may take corrective action (e.g., action to remove, quarantine, and/or otherwise neutralize the malware). In addition, in some embodiments, the below-O/S security agent may communicate information (e.g., forensic information) regarding occurrence of malware-like behavior to a protection server.

In addition, in some embodiments, dummy data transmitted over an application I/O path (e.g., at steps 3015 and 3020 of method 3000 and/or steps 3215 and 3220 of method 3200), may be utilized to track the presence of malware on electronic device 2904 and/or electronic device 3104. For example, when an application at a first device communicates sensitive information to a second electronic device over a network (e.g., a banking or other financial website hosted by the second electronic device), a below-O/S security agent may insert dummy information into an I/O path that may spoof access to second electronic device (e.g., dummy information that may provide a "fake" username and password to a banking website). The second electronic device may include its own security agent such that, when the second device is spoofed in this manner, the security agent of the second electronic device may be configured to track actions taken during the access (e.g., actions taken at a banking website during the spoofed access such as changes in profile information or other actions) to determine if malware-like behavior has occurred. If the security agent at the second electronic device determines malware-like behavior has occurred, then the second electronic device may take corrective action. For example, the security agent at the second electronic device may communicate an appropriate message (e.g., to a protection server 102 communicatively coupled to the second electronic device) to indicate the presence of malware-like behavior. Such message may include forensic evidence including, for example, a description of the malware-like behavior and/or an identity of the first electronic device (e.g., Internet protocol address or other identifying information).

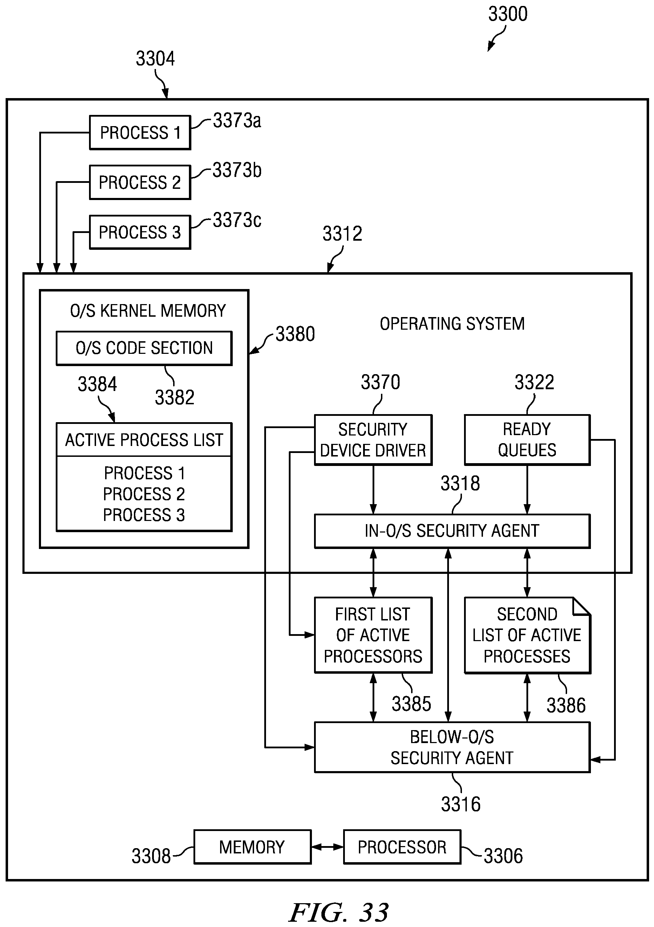

FIGURE 33 is an example embodiment of a system 3300 for detecting and repairing hidden processes on electronic device 3304. An in-O/S security agent 3318 and/or a below-O/S security agent 3316 may operate on electronic device 3304 to detect and repair malicious infections such as malware configured to hide the operation of a running process on electronic device 3304. Electronic device 3304 may include a processor 3306 coupled to a memory 3308, an operating system 3312, and one or more processes 3373. Electronic device 3304 may be implemented wholly or in part by or configured to implement the functionality of electronic device 103 of FIGURE 1, electronic device 204 of FIGURE 2, electronic device 404 of FIGURE 4, electronic device 701 of FIGURE 7, and/or any combination thereof. Processor 3306 may be implemented wholly or in part by or configured to implement the functionality of processor 208 of FIGURE 2, processor 408 of FIGURE 4, processor 702 of FIGURE 7, and/or any combination thereof. Memory 3308 may be implemented wholly or in part by or configured to implement the functionality of memory 206 of FIGURE 2, memory 406 of FIGURE 4, memory 703 of FIGURE 7, and/or any combination thereof. Operating system 3312 may be implemented wholly or in part by or configured to implement the functionality of operating systems 112 of FIGURE 1, operating system 212 of FIGURE 2, operating system 412 of FIGURE 4, operating system 713 of FIGURE 7, and/or any combination thereof. In-O/S security agent 3318 may be implemented wholly or in part by or configured to implement the functionality of in-O/S security agent 218 of FIGURE 2, in-O/S security agent 418 of FIGURE 4, in-O/S security agent 719 of FIGURE 7, and/or any combination thereof. Below-O/S security agent 3316 may be implemented wholly or in part by or configured to implement the functionality of below-O/S trapping agent 104 of FIGURE 1, SVMM security agent 217 or SVMM 216 of FIGURE 2, firmware security agents 440, 442, PC firmware security agent 444, or below-O/S system agent 450 of FIGURE 4, firmware security agent 516 of FIGURE 5, microcode security agent 708 of FIGURE 7, and/or any combination thereof.

Processes 3373 may be configured to operate on electronic device 3304. One or more processes 3373 operating on electronic device 3304 may be a malicious process associated with malware. Malware on electronic device 3304 may operate to disguise the presence of one or more malicious processes of processes 3373, to avoid detection by anti-malware software. For example, operating system 3312 may include operating system kernel memory 3380. Operating system kernel memory 3380 may include one or more mechanisms for tracking the execution of processes on electronic device 3304. In one example, such a mechanism may include active process list 3384. Active process list 3384 may be implemented in a data structure, record, file, or any other suitable method for tracking the processes operating on electronic device 3304. If, for example, process 3373b is a malicious process associated with malware, malware on electronic device 3304 may modify active process list 3384 to remove the reference to process 3373b. Thus, security software running on electronic device 3304, when determining which processes are actively running on electronic device 3304 and should be examined for malware, may not recognize process 3373b as an active process for examination.

Operating system 3312 may include ready queues 3322. Ready queues 3322 may include one or more suitable data structures (e.g., arrays, tables, lists, etc.) setting forth active threads operating on electronic device 3304. An active process 3373 may be comprised of one or more individual threads. A thread may be thought of as a unit of processing (e.g., one or more instructions) within an active process 3373 that may be independently scheduled separate from other threads of the active process 3373 for execution by electronic device 3304. As an illustrative example of ready queues 3322 in a Windows™ operating system, ready queues 3322 may be implemented by a variable known as KiDispatcherReadyListHead. Ready queues 3322 may also include various metadata regarding active threads, for example, an identifier of the process comprising the thread, an image name of such process, starting address, user mode address, device object, and/or other suitable information. In a Windows™ operating system, such active process information may be included in an executive thread ("ETHREAD") data structure associated with a thread.

During operation of system 3300, in-O/S security agent 3318 and/or below-O/S security agent 3316 may spawn a security device driver 3370 to execute on operating system 3312. Security device driver 3370 may be implemented in a driver, module, executable, DLL or any other suitable mechanism for providing kernel mode device driver services. Security device driver 3370 may be configured to call various portions of operating system 3312 to enumerate the processes which are running on electronic device 3304. For example, security device driver 3370 may be configured to examine kernel memory 3380 or active process list 3384. Security device driver 3370 may be configured to communicate a first list of active processes 3373 (e.g., active process list 3384) that security device driver 3370 is able to detect. Security device driver 3370 may be configured to communicate active processes list 3384 to in-O/S security agent 3318 and/or below-O/S security agent 3316. In one embodiment, security device driver 3370 may be configured to pass the executive process ("EPROCESS") structure associated with a given detected process to below-O/S security agent 3316 via a hypercall. Because security device driver 3370 runs at the same or a less privileged ring of execution than an operating system, active processes enumerated by security device driver 3370 may be limited to those active processes appearing on active process list 3384, meaning malicious processes that have modified active process list 3384 to remove reference to themselves may not be enumerated by security device driver 3370. In the Windows™ operating system, security device driver 3370 may be configured to use the function ZwQuerySystemInformation to request a process list from the operating system, identifying System Process Information to be determined. Below-O/S security agent 3316 may be configured to use such functions as well, and may be more secure in performing such an action. Security device driver 3370 may place enumerated processes in a first list 3385 of active processes. In certain embodiments, first list 3385 may be substantially equivalent to active process list 3384. In other embodiments, a separate first list 3385 may not be created, and security device driver 3370 may instead use active process list 3384 in lieu of such first list 3385.

Conversely, in-O/S security agent 3318 and/or below-O/S security agent 3316 may run at the same or a more privileged ring of execution than operating system 3312, and, accordingly, may be able to enumerate individual threads executing on electronic device 3304. Based at least on such enumerated threads, in-O/S security agent 3318 and/or below-O/S security agent 3316 may determine all active processes 3373 executing on electronic device 3304, including malicious processes that may have removed references to themselves from active process list 3384. For example, in certain embodiments, in-O/S security agent 3318 and/or below-O/S security agent 3316 may scan ready queues 3322 and enumerate all threads in ready queues 3322, placing the threads in a list. For every thread, in-O/S security agent 3318 and/or below-O/S security agent 3316 may locate the process owning the thread and other information regarding such process (e.g., by reference to metadata, such as ETHREAD information, associated with the thread), thus allowing in-O/S security agent 3318 to enumerate a second list 3386 of active processes 3373, including malicious processes that may have removed references to themselves from active process list 3384.

To further illustrate a specific embodiment, an ETHREAD data structure associated with a thread may include a number of metadata fields, include a ThreadsProcess field, a StartAddress field, a DeviceTo Verify field, a Win32StartAddress field, and a ThreadListEntry field. By analyzing the ThreadsProcess field, in-O/S security agent 3318 and/or below-O/S security agent 3316 may be able to identify the process owning a thread, from which a process identifier and image name for the process may be determined. From StartAddress and Win32StartAddress, in-O/S security agent 3318 and/or below-O/S security agent 3316 may identify which code in memory is executing a process, thus allowing further identification of a suspicious driver, application, and/or other program should the process owning the thread be found to be suspicious. Based on DeviceToVerify, in-O/S security agent 3318 and/or below-O/S security agent 3316 may determine whether a device object is associated with a thread and thus, identify the driver object and malware driver should the process owning the thread be found to be suspicious. ThreadListEntry may assist enumeration of threads within the same process.

In-O/S security agent 3318 may then compare the first list 3385 of active processes 3373 and the second list 3386 of active processes 3373, and identify active processes 3373 appearing in the second list 3386 and not appearing in the first list 3385 as suspicious processes. Evidence of such a suspicious process may be evidence of malware hidden from anti-virus or anti-malware software running on electronic device 3304, as well as operating system 3312.

In other embodiments, below-O/S security agent 3316 may scan ready queues 3322 to enumerate threads and enumerate the second list 3386 of active processes 3373 based at least on the identified threads (e.g., by reference to metadata, such as ETHREAD information, associated with the threads). In such embodiments, below-O/S security agent 3316 may receive the first list 3385 of active processes generated by security device driver 3370 from in-O/S security agent 3318, or may access the first list 3385 of active processes 3373 by reading directly from memory. Below-O/S security agent 3316 may then compare the first list 3385 of active processes 3373 and the second list 3386 of active processes 3373, and identify active processes 3373 appearing in the second list 3386 and not appearing in the first list 3385 as suspicious processes. Such a suspicious process may be hidden from anti-virus or anti-malware software running on electronic device 3304, as well as operating system 3312. Evidence of such a suspicious process may be evidence of malware hidden from anti-virus or anti-malware software running on electronic device 3304, as well as operating system 3312.

If in-O/S security agent 3318 and/or below-O/S security agent 3316 determines that there is evidence of a hidden process running on electronic device 3304, in-O/S security agent 3318 and/or below-O/S security agent 3316 may be configured to scan operating system 3312, operating system kernel memory 3380, or other elements of the electronic device 3304 to determine whether any modifications have been made related to such a process. For example, in-O/S security agent 3318 and/or below-O/S security agent 3316 may be configured to scan for any memory modifications that are known to be conducted by malware. In some embodiments, in-O/S security agent 3318 or below-O/S security agent 3316 may be configured to scan operating system code section 3382, as well as active process list 3384. In these and other embodiments, in-O/S security agent 3318 and/or below-O/S security agent 3316 may utilize thread metadata (e.g., ETHREAD information) of threads associated with suspicious processes to determine elements of electronic device 3304 and/or portions thereof to scan for modifications.

If malicious modifications are found, in-O/S security agent 3318 or below-O/S security agent 3316 may take corrective action. For example, in-O/S security agent 3318 or below-O/S security agent 3316 may be configured to repair any malicious modifications found in the operating system kernel memory 3380. As another example, in-O/S security agent 3318 or below-O/S security agent 3316 may be configured to remove any detected root kit infections determined through its inspections of memory modifications in operating system kernel memory 380. As a further example, in-O/S security agent 3318 or below-O/S security agent 3316 may be configured to repair any infections to any internal data structure or code sections. In these and other embodiments, in-O/S security agent 3318 and/or below-O/S security agent 3316 may utilize thread metadata (e.g., ETHREAD information) of threads associated with suspicious processes to determine corrective action to be taken (e.g., such metadata may identify particular memory locations of malware processes, drivers responsible for suspicious behavior, etc.). In-O/S security agent 3318 or below-O/S security agent 3316 may be configured to repeat the process of scanning for modifications by a hidden process for every discrepancy found between the first list 3385 of processes determined by security device driver 3370 and the second list 3386 of processes determined from analysis of thread metadata present in ready queues 3322.

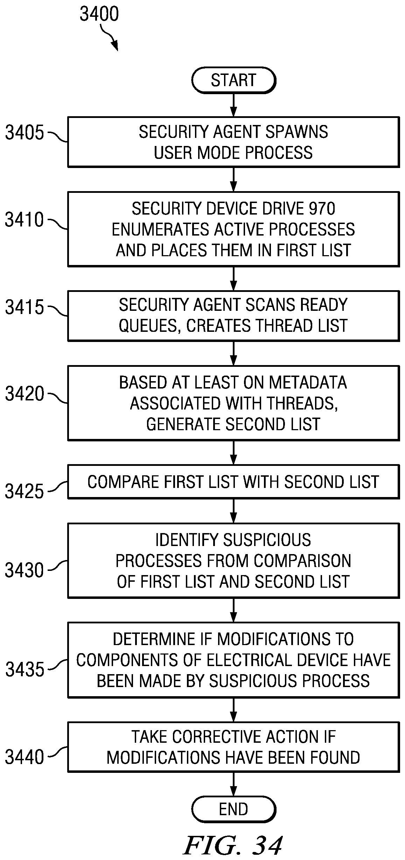

FIGURE 34 is an example embodiment of a method for detecting and repairing hidden processes on an electronic device. In step 3405, one or more security agents (e.g., in-O/S security agent 3318 and/or below-O/S security agent 3316) may spawn a security device driver to execute on an operating system of an electronic device. In step 3410, the security device driver may enumerate active processes running on the electronic device via standard system calls to an operating system of the electronic device. The security device driver may place enumerated processes in a first list of active processes. Because the security device driver may run at the same or a less privileged ring of execution than an operating system, the active processes enumerated by the security device driver may be limited to those active processes appearing on an active process list of an operating system, meaning malicious processes that have modified the active process list to remove reference to themselves may not be enumerated by the security device driver.

In step 3415, the one or more security agents may scan thread ready queues, and based at least on such scan, enumerate individual threads executing on electronic device and place them in a thread list. In step 3420, based at least on metadata associated with the threads (e.g., ETHREAD information associated with the threads or other metadata setting forth processes owning the threads), the one or more security agents may locate processes owning the threads and generate a second list of active processes. The second list may include malicious processes that may have removed references to themselves from the active process list.

In step 3425, one or more security agents may compare the first list of active processes and the second list of active processes. In step 3430, the one or more security agents may identify active processes appearing in the second list and not appearing in the first list as suspicious processes. Evidence of such a suspicious process may be evidence of malware hidden from anti-virus or anti-malware software running on an electronic device and/or an operating system executing on the electronic device.

In step 3435, if the one or more security agents determine that there is evidence of a hidden process running on the electronic device, the one or more security agents may determine if modifications to portions of the electronic device have been made by the suspicious process. To determine if modifications have been made, the one or more security agents may scan an operating system and/or operating system kernel memory to determine whether any modifications have been made related to such a process. For example, the one or more security agents may scan for any memory modifications that are known to be conducted by malware, and/or may scan an operating system code section of operating system kernel memory and/or active process list.

In step 3440, the one or more security agents may take corrective action if modification have been found. For example, the one or more security agents may repair any malicious modifications found in the operating system kernel memory. As another example, the one or more security agents may remove any detected root kit infections determined through its inspections of memory modifications in operating system kernel memory. As a further example, the one or more security agents may repair any infections to any internal data structure or code sections. Portions of method 3400 may be repeated for each identified suspicious process. Accordingly, the one or more security agents may repeat the process of scanning for modifications by a hidden process for every discrepancy found between the first list of processes determined by the security device driver and the second list of processes determined from analysis of thread metadata present in ready queues.

Advantageously, the methods and systems described above may provide for identification of rootkits and/or other malware, without a requirement to hook or trap on any function of an operating system kernel.

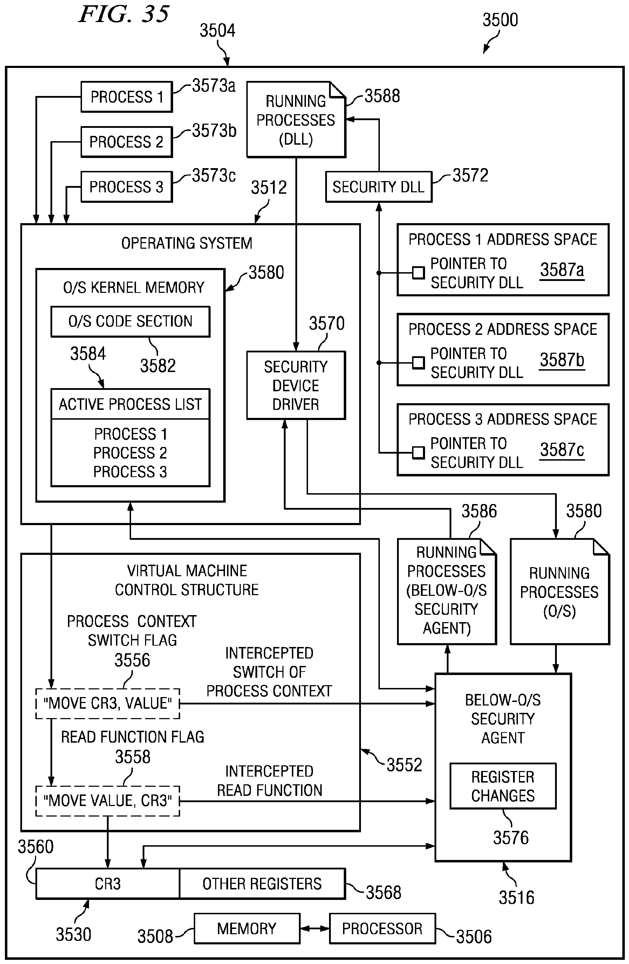

FIGURE 35 is an example embodiment of a system 3500 for detecting and repairing hidden processes on an electronic device 3504. A below-O/S security agent 3516, a security device driver 3570, and a security dynamic-linked library (DLL) 3572 may operate on electronic device 3504 to detect and repair malicious infections such as malware configured to hide the operation of a running process on electronic device 3504. Electronic device 3504 may include a processor 3506 coupled to a memory 3508, an operating system 3512, security DLL 3572, below-O/S security agent 3516, a virtual machine control structure 3552 ("VMCS"), one or more processes 3573 (e.g., process 3573a, 3573b, and 3573c), address spaces 3587 (e.g., address spaces 3587a, 3587b, and 3587c) associated with such processes, and one or more system resources, such as a control register like CR3 control register 3560. Processor registers 3530 may include such registers as, for example, CR3 register 3560 or any other registers 3568. Although CR3 is given as an example of a processor register 3530, any suitable control register may be used. CR3 register 3560 may be a processor register configured to control or change the general behavior of a CPU on electronic device 3504. CR3 register 3560 may be configured to enable a processor such as processor 3506 running on electronic device 3504 to translate a virtual memory address into a physical memory address. CR3 register 3560 may be configured to locate a page directory and page tables for a currently requested task, such as one residing in stack and selected for operation by O/S scheduler. CR3 register 3560 may be implemented in any suitable virtual addressing control register. Other registers 268 may be present in processor registers 3530, according to the particular design or implementation of electronic device 3504. Processor registers 3530 may be associated with processor 3506, or another processor of electronic device 3504.

Electronic device 3504 may be implemented wholly or in part by or configured to implement the functionality of the electronic device 103 of FIGURE 1, electronic device 204 of FIGURE 2, electronic device 404 of FIGURE 4, electronic device 701 of FIGURE 7, electronic device 3304 of FIGURE 33, and/or any combination thereof. Processor 3506 may be implemented wholly or in part by or configured to implement the functionality of processor 208 of FIGURE 2, processor 408 of FIGURE 4, processor 702 of FIGURE 7, processor 3306 of FIGURE 33, and/or any combination thereof. Memory 3508 may be implemented wholly or in part by or configured to implement the functionality of memory 206 of FIGURE 2, memory 406 of FIGURE 4, memory 703 of FIGURE 7, memory 3308 of FIGURE 33, and/or any combination thereof. Operating system 3512 may be implemented wholly or in part by or configured to implement the functionality of operating systems 112 of FIGURE 1, operating system 212 of FIGURE 2, operating system 412 of FIGURE 4, operating system 713 of FIGURE 7, operating system 3312 of FIGURE 33, and/or any combination thereof. Below-O/S security agent 3516 may be implemented wholly or in part by or configured to implement the functionality of below-O/S trapping agent 104 of FIGURE 1, SVMM security agent 217 or SVMM 216 of FIGURE 2, firmware security agents 440, 442, PC firmware security agent 444 or below-O/S system agent 450 of FIGURE 4, firmware security agent 516 of FIGURE 5, microcode security agent 708 of FIGURE 7, below-O/S security agent 3316 of FIGURE 33, and/or any combination thereof.

Electronic device 3504 may include a virtual machine control structure 1152. In one embodiment, virtual machine control structure 1152 may reside in below-O/S security agent 3516. In another embodiment, virtual machine control structure 1152 may be communicatively coupled to below-O/S security agent 3516. In such an embodiment, some or all of the functionality of virtual machine control structure 1152 may be accomplished by below-O/S security agent 3516. Furthermore, in such an embodiment some or all of the functionality of below-O/S security agent 3516 may be accomplished by virtual machine control structure 1152. Virtual machine control structure 1152 may be implemented fully or in part by below-O/S trapping agent 104 of FIGURE 1, VMCS of FIGURE 2, firmware security agents 440, 442 or PC firmware security agent 444 of FIGURE 4, firmware security agent 516 of FIGURE 5, or microcode security agent 706 of FIGURE 7. Virtual machine control structure 1152 may be implemented in a data structure, record, file, module, or any other suitable entity for trapping requests to resources such as processor registers 3530 or other resources. In one embodiment, such as where system 3500 may be implemented fully or in part by the system 200 of FIGURE 2, virtual machine control structure 1152 and below-O/S security agent 3516 may be configured to virtualize access to system resources of electronic device 3504 such as processor registers 3530 or any other suitable system resources.

Virtual machine control structure 1152 may include one or more flags 1154 for trapping requested operations by operating system 3512 of system resources such as processor registers 3530. Flags 1154 may include flags to trap, for example, a process context switch flag 3556 and/or a read function flag 3558. Flags 1154 may include any flag suitable for trapping access to system resources such as processor registers 3530. Below-O/S security agent 3516 may be configured to set which flags 1154 of virtual machine control structure 1152 will be used to trap access to system resources. The system resources which may be trapped and/or guarded by virtual machine control structure 1152 and below-O/S security agent 3516 may include, but are not limited to, processor registers 3530.

Processes 3573 may be configured to operate on electronic device 3504. One or more processes 3573 operating on electronic device 3504 may be a malicious process associated with malware. Malware on electronic device 3504 may operate to disguise the presence of one or more malicious processes of processes 3573 to avoid detection by anti-malware software. For example, operating system 3512 may include operating system kernel memory 3580. Operating system kernel memory 3580 may include one or more mechanisms for tracking the execution of processes on electronic device 3504. In one example, such a mechanism may include active process list 3584. Active process list 3584 may be implemented in a data structure, record, file, or any other suitable method for tracking the processes operating on electronic device 3504. If, for example, process 3573b is a malicious process associated with malware, malware on electronic device 3504 may modify active process list 3584 to remove the reference to process 3573b. Thus, security software running on electronic device 3504, when determining which processes are actively running on electronic device 3504 and should be examined for malware, will not recognize process 3573b as an active process for examination.

Processes 3573, or other entities operating on electronic device 3504, may require use of a process context switch associated with one of processes 3573 as part of normal operations when using virtualized memory. To facilitate the use of virtualized memory, operating system 3512 may be configured to conduct a process context switch, read, or attachment to a given process. Such actions may require operating system 3512 to attempt to access system resources, including a control register such as CR3 register 3560. Operating system 3512 may generate a read of CR3 register 3560, in the form of the command "move value, CR3". Operating system 3512 may be configured to attempt to change the value of CR3 register 3560, in the form of a command of "move CR3, value".

Virtual machine control structure 1152 may be configured to intercept attempts by operating system 3512 to access the system resources of electronic device 3504, including registers 3530. Virtual machine control structure 1152 may be configured to attempt to trap certain attempted commands by operating system 3512 to access system resources of electronic device 3504. Virtual machine control structure 1152 may be configured to use flags to intercept commands of operating system 3512. In one embodiment, virtual machine control structure 1152 may include flags 3556-3558 to intercept the process context switch and read commands upon CR3 register 3560. Below-O/S security agent 3516 may be configured to set such flags 3556-3558 inside virtual machine control structure 1152. Virtual machine control structure 1152 may be configured to generate a VM exit, the event generated upon interception of a flagged operation, such as a read or process context switch command associated with CR3 register 3560. In one embodiment, virtual machine control structure 1152 may be configured to generate a VM exit for any attempted access of a control register associated with virtualized memory. Each time one of the processes 3573 running on electronic device 3504 attempts to conduct a process context switch, or read the process space associated with a process, virtual machine control structure 1152 may be configured to generate a VM exit and transfer information about the attempted command to below-O/S security agent 3516. to illustrate, below-O/S security agent 3516 may be configured to record all such actions upon CR3 register 3560 (or another register 3568) in register changes 3576. Register changes 3576 may be implemented in a file, structure, data structure, record, or any other suitable mechanism for storing a history of the changes to CR3 register 3560 or another register 3568. Below-O/S security agent 3516, by recording all accesses of CR3 register 3560, may thus have a record of all processes 3573 that have attempted a process context switch in electronic device 3504. Such a record of changes as register changes 3576 may be configured to serve as a record of processes running on electronic device 3504. Below-O/S security agent 3516 may be configured to determine from register changes 3576 a list of running processes 3586, including all processes that are running on electronic device 3504.

By intercepting accesses to the CR3 register, below-O/S security agent 3516 may be capable of freezing execution by denying the ability of processes to be swapped in and out of execution. By freezing execution, below-O/S security agent 3516 may be configured to gather lists of running processes without entering into race conditions with malware, which may be working to avoid or subvert corrective or detection measures.

Alternatively, below-O/S security agent 3516 may be configured to determine list of running processes 3586 by monitoring operating systems functions for context switching (e.g., the Windows™ function SwapContext). The monitoring of operating system context switching functions may be performed via processor-level monitoring of memory associated with code sections of the function call or through observation of the execution instruction pointer ("EIP") pointing to such code sections. For example, the memory location, physical or virtual, in which SwapContext resides may be mapped and described in a security rule. A flag for the physical address or virtual memory address where SwapContext resides may be set so that any attempted execution of the memory may be trapped. For example, if below-O/S security agent 3516 is implemented fully or in part by SVMM security agent 217 of FIGURE 2, then below-O/S security agent 3516 may set VMCS 1152 to trap an attempted execution of the virtual memory page in which SwapContext resides. In another example, if below-O/S security agent 3516 is implemented fully or in part by microcode security agent 708 of FIGURE 7, then below-O/S security agent 3516 may set VMCS 1152 to trap an attempted execution of the physical memory address which begins the code section of the SwapContext function.

Operating system 3512 may include security device driver 3570. Security device driver 3570 may be implemented in a driver, module, executable, DLL or any other suitable mechanism for providing kernel mode device driver services. Security device driver 3570 may be configured to call various portions of operating system 3512 to enumerate the running processes which are running on electronic device 3504. For example, security device driver 3570 may be configured to examine kernel memory 3580, or active process list 3584. Security device driver 3570 may be configured to communicate running processes list 3580 that the security device driver 3570 can detect. Security device driver 3570 may be configured to communicate running processes list 3580 to below-O/S security agent 3516. In one embodiment, security device driver 3570 may be configured to pass the EPROCESS structure associated with a given detected process to below-O/S security agent 3516 via a hypercall. Upon receipt of the EPROCESS structures of the active processes detected by security device driver 3570, below-O/S security agent 3516 may be configured to calculate the CR3 register 3560 values (or other register 3568 values) associated with each such EPROCESS structure received from security device driver 3570. Below-O/S security agent 3516 may be configured to compare the running processes list 3580 received from security device driver 3570 with the running processes list 3586 which below-O/S security agent 3516 determined from register changes 3576. Below-O/S security agent 3516 may be configured to determine whether any CR3 values derived from the running processes list 3580 from security device driver 3570 are missing, compared to the register changes 3576 that below-O/S security agent 3516 has compiled. Such a discrepancy may indicate a hidden process. Such a process may be hidden from security device driver 3570, any anti-virus or anti-malware software running on electronic device 3504, as well as operating system 3512. However, evidence of such a process may have been visible to below-O/S security agent 3516 because such a hidden process attempted, for example, a process context switch or read of a process address space. Such evidence of a hidden process may be evidence of a kernel mode infection via a kernel root device driver, because the kernel mode security device driver 3570 was not able to detect the hidden process.

Below-O/S security agent 3516 may determine a missing process that is not a hidden process, but is instead a process that was deleted in the normal course of execution between the time the lists were compiled. To help prevent misidentifying such threads as hidden processes, below-O/S security agent 3516 may be configured to monitor the execution of functions for creating and deleting processes. Such functions may include, for example, pspProcessCreate or pspTerminateProcess. Below-O/S security agent 3516 may be configured to make time-stamp records of its enumeration actions and of observing creation or deletion functions, so that if a process is missing, it may determine whether the process was deleted with a deletion function before the process was identified as missing.

If below-O/S security agent 3516 determines that there is evidence of a hidden process running on electronic device 3504, below-O/S security agent 3516 may be configured to scan operating system 3512 and operating system kernel memory 3580 to determine whether any modifications have been made related to such a process. Below-O/S security agent 3516 may be configured to scan for any memory modifications that are known to be conducted by malware. In some embodiments, below-O/S security agent 3516 may be configured to scan operating system code section 3582, as well as active process list 3584. Below-O/S security agent 3516 may be configured to repair any malicious modifications found in the operating system kernel memory 3580. Below-O/S security agent 3516 may be configured to remove any detected root kit infections determined through its inspections of memory modifications in operating system kernel memory 3580. Below-O/S security agent 3516 may be configured to repair any infections to any internal data structure or code sections. Below-O/S security agent 3516 may be configured to repeat the process of scanning for memory modifications for a hidden process for every discrepancy found between the processes determined by below-O/S security agent 3516 and security device driver 3570. Security device driver 3570 may be configured to receive a final process list from below-O/S security agent 3516, such as running processes list 3586. Security device driver 3570 may be configured to access running processes list 3586 through a hypercall to below-O/S security agent 3516.

Security DLL 3572 may be configured to operate on electronic device 3504. Security DLL 3572 may be implemented in a dynamic linked library (DLL), shared library, executable, or any other suitable mechanism for performing its functions as described below. Security device driver 3570 may be configured to inject security DLL 3572, or a reference to security DLL 3572, into the address space of each process running on electronic device 3504, such as process address spaces 3587. Each of process address spaces 3587 may thus contain a pointer to security DLL 3572. Security DLL 3572 may be configured to enumerate all user mode processes running on electronic device 3504. Security DLL 3572 may be configured to use any suitable technique to enumerate user mode processes. For example, security DLL 3572 may be configured to use the NtQuerySystemInformation function in the Windows™ operating system, and navigate processes using ProcessFirst and ProcessNext functions. Such functions may also be performed by a below-O/S security agent. Security DLL 3572 may be configured to compile its results into running processes list 3588. Security DLL 3572 may be configured to send running processes list 3588 to security device driver 3570. Security DLL 3572 may be configured to send such running processes list 3588 via secured input and output calls. Security device driver 3570 may be configured to compare the received running processes list 3588 against the list of running processes list 3586 it received from below-O/S security agent 3516. Security device driver 3570 may be configured to determine that any differences in such process lists may include a user mode root kit attack. Security device driver 3570 or security DLL 3572 may be configured to examine the process code and data sections in memory associated with process address spaces 3587, to determine whether any memory modifications have been made. Security device driver 3570 may be configured to repair any memory modifications made in process address spaces 3587. Security device driver 3570 may be configured to repeat the process of scanning process address spaces 3587, detecting memory modifications, and repairing such memory modifications, for each discrepancy found between running processes list 3588 from security DLL 3572 and running processes list 3586 from below-O/S security agent 3516.

In operation, processes 3573 may be operating on electronic device 3504. One or more of processes 3573 may be hidden. For example, process 3573b may be associated with malware, and may be hidden to disguise its malicious operations from antivirus or anti-malware software running on electronic device 3504. Processes 3573 may access system resources of electronic device 3504 through operating system 3512. Processes 3573, in order to access different portions of memory, or in order to be executed by a processor 3508, may require accessing a control register of electronic device 3504. Such an access may include causing a process context switch, or reading of a process address space. Such requirements may be handled by operating system 3512, wherein operating system 3512 accesses a register such as CR3 register 3560. Virtual machine control structure 1152 may intercept such requests and generate a VM exit for the request. Virtual machine control structure 1152 may provide information associated with such attempts to below-O/S security agent 3516. Below-O/S security agent 3516 may set flags such as those to trap the instructions "move CR3, value" 3556 or "move value, CR3" 3558 on virtual machine control structure 1152. Below-O/S security agent 3516 may record all attempted reads or changes to CR3 register 3560 and register changes 3576.

To determine whether one or more processes 3573 running on electronic device 3504 are hidden, security device driver 3570 may determine from operating system 3512 what kernel mode processes are running on operating system 3512. Security device driver 3570 may determine such processes by scanning portions of operating system kernel memory 3580 such as active process list 3584. Security device driver 3570 may thus have a list of running processes list 3580 that it is able to detect operating in the kernel mode of electronic device 3504. Security device driver 3570 may send running processes list 3580 to below-O/S security agent 3516. Security device driver 3570 may send running processes list 3580 to below-O/S security agent 3516 by passing the EPROCESS structure of each process detected in running processes list 3580 to below-O/S security agent 3516 via a hypercall. Below-O/S security agent 3516 may calculate the CR3 values of each such EPROCESS contained within running processes list 3580. Below-O/S security agent 3516 may then compare the CR3 values arising from the security device driver 3570 in running processes list 3580, versus the register changes 3576 that it has compiled during the operating of electronic device 3504. Any discrepancies between running processes list 3580 and register changes 3576 may be the result of one or more of processes 3573 being hidden on electronic device 3504.

If below-O/S security agent 3516 determines that there is evidence of a hidden process running on electronic device 3504, below-O/S security agent 3516 may scan operating system 3512 and operating system kernel memory 3580 to determine whether any modifications have been made related to such a process. Below-O/S security agent 3516 may scan for any memory modifications that are known to be conducted by malware. In one embodiment, below-O/S security agent 3516 may scan operating system code section 3582, as well as active process list 3584, for memory modifications. Below-O/S security agent 3516 may repair any malicious modifications found in operating system kernel memory 3580. Below-O/S security agent 3516 may remove any detected root kit infections determined through its inspections of memory modifications in operating system kernel memory 3580, or repair any infections to any internal data structure or code sections. Below-O/S security agent 3516 may be configured to repeat the process of scanning for memory modifications for a hidden process for each discrepancy found between the processes determined by below-O/S security agent 3516 and security device driver 3570. Below-O/S security agent 3516 may generate a final process list such as running processes list 3586 and send such a list to security device driver 3570.

Security device driver 3570 may inject security DLL 3572, or a reference to security DLL 3572, into the address space of each process running on electronic device 3504, such as running processes list 3586. Each of process address spaces 3587 may thus contain a pointer to security DLL 3572. Security DLL 3572 may enumerate all user mode processes running on electronic device 3504. Security DLL 3572 may compile its results into running processes list 3588 and send running processes list 3588 to security device driver 3570.

Security device driver 3570 may compare the received running processes list 3588 against the list of running processes list 3586 received from below-O/S security agent 3516. Security device driver 3570 may determine that any differences in such process lists may indicate a malware infection, such as a user mode root kit attack. Security device driver 3570 may examine the process code and data sections in memory associated with process address spaces 3587, to determine whether any memory modifications have been made and make any necessary repairs. Security device driver 3570 may repeat the process of scanning process address spaces 3587, detecting memory modifications, and repairing such memory modifications, for each discrepancy found between running processes list 3588 from security DLL 3572 and running processes list 3586 from below-O/S security agent 3516.

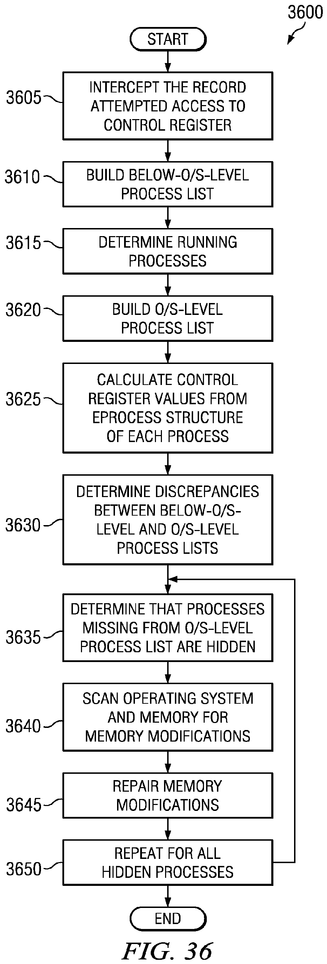

FIGURE 36 is an example embodiment of a method 3600 for detecting and repairing hidden processes on an electronic device.

In step 3605, attempted access of a control register may be intercepted and recorded. Such a control register may be a CR3 control register. Such attempted access may be intercepted by trapping a VM exit. Such an interception may be implemented by setting a flag in a virtual machine control structure. Step 3605 may be repeated so as to build a below-O/S-level process list in step 3610, which may include records of all the processes accessing the control register for a given time period. In a system using virtual memory, the control register may be accessed to switch and access such virtual memory. Steps 3605-3610 may be implemented with the assistance of a below-O/S security agent. Steps 3605-3610 may be repeated, periodically or as-needed, during the operation of method 3600 as needed, to provide an updated baseline for the various comparisons to be made in method 3600.

In step 3615, the processes running on an operating system of the electronic device may be determined from the perspective of the kernel mode of the operating system. Such processes may be determined by using enumeration functions of the kernel mode of the operating system. For example, the active process list of the operating system may be accessed to determine the running processes. In step 3620, such processes may be used to build an O/S-level process list. In step 3625, the control register values from the EPROCESS structure of each process in the O/S-level process list may be calculated. Such register values may allow the process to be cross-referenced in the O/S-level process list.

In step 3630, the below-O/S-level and O/S-level process lists may be compared to determine whether any discrepancies exist. If there are any processes missing from O/S-level process list that are in the below-O/S-level process list, in step 3635 it may be determined that such processes may be hidden and thus malicious.

In step 3640, the operating system and system memory may be scanned for memory modifications associated with the hidden process. In one embodiment, such resources may be scanned for process enumeration related alterations. For example, the operating system code sections and/or the operating system active process list may be scanned. In step 3645, any detected memory modifications may be repaired. In step 3650, steps 3605-3645 may be repeated for all hidden processes, until no discrepancies exist between the elements of the below-O/S-level process list and the O/S-level process list.

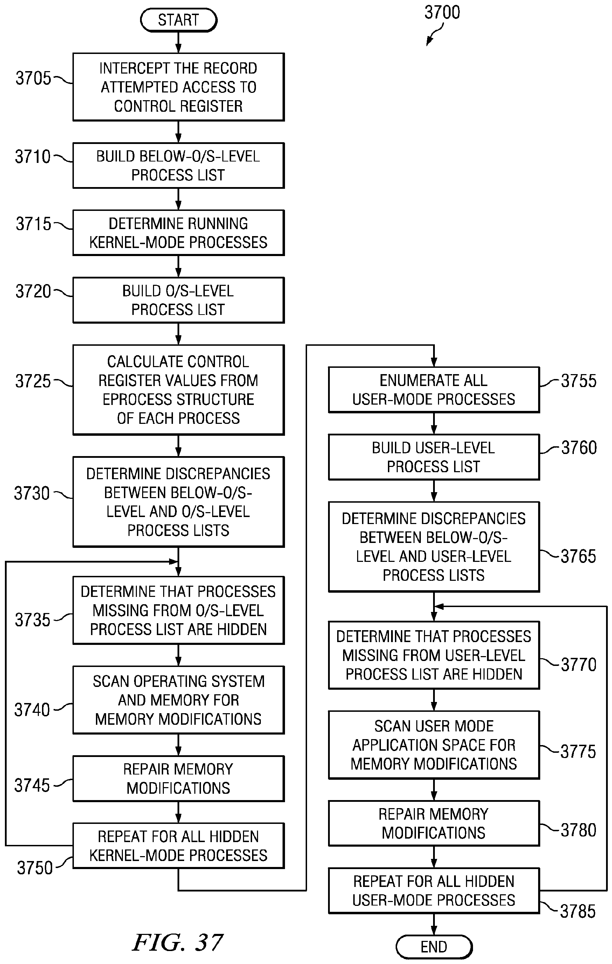

FIGURE 37 is an example embodiment of a method 3700 for detecting and repairing hidden processes on an electronic device. Method 3700 is different from method 3600 in that method 3600 involves the creation and comparison of lists that include both kernel-mode and user-mode processes, while method 3700 involves the separate creation and comparison of kernel-mode processes lists and user-mode processor lists. By comparing the presence of processes in one list and not the other, qualities of the malware process may be determined, such as whether the malware is a user-mode rootkit or a kernel-mode rootkit. Also, the rootkit may have infected one or many processes.

In step 3705, attempted access of a control register may be intercepted and recorded. Such a control register may be a CR3 control register. Such attempted access may be intercepted by trapping a VM exit. Such an interception may be implemented by setting a flag in a virtual machine control structure. Step 3705 may be repeated so as to build a below-O/S-level process list in step 3710, which may include records of all the processes accessing the control register for a given time period. In a system using virtual memory, the control register may be accessed to switch and access such virtual memory. Steps 3705-3710 may be implemented with the assistance of a below-O/S security agent. Steps 3705-3710 may be repeated, periodically or as-needed, during the operation of method 3700 as needed, to provide an updated baseline for the various comparisons to be made in method 3700.

In step 3715, the processes running in the kernel mode of an operating system of the electronic device may be determined, from the perspective of the kernel mode of the operating system. Such processes may be determined by using enumeration functions of the kernel mode of the operating system. For example, the active process list of the operating system may be accessed to determine the processes running in kernel mode. In step 3720, such processes may be used to build an O/S-level process list. In step 3725, the control register values from the EPROCESS structure of each process in the O/S-level process list may be calculated. Such register values may allow the process to be cross-referenced in the O/S-level process list.

In step 3730, the below-O/S-level and O/S-level process lists may be compared to determine whether any discrepancies exist. If there are any processes missing from O/S-level process list that are in the below-O/S-level process list, in step 3735 it may be determined that such processes may be hidden and thus malicious, possibly taking the form of a kernel-mode rootkit. In one embodiment, it may be determined that, alternatively, processes missing from O/S-level process list are in fact user-mode processes. In such an embodiment, step 3715 may not have enumerated user-mode processes of the electronic device.

In step 3740, the operating system and system memory may be scanned for memory modifications associated with the hidden process. In one embodiment, such resources may be scanned for process enumeration related alterations. For example, the operating system code sections and/or the operating system active process list may be scanned. In step 3745, any detected memory modifications may be repaired. In step 3750, steps 3735-3745 may be repeated for all hidden kernel-mode processes, until no discrepancies exist between the kernel-mode elements of the below-O/S-level process list and the O/S-level process list.

In step 3755, the user-mode processes of the electronic device may be determined and enumerated. Step 3755 may be implemented by injecting a shared library into the address space of each running process. The shared library may call the user mode process enumeration functions of the operating system. In step 3760, a user-level process list may be created with the results of step 3755. In step 3765, discrepancies between the below-O/S-level and user-level process lists may be determined. Any processes not found in the user-level process list, and not previously found in the O/S-level process list, may be hidden user-mode processes, and thus associated with malware. In step 3770, the application and process spaces of the user mode may be scanned for memory modifications. The process code of the address spaces into which the shared library was injected may be examined for such memory modifications. The portions of memory hosting user-mode process code as well as data sections may be scanned in step 3775. In step 3780, any detected memory modifications may be repaired. In step 3785, steps 3755-3780 may be repeated, until no discrepancies exist between the user-mode elements of the below-O/S-level process list and the user-level process list.

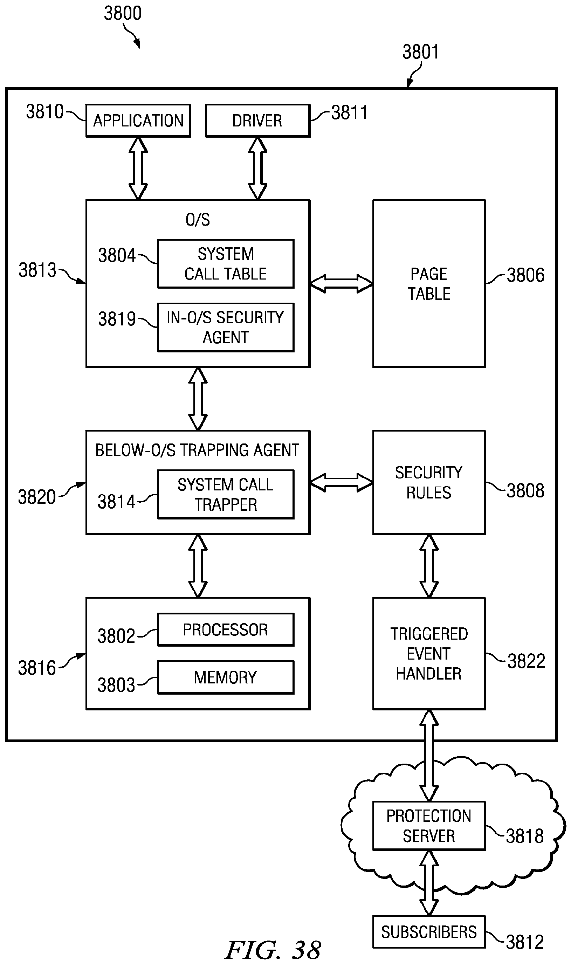

FIGURE 38 is an example embodiment of a system 3800 for securing access to the system calls of an operating system 3813 executing on an electronic device 3801. System 3800 may include a below-O/S trapping agent 3820 and a triggered event handler 3822 configured to operate on electronic device 3801 to detect malicious attempts to access system calls and/or the system call table from software-based entities running in operating systems of electronic device 3801, such as operating system 3813. Furthermore, below-O/S trapping agent 3820 and triggered event handler 3822 may be configured to use one or more security rules 3808 to determine when to trap access to system calls and/or a system call table 3804 and how to handle a triggered event associated with the trapped operation. Below-O/S trapping agent 3820 and triggered event handler 3822 may be configured to allow, deny, or take other corrective action for the triggered event.

Electronic device 3801 may be implemented wholly or in part by or configured to implement the functionality of the electronic device 103 of FIGURE 1, electronic device 204 of FIGURE 2, electronic device 404 of FIGURE 4, electronic device 701 of FIGURE 7, electronic device 901 of FIGURE 9, electronic device 1201 of FIGURE 12, and/or any combination thereof. Electronic device 3801 may include one or more processors 3802 coupled to a memory 3803. Processor 3802 may be implemented wholly or in part by or configured to implement the functionality of processor 208 of FIGURE 2, processor 408 of FIGURE 4, processor 702 of FIGURE 7, processor 902 of FIGURE 9, processor 1202 of FIGURE 12, and/or any combination thereof. Memory 3803 may be implemented wholly or in part by or configured to implement the functionality of memory 206 of FIGURE 2, memory 406 of FIGURE 4, memory 703 of FIGURE 7, memory 903 of FIGURE 9, memory 1203 of FIGURE 12, and/or any combination thereof. Electronic device 3801 may include an operating system 3813, which may include a system call table 3804, a virtual memory page table 3806, and an in-O/S security agent 3819. Operating system 3813 may be implemented wholly or in part by or configured to implement the functionality of operating systems 112 of FIGURE 1, operating system 212 of FIGURE 2, operating system 412 of FIGURE 4, operating system 713 of FIGURE 7, operating system 913 of FIGURE 9, operating system 1213 of FIGURE 12, and/or any combination thereof. In-O/S security agent 3819 may be implemented wholly or in part by or configured to implement the functionality of in-O/S security agent 218 of FIGURE 1, in-O/S security agent 418 of FIGURE 4, in-O/S security agent 719 of FIGURE 7, in-O/S security agent 919 of FIGURE 9, in-O/S security agent 1219 of FIGURE 12, and/or any suitable combination thereof. Security rules 3808 may be implemented by or configured to implement the functionality of security rules 114 of FIGURE 1, security rules 220, 222 of FIGURE 2, security rules 420, 434, 436, 438 of FIGURE 4, security rules 518 of FIGURE 5, security rules 707, 721, 723 of FIGURE 7, security rules 908, 921 of FIGURE 9, security rules 1208, 1221 of FIGURE 12, and/or any combination thereof. Protection server 3818 may be implemented wholly or in part by or configured to implement the functionality of protection server 102 of FIGURE 1, protection server 202 of FIGURE 2, and/or any combination thereof.

Below-O/S trapping agent 3820 may be implemented by or configured to implement the functionality of below-O/S trapping agent 104 of FIGURE 1, SVMM 216 of FIGURE 2, firmware security agents 440, 442 and/or PC firmware security agent 444 of FIGURE 4, firmware security agent 516 of FIGURE 5, and/or microcode security agent 708 of FIGURE 7, below-O/S trapping agent 920 of FIGURE 9, below-O/S security agent 1220 of FIGURE 12, and/or any combination thereof. Triggered event handler 3822 may be implemented by or configured to implement the functionality of triggered event handler 108 of FIGURE 1, SVMM security agent 217 of FIGURE 2, below-O/S agent 450 of FIGURE 4, below-O/S agent 712 of FIGURE 7, triggered event handler 922 of FIGURE 9, and/or any combination thereof. In various embodiments, some of the functionality of below-O/S trapping agent 3820 may be accomplished by triggered event handler 3822, and/or some of the functionality of triggered event handler 3822 may be accomplished by below-O/S trapping agent 3820. Furthermore, below-O/S trapping agent 3820 and triggered event handler 3822 may be implemented in the same software module.

Page table 3806 may be implemented as a data structure and may be used to implement the virtual memory system of operating system 3813. The virtual memory system is a memory management system that virtualizes access to a memory 3803 of an electronic device 3801. In a virtual memory system, software processes executing on the operating system 3813 are provided with a virtual address space which a process may treat as a contiguous block of memory. In reality, the virtual address space may be dispersed across different areas of physical memory. When a process requests access to memory, the operating system 3813 may be responsible for mapping the virtual address of the process into the physical address in memory 3803 where the data is actually stored. A virtual address space may be divided into fixed size blocks of contiguous virtual memory addresses called virtual memory pages. Page table 3806 may be used to store the mapping from a virtual memory page to its corresponding physical address in memory 3803 where the virtual memory page is stored. Page table 3806 may include various access permissions, such as read, write, and/or execute, to specify the type of access that is authorized for a given virtual memory page. In some embodiments, below-O/S trapping agent 3820 and/or triggered event handler 3822 may be configured to catch any generated exceptions or attempted read, write, or execute operations and use security rules 3808 to determine if the unauthorized request to access memory 3803 is indicative of malware.

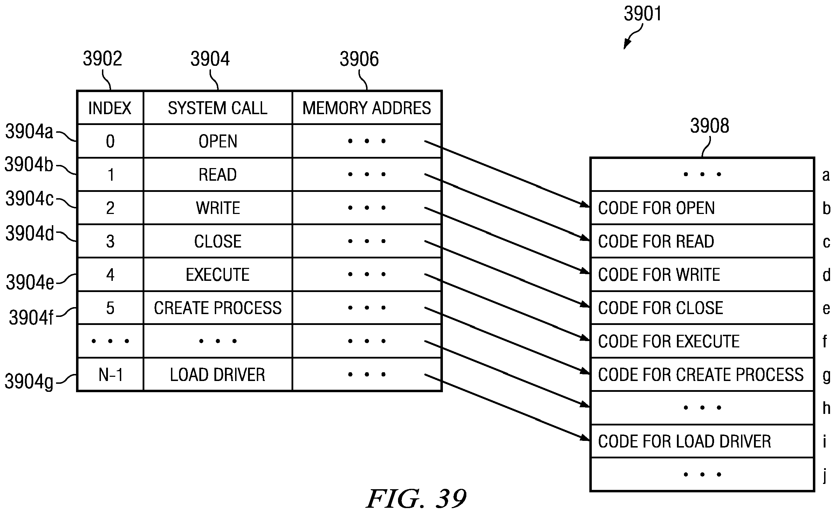

System call table 3804 may be a data structure used by operating system 3813 for implementing system calls. A system call may be a routine and/or system service provided by the operating system 3813. System call table 3804 may provide an interface between an application 3810 and an operating system 3813, allowing the application 3810 to request the operating system 3813 to perform an operation that the application 3810 may not be authorized to perform. Each system call may be identified using an index into system call table 3804 where an entry for the particular system call may be stored. Each entry in system call table 3804 may store the address in memory 3803 where the code corresponding to the particular system call may be stored. Such entries may be implemented as pointers. A system call may be executed by informing operating system 3813 of the appropriate index and subsequently transferring control to operating system 3813. Operating system 3813 may then consult system call table 3804 to identify the location in memory 3803 where the code corresponding to the particular system call is stored. Operating system 3813 may then execute the code and return control to the software component responsible for requesting the system call. Descriptions of example embodiments of system call table 3804 may be found in discussions of system call table 3901 from FIGURE 39, below.

Below-O/S trapping agent 3820 may be configured to intercept access to or information from any suitable resource 3816 associated with system calls, such as memory 3803 and/or processor 3802. For example, resources 3816 may be implemented by or configured to implement the functionality of resource 106 of FIGURE 1, system resources 214 of FIGURE 2, system resources of FIGURE 7, processor resources 924 of FIGURE 9, virtual memory 1204 and/or physical memory 1203 of FIGURE 12, and/or any combination thereof. Resources 3816 may include resources available to a processor such as processor 3802 for enabling the processor to load and execute instructions. Such resources may include, for example, data registers, control registers, caches, processor flags, processor cores, processor exceptions, and/or processor interrupts. Resources 3816 may also include virtual and/or physical memory 3803. An attempted access of such a resource may include an instruction, such as an assembly language instruction with operands, and such an attempted access may be trapped by trapping the execution of the instruction.

Below-O/S trapping agent 3820 may be configured to intercept access to or information from any suitable resource, such as memory 3803 and/or resources of processor 3802. Below-O/S trapping agent 3820 may include a system call trapper 3814 that may be used to trap attempts to access system calls and/or system call table 3804. System call trapper 3814 and/or triggered event handler 3822 may then use contextual information associated with a trapped attempt, in conjunction with security rules 3808, to determine whether to allow, deny, and/or report the attempt to one or more subscribers 3812. The contextual information may include the requesting entity of the trapped access attempt, the particular system call at issue, and/or the particular type of access attempted (e.g., an attempt to execute the system call or an attempt to read/write to an entry in system call table 3804).

System call trapper 3814 may be a module and/or component of below-O/S trapping agent 3820 and may be configured to trap access to system calls in any suitable manner. For example, system call trapper 3814 may be configured to trap the execution of an assembly language instruction used to implement system calls, such as an instruction that transfers control to operating system 3813 for execution of a system call. The particular instruction to trap may depend on the particular processor 3802 and/or operating system 3813 of electronic device 3801. As an example, when using a variant of Microsoft Windows™ executing on a processor 3802 that supports an x86 instruction set architecture ("ISA"), system call trapper 3814 may trap attempts to execute the 'SysEnter' and/or 'KiFastSysCall' instructions. These instructions function to transfer control to operating system 3813 to execute a system call. Trapping attempts to execute the 'SysEnter' instruction may only trap attempts from software executing at "Ring3" priority, while trapping attempts to execute the 'KiFastSysCall' instruction may trap attempts from software executing at either "RingO" or "Ring3" priority. In some embodiments, an attempt to execute the 'SysEnter' and/or 'KiFastSysCall' instructions may be trapped by trapping an attempt to execute the virtual memory page corresponding to the physical memory location where the particular instructions may be stored.

In another embodiment, system call trapper 3814 may be configured to trap attempts to access system call table 3804. The particular method used to trap attempts to access system call table 3804 may depend on the particular processor 3802 and/or operating system 3813 of electronic device 3801. When using a processor 3802 that supports an x86 ISA, system call trapper 3814 may trap attempts to read or write to system call table 3804 by trapping certain attempts to execute the MOV instruction. For example, system call trapper 3814 may trap attempts to write to system call table 3804 by trapping the instruction "MOV syscall_table_address, EAX". This instruction may operate to write the value from the EAX register into an entry into the system call table at the memory address specified by syscall_table_address. By trapping attempts to write to system call table 3804, system call trapper 3814 may prevent malware from overwriting an entry in the system call table 3804 with a memory address containing malicious code. Similarly, system call trapper 3814 may trap attempts to read from system call table 3804 by trapping the instruction "MOV EAX, syscall_table_address". This instruction may operate to read the value from an entry in system call table 3804 at the memory address specified by syscall_table_address. Trapping attempts to read an entry in system call table 3804 will effectively trap all attempts to execute the system call associated with the entry in the system call table 3804, as the system call table 3804 must be read to allow the operating system 3813 to identify the location in memory of the code corresponding to the system call. In addition, trapping attempts to read to an entry in system call table 3804 will trap any direct attempt to read to the system call table 3804, such as by malware. In some embodiments, all attempts to read system call table 3804 are trapped. In some embodiments, an attempt to access system call table 3804 may be trapped by trapping an attempt to access the virtual memory page corresponding to the physical memory location where system call table 3804 may be stored.

In yet another embodiment, system call trapper 3814 may be configured to trap an attempt to execute a system call by trapping an attempt to execute code at a memory location where code for the system call resides. System call table 3804 may be consulted to identify the memory location where code for a particular system call resides. The particular method used to trap an attempt to execute a system call may depend on the type of processor 3802 in electronic device 3801. In one embodiment, an attempt to execute a system call may be trapped using a trigger based on the value of, for example, the Instruction Pointer (IP) register. In some embodiments, the IP register may be known as the Program Counter (PC) register. The IP register may be used to store the address of the instruction currently being executed or the address of the next instruction to be executed, depending on the particular processor. When using a processor 3802 that supports an x86 ISA, system call trapper 3814 may trap attempts to execute a particular system call by monitoring the value of the IP register and trapping execution when the value of the IP register contains the address of the system call. In another embodiment, an attempt to execute a system call may be trapped by trapping an attempt to execute the virtual memory page corresponding to the physical memory location where the code for the system call may be stored. System call table 3804 may be consulted at the index corresponding to the particular system call to be trapped to identify the location in memory of the code corresponding to the system call. In one embodiment, the execution of the memory locations containing the routines and functions linked to in system call table 3804 may be trapped by trapping an instruction for transferring control, such as a "JMP" routine directed towards a location known to be within system call table 3804.

The specific implementation of the above methods for trapping access to system calls and system call table 3804 may depend on the particular implementation of below-O/S trapping agent 3820 and/or system call trapper 3814. For example, if below-O/S trapping agent 3820 and/or system call trapper 3814 are implemented in a virtual machine monitor, any trapping based on a specific memory address (e.g., trapping based on an attempt to read/write to an entry in the system call table and/or trapping based on execution at a memory location containing the code of a system call) may be based on the virtual memory address, as the memory address may not have been converted from a virtual memory address into a physical memory address. As another example, if below-O/S trapping agent 3820 and/or system call trapper 3814 are implemented in a microcode security agent, any trapping based on a specific memory address may be based on the physical memory address, because the conversion from a virtual address to a physical address may have already been performed at the microcode level.

The memory location of the instruction making the attempt to access system call table 3804 or the functions associated with system call table 3804 may be detected during the trapping of the attempt. The memory location may be analyzed to determine the entity making the attempt.

After trapping a particular attempt, system call trapper 3814 may create and send a triggered event associated with the attempt to triggered event handler 3822. Triggered event handler may then use contextual information associated with the trapped event, in conjunction with security rules 3808, to determine whether to allow, deny, and/or report the event to one or more subscribers 3812. Contextual information may include the requesting entity of the trapped event, the particular system call at issue, and/or the action requested (e.g., an attempt to execute a system call and/or an attempt to read/write to an entry in system call table 3804). For example, only certain entities known to be safe and free from malware may be allowed to write to system call table 3804. An entity whose malware status was previously unknown may be determined to be malware based on an unauthorized attempt to write to system call table 3804. In another example, execution of functions linked to in system call table 3804 may be trapped, and execution may be allowed only if the entity making the call to the function made such an attempt through system call table 3804. An attempt by an entity, whose malware status was previously unknown, may be denied direct access to executing such functions. In addition, an entity that is determined to be malware, through a blacklist or other determination, attempting access to system call table 3804 or its related functions may be denied access, and other suitable corrective action may be taken.

Subscribers 3812 may include any entities with use for information associated with a trapped attempt to access system call table 3804 and/or a trapped attempt to execute a system call. Subscribers 3812 may include applications 3810 and/or security agents on electronic device 3801, and/or may include third party applications or other software. For example, a subscriber 3812 may include security software executing on electronic device 3801, such as below-O/S trapping agent 3820, triggered event handler 3822, and/or in-O/S security agent 3819, which may use the contextual information associated with the trapped attempt for detecting malware. In some embodiments, each subscriber 3812 may provide its own security agent operating at the same priority level as below-O/S trapping agent 3820, such as, for example, a firmware security agent. A subscriber 3812 may also include security software executing remotely, such as on protection server 3818. As another example, subscribers 3812 may include a manufacturer of a particular resource, such as any I/O device used by electronic device 3801. The manufacturer may be interested in any suspicious attempts to compromise the resource via access to the system call table and/or execution of a system call, such as a system call associated with the resource. As another example, subscribers 3812 may include an administrator of a digital rights management ("DRM") system. A DRM system may limit and/or control the use of digital content and is commonly used to protect digital content protected by copyright, such as video and/or music content. The administrator of a DRM system may be interested to know when and how various digitally protected files are accessed and may accomplish this by tracking various system calls that may be used to access the protected files. An Application Programming Interface ("API") may be provided to the subscribers 3812 to allow subscribers 3812 to access the information associated with a trapped attempt to execute a system call and/or trapped attempt to access system call table 3804.

FIGURE 39 is an example embodiment of a system call table 3901 for use with a system and/or method of securing access to the system calls of an operating system. System call table 3901 may be used by an operating system to store the addresses 3906 in memory 3908 where the code for each system call 3904 resides. System call table 3901 may be used, for example, to implement functionality of system call table 3804 of FIGURE 38. System call table 3901 may be implemented by a table, record, and/or other suitable data structure. In embodiments with a variant of the Microsoft Windows™ operating system, system call table 3901 may be implemented by the System Service Descriptor Table ("SSDT"). A system call 3904 may be a routine and/or system service provided by the operating system. Typical system calls 3904 may include, for example, open, read, write, close, and/or execute for manipulating and/or executing files, ntCreateProcess for creating a new process, and/or ntLoadDriver and ZwLoadDriver for loading a new driver.

A system call 3904 may provide an interface between an application and an operating system, allowing the application to request the operating system to perform an operation that the application may not be authorized to perform. For example, an application, which typically executes at "Ring3" priority, may need to access a file on a disk but may not have permission to perform disk I/O operations. The application may use a system call 3904, such as a read or write file system call, to transfer control to the operating system to allow the operating system to satisfy the request from the application. The operating system, which may be executing at "RingO" priority, may provide the service associated with the particular system call 3904 and may then transfer control back to the application. For example, the operating system may access system call table 3901 to identify the memory address 3906 where the code corresponding to the system call 3904 is located. The operating system may then execute the code at the specified address 3906 in memory 3908, and may then transfer control back to the application. In this manner, the application may utilize certain services that are typically only available to software executing at "RingO" priority, such as the operating system.

Each system call 3904 may be referenced using an index 3902 into the system call table 3901 where the entry for the system call 3904 is stored. For example, system call table 3901 has N total entries, and each entry may be referenced using an index 3902 ranging from 0 to N-1. A system call 3904 may be executed by informing the operating system of the appropriate index 3902 and transferring control to the operating system. In some embodiments, a software component may specify the appropriate index 3902 by placing the index into a register of the processor, and may then execute an instruction to transfer control to the operating system for execution of the system call 3904. For example, in one embodiment using an x86 instruction set architecture ("ISA"), the following instructions may be used to implement system calls for an application:
"MOV EAX, index"
"SysEnter"
The first instruction moves 'index' into the EAX register of the processor, where 'index' is an integer corresponding to the index 3902 in the system call table 3901 where the entry of the particular system call 3904 resides. The 'SysEnter' instruction then transfers control to the operating system, and the operating system may access system call table 3901 at the index 3902 specified in the EAX register. The entry at the particular index 3902 of system call table 3901 may specify a memory address 3906 pointing to the location in memory 3908 where the code for the particular system call 3904 resides. The processor may then execute the code located at the specified address 3906 in memory 3908. System calls 3904 may be executed by any software component, including applications, operating systems and/or drivers. As an example on an x86 ISA, an operating system and/or driver may execute systems calls 3904 in a similar manner to an application, except using the 'KiFastSysCall' instruction.

System calls 3904 may be added to and/or removed from system call table 3901. For example, if a new device is added to an electronic device, a device driver for the new device may need to be loaded by the operating system and a system call 3904 may need to be added to system call table 3901 to allow applications to utilize the functionality of the new device. The code for the new system call may be loaded into memory 3908, and an entry for the new system call 3904 may be added to the end of system call table 3901, specifying the address 3906 in memory 3908 where the code for the system call resides.

The above described embodiments for implementing system calls 3904 are merely a few of many possible embodiments. System calls 3904 and/or system call table 3901 may be implemented in any suitable manner. The specific implementation of system calls 3904 and/or system call table 3901 may depend on the particular processor and/or operating system of an electronic device.

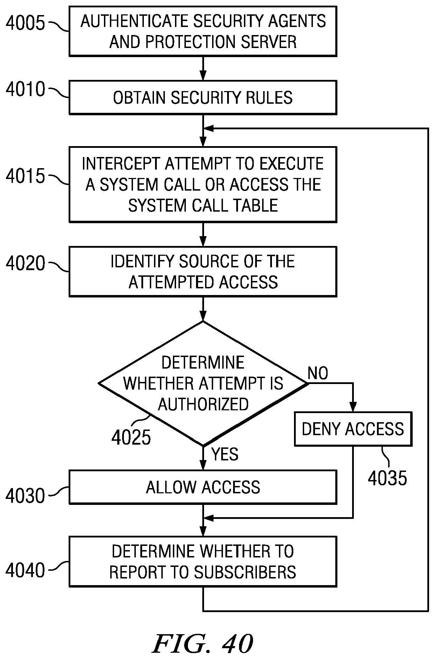

FIGURE 40 is an example embodiment of a method 4000 for securing access to the system calls of an operating system executing on an electronic device. In step 4005, the identity and security of a below-O/S security agent, in-O/S security agent, triggered event handler, and protection server may be authenticated. Such authentication may be performed using any suitable method, including by locating and verifying the images in memory of each component, using cryptographic hashing, and/or using secret keys. Until step 4005 is completed, operation of other steps may be withheld. In step 4010, security rules are obtained. Security rules may be stored locally by below-O/S security agent, in-O/S security agent, and/or triggered event handler, and/or may be stored remotely, for example on the protection server. Such security rules may be used to make decisions in steps 4015-4040.

In step 4015, an attempt to execute a system call and/or access the system call table may be intercepted. In some embodiments, an attempt to execute a system call may be intercepted by trapping an attempt to execute a control transfer instruction used to implement system calls. For example, some processors and/or operating systems may implement system calls using a control transfer instruction, such as the SysEnter and/or KiFastSysCall instruction, and an attempt to execute a system call may be intercepted by trapping execution of the appropriate control transfer instruction. An attempt to execute a system call may also be intercepted by trapping an attempt to execute the virtual memory page corresponding to the physical memory location where the particular control transfer instructions may be stored. In some embodiments, an attempt to execute a system call may be intercepted by trapping an attempt to execute code at a memory location containing the code of a system call. In such embodiments, the trapping may be based on the value of the IP register. For example, the system call table or a memory map may be consulted to identify a memory location containing the code for a system call, and a trap may occur when the IP register contains the address of the memory location for the particular system call. In other embodiments, an attempt to execute a system call may be intercepted by trapping an attempt to execute the virtual memory page corresponding to the physical memory location where the code for the particular system call may be stored. In some embodiments, an attempt to read or write to the system call table may also be intercepted. In such embodiments, the attempt may be intercepted by trapping execution of an instruction used to read or write to a memory location in the system call table. For example, on the x86 instruction set architecture, the MOV instruction may be trapped when it is used to read or write to a location in the system call table. An attempt to read or write to the system call table may be also intercepted, in some embodiments, by trapping an attempt to access the virtual memory page corresponding to the physical memory location where system call table may be stored.

In step 4020, the source of the attempted access is identified. For example, the attempted access may be from an application, driver, in-O/S security agent, the operating system, and/or other software entity. In step 4025, it is determined whether the attempt is authorized. Security rules may be used in conjunction with contextual information associated with the attempt to determine whether a particular attempt may or may not be authorized. The contextual information may include the source of the attempted access and/or the specific type of access. For example, the security rules may specify that only the operating system may write to the system call table. As another example, the security rules may specify that a signed driver or other software component associated with an entry may write to its own entry. If the attempt is authorized, then in step 4030 access is allowed. If the attempt is not authorized, then in step 4035 access is denied. Finally, in step 4040, it is determined whether the attempt should be reported to one or more subscribers. Whether the attempt should be reported may depend on the particular system call at issue and the contextual information associated with the attempted access. The security rules may specify when an attempt to execute a system call and/or access the system call table should be reported to one or more subscribers.

The steps of the method from FIGURE 40 may be repeated as necessary to protect the electronic device continuously, periodically, upon demand, and/or upon the triggering of an event.

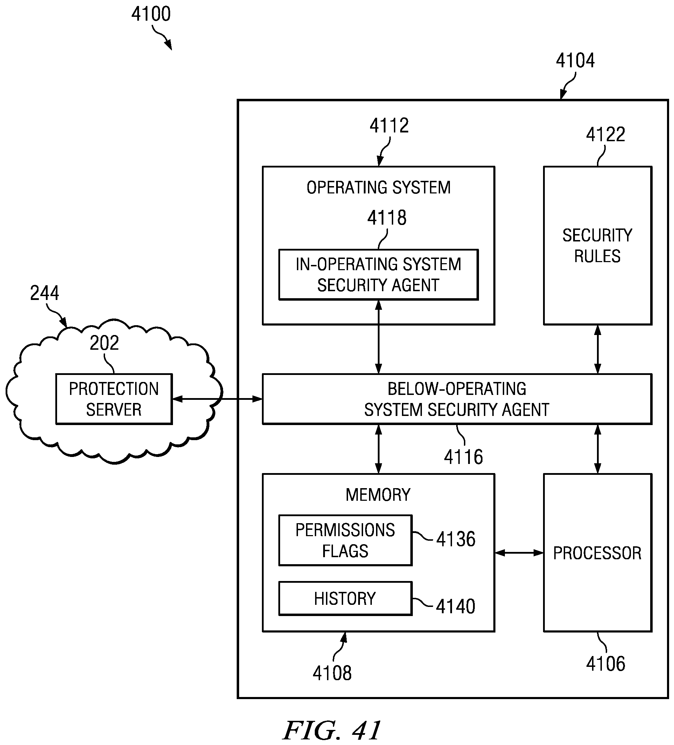

FIGURE 41 is an example embodiment of a system 4100 for regulation and control of malicious, or potentially malicious code, on an electronic device 4104. For example, system 4100 may be employed for regulation and control of self-modifying code on an electronic device 4104. System 4100 may include a below-O/S security agent 4116 configured to operate on electronic device 4104 to protect against attempts by malware to self-modify itself to escape detection. As another example, system 4100 may be employed for modifying malicious code on electronic device 4104. System 4100 may include below-O/S security agent 4116 configured to operate on electronic device 4104 to modify malicious code in order to neutralize detected malware. As a further example, system 4100 may be employed for monitoring and tracking of threads to identify thread families that may include potentially malicious code. System 4100 may include below-O/S security agent 4116 configured to operate on electronic device 4104 to monitor and track relationships among threads.

Furthermore, below-O/S security agent 4116 may be configured to use one or more security rules 4122 to determine what attempted operations to trap and how to respond to such trapped operation. Below-O/S security agent 4116 may be configured to allow, deny, or take other corrective action for the trapped operation.

As shown in FIGURE 4100, electronic device 4104 may include a processor 4106 coupled to a memory 4108, an operating system 4112, below-O/S security agent 4116, and security rules 4122. Electronic device 4104 may be implemented wholly or in part by or configured to implement the functionality of electronic device 103 of FIGURE 1, electronic device 204 of FIGURE 2, electronic device 404 of FIGURE 4, electronic device 701 of FIGURE 7, electronic device 901 of FIGURE 9, electronic device of FIGURE 1201 of FIGURE 12, and/or any combination thereof. Processor 4106 may be implemented wholly or in part by or configured to implement the functionality of processor 208 of FIGURE 2, processor 408 of FIGURE 4, processor 702 of FIGURE 7, processor 902 of FIGURE 9, processor 1202 of FIGURE 12, and/or any combination thereof. Memory 4108 may be implemented wholly or in part by or configured to implement the functionality of memory 206 of FIGURE 2, memory 406 of FIGURE 4, memory 703 of FIGURE 7, memory 903 of FIGURE 9, physical memory 1203 or virtualized memory of FIGURE 12, and/or any combination thereof. Operating system 4112 may be implemented wholly or in part by or configured to implement the functionality of operating system 112 of FIGURE 1, operating system 212 of FIGURE 2, operating system 412 of FIGURE 4, operating system 713 of FIGURE 7, operating system 913 of FIGURE 9, operating system 1213 of FIGURE 12, and/or any combination thereof. Below-O/S security agent 4116 may be implemented wholly or in part by or configured to implement the functionality of below-O/S trapping agent 104 of FIGURE 1, SVMM security agent 217 or SVMM 216 of FIGURE 2, firmware security agents 440, 442, PC firmware security agent 444, or below-O/S system agent 450 of FIGURE 4, firmware security agent 516 of FIGURE 5, microcode security agent 708 of FIGURE 7, below-O/S trapping agent 920 of FIGURE 9, below-O/S security agent 1220 of FIGURE 12, and/or any combination thereof. Security rules 4122 may be implemented by or configured to implement the functionality of security rules 114 of FIGURE 1, security rules 222 of FIGURE 2, security rules 434, 436, 438 of FIGURE 4, security rules 518 of FIGURE 5, or security rules 707, 723 of FIGURE 7, security rules 908 of FIGURE 9, security rules 1208 of FIGURE 12, and/or any combination thereof. Security rules 4122 may be established in any suitable manner (e.g., policies set by a user of electronic device 4104, policies set by an administrator of an enterprise including electronic device 4104, policies set by a creator of below-O/S security agent 4116, etc.). In some embodiments, below-O/S security agent 4116 may request and/or receive updates or modifications to security rules 4122 from protection server 202 via network 244 (e.g., on account of updates to malware definitions).

Operating system 4112 may include in-O/S security agent 4118. In-O/S security agent 4118 may be implemented wholly or in part by or configured to implement the functionality of in-O/S security agent 218 of FIGURE 2, in-O/S security agent 418 of FIGURE 4, in-O/S security agent 718 of FIGURE 7, in-O/S security agent 919 of FIGURE 9, in-O/S security agent 1219, and/or any combination thereof.

As shown in FIGURE 41, memory 4108 may include permissions flags 4136 and history 4140. Permissions flags 4136 may maintain flags, variables, or other data establishing permissions related to content stored in memory 4108. For example, permissions flags 4136 may indicate, for a particular location (e.g., page or address) of memory 4108, whether entities executing on electronic device 4104 may read, write, and/or execute content stored at the particular location. In some embodiments, permissions flags 4136 may be embodied in page table entries (PTEs) and/or page directory entries (PDEs) of memory 4108. Permission flags 4136 may be stored at a particular memory location (e.g., page or address range).

History 4140 may include a log, list, cache, and/or other suitable data structure for recording trapped attempted accesses and information associated with the trapped attempted accesses (e.g., type of attempted access, memory location associated with a trapped attempted access, etc.). To prevent attempts by malware to circumvent the effectiveness of below-O/S security agent 4116 via attempted malicious access to history 4140, the contents of history 4140 may be protected from attempted accesses in accordance with one or more of the methods described herein for securing memory. For example, below-O/S security agent 4116 may trap attempted accesses from entities other than below-O/S security agent 4116 to a memory page or memory address range in which history 4140 resides, and deny such trapped attempted accesses.

As described above, below-O/S security agent 4116 may, based on security rules 4122, detect the presence of malicious code. Below-O/S security agent 4116 may detect presence of malicious code via any method discussed above, and/or in any other suitable manner. For example, below-O/S security agent 4116 may detect the presence of malicious code by trapping access to memory 4108 or other resources of electronic device 4104. As another example, below-O/S security agent 4116 may detect the presence of malicious code by scanning pages of memory 4108 and/or storage 4126 for malicious code. As a further example, below-O/S security agent 4116 may detect the presence of malicious code in memory by receiving a communication from in-O/S security agent 4118 that in-O/S security agent 4118 has detected the presence of malicious code.

In particular, below-O/S security agent 4116 may, based on security rules 4122, trap upon one or more attempted accesses to memory that may, individually or in the aggregate, indicate the presence of self-modifying malware. As an example, changes to permissions of a location of memory (e.g., from read to read/write or from read/write to read/write/execute) as set forth in permissions flags 4136 may indicate (e.g., either individually or in the aggregate with other attempted memory accesses) the presence of malware. Accordingly, below-O/S security agent 4116 may trap upon detected changes to permissions flags 4136. For example, in some embodiments, below-O/S security agent 4116 may, in accordance with security rules 4122, trap on attempted accesses to locations (e.g., pages or addresses) of memory 4106 that include permissions flags 4136. In the same or alternative embodiments, below-O/S security agent 4116 may, in accordance with security rules 4122, trap on attempted accesses to locations (e.g., pages or addresses) of memory 4108 that include calls and/or functions of operating system 4112 for modifying memory permissions (e.g., MiSetProtectionOnSection, AllocateVirtualMemory(), MiProtectVirtualMemory(), and/or other suitable function calls in Windows™) and/or locations (e.g., pages or addresses) of memory 4108 that include corresponding permissions flags of operating system 4112 (e.g., NTProtectVirtualMemory, ZwProtectVirtualMemory, ProtectVirtualMemory, and/or other suitable flags in Windows™).

As another example, copying of content from one location of memory 4106 to another may indicate (e.g., either individually or in the aggregate with other attempted memory accesses) the presence of malware. Accordingly, below-O/S security agent 4116 may trap upon attempted accesses associated with copying of content between memory locations. For example, in some embodiments, below-O/S security agent 4116 may, in accordance with security rules 4122, trap on processor functions for copying of content from one location of memory to another. In the same or alternative embodiments, below-O/S security agent 4116 may, in accordance with security rules 4122, trap on attempted accesses to locations (e.g., pages or addresses) of memory 4108 that include calls and/or functions of operating system 4112 for copying data, such as the MemUICopy function in Windows™.

As a further example, modification or "writing-in-place" of content stored in memory 4106 may indicate (e.g., either individually or in the aggregate with other attempted memory accesses) the presence of malware. Accordingly, below-O/S security agent 4116 may trap upon attempted accesses associated with writing-in-place of content in memory 4108. For example, in some embodiments, below-O/S security agent 4116 may, in accordance with security rules 4122, trap on processor functions for modifying content in place in memory 4108. In the same or alternative embodiments, below-O/S security agent 4116 may, in accordance with security rules 4122, trap on attempted accesses to locations (e.g., pages or addresses) of memory 4108 that include calls and/or functions of operating system 4112 for modifying content in place.

As a further example, execution of copied or modified content stored in memory may indicate (e.g., either individually or in the aggregate with other attempted memory accesses) the presence of malware. Accordingly, below-O/S security agent 4116 may trap upon attempted accesses associated with execution of content in memory 4108. For example, in some embodiments, below-O/S security agent 4116 may, in accordance with security rules 4122, trap on processor functions for executing content in memory 4108. In the same or alternative embodiments, below-O/S security agent 4116 may, in accordance with security rules 4122, trap on attempted accesses to locations (e.g., pages or addresses) of memory 4108 that include calls and/or functions of operating system 4112 for executing content.

As a further example, loading of content into memory may indicate(e.g., either individually or in the aggregate with other attempted memory accesses) the presence of malware. Accordingly, below-O/S security agent 4116 may trap upon attempted accesses associated with loading code into memory 4108. For example, in some embodiment, below-O/S security agent 4116 may, in accordance with security rules 4122, trap on processor functions or system functions for loading code into memory 4108. Below-O/S security agent 4116 may be configured to determine safe or normative methods for loading code into memory 4108, such as use of an operating system loader. Such safe or normative methods may be benchmarked or mapped such that the logic or steps taken by operating system 4112 may be known. Upon trapping an attempt to load code into memory 4108, below-O/S security agent 4116 may determine whether such an attempt matches known methods for loading code. For example, if the attempt involved loading code into an already allocated portion of memory, and attempted to do so through bypassing the operating system loader with a direct write to memory, the attempt may be determined to be malicious.

If a page or memory range containing code has been modified, the below-O/S security agent 4116 may be configured to keep track of the modifications. Subsequent operations of the modified code, if it is allowed to proceed with execution, may be tracked and recorded. However, below-O/S security agent 4116 may give fewer privileges to such code by, for example, trapping and denying attempts by such modified code to accessing privileged locations is memory containing other kernel-mode entities or the operating system. The malware status of the modified code may be unknown, and until it is conclusively determined to be safe, below-O/S security agent 4116 may deny the modified code access to kernel functions or routines.

Below-O/S security agent 4116 may record information regarding one or more trapped attempted accesses in a history 4140. From time to time, below-O/S security agent 4116 may analyze history 4140 to determine if suspicious behavior has occurred with respect to a particular memory location. During its analysis, below-O/S security agent 4116 may consult rules 4122 to determine if the behavior for a particular memory location, as embodied in history 4140, indicates suspicious behavior that may evidence the potential presence of self-modifying malware code. For example, if analysis of history 4140 indicates that content at a first memory location was copied to a second location, modified at the second location, and then an attempted execution of the content of the second location has occurred, such indication may be evidence of the potential presence of self-modifying malware code. As another example, if analysis of history 4140 indicates that content at a first memory location and a second memory location each having a common ancestor at a third location have each been the target of an attempted execution, such indication may be evidence of the potential presence of self-modifying malware code. As a further example, if analysis of history 4140 indicates content at a particular memory location has ancestors at a plurality of other memory locations, such indication may be evidence of the potential presence of self-modifying malware code. Furthermore, history 4140 may record modifications made between levels and entities in the hierarchy.

As used herein, content at a particular memory location is an "ancestor" to content at another memory location if content at the other memory location is a copied or modified version of the content of the particular memory location, and includes the case in which the content at the other memory location is a derivative of one or more intermediate ancestors in addition to the content at the particular memory address.

Because such recording of history 4140 may consume a significant portion of the processing resources of electronic device 4104 if applied to every memory location, below-O/S security agent 4116 may only record history 4140 for a particular memory location upon occurrence of an attempted access that may indicate that the particular memory location is susceptible to malware. For example, below-O/S security agent 4116 may begin recording history 4140 for a particular memory location upon trapping a modification to permissions for the particular memory location (as embodied in permissions flags 4136).

In addition, because analyzing history 4140 to determine if suspicious behavior has occurred may consume a significant portion of the processing resources of electronic device 4104 if applied to every memory location and/or attempted access, below-O/S security agent 4116 may only analyze history with respect to a particular memory location upon the occurrence of a particular trapped attempted access associated with the particular memory location. For example, in some embodiments, below-O/S security agent 4116 may initiate analysis of history 4140 associated with a particular memory location upon trapping an attempted access to content at the particular memory location.

In certain embodiments, occurrence of a single trapped attempted access may indicate suspicious behavior without analysis of history 4140. For example, changes to permissions of certain memory locations (e.g., from read to read/write or from read/write to read/write/execute) as set forth in permissions flags 4136 may indicate the presence of malware. For example, changes of permissions to locations of memory storing an operating system kernel or a security application may indicate suspicious behavior evidencing potential presence of malware.

If below-O/S security agent 4116 detects suspicious behavior evidencing potential presence of malware (e.g., based either on a single trapped attempted access or an analysis of history 4140), below-O/S security agent 4116 may initiate corrective action (e.g., in accordance with security rules 4122). For example, in some embodiments, below-O/S security agent 4116 may, upon detecting suspicious behavior, compare content stored at a particular memory location associated with the detected suspicious behavior to known malware and/or known trusted/authentic processes to determine whether the content is malicious. Such comparison may be accomplished by comparing a hash, fingerprint, or other signature of the content to hashes, fingerprints, or other signatures of known processes.

Alternatively or in-addition, if below-O/S security agent 4116 detects suspicious behavior evidencing potential presence of malware (e.g., based either on a single trapped attempted access or an analysis of history 4140), below-O/S security agent 4116 may report forensic evidence associated with the suspicious behavior (e.g., content of the memory location, history 4140 associated with the memory location, etc.) to protection server 202 for further analysis. In some embodiments, protection server 202 may then generate a signature (e.g., a hash or a fingerprint) associated with the content, generate a policy or blacklist entry associated with the signature, and communicate such information to security agents executing on other electronic devices. In the same or alternative embodiments, protection server 202 may further analyze the suspicious behavior (e.g., in connection with forensic evidence received from other electronic devices) to determine if the suspicious behavior is actually indicative of malware, and, if so, communicate instructions (e.g., in the form of security rules 4122) to electronic device regarding whether similar behavior is evidence of malware presence or not.

If below-O/S security agent 4116 determines that content of a memory location associated with suspicious behavior is malicious (e.g., by comparison of content to known processes, information received from protection server 202, reference to security rules 4122, and/or other determination), below-O/S security agent 4116 may take further corrective action (e.g., in accordance with security rules 4122). Such corrective action may include, but is not limited to, disallowing execution of the content, undoing changes to the content (e.g., modifications and copying of the content as set forth in history 4140), repairing the content, replacing the content with harmless content, and/or disabling a process associated with the content.

In the various embodiments described above, security rules 4122 and protection applied to a particular portion of memory 4108 may be applied transitively as content is transferred between different portions of memory 4108. Thus, for example, if a particular set of security rules 4122 apply to content in a specific portion of memory 4108, upon a transfer of such content to another portion of memory 4108, below-O/S security agent 4116 may update security rules 4122 to apply to the destination portion of memory 4108.

As described above, below-O/S security agent 4116 may, based on security rules 4122, detect the presence of malicious code. Below-O/S security agent 4116 may detect presence of malicious code via any method discussed above, and/or in any other suitable manner. For example, below-O/S security agent 4116 may detect the presence of malicious code by trapping access to memory 4108 or other resources of electronic device 4104. As another example, below-O/S security agent 4116 may detect the presence of malicious code by scanning pages of memory 4108 and/or storage 4126 for malicious code. As a further example, below-O/S security agent 4116 may detect the presence of malicious code in memory by receiving a communication from in-O/S security agent 4118 that in-O/S security agent 4118 has detected the presence of malicious code.

In response to detection of malicious code on electronic device 4104 (whether such code be self-modifying code or other malicious code), below-O/S security agent 4116 may take corrective action, including modifying the malicious code. As used herein, "modifying" or "modification" of malicious code may include, without limitation, modification of the malicious code as embodied in memory 4108, modification of the malicious code as embodied in storage 4126, and/or modification of the malicious code's access to memory 4108 and other resources of electronic device 4104. Modification of malicious code may be beneficial because a portion of memory 4108 (e.g., a page) including malicious code may belong to malware or even a program unaware of the infection. For example, such malicious code may be embedded in a word processing document, a portion of an operating system kernel, or malware itself.

In modifying malicious code as embodied in memory 4108, below-O/S security agent 4116 may modify the malicious code such that a program including the malicious code may self-terminate and/or transfer execution to trusted code that may neutralize the malicious code (e.g., by erasing all code and data associated with threads or processes associated with the malicious code segment). For example, below-O/S security agent 4116 may insert a call to an "exit" function of operating system 4112 into the malicious code in memory 4108, such that execution of the malicious code may eventually terminate. As another example, below-O/S security agent 4116 may insert an instruction into the malicious code in memory 4108 (e.g., a "JUMP" instruction) that may redirect execution of the malicious code to another portion of memory 4108 having stored therein a known, trusted portion of code that may neutralize the malicious code (e.g., by erasing all code and data associated with threads or processes associated with the malicious code segment). As a further example, if the malicious code is presently executing, below-O/S security agent 4116 may alter instruction pointer values in memory 4108 to cause control of execution to be transferred to a known, trusted portion of code that may neutralize the malicious code (e.g., by erasing all code and data associated with threads or processes associated with the malicious code segment).

In some instances, it may be undesirable to simply terminate a malicious process embodied by malicious code. For instance, termination and deletion may be inappropriate for infected portions of operating systems or other otherwise trusted applications in which deletion or termination may have undesirable side effects. Accordingly, below-O/S security agent 4116 may modify the malicious code such that the malicious code is repaired, allowing the infected application to effectively execute as if no infection had occurred. For example, below-O/S security agent 4116 may replace the malicious code with known or trusted code. As a specific example, if a known portion of an operating system is infected at a particular memory page, below-O/S security agent 4116 may overwrite the particular memory page with known code for such portion of the operating system. In one embodiment, below-O/S security agent 4116 may obtain a replacement page from a protection server. Such a replacement page may be generated on-demand, or may be configured to replace a known portion of an operating system component, driver, or other module. Alternatively, below-O/S security agent 4116 may modify an instruction pointer in memory 4108 such that execution continues at a restored version of the infected code at another memory location.

In modifying malicious code as embodied in storage 4126, below-O/S security agent 4116 may alter or delete the malicious code. For example, by trapping on transfers of content between memory 4108 and storage 4126 and vice versa, below-O/S security agent 4116 may collect and store in a log, list, cache, or other data structure information regarding the relationship of content stored in memory 4108 to corresponding content stored in storage 4126. Accordingly, if below-O/S security agent 4116 identifies malicious code in memory 4108, it may reference the collected information regarding the relationship of content stored in memory 4108 to corresponding content stored in storage 4126 and modify content in locations of storage 4126 corresponding to locations of memory 4108 having the malicious code. Such modifications may include, without limitation, deletion of corresponding content in storage 4126, or modification of the content to cause self-termination or deletion of the malicious code in storage 4126 and/or memory 4108.

In modifying the malicious code's access to memory 4108 and other resources of electronic device 4104, below-O/S security agent 4116 may deny the malicious code segment any access to memory 4108 or other resources of electronic device 4104. Such denial of memory 4108 and other resources may cause a process including the malicious code to crash or otherwise be rendered ineffective. For example, once the malicious code has been identified, below-O/S security agent 4116 may trap on attempted accesses by a process including the malicious code to memory 4108 or resources of electronic device 4104 and deny such access.

In accordance with some of the modification techniques described above, below-O/S security agent 4116 may neutralize malicious code while leaving the malicious code intact. In such scenarios, below-O/S security agent may isolate and transfer the malicious code as forensic evidence to protection server 202 for further analysis. Protection server 202 may then generate a signature (e.g., a hash or a fingerprint) associated with the malicious code, generate a policy or blacklist entry associated with the signature, and communicate such information to security agents executing on other electronic devices.

In some embodiments, identification of malicious code existing in a particular portion of memory 4108 may allow below-O/S security agent 4116 to identify other portions of memory 4108 having malicious code. For example, upon detecting a thread exhibiting malware-like behavior, below-O/S security agent 4116 may determine an execution address for the thread and/or a location within a memory page of the malicious code. In virtual memory arrangements, application code may be listed contiguously, whereas in physical memory, application code may be substantially non-contiguous. Thus, by taking advantage of mappings maintained by an operating system between physical memory addresses in memory 4108 to virtual memory addresses in storage 4126, below-O/S security agent 4116 may identify portions of virtual memory contiguous with the identified malicious code that may also include malicious code and map such virtual memory portions back to physical memory addresses that may be infected. Accordingly, executions of code at such physical memory addresses may be further monitored by the below-O/S security agent for presence of malicious code.

In addition, below-O/S security agent 4116 may also be configured to monitor activity related to execution of and/or use of resources by threads and based on such monitoring, determine relationships among various threads. Accordingly, when a particular thread is identified as malicious, below-O/S security agent 4116 may determine threads related to the malicious thread (e.g., ancestor threads, descendent threads, sibling threads, etc.) and take corrective action with respect to the related threads, in addition to the malicious thread.

To perform such monitoring and tracking, below-O/S security agent 4116 may monitor accesses to memory 4108, storage 4126, network 244, and/or other resources of electronic device 4104; monitor operating system services, calls, and/or functions related to thread execution and/or use of resources by threads; and/or use one or more of the techniques described herein in order detect suspicious behavior. For example, below-O/S security agent 4116 may implement the functionality of below-O/S security agent 1216 of FIGURE 12 to trap (e.g., based on security rules 4122) attempted accesses to read, write, and/or execute code on memory 4108, storage 4126, and/or other components of electronic device 4104, attempted changes to permissions flags 4136, and/or other attempted accesses that may (e.g., individually or in the aggregate with other memory accesses) be indicative of suspicious behavior and record information regarding such attempted accesses to history 4140.

As a further example, below-O/S security agent 4116 may implement the functionality of below-O/S security agent 712, microcode security agent 708, and/or below-O/S trapping agent 920 to trap (e.g., based on security rules) attempted operating system services, calls, and/or functions related to thread execution and/or use of resources by threads that may evidence suspicious behavior and record information regarding such attempted accesses to history 4140. In addition, in some embodiments, in-O/S security agent 4118 may be configured to trap upon user- or kernel- mode functions of operating system 4112 to thread execution and/or use of resources by threads that may evidence suspicious behavior and record information regarding such attempted accesses to history 4140 and/or communicate such information to below-O/S security agent 4116.

To determine relationships among threads, below-O/S security agent 4116 may monitor attempted access to thread synchronization objects of an operating system from a memory perspective. To illustrate, an initial thread may spawn a second thread, which then begins operation (and becomes the main thread of a process) while the initial thread terminates itself. As another illustration, threads may operate to create, terminate, or suspend each other through inter-process communication (IPC) calls. Thus, threads may span multiple processes, and a thread in one process may make IPC calls to threads in other processes to create, terminate, or suspend. In-O/S security agent 4118 may track IPC calls by trapping on operating system calls (e.g., in Windows™ embodiments, calls such as NTCreateThread, NTSuspendThread, or NTTerminateThread) for initiating such IPC calls.

However, trapping on such IPC calls using an in-O/S security agent may be compromised or circumvented by malware. Accordingly, below-O/S security agent 4118 may monitor such attempted accesses by trapping upon attempted accesses to memory or processor resources associated with initiating IPC calls. For example, below-O/S security agent 4116 may implement the functionality of below-O/S trapping agent 920 of FIGURE 9 to trap attempted accesses to processor resources associated with initiating IPC calls. As another example, below-O/S security agent 4116 implement the functionality of below-O/S security agent 1220 of FIGURE 12 to trap attempted accesses to memory locations (e.g., pages or addresses) in which executable code for such IPC calls are stored. Upon trapping upon an event associated with an IPC call, below-O/S security agent 4116 may record information regarding such events (e.g., thread identifiers) to history 940.

To identify threads associated with IPC calls, below-O/S security agent 4116 may access one or more processor resources (e.g., such as those identified in FIGURE 7 as system resources 724) acquire information regarding a particular thread. For example, for threads executing in the Windows™ operating system, a processor register (e.g., a FS register) may point to a structure in memory for each processor called the Processor Control Block (PCB). The PCB includes information used by a thread scheduler to manage threads on a processor, including an ETHREAD data structure for the thread currently executing on the processor, as well as ETHREAD lists for scheduled threads. An ETHREAD data structure associated with a thread may include a number of metadata fields, including an identifier for the thread. Accordingly, below-O/S security agent 4116 may, in applying security to Windows™, access information in processor resources to determine a memory location for the PCB for a processor, then access the PCB to obtain ETHREAD information for a particular thread.

Based on the information stored in history 4140 regarding IPC calls, below-O/S security agent 4116 may analyze history 4140 to determine relationships among various threads. During its analysis, below-O/S security agent 4116 may consult rules 4122 to determine if the thread behavior set forth in history 4140 indicates a relationship among two or more threads. Consequently, if a particular thread, or its host application, is determined to be malicious, below-O/S security agent 4116 may be able to determine one or more threads related to the particular thread and undertake corrective action with respect to such related threads. For example, corrective action may include below-O/S security agent 4116 examining, scanning, and/or analyzing such threads (e.g., using one or more techniques described elsewhere in this disclosure) to determine if such related threads include malicious code. As another example, corrective action may include below-O/S security agent 4116 terminating, deleting, modifying, or otherwise neutralizing such one or more related threads (e.g., using one or more techniques described elsewhere in this disclosure) if such threads are determined to be malicious. As an additional example, corrective action may include below-O/S security agent 4116 communicating forensic evidence associated with the particular thread and its related threads to protection server 202 for further analysis. Protection server 202 may analyze the information and communicate instructions (e.g., in the form of security rules 4122) to electronic device 4104 regarding any additional corrective action to be taken. As a further example, below-O/S security agent 4116 may attempt to repair portions of memory (e.g., pages, memory addresses, etc.) including malicious threads.

In order to carry out such a repair, below-O/S security agent 4116 may from time to time generate snapshots of memory 4106 or specific portions thereof (e.g., portions of memory storing an operating system, security application, or critical driver) and store such snapshots (e.g., in history 4140). The snapshots may be stored with contextual information such as the date and time of the snapshot, an entity (e.g., operating system, application or driver) associated with the snapshot, a thread identifier associated with the memory page, an address location of the memory in virtual memory, etc. If a malicious thread or thread family is located, portions of memory including such threads may be repaired by replacing the portion of memory having the malicious thread with the appropriate snapshot, based at least in part on contextual information associated with the snapshot. In some embodiments, below-O/S security agent 4116 may also record (e.g., in history 4140) changes made by trusted entities to a memory location following generation of a snapshot, such that reversion to a snapshot in response to detecting malware would not undo legitimate changes.

Because such monitoring for related threads and potentially malicious behavior by threads may consume a significant portion of the processing resources of electronic device if applied to all threads, below-O/S security agent 4116 may only perform such monitoring upon occurrence of an attempted access that may indicate that the particular memory location is susceptible to malware and/or the particular memory stores important or critical code or data (e.g., an operating system or security application). For example, below-O/S security agent 4116 may begin monitoring thread behavior and thread relationships for a particular memory location upon trapping a modification to permissions for the particular memory location (as embodied in permissions flags 4136).

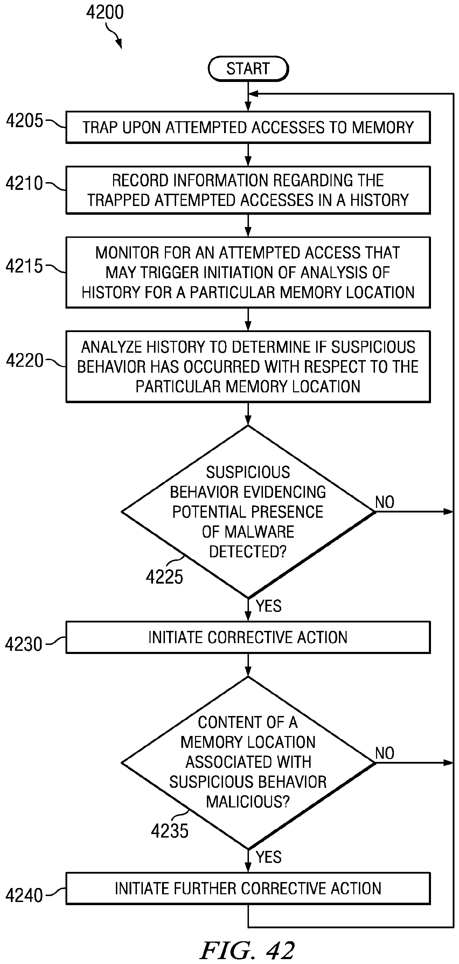

FIGURE 42 is an example embodiment of a method 4200 for regulation and control of self-modifying code on an electronic device. In step 4205, a below-O/S security agent may trap upon attempted accesses to memory, wherein each of such attempted accesses may, individually or in the aggregate, indicate the presence of self-modifying malware. Attempted accesses trapped upon may be determined in accordance with security rules. Attempted accesses potentially indicative of malware may include, without limitation, changes to memory permissions, copying of content of one memory location to another memory location, modification of content of a memory location, and execution of a memory location.

In step 4210, the below-O/S security agent may record information regarding the trapped attempted accesses in a history (e.g., type of attempted access, memory location associated with a trapped attempted access, etc.). Because such recording of history may consume a significant portion of the processing resources of an electronic device if applied to every memory location, the below-O/S security agent may initiate recording in the history for a particular memory location upon occurrence of an attempted memory access that may indicate that the particular memory location is susceptible to malware (e.g., based on security rules establishing triggering events for initiating recording of history for a particular memory address). For example, the below-O/S security agent may begin recording history for a particular memory location upon trapping a modification to permissions for the particular memory location (e.g., as embodied in permissions flags for a memory location).

In step 4215, the below-O/S security agent may monitor for an attempted access that may (e.g., in accordance with security rules) trigger initiation of analysis of history for a particular memory location. Because analyzing history to determine if suspicious behavior has occurred may consume a significant portion of the processing resources of an electronic device if applied to every memory location and/or attempted access, the below-O/S security agent may initiate an analysis of history with respect to a particular memory location (e.g., at step 4220 below) upon the occurrence of a particular trapped attempted access associated with the particular memory location. For example, in some embodiments, the below-O/S security agent may trigger initiation of an analysis of history associated with a particular memory location upon trapping an attempted access to content at the particular memory location.

At step 4220, the below-O/S security agent may analyze history to determine if suspicious behavior has occurred with respect to the particular memory location. During its analysis, the below-O/S security agent may consult security rules to determine if the behavior for a particular memory location, as embodied in the history, indicates suspicious behavior that may evidence the potential presence of self-modifying malware code. For example, if analysis of the history indicates that content at a first memory location was copied to a second location, modified at the second location, and then an attempted execution of the content of the second location has occurred, such indication may be evidence of the potential presence of self-modifying malware code. As another example, if analysis of the history indicates that content at a first memory location and a second memory location each having a common ancestor at a third location have each been the target of an attempted execution, such indication may be evidence of the potential presence of self-modifying malware code. As a further example, if analysis of the history indicates content at a particular memory location has ancestors at a plurality of other memory locations, such indication may be evidence of the potential presence of self-modifying malware code.

In step 4225, the below-O/S security agent may determine if suspicious behavior evidencing potential presence of malware (e.g., based either on a single trapped attempted access or an analysis of the history) has been detected. If suspicious behavior has been detected, method 4200 may proceed to step 4230. Otherwise, method 4200 may proceed again to step 4205. In step 4230, in response to detection of suspicious behavior evidencing potential presence of malware (e.g., based either on a single trapped attempted access or an analysis of the history), the below-O/S security agent may initiate corrective action (e.g., in accordance with security rules 4122). For example, in some embodiments, below-O/S security agent may, upon detecting suspicious behavior, compare content stored at a particular memory location associated with the detected suspicious behavior to known malware and/or known trusted/authentic processes to determine whether the content is malicious. Such comparison may be accomplished by comparing a hash, fingerprint, or other signature of the content to hashes, fingerprints, or other signatures of known processes. As another example, the below-O/S security agent may, upon detecting suspicious behavior, report forensic evidence associated with the suspicious behavior (e.g., content of the memory location, history associated with the memory location, etc.) to protection server for further analysis.

In step 4235, the below-O/S security agent may determine if content of a memory location associated with suspicious behavior is malicious (e.g., by comparison of content to known processes, information received from a protection server, reference to security rules, and/or other determination). If content is malicious, method 4200 may proceed to step 4240. Otherwise, method 4200 may proceed again to step 4205. In step 4240, in response to determining content is malicious, the below-O/S security agent may take further corrective action (e.g., in accordance with security rules). Such corrective action may include, but is not limited to, disallowing execution of the content, undoing changes to the content (e.g., modifications and copying of the content as set forth in a history), repairing the content, replacing the content with harmless content, and/or disabling a process associated with the content. After completion of step 4240, method 4200 may proceed again to step 4205.

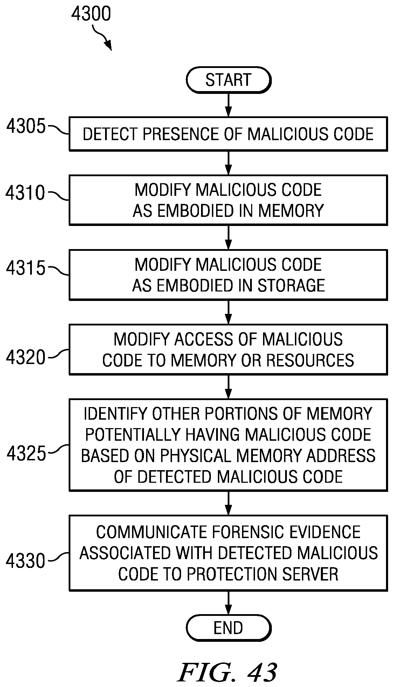

FIGURE 43 is an example embodiment of a method 4305 for modifying malicious code on an electronic device. In step 4305, a below-O/S security agent may detect the presence of malicious code on an electronic device. For example, the below-O/S security agent may detect the presence of malicious code by trapping access to a memory of the electronic device or other resources of the electronic device. As another example, the below-O/S security agent may detect the presence of malicious code by scanning pages of memory and/or storage of the electronic device for malicious code. As a further example, the below-O/S security agent may detect the presence of malicious code in memory by receiving a communication from an in-O/S security agent that detected the presence of malicious code.

In steps 4310-4320, in response to detection of malicious code on the electronic device, the below-O/S security agent may take corrective action, including modifying the malicious code. For instance, at step 4310, the below-O/S security agent may modify the malicious code such that a program including the malicious code may self-terminate and/or transfer execution to trusted code that may neutralize the malicious code (e.g., by erasing all code and data associated with threads or processes associated with the malicious code segment). For example, the below-O/S security agent may insert a call to an "exit" function of an operating system into the malicious code in the memory of the electronic device, such that execution of the malicious code may eventually terminate. As another example, the below-O/S security agent may insert an instruction into the malicious code in the memory of the electronic device (e.g., a "JUMP" instruction) that may redirect execution of the malicious code to another portion of the memory having stored therein a known, trusted portion of code that may neutralize the malicious code (e.g., by erasing all code and data associated with threads or processes associated with the malicious code segment). As a further example, if the malicious code is presently executing, the below-O/S security agent may alter instruction pointer values in the memory to cause control of execution to be transferred to a known, trusted portion of code that may neutralize the malicious code (e.g., by erasing all code and data associated with threads or processes associated with the malicious code segment). Alternatively, the below-O/S security agent may modify the malicious code such that the malicious code is repaired, allowing the infected application to effectively execute as if no infection had occurred by replacing the malicious code with known or trusted code or modifying an instruction pointer in the memory such that execution continues at a restored version of the infected code at another memory location.

At step 4315, the below-O/S security agent may modify malicious code as embodied in storage. For example, by trapping on transfers of content between memory and storage of the electronic device, and vice versa, the below-O/S security agent may collect and store in a log, list, cache, or other data structure information regarding the relationship of content stored in the memory to corresponding content stored in the storage. Accordingly, if the below-O/S security agent identifies malicious code in the memory, it may reference the collected information regarding the relationship of content stored in the memory to corresponding content stored in storage and modify content in locations of storage corresponding to locations of memory having the malicious code. Such modifications may include, without limitation, deletion of corresponding content in the storage or modification of the content to cause self-termination or deletion of the malicious code in storage and/or memory.

In step 4320, the below-O/S security agent may modify the malicious code's access to memory and other resources of the electronic device, for example, to deny the malicious code segment any access to memory or other resources of the electronic device. Such denial of memory and other resources may cause a process including the malicious code to crash or otherwise be rendered ineffective. For example, once the malicious code has been identified, the below-O/S security agent may trap on attempted accesses by a process including the malicious code to memory or resources of electronic device and deny such access.

In step 4325, the below-O/S security agent may identify other portions of memory potentially having malicious code based on the physical memory address of the detected malicious code. For example, upon detecting a thread exhibiting malware-like behavior, the below-O/S security agent may determine an execution address for the thread and/or a location within a memory page of the malicious code. In virtual memory arrangements, application code may be listed contiguously, whereas in physical memory, application code may be substantially non-contiguous. Thus, by taking advantage of mappings maintained by an operating system mapping physical memory addresses in the memory to virtual memory addresses in storage, the below-O/S security agent may identify portions of virtual memory corresponding to with the identified malicious code that may also include malicious code, and map such virtual memory portions back to physical memory addresses that may be infected. Accordingly, executions of code at such physical memory addresses may be further monitored by below-O/S security agent for presence of malicious code.

In step 4330, the below-O/S security agent may isolate and transfer the malicious code as forensic evidence to protection server for further analysis.

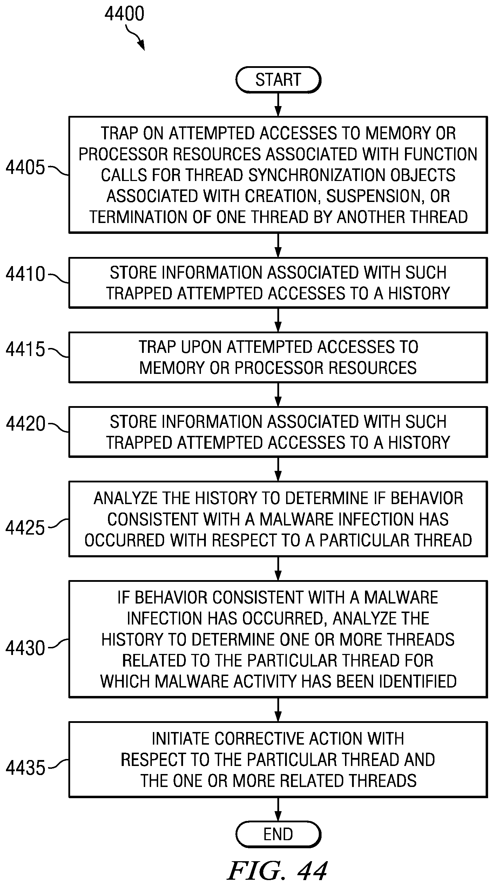

FIGURE 44 is an example embodiment of a method 4400 for monitoring and tracking of related threads on an electronic device. In step 4405, a below-O/S security agent may trap on attempted accesses to memory or processor resources associated with function calls for thread synchronization objects associated with creation, suspension, or termination of one thread by another thread. For example, the below-O/S security agent may trap on attempted accesses to memory of processor resources associated with inter-process communication (IPC) calls. In step 4410, the below-O/S security agent may store information associated with such trapped attempted accesses (e.g., thread identifiers) to a history.

In step 4415, the below-O/S security agent may trap upon attempted accesses to memory or processor resources, wherein each of such attempted accesses may, individually or in the aggregate, indicate the presence of malware. Attempted accesses trapped upon may be determined in accordance with security rules. Attempted accesses potentially indicative of malware may include, without limitation, changes to memory permissions, copying of content of one memory location to another memory location, modification of content of a memory location, and execution of a memory location. In step 4420, the below-O/S security agent may store information associated with such trapped attempted accesses (e.g., thread identifiers) to a history. In steps 4410 and 4420, the below-O/S security agent may access information in processor resources to determine a memory location for thread metadata, and based on the thread metadata, obtain thread identifiers for particular threads to store as part of the information in the history.

At step 4425, the below-O/S security agent may analyze the history (e.g., in accordance with security rules) to determine if behavior consistent with a malware infection has occurred with respect to a particular thread. At step 4430, if behavior consistent with a malware infection has occurred, the below-O/S security agent may analyze the history to determine one or more threads related to the particular thread for which malware activity has been identified.

At step 4435, below-O/S security agent may take corrective action with respect to the particular thread and the one or more related threads. For example, corrective action may include the below-O/S security agent examining, scanning, and/or analyzing such threads to determine if such related threads include malicious code. As another example, corrective action may include the below-O/S security agent terminating, deleting, modifying, or otherwise neutralizing such one or more related threads if such threads are determined to be malicious. As an additional example, corrective action may include below-O/S security agent communicating forensic evidence associated with the particular thread and its related threads to protection server for further analysis.

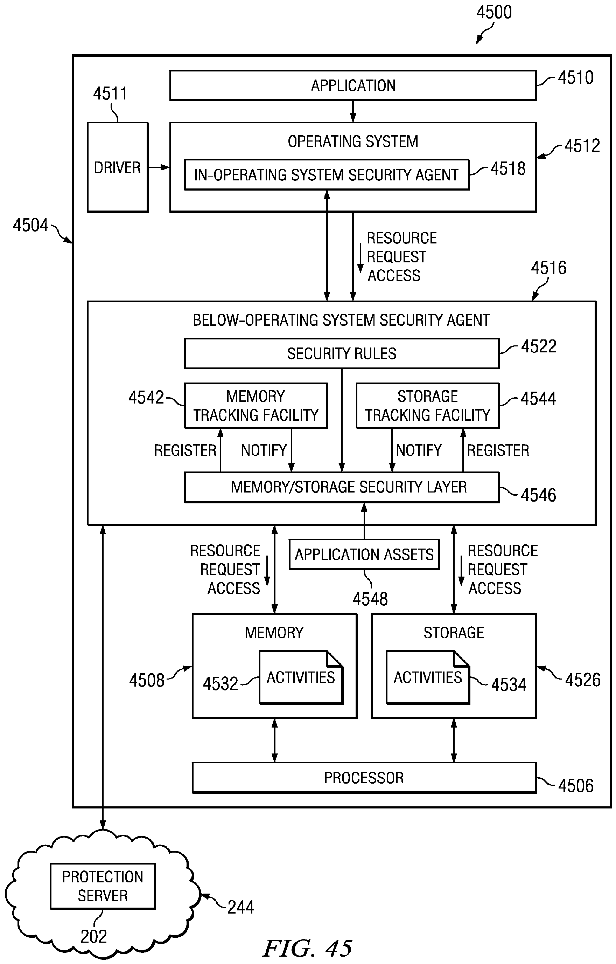

FIGURE 45 is an example embodiment of a system 4500 for securing memory and storage of an electronic device 4504. System 4500 may include a below-O/S security agent 4516 configured to operate on electronic device 4504 to protect against malicious attempts to access memory 4508 and storage 4526 of electronic device 4504. Furthermore, below-O/S security agent 4516 may be configured to use one or more security rules 4522 to determine what attempted operations to trap, and how to response to such trapped operation. Below-O/S security agent may be configured to allow, deny, or take other corrective action for the trapped operation.

As shown in FIGURE 45, electronic device 4504 may include a processor 4506 coupled to a memory 4508, an application 4510, a driver 4511, an operating system 4512, a below-operating system security agent 4516, storage 4526, and application assets 4548. Electronic device 4504 may be implemented wholly or in part by or configured to implement the functionality of electronic device 103 of FIGURE 1, electronic device 204 of FIGURE 2, electronic device 404 of FIGURE 4, electronic device 701 of FIGURE 7, electronic device 901 of FIGURE 9, electronic device of FIGURE 1201 of FIGURE 12, and/or any combination thereof. Processor 4506 may be implemented wholly or in part by or configured to implement the functionality of processor 208 of FIGURE 2, processor 408 of FIGURE 4, processor 702 of FIGURE 7, processor 902 of FIGURE 9, processor 1202 of FIGURE 12, and/or any combination thereof. Memory 4508 may be implemented wholly or in part by or configured to implement the functionality of memory 206 of FIGURE 2, memory 406 of FIGURE 4, memory 703 of FIGURE 7, memory 903 of FIGURE 9, physical memory 1203 or virtualized memory of FIGURE 12, and/or any combination thereof. Application 4510 may be implemented wholly or in part by or configured to implement the functionality of application 110 of FIGURE 1, application 210 of FIGURE 2, application 410 of FIGURE 4, application 709 of FIGURE 7, application 910 of FIGURE 9, application 1210 of FIGURE 12, and/or any combination thereof. Driver 4511 may be implemented wholly or in part by or configured to implement the functionality of driver 111 of FIGURE 1, driver 211 of FIGURE 2, driver 411 of FIGURE 4, driver 711 of FIGURE 7, driver 911 of FIGURE 9, driver 1211 of FIGURE 12, and/or any combination thereof. Operating system 4512 may be implemented wholly or in part by or configured to implement the functionality of operating systems 112 of FIGURE 1, operating system 212 of FIGURE 2, operating system 412 of FIGURE 4, operating system 713 of FIGURE 7, operating system 913 of FIGURE 9, operating system 1213 of FIGURE 12, and/or any combination thereof. Below-O/S security agent 4516 may be implemented wholly or in part by or configured to implement the functionality of below-O/S trapping agent 104 of FIGURE 1, SVMM security agent 217 or SVMM 216 of FIGURE 2, firmware security agents 440, 442, PC firmware security agent 444, or below-O/S system agent 450 of FIGURE 4, firmware security agent 516 of FIGURE 5, microcode security agent 708 of FIGURE 7, below-O/S trapping agent 920 of FIGURE 9, below-O/S security agent 1220 of FIGURE 12, and/or any combination thereof. In-O/S security agent 4518 may be implemented wholly or in part by or configured to implement the functionality of in-O/S security agent 218, in-O/S security agent 418 of FIGURE 4, in-O/S security agent 718 of FIGURE 7, in-O/S security agent 919 of FIGURE 9, in-O/S security agent 1219, and/or any combination thereof. Storage 4526 may implemented wholly or in part by or configured to implement the functionality of storage 426 of FIGURE 4.

Security rules 4522 may be implemented by or configured to implement the functionality of security rules 114 of FIGURE 1, security rules 222 of FIGURE 2, security rules 434, 436, 438 of FIGURE 4, security rules 518 of FIGURE 5, or security rules 707, 723 of FIGURE 7, security rules 908 of FIGURE 9, security rules 1208 of FIGURE 12, and/or any combination thereof. Security rules 4522 may be established in any suitable manner (e.g., policies set by a user of electronic device 4504, policies set by an administrator of an enterprise including electronic device 4504, policies set by a creator of below-O/S security agent 4516, etc.). In some embodiments, below-O/S security agent 4516 may request and/or receive updates or modifications to security rules 4522 from protection server 202 via network 244 (e.g., on account of updates to malware definitions).

Below-O/S security agent 4516 may include memory tracking facility 4542, storage tracking facility 4544, and memory/storage security layer 4546. Memory tracking facility 4542 may interface with memory 4508 to monitor access to memory 4508. For example, memory tracking facility 4542 may be implemented wholly or in part by or configured to implement the functionality of below-O/S trapping agent 104 of FIGURE 1, SVMM security agent 217 or SVMM 216 of FIGURE 2, firmware security agent 442 of FIGURE 4, microcode security agent 708 of FIGURE 7, below-O/S security agent 920 of FIGURE 9, and/or below-O/S security agent 1220 of FIGURE 12 in order to trap or trigger upon an attempted access by application 4510, driver 4511, and/or operating system 4512 to read, write, or execute a particular page in memory 4508 (e.g., as indicated by page table flags and/or bit flags). As another example, memory tracking facility 4542 may be implemented wholly or in part by or configured to implement the functionality of below-O/S security agent 712 and/or microcode security agent 708 in order to trap or trigger upon an attempted access by application 4510, driver 4511, and/or operating system 4512 to read, write, or execute a particular address in memory 4508. Accordingly, memory tracking facility 4542 may track movements of content from one location to another location in memory 4508 (e.g., from one page to another or from one address to another) or movements between memory 4508 and storage 4526 (e.g., in connection with a virtual memory context swap or loading of executable code from storage 4526). In addition, memory tracking facility 4542 may store information regarding tracked movements in a log, list, cache, or other suitable data structure accessible by memory tracking facility 4542 and/or memory/storage security layer 4546.

Storage tracking facility 4544 may interface with storage 4526 to monitor movements of content from one location to another location in storage 4526 or movements between memory 4508 and storage 4526. For example, storage tracking facility 4544 may be implemented wholly or in part by or configured to implement the functionality of below-O/S trapping agent 104 of FIGURE 1, SVMM security agent 217 or SVMM 216 of FIGURE 2, firmware security agent 442 of FIGURE 4, microcode security agent 708 of FIGURE 7, below-O/S security agent 920 of FIGURE 9, and/or below-O/S security agent 1220 of FIGURE 12 in order to trap or trigger upon an attempted access by application 4510, driver 4511, and/or operating system 4512 to read, write, or execute a particular sector in storage 4526. As another example, storage tracking facility 4544 may be implemented wholly or in part by or configured to implement the functionality of below-O/S security agent 712 and/or microcode security agent 708 in order to trap or trigger upon an attempted access by application 4510, driver 4511, and/or operating system 4512 to read, write, or execute a particular address in storage 4526. Accordingly, storage tracking facility 4544 may track movements of content from one location to another location in storage 4526 (e.g., from one sector to another or from one address to another) or movements between memory 4508 and storage 4526 (e.g., in connection with a virtual memory context swap or loading of executable code from storage 4526).

In operation, memory/storage security layer 4546 may receive security rules 4522 and communicate security rules 4522 to memory tracking facility 4542 and storage tracking facility 4544. Thus, monitoring by memory tracking facility 4542 and storage tracking facility 4544 may be based on security rules 4522, which may indicate whether monitoring is enabled and/or identify which portions of memory 4508 and/or storage 4526 is to be monitored.

Memory tracking facility 4542 and storage tracking facility 4544 may notify memory/storage security layer 4546 of attempted accesses of memory 4508 and/or storage 4526 (e.g., attempted movements of content within memory 4508 or storage 4526 or between memory and storage 4526). Memory/storage security layer 4546 may be implemented wholly or in part by or configured to implement the functionality of below-O/S trapping agent 104 of FIGURE 1, SVMM security agent 217 or SVMM 216 of FIGURE 2, firmware security agents 440, 442, PC firmware security agent 444, or below-O/S system agent 450 of FIGURE 4, firmware security agent 516 of FIGURE 5, microcode security agent 708 of FIGURE 7, below-O/S trapping agent 920 of FIGURE 9, below-O/S security agent of FIGURE 12, and/or any combination thereof. Memory/storage security layer 4546 may analyze the attempted accesses of memory 4508 and/or storage 4526 reported by memory tracking facility 4542 and/or storage tracking facility 4544 in accordance with security rules 4522 and/or application assets 4548 to determine if such attempted accesses are indicative of a malware attack, as described in greater detail below. In some embodiments, memory/storage security layer 4546 may store to memory 4508 and/or storage 4526 a log, list, or other indication of accesses reported by memory tracking facility 4542 and storage tracking facility 4544 as indicated by activities 4532 and activities 4534 of FIGURE 45. Thus, in addition to analyzing individual attempted accesses to memory 4508 and/or storage 4526, memory/storage security layer 4546 may analyze a history of activities embodied in activities 4532 and/or activities 4534 in light of security rules 4522 to determine if a historical behavior of accesses indicates the presence of malware.

In a particular embodiment, memory/storage security layer 4546 may be implemented wholly or in part by or configured to implement the functionality of SVMM 216 of FIGURE 2, memory tracking facility 4542 may be implemented wholly or in part by or configured to implement the functionality of microcode security agent 708 of FIGURE 7, and storage tracking facility 4544 may be implemented wholly or in part by or configured to implement the functionality of firmware security agent 442 of FIGURE 4. In such embodiments, memory tracking facility 4542 may trap upon particular memory accesses and storage tracking facility 4544 may trap upon particular storage accesses, and each may notify memory/storage security layer 4546 of such trapped events. Memory/storage security layer 4546 may then analyze individual attempted accesses to memory and/or storage, and/or analyze a history of activities in light of security rules 4522 to determine if a historical behavior of accesses indicates the presence of malware.

In another particular embodiment, each of memory/storage security layer 4546, memory tracking facility 4542, and storage tracking facility 4544 may be all implemented wholly or in part by or configured to implement the functionality of a single SVMM 216 of FIGURE 2. In such an embodiment, SVMM 216 may trap upon particular memory accesses, trap upon particular storage accesses, and analyze individual attempted accesses to memory and/or storage, and/or analyze a history of activities in light of security rules 4522 to determine if a historical behavior of accesses indicates the presence of malware.

Application assets 4548 for application 4510, driver 4511, operating system 4512, and/or another entity may represent a map, table, list, and/or other data structure indicative of how such entity and its components are resident within memory 4508 and/or storage 4526. Application assets 4548 may identify portions of memory 4508 and/or storage 4526 to which an entity may be stored (e.g., memory page, memory address range, disk sector, disk address rank, etc.). As described above, based on application assets 4548 and/or security rules 4522, memory/storage security agent 4516 may determine if notifications from memory tracking facility 4542 and/or storage tracking facility 4544 regarding attempted accesses of memory 4508 and/or storage 4526 are indicative of a malware attack. For example, in embodiments in which application 4510 is a portable executable file, application assets 4548 may identify portions of application 4510 stored in memory 4508 and/or storage 4526 that comprise executable code of application 4510 and/or identify portions of application 4510 stored in memory 4508 and/or storage 4526 that comprise data of application 4510, including locations of memory 4508 and/or storage 4526 in which components of application 4510 are stored. Security rules 4522 may dictate that for such an example of application 4510, write accesses originating from programs other than application 4510 to the portions of memory 4508 and/or storage 4526 that comprise executable code of application 4510 indicate a malware attack. In addition or alternatively, security rules 4522 may dictate that for such an example of application 4510, read or write accesses originating from programs other than application 4510 to the portions of memory 4508 and/or storage 4526 that comprise data of application 4510 indicate a malware attack.

As another example, in embodiments in which application 4510 is a word processing program, application assets 4548 may identify portions of application 4510 stored in memory 4508 and/or storage 4526 that comprise executable code of application 4510, identify portions of application 4510 stored in memory 4508 and/or storage 4526 that comprise scripts, images, formatted text, notes, and other data of application 4510, including locations of memory 4508 and/or storage 4526 in which components of application 4510 are stored. Security rules 4522 may dictate that for such an example of application 4510, read or write accesses originating from a particular set of programs other than application 4510 to the portions of memory 4508 and/or storage 4526 that comprise data of application 4510 may be allowed (e.g., accesses originating from an operating system, anti-malware application, etc.), and access by programs other than the particular set of programs may indicate a malware attack.

Application assets 4548 may be created or defined by a creator of an application 4510, driver 4511, operating system 4512, and/or other program (e.g., the application vendor, programmer, or creator), by a user of electronic device 4504, by an administrator of an enterprise including electronic device 4504, by a creator of below-O/S security agent 4516, and/or another suitable individual. In some embodiments, application assets 4548 may, for a program, include relationships between the on-storage structure of the program and in-memory structure of the program (e.g., a mapping between components of the program in memory 4508 and in storage 4526).

In order to assemble application assets 4548, in-O/S security agent 4518 and/or below-O/S security agent 4516 may use any number of suitable techniques. For example, in-O/S security agent 4518 and/or below-O/S security agent 4516 may collect information associated with virtual memory page swaps that may be generated by operating system 4512 in connection with virtual memory operations. For example, in Windows™, in-O/S security agent 4518 may access the Prototype Page Table Entry (PTE) and communicate such information to below-O/S security agent 4516. In other embodiments, below-O/S security agent 4516 may generate a hash, fingerprint, or other unique identifier for pages in memory 4508 and/or sectors 4526 on disk anytime an access is performed, and maintain a cache of such identifiers (e.g., such cache to be stored in memory 4508 and/or storage 4526). In such scenario, below-O/S security agent 4516 may apply a simple comparison to determine which sector of storage 4526 is loaded in which page of memory 4508, and vice versa. Such mapping may allow for security agent 4516 and/or 4518 to track the locations of particular information of entities in memory 4508 and/or storage 4526.

Because the monitoring and analysis performed by memory/storage security layer 4546, memory tracking facility 4542, and/or storage tracking facility 4544 may consume a significant portion of the processing resources of electronic device 4504 if applied to all accesses of memory 4508 and storage 4526, monitoring and analysis of memory 4508 and storage 4526 may be enabled only in particular defined situations. For example, in some embodiments, security rules 4522 may provide that memory tracking facility 4542 and/or storage tracking facility 4544 monitor only particular portions of memory 4508 and/or storage 4526 (e.g., those comprising operating systems, or critical drivers or applications). As another example, in the same or alternative embodiments, security rules 4522 may provide that memory tracking facility 4542 and/or storage tracking facility 4544 monitor a program in a particular portion of memory 4508 and/or storage 4526 if other indications show that the program is suspicious and/or other indications show that a malware attack may have occurred. As a further example, memory tracking facility 4542 and/or storage tracking facility 4544 may forgo memory trapping and storage trapping except when content is loaded from memory 4508 to storage 4526 or vice versa, as in the case of the virtual memory context swap or loading of executable code from storage 4526.

In operation, as mentioned above, memory/storage security layer 4546 may secure memory 4508 and/or storage 4526 by analyzing reported accesses to memory 4508 and/or storage 4526 in light of security rules 4522 and/or application assets 4548. After receiving notification of an attempted access to memory 4508 and/or storage 4526, memory/storage security layer 4546 may determine the identity of the entity (e.g., operating system 4512, driver 4511, or application 4510) requesting the attempted access. For example, in-O/S security agent 4518 may gather contextual information from operating system 4512 relating to a requesting entity of a particular memory 4508 and/or storage request 4526 and communicate such information to memory/storage security layer 4546. In addition, memory/storage security layer 4546 may verify the identity of the requesting entity and determine whether the entity has been compromised by malware (e.g., by comparing a map or hash for the entity stored in memory to a known, expected map or hash for the entity or scanning the entity as stored in memory for presence of malware). Furthermore memory/storage security layer 4546 may determine whether the entity is authorized to make the request (e.g., a determination based on security rules 4522 and/or application assets 4548 whether the entity is authorized to access the specific portion of memory 4508 or storage 4526). Moreover, memory/storage security layer 4546 may scan the content related to the attempted access (e.g., data or executable code being read, written, or executed) to determine whether the content contains malware. Also, memory/storage security layer 4546 may determine if a behavioral analysis of a history of accesses (e.g., as stored in activities 4532 and/or activities 4534) indicates a presence of malware (e.g., attempted accesses of protected portions of O/S 4512 by unauthorized entities). Memory/storage security layer 4546 may take corrective action if the attempted access is determined to be malware-related. Corrective action may include preventing the attempted access, terminating the requesting entity, repairing the requesting entity, communicating occurrence of a malware-related event to protection server 202, and/or any other suitable action.

As a specific example, in response to a request to a particular sector of storage 4526 (as indicated by a notification from storage tracking facility 4544), memory/storage security layer 4546 may determine whether the particular sector is to be accessed based at least on security rules 4522. In addition, memory/storage security layer 4546 may scan content related to the attempted access (e.g., data or executable code to be read, written, or executed in connection with the attempted access) to determine whether the content is free from potential malware infections. Furthermore, memory/storage security layer 4546 may, based at least on security rules 4522, determine whether an entity requesting the attempted access is authorized to access the particular sector. If such determinations indicate the attempted access is not malware-related, memory/storage security layer 4546 may permit the attempted access.

As another specific example, in response to a request to a particular page of memory (as indicated by a notification from memory tracking facility 4542), memory/storage security layer 4546 may scan content related to the attempted access (e.g., data or executable code to be read, written, or executed in connection with the attempted access) to determine whether the content is free from potential malware infections. In addition, memory/storage security layer 4546 may, based at least on security rules 4522, determine whether an entity requesting the attempted access is authorized to access the particular page. Furthermore, if the attempted access is a transfer from storage 4526 to memory 4508, memory/storage security layer 4546 may, based at least on security rules 4522, determine if the particular portion of storage 4526 from which the content is to be transferred is a trusted source. If such determinations indicate the attempted access is not malware-related, memory/storage security layer 4546 may permit the attempted access.

In addition, security rules 4522 and protection applied to a particular portion of memory 4508 or storage 4526 may be applied transitively as content is transferred between memory 4508 and storage 4526, between different portions of memory 4508, or between different portions of storage 4526. Thus, for example, if a particular set of security rules 4522 apply to content in a specific portion of memory 4508, upon a transfer of such content to another portion of memory 4508 or to storage 4526, memory/storage security layer 4546 may update security rules 4522 to apply to the destination portion of memory 4508 or storage 4526.

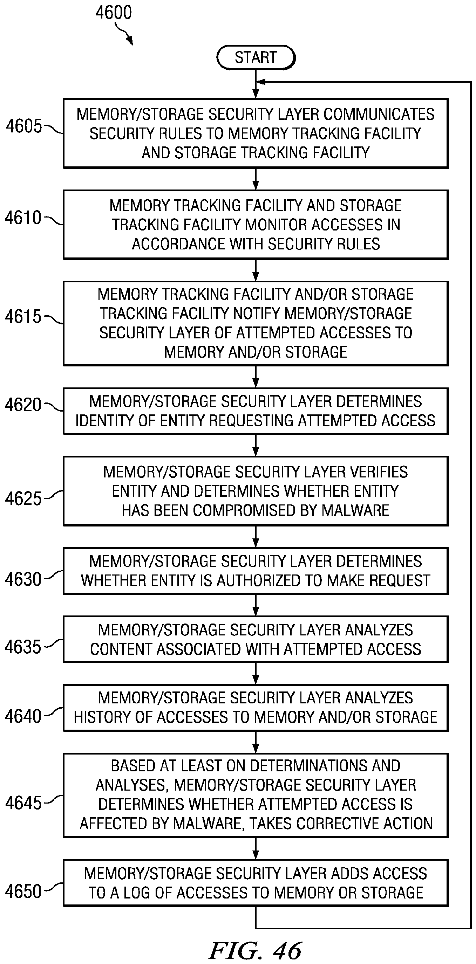

FIGURE 46 is an example embodiment of a method 4600 for securing memory and storage of an electronic device. In step 4605, a memory/storage security layer may communicate security rules to a memory tracking facility and a storage tracking facility. Because the systems and methods disclosed herein for protection of memory and storage from malware may consume significant processor, memory, and/or other resources, it may be desirable to only employ such systems and methods only when a particular location of memory or storage may be particularly susceptible to malware attacks. A portion of memory or storage may be susceptible to malware attack if, for example, it includes a portion of an operating system or a security application, or if previous indication of attack has been seen or detected on the electronic device.

In step 4610, the memory tracking facility and the storage tracking facility may monitor accesses in accordance with security rules. To monitor, memory tracking facility and the storage tracking facility may trap or trigger upon attempted accesses (e.g., attempted reads, writes, or executions) to particular portions of the memory or the storage identified by the security rules received from the memory/storage security layer.

In step 4615, memory tracking facility and/or the storage tracking facility may communicate to the memory/storage security layer notifications of attempted accesses to the memory and/or storage.

In step 4620, the memory/storage security layer may determine the identity of the entity (e.g., operating system, driver, or application) requesting the attempted access identified in a notification to the memory/storage security layer. For example, an in-O/S security agent in communication with memory/storage security layer may gather contextual information from an operating system relating to a requesting entity of a particular memory and/or storage request and communicate such information to the memory/storage security layer.

In step 4625, the memory/storage security layer may verify the identity of the requesting entity and determine whether the entity has been compromised by malware. For example, memory/storage security layer may compare a map or hash for the entity stored in memory to a known, expected map or hash for the entity. As another example, memory/storage security layer may scan the entity as stored in memory for presence of malware.

In step 4630, the memory/storage security layer may determine whether the entity is authorized to make the request. For example, the memory/storage security layer may consult security rules and/or application assets to determine whether the entity is authorized to access a specific portion of memory 4508 or storage 4526. In step 4635, the memory/storage security layer may analyze content (e.g., data or executable code being read, written, or executed) associated with the attempted access. For example, the memory/storage security layer may scan the content related to the attempted access to determine whether the content contains malware.

In step 4640, the memory/storage security layer may analyze a history of accesses to memory and/or storage. Such history may be stored as log or list in a memory and/or storage of an electronic device. Such analysis may include a behavioral analysis of the history of accesses to the memory and/or storage to determine if the history indicates a presence of malware.

In step 4645, the memory/storage security layer may determine (e.g., based on the analyses and determinations of one or more of steps 4620-4640), whether the attempted access to memory and/or storage reported by the memory tracking facility and/or the storage tracking facility indicates that the attempted access is affected by malware. In addition, if the memory/storage security layer determines the modified content was affected by malware-like behavior, the memory/storage security layer may take corrective action (e.g., action to remove, quarantine, and/or otherwise neutralize the malware). In addition, in some embodiments, the memory/storage security layer may communicate information (e.g., forensic information) regarding occurrence of malware-like behavior to a protection server.

In step 4650, the memory/storage security layer may add notification of the access to a log or list of accesses stored on a memory and/or storage of an electronic device. To perform behavioral analysis of a history of accesses, the memory/storage security layer may later access the stored log or list. After completion of step 4650, method 4600 may return again to step 4605.

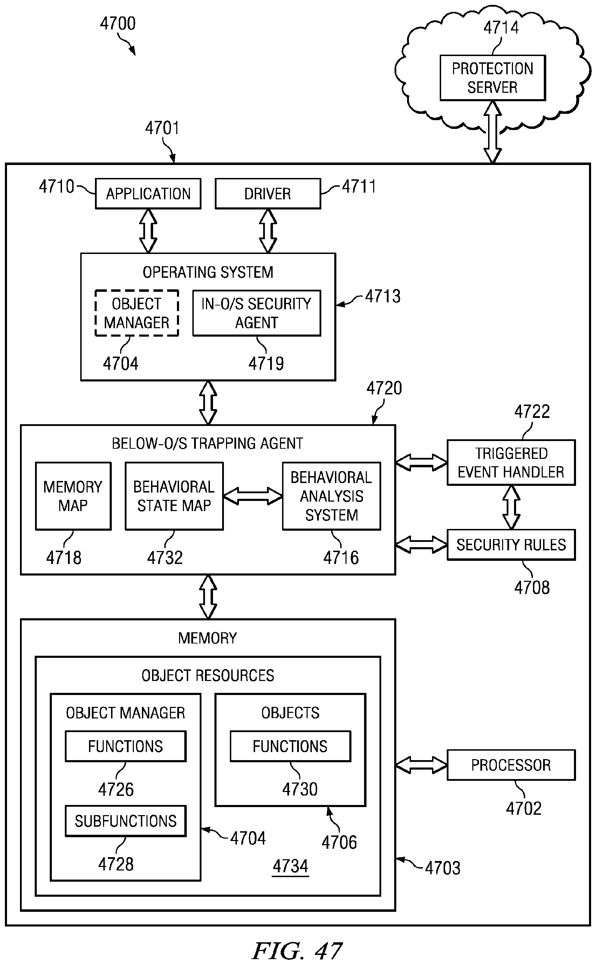

FIGURE 47 is an example embodiment of a system 4700 for securing access to the objects of an operating system 4713 executing on an electronic device 4701. System 4700 may include a below-O/S trapping agent 4720 and a triggered event handler 4722 configured to operate on electronic device 4701 to detect malicious attempts to access objects 4706 and/or object manger 4704 by software-based entities executing on operating system 4713. Furthermore, below-O/S trapping agent 4720 and triggered event handler 4722 may be configured to use one or more security rules 4708 to determine when to trap access to objects 4706 and/or the object manger 4704 and how to handle a triggered event associated with a trapped operation. Below-O/S trapping agent 4720 and triggered event handler 4722 may be configured to allow, deny, or take other corrective action for the triggered event.

Electronic device 4701 may be implemented wholly or in part by or configured to implement the functionality of the electronic device 103 of FIGURE 1, electronic device 204 of FIGURE 2, electronic device 404 of FIGURE 4, electronic device 701 of FIGURE 7, electronic device 901 of FIGURE 9, electronic device 1201 of FIGURE 12, and/or any combination thereof. Electronic device 4701 may include one or more processors 4702 coupled to a memory 4703. Processor 4702 may be implemented wholly or in part by or configured to implement the functionality of processor 208 of FIGURE 2, processor 408 of FIGURE 4, processor 702 of FIGURE 7, processor 902 of FIGURE 9, processor 1202 of FIGURE 12, and/or any combination thereof. Electronic device 4701 may include an operating system 4713, which may include an in-O/S security agent 4719 and an object manager 4704 for managing objects 4706. Operating system 4713 may be implemented wholly or in part by or configured to implement the functionality of operating systems 112 of FIGURE 1, operating system 212 of FIGURE 2, operating system 412 of FIGURE 4, operating system 713 of FIGURE 7, operating system 913 of FIGURE 9, operating system 1213 of FIGURE 12, and/or any combination thereof. In-O/S security agent 4719 may be implemented wholly or in part by or configured to implement the functionality of in-O/S security agent 218 of FIGURE 1, in-O/S security agent 418 of FIGURE 4, in-O/S security agent 719 of FIGURE 7, in-O/S security agent 919 of FIGURE 9, in-O/S security agent 1219 of FIGURE 12, and/or any suitable combination thereof. Security rules 4708 may be implemented by or configured to implement the functionality of security rules 114 of FIGURE 1, security rules 220, 222 of FIGURE 2, security rules 420, 434, 436, 438 of FIGURE 4, security rules 518 of FIGURE 5, security rules 707, 721, 723 of FIGURE 7, security rules 908, 921 of FIGURE 9, security rules 1208, 1221 of FIGURE 12, and/or any combination thereof. Protection server 4714 may be implemented wholly or in part by or configured to implement the functionality of protection server 102 of FIGURE 1, protection server 202 of FIGURE 2, and/or any combination thereof.

Memory 4703 may be implemented wholly or in part by or configured to implement the functionality of memory 206 of FIGURE 2, memory 406 of FIGURE 4, memory 703 of FIGURE 7, memory 903 of FIGURE 9, memory 1203 of FIGURE 12, and/or any combination thereof. Memory 4703 may be implemented using a virtual memory system configured to virtualize access to memory 4703. In a virtual memory system, software processes executing on the operating system 4713 may be provided with a virtual address space which a process may treat as a contiguous block of memory. In reality, the virtual address space may be dispersed across different areas of physical memory. When a process requests access to memory, the operating system 4713 may be responsible for mapping the virtual memory address of the process into the physical address in memory 4703 where the data is actually stored. A virtual address space may be divided into fixed size blocks of contiguous virtual memory addresses called virtual memory pages. A page table may be used to store the mappings from a virtual memory page to the corresponding physical address in memory 4703 where the virtual memory page is stored. The page table may include various access permissions, such as read, write, and/or execute, specifying the type of access that may be authorized for a given virtual memory page. When a process attempts to access a virtual memory address in a manner that is not authorized by the access permissions of the relevant virtual memory page, the attempt may be denied.

Below-O/S trapping agent 4720 may be implemented by or configured to implement the functionality of below-O/S trapping agent 104 of FIGURE 1, SVMM 216 of FIGURE 2, firmware security agents 440, 442 and/or PC firmware security agent 444 of FIGURE 4, firmware security agent 516 of FIGURE 5, and/or microcode security agent 708 of FIGURE 7, below-O/S trapping agent 920 of FIGURE 9, below-O/S security agent 1220 of FIGURE 12, and/or any combination thereof. Triggered event handler 4722 may be implemented by or configured to implement the functionality of triggered event handler 108 of FIGURE 1, SVMM security agent 217 of FIGURE 2, below-O/S agent 450 of FIGURE 4, below-O/S agent 712 of FIGURE 7, triggered event handler 922 of FIGURE 9, and/or any combination thereof. In various embodiments, some of the functionality of below-O/S trapping agent 4720 may be accomplished by triggered event handler 4722, and/or some of the functionality of triggered event handler 4722 may be accomplished by below-O/S trapping agent 4720. Furthermore, below-O/S trapping agent 4720 and triggered event handler 4722 may be implemented in the same software module.

Operating system 4713 may be implemented as an object oriented environment using objects 4706 to represent each resource associated with operating system 4713. For example, operating system 4713 may have objects representing drivers 4711, applications 4710, processes, memory 4703, files and/or folders, physical devices, and/or any other resource used by operating system 4713. In addition, each application 4710 and/or other software process executing on operating system 4713 may also use objects 4706 to represent resources used by the particular application 4710 or software process. Objects 4706 may include object functions 4730 which may be unique to a particular type of object 4706 and may be utilized to manipulate the data of a particular object 4706. Objects 4706 may be represented by a data structure that may include a header and a body. The header of an object 4706 may include administrative fields common to all objects. These fields may be used by an object manager 4704 to manage objects 4706. The header of an object 4706 may include, for example, an object name to identify the object 4706 and/or security descriptors specifying access permissions associated with an object 4706. The body of an object 4706 may contain object-specific data fields that are unique to the particular type of object 4706.

Object manager 4704 may be configured to execute in operating system 4713 to manage the objects 4706 of operating system 4713. Object manager 4704 may be implemented using various object manager functions 4726 that may be used to manage objects 4706. For example, object manager functions 4726 may include functions used to create, delete, modify data, and/or modify settings of objects 4706. Object manager functions 4726 may be implemented using one or more subfunctions 4728. Examples of object manager functions 4726 used by the object manger 4704 of the Microsoft WindowsTM operating system may be found in Table 1.

**Table 1: Examples of Microsoft Windows Object Manager Functions**

| | | |
|---|---|---|
| ObAssignObjectSecurityDescriptor | ObFindHandleForObject | ObQueryObjectAuditingByHandle |
| ObAssignSecurity | ObFreeObjectCreateInfoBuffer | ObQuerySecurityDescriptorInfo |
| ObAuditInheritedHandleProcedure | ObGetHandleInformation | ObQueryTypeInfo |
| ObCheckCreateObjectAccess | ObGetHandleInformationEx | ObQueryTypeName |
| ObCheckObjectAccess | ObGetObjectInformation | ObReferenceFileObjectForWrite |
| ObClearProcessHandleTable | ObGetObjectSecurity | ObReferenceObjectByHandle |
| ObCloseHandle | ObGetProcessHandleCount | ObReferenceObjectByName |
| ObCreateObject | ObGetSecurityMode | ObReferenceObjectByPointer |
| ObCreateObjectType | ObInheritDeviceMap | ObReferenceObjectEx |
| ObDeassignSecurity | ObInitProcess | ObReferenceObjectSafe |
| ObDeleteCapturedInsertInfo | ObInitSystem | ObReferenceProcessHandleTable |
| ObDereferenceDeviceMap | ObInitializeFastReference | ObReferenceSecurityDescriptor |
| ObDereferenceObject | ObInsertObject | ObReleaseObjectSecurity |
| ObDereferenceObjectDeferDelete | ObIsLUIDDeviceMapsEnabled | ObSetDeviceMap |
| ObDereferenceObjectEx | ObIsObjectDeletionInline | ObSetDirectoryDeviceMap |
| ObDereferenceProcessHandleTable | ObKillProcess | ObSetHandleAttributes |
| ObDereferenceSecurityDescriptor | ObLogSecurityDescriptor | ObSetSecurityDescriptorInfo |
| ObDupHandleProcedure | ObMakeTemporaryObject | ObSetSecurityObjectByPointer |
| ObDuplicateObject | ObOpenObjectByName | ObShutdownSystem |
| ObEnumerateObjectsByType | ObOpenObjectByPointer | ObSwapObjectNames |
| ObFastDereferenceObject | ObPerfDumpHandleEntry | ObValidateSecurityQuota |
| ObFastReferenceObject | ObPerfHandleTableWalk | ObWaitForSingleObject |
| ObFastReferenceObjectLocked | ObQueryDeviceMapInformation | |
| ObFastReplace | ObQueryNameString | |

Memory map 4718 may be implemented by or configured to implement the functionality of memory map 1206 of FIGURE 12. Memory map 4718 may be implemented in a file, record, data structure, or any other suitable entity. Memory map 4718 may be included as part of below-O/S trapping agent 4720 or may be communicatively coupled to below-O/S trapping agent 4720. Memory map 4718 may include information regarding the location in memory 4703 of various object resources 4734. Object resources 4734 may include, for example, object manager 4704, object manger functions 4726 and/or subfunctions 4728, objects 4706, and/or object functions 4730. Memory map 4718 may include information regarding the memory pages in virtual memory, the address ranges in physical memory, and/or the location on a disk where a particular object resource 4734 may be stored. Below-O/S trapping agent 4720 may be configured to use memory map 4718 to determine the identity or the owner of any given content in a virtual memory page or a physical memory address.

Below-O/S trapping agent 4720 may determine, develop, and/or populate the contents of memory map 4718. To do so, below-O/S trapping agent 4720 may access security rules 4708, protection server 4714, or any other suitable source of information for populating information in memory map 4718. Below-O/S trapping agent 4720 may build memory map 4718, for example, by profiling the operation of the operating system 4713, and then determining where in memory various object resources 4734 are located. Below-O/S trapping agent 4720 may, in conjunction with in-O/S security agent 4719, identify the locations in memory of object functions 4730, object manger functions 4726, and/or object manager subfunctions 4728 by traversing execution stacks of the respective functions. Below-O/S trapping agent 4720 may intercept requests of physical memory or virtual memory from entities at the operating system level, such as operating system 4713, application 4710, or driver 4711, to map the ownership and contents of memory in memory map 4718. For example, as attempts to access object resources 4734 are trapped, below-O/S trapping agent 4720 may be configured to communicate with in-O/S security agent 4719 to determine what object resources 4734 are being accessed and/or what entity is responsible for the access of the particular object resource 4734. Below-O/S trapping agent 4720 may communicate with in-O/S security agent 4719 to determine what entities are being loaded into memory so that memory map 4718 may be populated. Memory map 4718 may contain memory mapping for physical memory, virtual memory, and/or mappings between the two.

Because virtually all resources of an object oriented operating system 4713 may be represented by objects 4706, malware may attempt to compromise the security of operating system 4713 by attacking objects 4706. Below-O/S trapping agent 4720 and/or triggered event handler 4722 may be configured to protect objects 4706 from malware. Attacks on objects 4706 by malware may include any attempt to misappropriate object resources 4734, such as an unauthorized attempt to manipulate an object 4706 and/or object manager 4704. For example, operating system 4713 may include objects 4706 representing each software process that is executing on operating system 4713, and malware may delete the particular process object 4706 associated with a security application that may be executing on operating system 4713. In this manner, execution of the security application may halt, allowing the malware to subvert the safeguards of the security software and perform further malicious activities. As another example, malware may edit fields of its own objects 4706, such as the object names, to disguise itself from malware scanners. Malware may also attempt to modify the security settings of an object 4706. For example, malware may attempt to modify the access permissions of an object 4706 representing a core operating system 4713 file to allow the file to be accessed by any entity. Malware may perform the above described attacks indirectly by calling object manager functions 4726, object manager subfunctions 4728, and/or object functions 4730. Malware may change the security setting of an object prior to calling a function to conceal itself as the caller of the particular function. Malware may call object manger subfunctions 4728 as opposed to object manager functions 4730 if an object manager function 4726 is protected from unauthorized execution but one or more subfunctions 4728 are not protected. In this manner, malware may be able to circumvent the protection of an object manager function 4726 by calling one or more unprotected subfunctions 4728 of the object manager function 4726. Malware may also attack objects 4706 directly by accessing locations in memory 4703 where objects 4706 and/or object manager 4704 are stored.

Below-O/S trapping agent 4720 and/or triggered event handler 4722 may be configured to prevent malware attacks on objects 4706 by protecting attempts to access object resources 4734. For example, below-O/S trapping agent 4720 may be configured to trap attempts to read, write, or execute object resources 4734, and triggered event handler 4722 may be configured to determine whether the trapped attempts are indicative of malware. Trapped attempts to access object resources 4734 may include attempts to execute functions 4726 and/or subfunctions 4728 of object manager 4704, attempts to execute functions 4730 of objects 4706, and/or attempts to directly access locations in memory 4703 where object resources 4734 are stored. Memory trapping functionality of below-O/S trapping agent 4720 may be implemented by or configured to implement the functionality of below-O/S security agent 1220 of FIGURE 12.

Below-O/S trapping agent 4720 may be configured to trap attempts to execute code of object functions 4730, object manager functions 4726, and/or object manager subfunctions 4728 in any suitable manner. For example, below-O/S trapping agent 4720 may be configured to trap attempts to execute code at memory locations where the code of a particular function may be stored. Below-O/S trapping agent 4720 may be configured to consult a memory map 4718 to identify the locations in memory 4703 of the functions that require trapping. The trapped attempts to execute code may be trapped at the virtual memory level or the physical memory level. For example, below-O/S trapping agent 4720 may be configured to trap an attempt to execute a virtual memory page associated with the code of a particular function. Below-O/S trapping agent 4720 may also be configured to trap an attempt to execute code at a virtual memory address corresponding to the physical memory address where the code of a particular function may be stored. Such trapping may occur prior to the translation from a virtual memory address to a physical memory address. In yet another embodiment, below-O/S trapping agent 4720 may be configured to trap an attempt to execute code at a physical memory address where the code of a particular function may be stored. Such trapping may occur after the translation from a virtual memory address to a physical memory address or may also occur after a direct attempt to execute code at a physical memory address without being first translated through virtual memory. After trapping an attempt to execute an object function 4730, object manager function 4726, and/or object manager subfunction 4728, below-O/S trapping agent 4720 may create and send a triggered event associated with the trapped attempt to triggered event handler 4722 for handling the trapped attempt.

Below-O/S trapping agent 4720 may be configured to trap attempts to access object resources 4734 in memory 4703. For example, below-O/S trapping agent 4720 may be configured to trap attempts to access memory locations used to store objects 4706 and/or object manager 4704. Below-O/S trapping agent 4720 may also be configured to trap attempts to write to memory locations used to store code of object functions 4730, object manager functions 4726, and/or object manager subfunctions 4728. Such trapping will prevent malware from overwriting code of object functions 4730, object manager functions 4726, and/or object manager subfunctions 4728 with malicious code. In some embodiments, below-O/S trapping agent 4720 may use a memory map 4718 to identify the locations in memory 4703 of object resources 4734. In one embodiment, below-O/S trapping agent 4720 may be configured to trap attempts to access the virtual memory pages that correspond to the virtual memory addresses of object resources 4734. In another embodiment, below-O/S trapping agent 4720 may be configured to trap attempts to access the virtual memory addresses that correspond to the physical memory addresses where object resources 4734 may be stored. Such trapping may occur prior to the translation from a virtual memory address to a physical memory address. In yet another embodiment, below-O/S trapping agent 4720 may be configured to trap attempts to access physical memory addresses where object resources 4734 may be stored. Such trapping may occur after the translation from a virtual memory address to a physical memory address or may also occur after a direct attempt to access a physical memory address without being first translated through virtual memory.

In one embodiment, below-O/S trapping agent 4720 may be configured to consult in-O/S security agent 4719 to determine the requesting entity responsible for the request to access the particular object resource 4734. In another embodiment, below-O/S trapping agent 4720 may be configured to determine the virtual memory page from which the request came and consult memory map 4718 to determine whether such a memory page is associated with any elements mapped therein. In yet another embodiment, below-O/S trapping agent 4720 may be configured to determine a hash or signature of a virtual memory page of the requesting element and compare it against hashes and signatures of known entities. After trapping an attempt to access object resources 4734 and identifying the requesting entity, below-O/S trapping agent 4720 may create a triggered event containing information associated with the trapped attempt, including the particular object resource 4734 of the request, the type of access, and the requesting entity. Below-O/S trapping agent 4720 may send the triggered event to triggered event handler 4722 for handling the trapped attempt.

Triggered event handler 4722 may be configured to receive a triggered event associated with a trapped attempt from below-O/S trapping agent 4720. Triggered event handler 4722 may use contextual information associated with the triggered event, in conjunction with security rules 4708, to determine the appropriate action to take with respect to the triggered event. In some embodiments, triggered event handler 4722 may cooperate with in-O/S security agent 4719 to identify the contextual information associated with the triggered event. Contextual information may include the requesting entity of the trapped attempt, the particular object 4706 associated with the trapped attempt, and/or the type of access requested with respect to the particular object 4706. Security rules 4708 may specify, for example, that the process object associated with a security application may only be deleted by the security application itself. As another example, security rules 4708 may authorize attempts from the operating system 4713 to create new objects 4706 and may require below-O/S trapping agent 4720 to trap future attempts to access the newly created objects 4706.

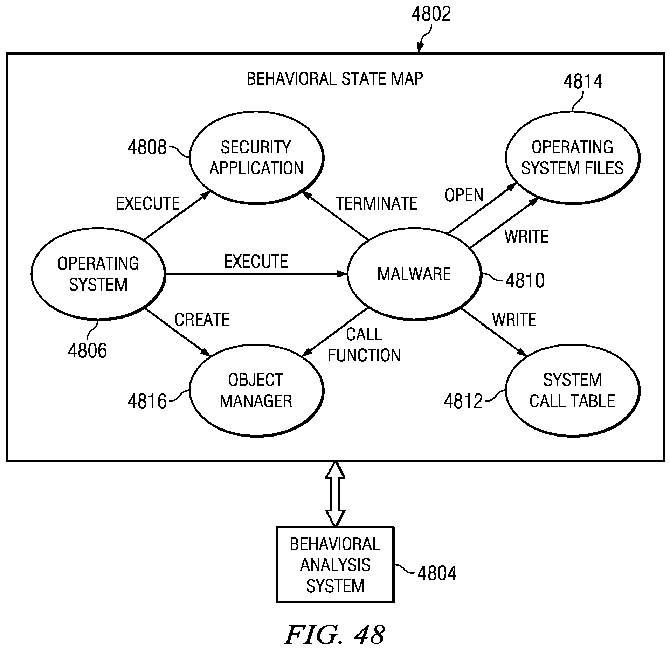

Below-O/S trapping agent 4720 may be configured to monitor access to object resources 4734 to create a behavioral state map 4732 representing the behavior of the operating system 4713. For example, below-O/S trapping agent 4720 may create behavioral state map 4732 by trapping attempts to access object resources 4734 and updating behavioral state map 4732 to represent each trapped operation. Behavioral state map 4732 may be used to implement a behavior analysis system 4716 for proactively detecting and preventing attacks by unknown zero-day malware. Descriptions of example embodiments of behavioral state map 4732 and behavior analysis system 4716 may be found in the discussions of behavioral state map 4802 and behavior analysis system 4804 of FIGURE 48, below.

FIGURE 48 is an example embodiment of a behavioral state map 4802 for use with a system or method of securing access to the objects of an operating system. For example, behavioral state map 4802 may be implemented as behavioral state map 4732 of FIGURE 47 and may be generated and/or utilized by behavioral analysis system 4716, below-O/S trapping agent 4720, and/or triggered event handler 4722 of FIGURE 47. In an object oriented environment, the operating system and all of its resources, including files, applications, processors, drivers, and/or devices, may be implemented as objects. Behavioral state map 4802 may provide a representation of the behavior of an object oriented operating system based on the operations and/or interactions among the objects of the operating system. Behavioral state map 4802 may be used for identifying patterns of object interactions that are commonly associated with malware.

Behavioral state map 4802 may be implemented using any suitable data structure, including a graph and/or map. In an embodiment using a graph, each node may represent an object of the operating system and the edges between each node may represent the operations and/or interactions among the objects. For example, the execution of a process by the operating system may be represented by a behavioral state map using a node to represent the operating system object and a node to represent the process object. The behavioral state map may include an edge from the operating system object to the process object representing that the process was executed by the operating system. If the process then opens a file, the behavioral state map may be updated to include a node representing the particular file object and may include an edge from the process object to the file object representing that the particular file was opened by the process. The behavioral state map may be continuously updated in this manner for each operation performed among the objects. In some embodiments, the behavioral state map may be implemented to represent the behavior of the entire operating system or may be implemented to represent only the behavior of a particular component of the operating system, such as a particular application, driver, and/or process executing on the operating system.

Behavioral state map 4802 is an example embodiment of a behavioral state map associated with a malware infected operating system. Behavioral state map 4802 includes nodes representing the objects of operating system 4806, object manager 4816, security application 4808, and malware 4810. The edge from operating system 4806 to security application 4808 represents the execution of the security application 4808 by operating system 4806 and the edge from operating system 4806 to malware 4810 represents the execution of malware 4810 by operating system 4806. The edge from operating system 4806 to object manager 4816 represents the creation of object manager 4816 by operating system 4806. Malware 4810 is associated with multiple edges representing the malicious activities performed by malware 4810. The two edges from malware 4806 to operating system files 4814 represent malware 4810 opening the operating system files 4814 and writing to operating system files 4814. As an example, operating system files 4814 may be used to specify applications that may be executed when operating system 4806 is initialized, and malware 4810 may write to these files to include itself as one of these applications. The edge from malware 4810 to security application 4808 represents the malware 4810 attempting to terminate the security application 4808. The edge from malware 4810 to system call table 4812 represents malware 4810 writing to the system call table 4812. Malware 4810 may write to system call table 4812, for example, to modify an entry for a particular system call. In this manner, whenever the system call is executed, malicious code of malware 4810 may execute instead of the intended system call. The edge from malware 4810 to object manager 4816 represents malware attempting to call a particular function of object manager 4810. For example, malware 4810 may attempt to delete an object of operating system 4716 by calling the delete object function of object manager 4816. Behavioral state map 4802 represents only one possible embodiment of a behavioral state map. Behavioral state map 4802 may be implemented in any manner suitable for portraying the operations and/or interactions of the objects of an operating system.

Returning to FIGURE 47, in some embodiments behavioral state map 4732 may be generated by below-O/S trapping agent 4720. In other embodiments, behavioral state map 4732 may have been previously generated and may be used for proactively detecting and preventing attacks by unknown zero-day malware.

Behavioral state map 4732 may be generated by monitoring the interactions and/or operations among the objects 4706 of the operating system 4713. For example, below-O/S trapping agent 4720 may trap attempts to access object resources 4734 and may update behavioral state map 4732 to reflect each trapped operation. In some embodiments, behavioral state map 4732 may be generated using an operating system 4713 infected with malware. In other embodiments, behavioral state map 4732 may be generated using an operating system 4713 free of malware. In some embodiments, after behavioral state map 4732 is generated, it may be analyzed to isolate patterns of behavior associated with malware and/or to isolate patterns of safe behavior. In such embodiments, behavioral state map 4732 may be updated to only represent the isolated behavior, or a new behavioral state map may be created to represent only the isolated behavior. In this manner, behavioral state map 4732 may provide a model of object behavior known to be associated with malware and/or a model of object behavior known to be safe. For example, if behavioral state map 4732 is generated on an operating system 4713 infected with malware, behavioral state map 4732 may be analyzed to isolate the malicious behavior. Malicious behavior commonly performed by malware includes modifying core operating system files, accessing the system call table, and/or killing processes associated with security applications, amongst others. By analyzing a behavioral state map 4732 of an operating system 4713 infected with malware, malicious behavior may be analyzed at the object level. Analyzing malicious behavior at the object level may allow particular malicious activities to be correlated with patterns of operations among the objects 4706 responsible for performing the malicious activity. Similarly, if behavioral state map 4732 is generated on an operating system 4713 free from malware, behavioral state map 4732 may be used to analyze safe behavior at the object level to correlate known safe behavior with patterns of object operations.

In some embodiments, behavioral state map 4732 may be used for proactively detecting and preventing attacks by unknown zero-day malware. In such embodiments, behavioral state map 4732 may have been previously generated and may provide a model of behavior commonly associated with malware and/or a model of behavior known to be safe. In such embodiments, behavioral state map 4732 may be used by behavioral analysis system 4716 to identify behavior of operating system 4713 commonly associated with malware. Behavioral analysis system 4716 may be implemented by below-O/S trapping agent 4720 or may be implemented by triggered event handler 4722, or in some embodiments, functionality of behavioral analysis system 4716 may be implemented partially by below-O/S trapping agent 4720 and partially by triggered event handler 4722. Below-O/S trapping agent 4720 may be configured to trap attempts to access object resources 4734, and behavioral analysis system 4716 may be used to determine if the trapped attempt is indicative of malware. Behavioral analysis system 4716 may compare the attempted access to behavioral state map 4732. In embodiments where behavioral state map 4732 represents known safe behavior, behavioral analysis system 4716 may determine whether the trapped attempt matches any safe behavior from behavioral state map 4732. If a match is found, behavioral analysis system may determine that the trapped attempt is safe and may decide to allow the attempt. In embodiments where behavioral state map 4732 represents behavior associated with malware, behavioral analysis system 4716 may determine whether the trapped attempt matches any behavior associated with malware from behavioral state map 4732. If a match is found, behavioral analysis system 4716 may determine that the trapped attempt is unsafe and may decide to deny the attempt.

In some embodiments, multiple behavioral state maps 4732 may be used. For example, below-O/S trapping agent 4720 may include a current behavioral state map and a model behavioral state map. The current behavioral state map may represent the current behavior of operating system 4713. The model behavioral state map may be a previously generated state map that provides model behavior commonly associated with malware and/or model behavior known to be safe. Below-O/S trapping agent 4720 may trap an attempted access of object resources 4734 and may update the current behavioral state map to reflect the attempted access. Behavioral analysis system 4716 may then compare the model behavioral state map to the current behavioral state map. In this manner, behavioral analysis system 4716 may analyze the trapped attempt in conjunction with previous behavior from the current behavioral state map to determine if the trapped attempt is associated with malware. This may allow behavior analysis system 4716 to more effectively evaluate a trapped attempt.

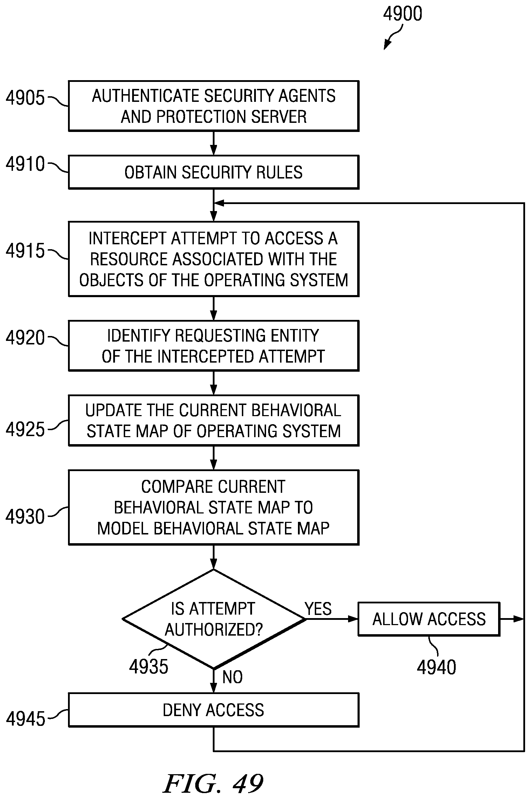

FIGURE 49 is an example embodiment of a method 4900 for securing access to the objects of an operating system. In step 4905, the identity and security of a below-O/S security agent, in-O/S security agent, triggered event handler, and protection server may be authenticated. Such authentication may be performed using any suitable method, including by locating and verifying the images in memory of each component, using cryptographic hashing, and/or using secret keys. Until step 4905 is completed, operation of other steps may be withheld. In step 4910, security rules are obtained. Security rules may be stored locally by below-O/S security agent, in-O/S security agent, and/or triggered event handler, and/or may be stored remotely, for example on the protection server. Such security rules may be used to make decisions in steps 4915-4945.

In step 4915, an attempt to access a resource associated with the objects of an operating system may be intercepted. Resources associated with the objects of an operating system may include, for example, the object manager, the object manger functions and/or subfunctions, the objects themselves, and/or functions of the objects. Intercepted attempts may include attempts to execute code at locations in memory that store object functions, object manager functions, and/or subfunctions of object manager functions. Intercepted attempts may also include attempts to access locations in memory where objects and/or the object manager are stored. In some embodiments, the attempts may be intercepted at the virtual memory level before translation of a virtual memory address to a physical memory address. In other embodiments, the attempts may be intercepted at the physical address level. In some embodiments, a memory map may be used to specify the locations in memory of the object resources to be protected.

In step 4920, the requesting entity of the intercepted attempt is identified. For example, the intercepted attempt may be from an application, driver, in-O/S security agent, operating system, and/or other software entity. In some embodiments, the requesting entity may be identified by consulting a memory map containing the addresses of entities executing on the operating system.

In step 4925, the current behavioral state map of the operating system may be updated. The current behavioral state map may be a data structure that portrays the behavior of the operating system based on the interactions and/or operations among the objects of the operating system. For each intercepted attempt to access an object resource, the current behavioral state map may be updated to reflect the operation corresponding to the intercepted attempt. In step 4930, the current behavioral state map is compared to the model behavioral state map. The model behavioral state map may represent behavior typically associated with malware and/or behavior typically known to be safe. The comparison may allow identification of patterns of object operations associated with malware or may allow identification of patterns of object operations known to be safe.

In step 4935, it is determined whether the intercepted attempt is authorized. If malware was identified based on the comparison from step 4930 of the current behavioral state map with the model state map, then the attempt may not be authorized. If no malware was identified from the comparison in step 4930, then security rules may be used in conjunction with contextual information associated with the intercepted attempt to determine whether a particular attempt is authorized. The contextual information may include the requesting entity of the intercepted attempt, the particular object associated with the intercepted attempt, and/or the type of access requested. For example, a security rule may specify that a process object associated with a security application may only be deleted by the security application itself. If it is determined that the attempt is authorized, then in step 4940 access may be allowed. If the attempt is not authorized, then in step 4945 access may be denied.

The steps of the method from FIGURE 49 may be repeated as necessary to protect the electronic device continuously, periodically, upon demand, and/or upon the triggering of an event.

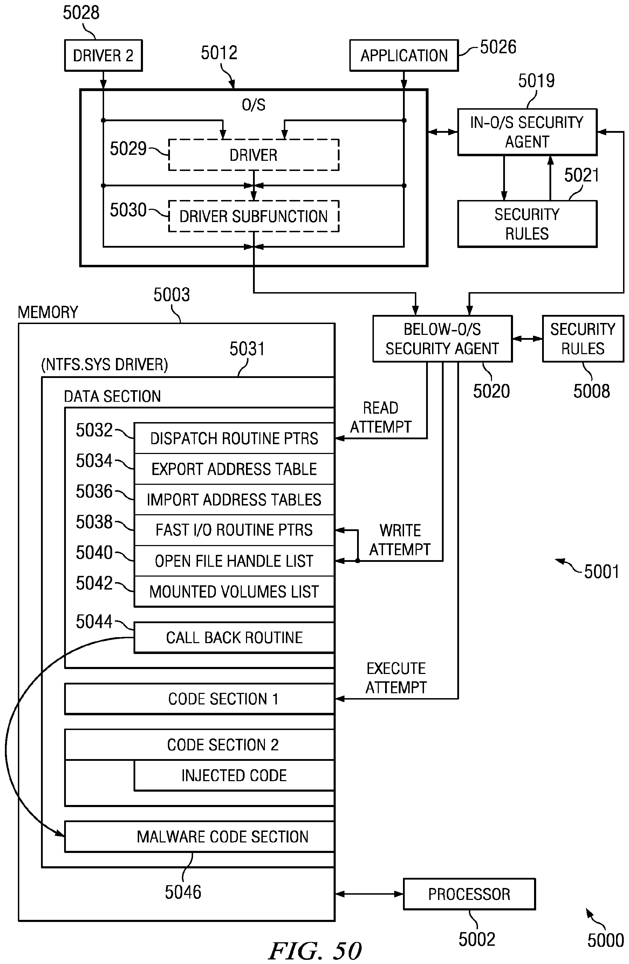

FIGURE 50 is an example embodiment of a system 5000 for securing communication between drivers on an electronic device 5001. System 5000 may include a below-O/S security agent 5020 configured to operate on electronic device 5001 to detect malicious attempts to intercept or subvert communications between drivers of an operating system such as operating system 5012 on electronic device 5001. Furthermore, below-O/S security agent 5020 may be configured to use one or more security rules 5008 to determine, for example, what attempted interdriver communications to trap, what attempted accesses of interdriver communication facilities to trap, or whether the attempts are authorized based on the attempt and the entities involved. Below-O/S security agent 5020 may be configured to allow, deny, or take other corrective action for the trapped attempt.

Electronic device 5001 may be implemented wholly or in part by or configured to implement the functionality of the electronic device 103 of FIGURE 1, electronic device 204 of FIGURE 2, electronic device 404 of FIGURE 4, electronic device 701 of FIGURE 7, electronic device 901 of FIGURE 9, electronic device 1201 of FIGURE 12, and/or any combination thereof. Electronic device 5001 may include one or more processors 5002 coupled to a memory such as memory 5003. Processor 5002 may be implemented wholly or in part by or configured to implement the functionality of processor 208 of FIGURE 2, processor 408 of FIGURE 4, processor 702 of FIGURE 7, processor 1202 of FIGURE 9, processor 1202 of FIGURE 12, or any combination thereof. Memory 5003 may be implemented wholly or in part by or configured to implement the functionality of memory 206 of FIGURE 2, memory 406 of FIGURE 4, memory 703 of FIGURE 7, memory 903 of FIGURE 9, physical memory 1203 or virtual memory 1204 of FIGURE 12, and/or any combination thereof. Electronic device 5001 may include an operating system 5012, which may include an in-O/S security agent 5019 coupled to one or more security rules 5021. Operating system 5012 may be implemented wholly or in part by or configured to implement the functionality of operating system 112 of FIGURE 1, operating system 212 of FIGURE 2, operating system 412 of FIGURE 4, operating system 713 of FIGURE 7, operating system 913 of FIGURE 9, operating system 1213 of FIGURE 12, and/or any combination thereof. In-O/S security agent 5019 may be implemented wholly or in part by or configured to implement the functionality of in-O/S security agent 218 of FIGURE 1, in-O/S security agent 418 of FIGURE 4, and/or in-O/S security agent 719 of FIGURE 7, in-O/S security agent 919 of FIGURE 9, in-O/S security agent 1219 of FIGURE 12, or any suitable combination thereof.

Below-O/S security agent 5020 may be implemented by or configured to implement the functionality of below-O/S trapping agent 104 or triggered event handler 108 of FIGURE 1, SVMM 216 or SVMM security agent 217 of FIGURE 2, firmware security agents 440, 442, below-O/S agent 450, or PC firmware security agent 444 of FIGURE 4, firmware security agent 516 of FIGURE 5, or microcode security agent 708 or below-O/S agent 712 of FIGURE 7, below-O/S trapping agent 920 or triggered event handler 922 of FIGURE 9, below-O/S security agent 1220 of FIGURE 12, and/or any combination thereof.

Security rules 5008 may be implemented by or configured to implement the functionality of security rules 114 of FIGURE 1, security rules 222 of FIGURE 2, security rules 434, 436, 438 of FIGURE 4, security rules 518 of FIGURE 5, security rules 707, 723 of FIGURE 7, security rules 908 of FIGURE 9, security rules 1208 of FIGURE 12, and/or any combination thereof. Security rules 5021 may be implemented by or configured to implement the functionality of security rules 220 of FIGURE 2, security rules 420 of FIGURE 4, security rules 721 of FIGURE 7, security rules 921 of FIGURE 9, security rules 1221 of FIGURE 12, and/or any combination thereof.

Electronic device 5001 may include one or more applications, drivers, or other entities-for example, application 5026 or Driver2 5028-that may try to access a resource of electronic device 5001 in order to communicate with or use a driver such as driver 5029, or an interdriver communications facility of driver 5029. Application 5026 or Driver2 5028 may include any process, application, program, or driver. Application 5026 or Driver2 5028 may attempt to call driver 5029, and thus initiate a sequence of calls that result in an interdriver communication between driver 5029 and another driver. Application 5026 or Driver2 5028, directly or through calls to other routines, may attempt to access facilities of interdriver communication. Application 5026 or Driver2 5028 may attempt to call driver subfunction 5030. All such calls and access to facilities of interdriver communication may be attempted through attempted read, write, or execute operations upon memory 5003, in conjunction with processor 5002. Below-operating system security agent 5020 may be configured to intercept such attempted calls or access to facilities of interdriver communication, consult security rules 5008 and/or contextual information from in-O/S security agent 5019 to determine whether the attempt is indicative of malware, and take any appropriate corrective action. Below-operating system security agent 5020 may be configured to make such interceptions through trapping access to memory 5003 and/or use of processor 5002. Below-operating system security agent 5020 may be configured to access security rules 5008 and determine what attempted access of memory 5003 and/or use of processor 5002 will be trapped. Below-operating system security agent 5020 may be configured to set flags in a control structure corresponding to the actions that are to be trapped.

In one embodiment, application 5026 or Driver2 5028 may attempt to access portions of memory 5003 associated with interdriver communications through a memory page, wherein memory 5003 has been virtualized by operating system 5012. In such an embodiment, below-O/S security agent 5020 may be configured to trap attempted access or execution of memory 5003 on a memory page basis. In another embodiment, application 5026 or Driver2 5028 may attempt to access physical portions of memory 5003 associated with interdriver communications. In such an embodiment, below-O/S security agent 5020 may be configured to trap attempted access of execution of memory 5003 on a memory address basis.

Operating system 5012 and the drivers of electronic device 5001 may provide facilities for interdriver communication. For example, a driver such as NTFS.SYS 5031 may contain dispatch routine pointers 5032, an export address table 5034, import address tables 5036, or fast I/O routine pointers 5038. Dispatch routine pointers 5032 may include pointers to functions of the driver, such as functions embodied in code sections such as CodeSection1, CodeSection2, or Malware Code Section 5046. Export address table 5034 may include pointers to code sections associated with functions, wherein the pointers may be used by other drivers to call the functions of the driver. Import address tables 5036 may contain lists of pointers to functions for one or more other drivers, for the driver to call. Such import address tables 5036 may be the result of importing an export address table of another driver. Such facilities for interdriver communication may be provided for access to data of the driver. Such data of the driver may be specific to the nature and make of the driver. For example, NTFS.SYS 5031 may include data sections or structures for an open file handle list 5040 which may contain pointers to all open files, or a mounted volumes list 5042 which may contain pointers to each storage volume mounted within operating system 5012. The interdriver communication facilities may be prone to attack by malware, and thus below-O/S security agent 5020 may trap attempted access to use of these facilities, the mechanisms underlying them, or the objective of these facilities such as driver data.

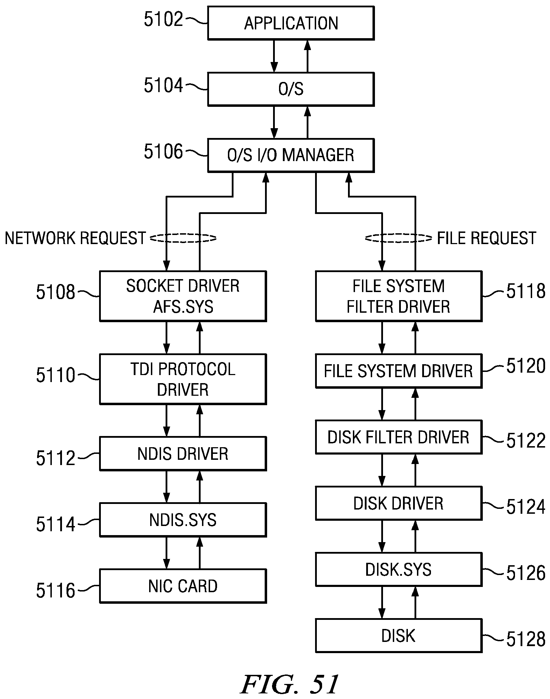

FIGURE 51 is an example illustration of interdriver communication. An application 5102 may attempt to make a request such as a network request for network interface ("NIC") card 5116 or a file request for disk 5128. To reach such devices, the request may be handled through the operating system 5104. Input and output requests of the operating system 5104 may be handled by the operating system input/output manager 5106.

Operating system input/output manager 5106 may send the network request by calling functions available in a series of drivers. Operating system input/output manager 5106 may call SOCKET_DRIVER_AFS.SYS 5108, which may call Type Demand Interface ("TDI") protocol driver 5110, which may call a Network Driver Interface Specification ("NDIS") driver 5112, which may in turn call the NDIS.SYS driver, which may be specific to the hardware of the NIC card 5116. A reply may follow the same chain of drivers to Application 5102.

Likewise, operating system input/output manager 5106 may send the file request by calling functions available in a series of drivers. Operating system input/output manager 5106 may call a file system driver 5120 that has a file system filter driver 5118 attached, which may in turn call a disk driver 5124 with a disk filter driver 5122 attached, which may in turn call a disk driver specific to the disk 5128, such as DISK.SYS, which may handle physical input and output to the disk 5128. A reply may follow the same chain of drivers to Application 5102.

Each of the calls of drivers and kernel modules within FIGURE 51 may be conducted with system-wide calls or by calls specified by the drivers themselves. Malware may attempt to hook, subvert, hijack, spoof, or otherwise attack the call between each of the elements shown in FIGURE 51. Thus, these represent example communications that the below-O/S security agent 5020 of FIGURE 50 may be configured to protect, both as such communications happen and in protecting the mechanisms that enable such communications.

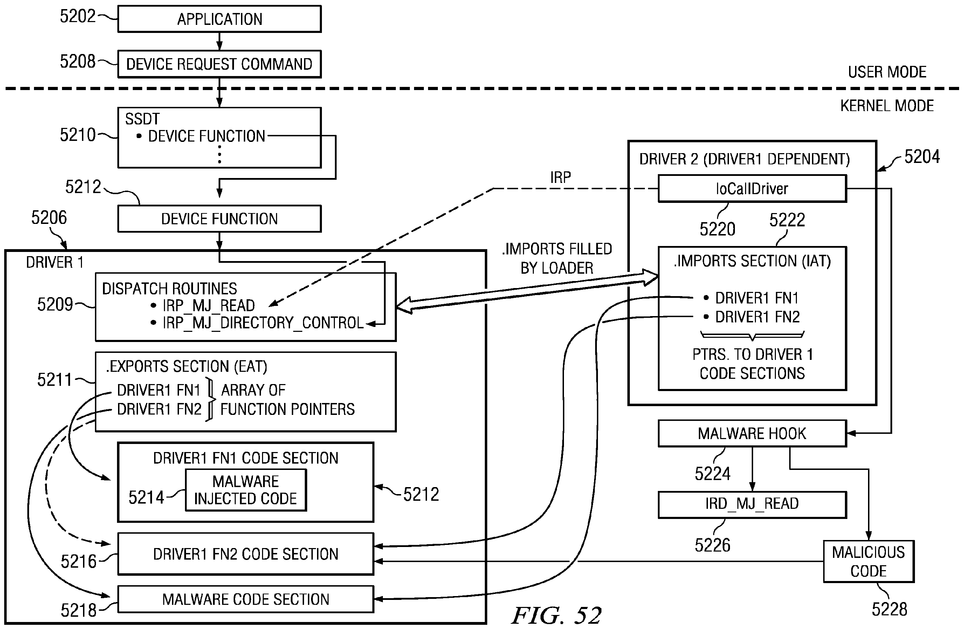

FIGURE 52 is an additional illustration of example portions of an electronic device that a below-O/S security agent, such as below-O/S security agent 5020 of FIGURE 50, may be configured to protect in conjunction with interdriver communication. Interdriver communication may be caused by a request originating in user mode, such as application 5202, or by a request from another driver such as Driver2 5204. An application 5202 may be configured to make a device request command 5208 of a part of an electronic device. The device request command 5208 may be translated into a device function 5212 by a system service dispatch table ("SSDT") 5210. The device function 5212 may be configured to send an I/O request packet ("IRP") corresponding to the request made by application 5202 to the driver associated with the device in question. In FIGURE 52, such a driver may be Driver1 5206, which may be handling an I/O request for directory control. Interdriver communication may be caused by a request originating from another kernel mode driver, such as Driver2 5204.

The below-O/S security agent 5020 of FIGURE 50 may be configured to protect electronic device 5001 against malware, which may attack the interdriver communication in any suitable manner. For example, malware may hook the functions for sending or receiving IRP commands, such as the command IoCallDriver 5220. Such malware may cause the function to misdirect an IRP intended for a designated target (e.g. dispatch routines 5209 containing system-defined functions that the driver may execute). Instead, a malware hook 5224 may be installed over the IoCallDriver 5220 to intercept the request. The malware behind malware hook 5224 may examine the request before sending the request to its original destination, IRP_MJ_READ 5226, or before running malicious code 5228 instead. Thus, a below-O/S security agent may be configured to protect the memory containing instructions for IoCallDriver 5220 or inspect the execution of IoCallDriver 5220 for malicious calls to the driver or callback routines. Below-O/S security agent 5020 may be configured to trap exported functions, or dispatch routines. Below-O/S security agent 5020 may be configured to trap the pointers for such functions or routines within operating system constructs, as well as the execution of the memory locations of the functions themselves. For example, malware may attempt to change a value in a memory location for a pointer in an export address table ("EAT" described in further detail below), or attempt to change the contents of the code section of the function (e.g., to insert a "JMP" to malicious code) itself. By trapping access to the pointer and to the function, a trapped attempt may be decoded to determine the caller of the function.

In another example, Driver1 5206 may maintain an EAT 5211 of functions provided by Driver1 5206 specific to itself that may be called by other entities, such as drivers. EAT 5211 may include a list or array of function pointers pointing to the location of code sections for carrying out the designated function. Malware may change the values of such pointers, such that entries in EAT no longer point to the correct code sections. These pointers may be made to point instead to potentially malicious sections of code such that when the driver function is called by another driver by referencing the pointer in EAT 5211, malicious code is executed. For example, EAT 5211 may normally contain pointers for the function Driver1Fn1, which may point to Driver1 Fn1 Code Section 5214, and for the function Driver1Fn2, which may normally point to Driver1Fn2 Code Section 5216. However, malware may have changed the second pointer such that Driver1Fn2 now points to Malware Code Section 5218. Thus, a below-O/S security agent may be configured to protect the memory space in which the EAT 5211 resides, intercepting write requests and denying such trapped attempts to write to the EAT 5211 unless the writer is verified. Such a verification may include, for example, Driver1 5206 itself updating its functions. A below-O/S security agent may also be configured to trap the execution of any attempted function for writing, changing, or setting the EAT 5211. The below-O/S security agent may also verify that the caller of the attempt is authorized to perform such a function and that the caller has not subverted standard procedure, such as by calling an undocumented subroutine to change EAT 5211.

In yet another example, another driver such as Driver2 5204 may import the EAT 5211 of Driver1 5206 and host the table as its own Import Address Table ("IAT") 5222 associated with the functions of Driver1 5206. Using IAT 5222, Driver2 5204 may be configured to call the functions of Driver1 5206. The IAT 5222 may be filled by an operating system loader. Malware may infect the IAT in several ways. Values in the IAT 5222 may be changed such that a function such as Driver2Fn2 now points to a code section that is malicious, such as Malware Code Section 5218. Thus, a below-O/S security agent may be configured to protect the memory space in which the IAT 5222 resides, intercepting write requests and denying such trapped attempts to write to the IAT 5222 unless the writer is verified. Such a verification may include, for example, the operating system loader loading the IAT 5222. A below-O/S security agent may also be configured to trap the execution of any attempted function for writing, changing, or setting the IAT 5222. The below-O/S security agent may also verify that the caller of the attempt is authorized to perform such a function and that the caller has not subverted standard procedure, such as by calling an undocumented subroutine to change IAT 5222.

In still yet another example, once a driver function such as Driver1Fn1 has been called, code such as that in Driver1 Fn1 Code Section 5212 may begin execution. Malware may rewrite or inject portions of such a code section, such that when the routine is called, malicious code is executed. Thus, a below-O/S security agent may be configured to protect the memory space in which code for driver functions reside, trapping write requests and denying such trapped attempts to write to the code section of a driver unless the writer is verified. Such as a verification may include, for example, determining that the write originates from the driver updating itself with a patch. A below-O/S security agent may also be configured to trap the execution of any attempted function for writing, changing, or setting code sections of driver functions. The below-O/S security agent may also verify that the caller of the attempt is authorized to perform such a function and that the caller has not subverted standard procedure, such as by calling an undocumented subroutine to change code sections of driver functions.

In a further example, code for driver functions may be called directly by malware instead of by accessing an authorized import or export address table. Thus, a below-O/S security agent may be configured to protect the execution of the functions of a driver, such as Driver1 Fn2 Code Section 5216, from direct execution by malicious code 5228. Such a below-O/S security agent may be able to trap execution of the function. The below-O/S security agent may determine from contextual information what drivers have received permission to execute a function on Driver1 5206 by determining what drivers were so updated by the operating system in their respective IATs 5222. The below-O/S security agent may determine from where the call was made, and if such a location does not correspond to the known authorized drivers, the attempt may be denied. In one embodiment, the in-O/S security agent 5019 of FIGURE 50 may register as a driver or driver filter in an operating system to provide contextual information. For example, a rootkit driver may avoid calling NTFS.SYS for file I/O. In-O/S security agent 5019 may register as a filter on NTFS.SYS to see all calls made to or from NTFS.SYS, and then inform below-O/S security agents about what function calls, if any, were used for file I/O by the rootkit.

Returning to FIGURE 50, in operation drivers such as Driver 5029 and Driver2 5028 may communicate through any suitable method. Below-O/S security agent 5020 may trap such communication, or attempted changes to the mechanisms that enable such communications. In one embodiment, below-O/S security agent 5020 may trap and evaluate any of the examples of malicious interference with interdriver communication described in FIGURE 52.

In one example, such communications may include I/O control code sent via an IRP. Below-O/S security agent 5020 may trap an execution of code corresponding to a function call for sending I/O control code via an IRP, validate whether the sender is authorized, and take any corrective action as required.

In another example, such communications may include a call of a code section of a function of a driver, such as Code Section 1. Below-O/S security agent 5020 may trap an attempted execution Code Section 1. Below-O/S security agent 5020 may determine whether the attempted execution arose from a legitimate source using a legitimate means of accessing the function. Below-O/S security agent 5020 may identify the caller, and determine whether the caller is known, and whether any rules prevent execution of the function based on the determined identity of the caller. For example, execution of Code Section 2 may be restricted to drivers who are known and have a digital certificate. Below-O/S security agent 5020 may determine whether Driver2 5028, which may have originated the access, is known as safe according to a whitelist and has a digital certificate. In another example, below-O/S security agent 5020 may determine whether the call was made through driver 5029, or if the call was made through an undocumented subfunction of the driver 5030, without accessing the driver 5029 (and likely the security measures employed therein). A related example may be trapping an attempt by, for example, application 5026 to directly jump or branch into Code Section 1 without using any of the specified driver function mechanisms. Even if application 5026 is not known to be malicious through scanning or its signature, such behavior is highly suspicious and indicative of malware, and thus below-O/S security agent 5020 may determine that the access is indicative of malware.

In yet another example, a callback routine 5044 may be registered in the driver, such as in the driver's data space. The callback routine may be triggered to execute upon the exit of the driver or of a specific driver function. Such a call back routine 5044 may be malicious. As such, below-O/S security agent 5020 may trap the attempted creation of any call back routine by detecting the attempted write to the code section or data section of the driver 5031 within memory. If the attempted writer is known to be malicious then the attempt may be denied. If the attempted writer is unknown, then the write may be allowed but subsequent execution of the callback routine may itself be trapped to determine whether the actions to be performed are malicious. For example, a logger may install a callback routine 5044 in which duplicate network packets are sent to a malicious server. The subsequent behavior of the callback routine may be observed and evaluated for additional indications of malware.

In still yet another example, application 5026 may attempt to read an address from the EAT 5034 and then execute a corresponding function directly. Below-O/S security agent 5020 may trap an attempted read of the EAT 5034 and determine whether the reader is authorized to make such an attempt and a subsequent execution of the function, such as Code Section 1. Such an attempt may indicate that malware has attempted to read the EAT 5034 directly instead of using standardized methods provided by operating system 5012, such as registering as a dependent driver and receiving the function pointer list through its own import address table.

In a further example, Driver2 5028 may attempt to directly manipulate the data section of a driver such as NTFS.SYS 5031. Below-O/S security agent 5020 may trap any attempted manipulations of the data section of a driver to prevent malicious attacks on interdriver communication. For example, below-O/S security agent 5020 may trap an attempted write to the fast I/O routing pointers 5038, and evaluate whether the attempt arose from NTFS.SYS 5031 itself or the operating system 5012. Otherwise, below-O/S security agent 5020 may deny such a trapped attempt determined to arise from another driver such as Driver2. Similarly, if any such critical data is held by the kernel operating system 5012, then below-O/S security agent 5020 may be configured to trap attempted access of the memory containing such data.

In yet another further example, Driver2 5028 may try to obtain information about other third parties from the information of a driver through an attempted read of an import address table 5036. Below-O/S security agent 5020 may trap an attempted read of an import address table 5036 , and deny any attempts not originating from the driver itself such as NTFS.SYS, the third party from which the address table was imported, or the operating system 5012.

In still yet another further example, a function call for accessing a part of a driver may be hooked, allowing malware to gain access to various parts of the electronic device 5001. Below-O/S security agent 5020 may defend against such attacks by protecting the memory in which such function calls reside, trapping attempted writes to add malicious hooks to the system functions. Similarly, below-O/S security agent 5020 may protect the code section of a function against malware that may directly access the code section to inject malicious code. For example, below-O/S security agent 5020 may trap attempted writes to the code of a function housed in Code Section 2, to prevent the addition of injected code.

Because trapping various resources associated with interdriver calls may be expensive, below-O/S security agent 5020 may enable or disable trapping of such resources as required. For each trapped attempt, below-O/S security agent 5020 may identify the acting driver or module, identify the target driver, and identify the access type. Such a type may include a read, write or execute type. Below-O/S security agent 5020 may consider these elements, along with any other suitable criteria for evaluating whether or not an attempt to access the resources of the electronic device 5001 are malicious.

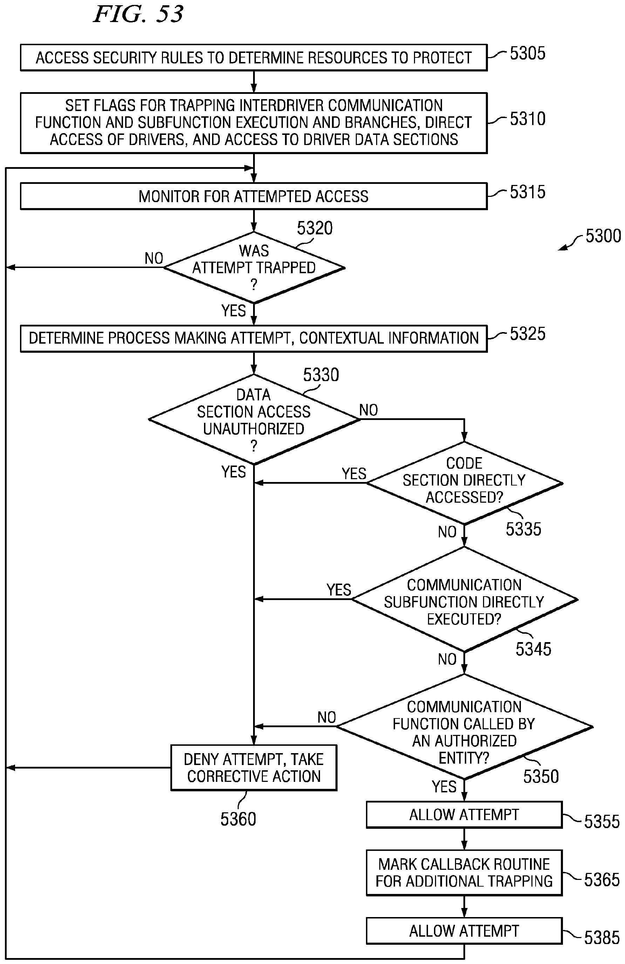

FIGURE 53 is an example embodiment of a method 5300 for below-operating-system trapping of interdriver communication in an electronic device. In step 5305, security rules may be accessed to determine resources associated with interdriver communication to be protected. Such security rules may identify the resources, as well as criteria by which attempted access to the resources will be trapped and evaluated.

In step 5310, flags may be set in a control structure below the level of operating systems within the electronic device. Flags may be set, for example, for trapping the attempted execution of interdriver communication functions, execution of load interdriver communication subfunctions, reads or writes to the data or code sections of drivers loaded in memory, and/or jumps, branches, or other direct execution of code sections of driver for interdriver communication. Flags may be set for virtual memory access through memory pages and/or through physical memory access through memory addresses corresponding to the attempts described above.

In step 5315, the electronic device may be monitored for trapped attempts to access the resources associated with interdriver communication. In step 5320, if no attempts have been trapped, then the process 5300 may proceed to step 5315 to continue monitoring for trapped attempts. If an attempt has been trapped, then the attempt may be handled beginning in step 5325. Such handling may be conducted below the level of operating systems of the electronic device. In step 5325, information useful for analyzing whether the attempt is malicious may be gathered. For example, the process, application, driver, or routine making the attempt may be determined. Contextual information from inside the operating system of the electronic device may be obtained from an in-O/S security agent.

In step 5330, it may be determined whether an attempted access of the data section of a driver related to interdriver communication is unauthorized. Such data section contents may include EAT, IAT, or any other suitable information. If so, then in step 5360 it may be determined that the attempt is suspicious and/or malicious, and the attempt may be denied.

If not, in step 5335, it may be determined whether the contents of a function for interdriver communication were directly accessed without using an authorized function. In one embodiment, it may be determined whether the calling process or routine is unauthorized to access such portions of the driver. If so, then in step 5360 it may be determined that the attempt is suspicious and/or malicious, and the attempt may be denied. Any suitable corrective action may be taken. If not, then in step 5345 it may be determined whether an interdriver communication subfunction was executed directly without using functions designated for such access. In one embodiment, it may be determined whether the calling process or routine is unauthorized to make such an attempt. If so, then in step 5360 it may be determined that the attempt is suspicious and/or malicious, and the attempt may be denied. If not, then in step 5350 it may be determined whether the interdriver communication function was called by an authorized entity or whether an attempted branch, jump, or other direct execution was called by an authorized entity. If not, then in step 5360 it may be determined that the attempt is suspicious and/or malicious, and the attempt may be denied. If so, in step 5355 the attempt may be allowed.

If the attempt is allowed, and the attempt is for registering a callback function, then in step 5365 the memory allocated for the newly added callback function may be marked for additional trapping. Such a step may especially be taken if the entity attempting to register the callback function was unknown, or if the malware status of the entity that registered the callback could not be conclusively determined. Thus, subsequent read, write, or executions by the code of the callback function may be trapped and evaluated. Otherwise, in step 5385 the driver may be allowed to execute. The method 5300 may optionally return to step 5315 to continue monitoring for attempted accesses to resources of the electronic device for interdriver communication.

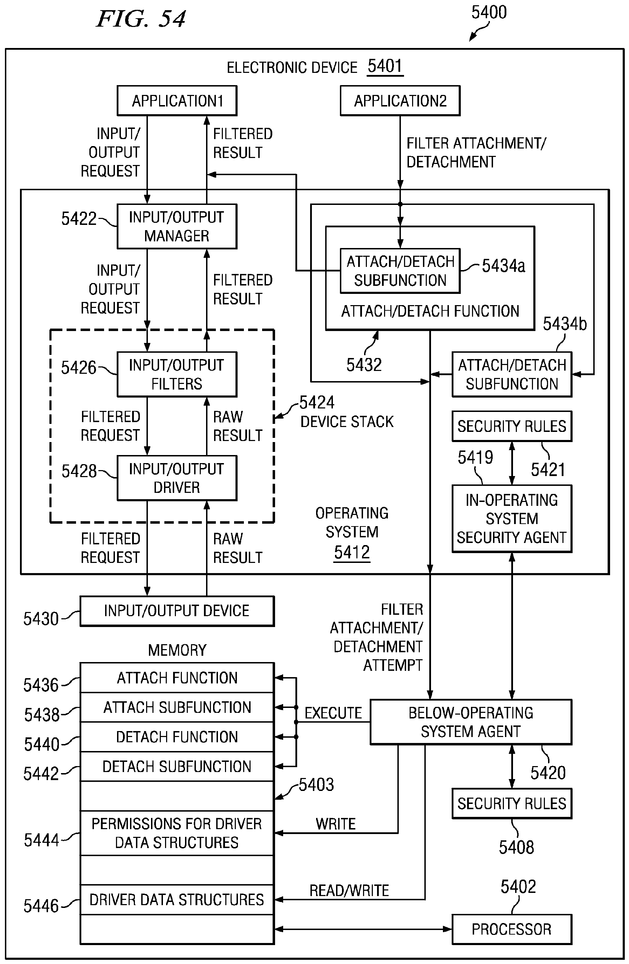

FIGURE 54 is an example embodiment of a system 5400 for securing the attachment and detachment of driver filters on an electronic device 5401. System 5400 may include a below-O/S security agent 5420 configured to operate on electronic device 5401 to detect malicious attempts to attach or detach driver filters in operating systems of electronic device 5401 such as operating system 5412. Furthermore, below-O/S security agent 5420 may be configured to use one or more security rules 5408 to determine what attempted attachments or detachments of driver filters may correspond to the trapped operation and whether the attempts are authorized based on the attempt and the entity conducting the attempt. Below-O/S security agent 5420 may be configured to allow, deny, or take other corrective action for the trapped event.

Electronic device 5401 may be implemented wholly or in part by or configured to implement the functionality of the electronic device 103 of FIGURE 1, electronic device 204 of FIGURE 2, electronic device 404 of FIGURE 4, electronic device 701 of FIGURE 7, electronic device 901 of FIGURE 9, electronic device 1201 of FIGURE 12, and/or any combination thereof. Electronic device 1201 may include one or more processors 1202 coupled to a memory such as physical memory 1203. Processor 5402 may be implemented wholly or in part by or configured to implement the functionality of processor 208 of FIGURE 2, processor 408 of FIGURE 4, processor 702 of FIGURE 7, processor 1202 of FIGURE 9, processor 1202 of FIGURE 12, or any combination thereof. Memory 5403 may be implemented wholly or in part by or configured to implement the functionality of memory 206 of FIGURE 2, memory 406 of FIGURE 4, memory 703 of FIGURE 7, memory 903 of FIGURE 9, physical memory 1203 or virtual memory 1204 of FIGURE 12, and/or any combination thereof. Electronic device 5401 may include an operating system 5412, which may include an in-O/S security agent 5419 coupled to one or more security rules 5421. Operating system 5412 may be implemented wholly or in part by or configured to implement the functionality of operating systems 112 of FIGURE 1, operating system 212 of FIGURE 2, operating system 412 of FIGURE 4, operating system 713 of FIGURE 7, operating system 913 of FIGURE 9, operating system 1213 of FIGURE 12, and/or any combination thereof. In-O/S security agent 5419 may be implemented wholly or in part by or configured to implement the functionality of in-O/S security agent 218 of FIGURE 1, in-O/S security agent 418 of FIGURE 4, and/or in-O/S security agent 719 of FIGURE 7, in-O/S security agent 919 of FIGURE 9, in-O/S security agent 1219 of FIGURE 12, or any suitable combination thereof.

Below-O/S security agent 5420 may be implemented by or configured to implement the functionality of below-O/S trapping agent 104 or triggered event handler 108 of FIGURE 1, SVMM 216 or SVMM security agent 217 of FIGURE 2, firmware security agents 440, 442, below-O/S agent 450, or PC firmware security agent 444 of FIGURE 4, firmware security agent 516 of FIGURE 5, or microcode security agent 708 or below-O/S agent 712 of FIGURE 7, below-O/S trapping agent 920 or triggered event handler 922 of FIGURE 9, below-O/S security agent 1220 of FIGURE 12, and/or any combination thereof.

Security rules 5408 may be implemented by or configured to implement the functionality of security rules 114 of FIGURE 1, security rules 222 of FIGURE 2, security rules 434, 436, 438 of FIGURE 4, security rules 518 of FIGURE 5, security rules 707, 723 of FIGURE 7, security rules 908 of FIGURE 9, security rules 1208 of FIGURE 12, and/or any combination thereof. Security rules 5421 may be implemented by or configured to implement the functionality of security rules 220 of FIGURE 2, security rules 420 of FIGURE 4, security rules 721 of FIGURE 7, security rules 921 of FIGURE 9, security rules 1221 of FIGURE 12, and/or any combination thereof.

Electronic device 5401 may include one or more applications, drivers, or other entities-for example, "Application 1 "-that may try to access a resource of electronic device 5401 using a driver. In one embodiment, such a resource may be an I/O device 5430. I/O device 5430 may include, for example, a storage device, display device, peripheral, keyboard, or any other device or component for electronic device 5401 to use for input and output. In one embodiment, I/O device 5430 may be a virtual device. Operating system 5412 may handle the request for the resource. In one embodiment, operating system 5412 may include a handler for such requests such as I/O manager 5422. I/O manager 5422 may be configured to parse and handle the request for the resource and direct the request to the appropriate driver for further handling of the request. For example, I/O manager 5422 may send an I/O request from Application1 to I/O driver 5428. Operating system 5412 may include any suitable number and variety of drivers to manage and translate requests for resources, including but not limited to display, keyboards, disk storage, serial, Universal Serial Bus (USB), Firewire, IEEE-488, plug-in boards, printers, computer buses, or networking. Drivers such as I/O driver 5428 may be configured to perform direct addressing to, for example, I/O devices. In one embodiment, operating system 5412 may include virtual device drivers, which may emulate a hardware device.

I/O driver 5428 may be accessible by use of a structure such as device stack 5424. Device stack 5424 may be a construct including the driver and any additional driver filters. For example, device stack 5424 may include one or more I/O filters residing on top of I/O driver 5428. A request, such as an I/O request, may be sent to the driver 5428 through the driver stack 5424, but intercepted by the I/O filters 5426. Operating system 5412 may include any suitable number and variety of driver filters to perform specialized operations for a driver or resource. For example, driver filters such as I/O driver filters 5426 may condition or format the request, provide optimization, cache results, or perform any other suitable function. The specific implementation of driver filters such as I/O driver filters 5426 may depend upon the nature and/or the identity of the driver itself. For example, some driver filters may be applicable to all drivers of a particular kind, such as display, keyboards, or file storage, while some driver filters may be applicable to a specific brand or model of a particular driver. After receiving a request such as I/O request, the filters such as I/O filters 5426 may conduct operations on or on behalf of the request and then pass a filtered request to the driver such as I/O driver 5428. I/O driver 5428 may communicate with a device such as I/O device 5430 and receive a raw result in return. The raw result is sent back through the same filters, such as I/O filters 5426. The I/O filters 5426 may filter the results for formatting, content, presentation, or any other suitable purpose. The filtered result may then be passed back to the entity that called the device stack, such as I/O manager 5422 or eventually Application1.

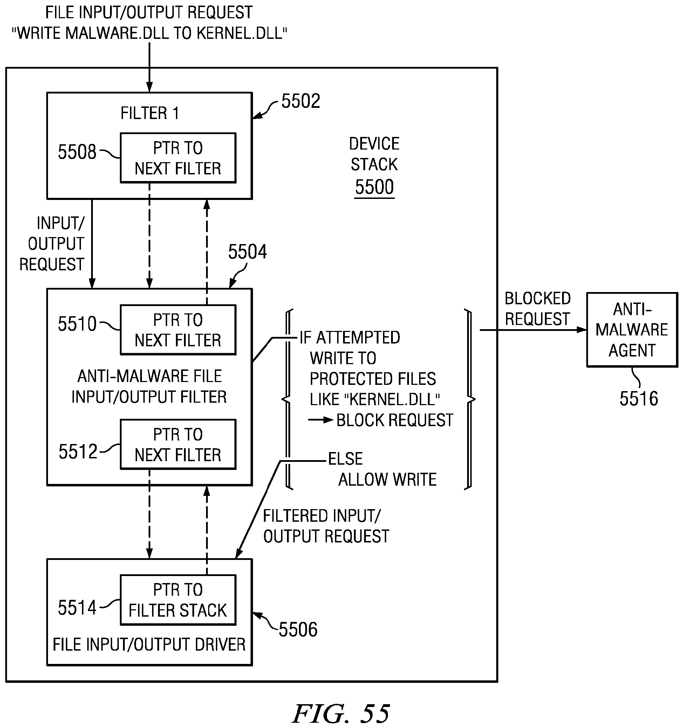

FIGURE 55 is a more detailed illustration of the operation of an example device stack 5500. For illustrative purposes, device stack 5500 may be configured as a file I/O driver stack for interfacing applications with files on a storage disk. Device stack 5500 may include "Filter1" 5502 and anti-malware file I/O filter 5504 configured to filter requests to and from file I/O driver 5506. The base of the device stack 5500 may be the file I/O driver 5506, and requests may enter the device stack 5500, be passed down to the driver, and results returned up and accessed at the top of the device stack 5500. For example, requests may be received by Filter1 5502, passed to anti-malware file I/O filter 5510, then passed to file I/O driver 5506. Each filter may be configured to perform its individual filtering operations before passing the request up or down the stack. File I/O driver 5506 may be configured to conduct the filtered I/O request and return the results, if any, to anti-malware file I/O filter 5504, which may be configured to return its own filtered results to Filter1 5502. Filter1 and anti-malware file I/O filter 5504 may each be configured to perform filtering operations on the results. The filters of device stack 5500 may be configured to filter any suitable request, such as a read, write, or execute.

Device stack 5500 may include any suitable mechanism for organizing the stack and facilitating communication between filters and drivers within device stack 5500. For example, device stack 5500 may include data structures for identifying the base of device stack 5500, as well as identifying an order of filters. An example data structure for ordering the device stack 5500 may include pointers 5508, 5510, 5512, or 5514. Each pointer may include the address of the next entity located upward or downward in the stack. For example, anti-malware file I/O filter 5510 may include pointer 5512 to point to the next entity down the stack, which may be the file I/O driver 5514, and a pointer 5510 to the next entity up the stack, which may be Filter1 5502. Such an example data structure may be implemented by a device object.

Filter1 5502 may be configured to receive a file I/O request such as "Write Malware.DLL to Kernel.DLL," a command instructing the contents of a file "Kernel.DLL" to be overwritten by another file "Malware.DLL." Filter1 5502 may receive the request, perform its operations upon the request, and pass the request to the next entity down the stack, which may be anti-malware file I/O filter 5504. Anti-malware file I/O filter 5504 may be configured to protect core files of the system from tampering by unauthorized programs. For example, malware may attempt to change or delete certain system files, such as kernel operating system contents, master boot records, or anti-malware software files. In the example of FIGURE 55, the request may be an attempt to write over such a protected file, such as "Kernel.DLL," with an unknown, potentially malicious file "Malware.DLL" and/or the request may originate from a process other than the kernel processes of the operating system. Thus, anti-malware file I/O filter 5504 may be configured, for example, to filter such a request and to block the request from ever reaching file I/O driver 5506. Anti-malware file I/O filter 5504 may be configured to send the blocked request to an anti-malware agent 5516 running on the system for further analysis. In one embodiment, anti-malware agent may be implemented fully or in part by the in-O/S security agent 5419 of FIGURE 54, or by any other suitable anti-malware module, software, system, or process. Anti-malware file I/O filter 5504 may be configured to return a spoofed reply up the stack, so that the entity attempting the request may proceed as if the write had been successful. Otherwise, if the write attempt is not deemed suspicious or malicious, then anti-malware file I/O filter 5504 may be configured to pass the request to file I/O driver 5506, and return the result to Filter1 5502.

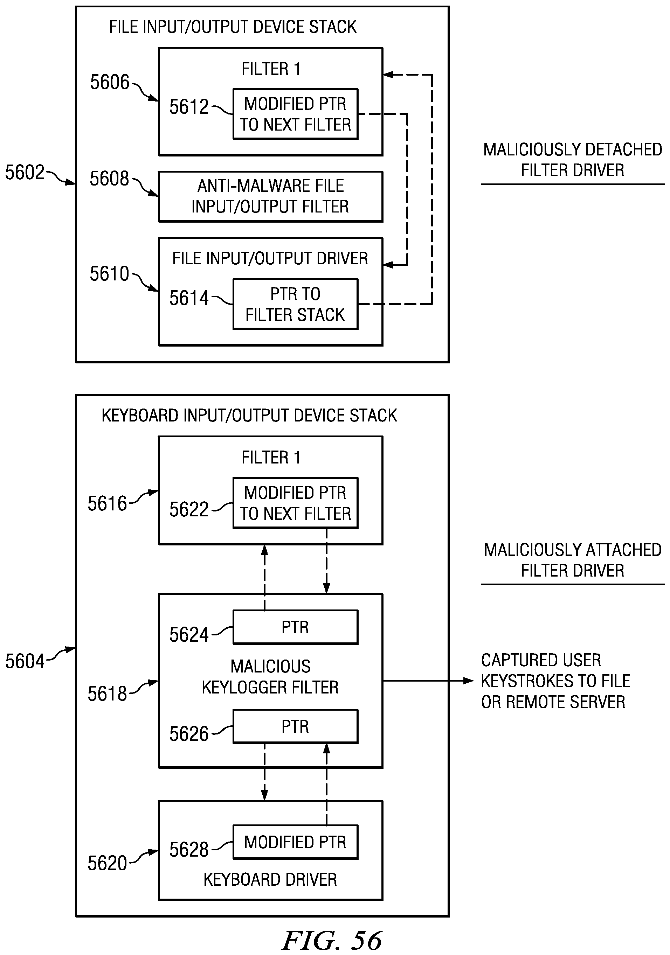

FIGURE 56 is an example illustration of device stacks that may have been compromised by malware acting to attach or detach driver filters. File I/O device stack 5602 may be an implementation of a device stack as described by device stack 5424 of FIGURE 54 or device stack 5500 of FIGURE 55. File I/O device stack 5602 may be configured to provide access to a file I/O driver 5610, and include a filter such as "Filter1" 5606, and anti-malware file I/O filter 5608. Anti-malware file I/O filter 5608 may be an implementation of anti-malware file I/O filter 5504 of FIGURE 55. Anti-malware file I/O filter 5608 may have been detached from the driver stack 5602. Such a detachment may have been accomplished by a system function call for detaching or removing a driver filter or by direct manipulation of data structures of file I/O device stack 5602. Filter1 5606 may no longer pass a request through anti-malware file I/O filter 5608 and may instead bypass it and send the request directly to the next entity, such as file I/O driver 5610. The pointer 5612 may have been modified to point instead to the next entity past anti-malware file I/O filter 5608. The file I/O driver 5610 may no longer receive the request as filtered by anti-malware file I/O filter 5608. In response to a received request, file I/O driver 5610 may send a reply back to Filter1, as the pointer 5614 of the file I/O driver 5610 may be been modified so that anti-malware file I/O filter 5608 is no longer at the base of the filters. Thus, anti-malware file I/O filter 5608 may be effectively removed from file I/O device stack 5602.

The removal of anti-malware file I/O filter 5608 may have been authorized or may have been the result of a malware attack. Malware operating at the same execution priority, such as Ring0, as anti-malware file I/O filter 5608 may be successful in detaching the filter without detection. Although anti-malware file I/O filter 5608 is shown as an example, other driver filters may be similarly attacked.

Keyboard I/O device stack 5604 may be a full or partial implementation of device stack as described by device stack 5424 of FIGURE 54 or device stack 5500 of FIGURE 55. Keyboard I/O device stack 5604 may be configured to provide access to a keyboard device of a system. In one embodiment, keyboard I/O device stack 5604 may have originally included a filter such as Filter1 5616 on top of keyboard driver 5620. However, a driver filter attachment operation may have attached malicious keylogger filter 5618 into keyboard I/O device stack 5604. A data structure of the stack, such as pointer 5622 of Filter1 5616 or pointer 5628 of the keyboard driver 5620, may have been modified to allow malicious keylogger filter 5618 to be inserted between Filter1 5616 and keyboard driver 5620. Such an operation may have been accomplished through system function calls to attach the driver filter or by direct manipulation of the data structures of keyboard I/O device stack 5604. Malicious keylogger filter 5618 may be configured to capture user keystrokes and save them to file or a remote server.

Malicious keylogger filter 5618, or other potentially malicious filters may be installed at a position in the stack that avoids detection from anti-malware software. For example, a potentially malicious filter may be installed at a position lower in the stack than an anti-malware filter such that whatever corrective actions are accomplished by the anti-malware filter may be undone by the malicious filter. Furthermore, a malicious filter may be inserted into a stack in place of a trusted filter such that the operation of the malicious filter is disguised.

Returning to FIGURE 54, anti-malware software running at the level of the operating system 5412 may be unable to fully address malicious attachment and detachment of driver filters, because malware conducting such activities may also be running at the same priority level.

Below-O/S security agent 5420 may be configured to intercept attempts to attach or detach a driver filter at a level below operating system 5412. Below-O/S security agent 5420 may be configured to consult security rules 5408 to determine resources associated with attachment and detachment of driver filters and to trap attempted access to such resources. Such resources may include, for example, portions of memory 5403. After trapping such attempted accesses, below-O/S security agent 5420 may be configured to determine based on security rules 5408 whether the entity attempting the access is authorized to take the action. Below-O/S security agent 5420 may be configured to allow or deny the request or take another appropriate action.

In one embodiment, memory 5403 may include virtual memory. In such an embodiment, memory 5403 may contain memory pages that include: code for attach functions 5436, attach subfunctions 5438, detach functions 5440, and/or detach subfunctions 5442f; data form permissions 5444 of driver data structures; and/or driver data structures 5446 themselves. Attach functions 5436 and detach functions 5440 may be provided by the operating system 5412 for entities within electronic device 5401 to attach or detach drivers. Such entities may normally call attach functions 5436 or detach functions 5440. By providing attach functions 5436 and detach functions 5440, the operating system 5412 may provide controlled, secured, and efficient mechanisms for the entities of electronic device 5401 to add or remove driver filters. However, attach subfunctions 5438 and detach subfunctions 5442 may be undocumented or otherwise discouraged from use by operating system 5412. Attach subfunctions 5438 and detach subfunctions 5442 may be intended only for use by associated attach functions 5436 and detach functions 5440. Malware may bypass the security and control mechanisms of attach functions 5436 and detach functions 5440 by calling individual instances of attach subfunctions 5438 and detach subfunctions 5442.

In another embodiment, memory 5403 may include physical memory. In such an embodiment, memory 5403 may include memory addresses that include: code for attach functions 5436 of the system, attach subfunctions 5438, detach functions 5440, detach subfunctions 5442; data regarding permissions 5444 of driver data structures; and/or driver data structures 5446 themselves.

Code for attach functions 5436 may include any code for any functions designated by system 5400 or operating system 5412 for an application or driver to enable a driver filter. Such functions may include functions for attaching a driver filter to a driver stack, such as one of I/O filters 5426 to device stack 5424. These functions may in turn call subroutines or other functions to carry out specific tasks in enabling a driver filter. Memory containing code for detach functions 5440 may include any code for any functions designated by system 5400 or operating system 5412 for an application or deriver to disable a driver filter. Such functions may include functions for detaching a driver filter from a driver stack, such as one of I/O filters 5426 from device stack 5424. These functions may in turn call subroutines or other functions to carry out specific tasks in disabling a driver filter. In one example, Windows™ attach functions 5436 may include but are not limited to: IoAttachDevice(), IoAttachDeviceByPointer(), IoAttachDeviceToDeviceStack(), and IoAttachDeviceToDeviceStackSafe(). In another example, Windows™ detach functions 5440 may include but are not limited to: IoDeleteDevice() and IoDetachDevice().

Code for such subroutines or other functions may be included in memory containing code for attach subfunctions 5438 or detach subfunctions 5442. Malware may call the subfunctions directly to avoid detection by operating system 5412. Thus, if an entity of system 5400 has called such a subfunction directly, without using the code in memory for standard functions such as attach function 5436 or detach function 5440, then the attempted access may be determined to be suspicious. In one example, Windows™ attach subfunctions may include but are not limited to IopAttachDevicetoDeviceStackSafe(). Such a subfunction may be called by each of the instances of the Windows™ attach functions 5436.

Permissions 5444 for driver data structures may include a table, flags, or any other suitable data structure or indication for setting the ability to read, write, or execute data structures associated with a device stack such as device stack 5424. Such permissions 5444 may control, for example, the ability to write or read the pointers in a device stack such as pointers 5508, 5510, 5512, or 5514 of FIGURE 55 or pointers 5612, 5614, 5622, 5624, 5626, or 5628 of FIGURE 56. An unauthorized attempt to change the permissions 5444 in memory 5403 may indicate a first step in an attempt by malware to maliciously attach or detach a driver filter such as one of I/O filters 5426.

Driver data structures 5446 may include any suitable data structure for organizing a driver or device stack, such as I/O driver 5428 or device stack 5424. For example, driver data structures 5446 may include pointers 5508, 5510, 5512, or 5514 of FIGURE 55 or pointers 5612, 5614, 5622, 5624, 5626, or 5628 of FIGURE 56. Even if malware has thoroughly disguised its call routines, attaching or detaching a driver filter may require changing values in driver data structures 5446. Thus, an unauthorized attempt to change the values of driver data structures 5446 may indicate malware.

Below-O/S security agent 5420 may be configured to protect the driver filter-related contents of memory 5403 on a physical memory and/or virtualized memory basis. For example, below-O/S security agent 5420 may be configured to intercept requests that attempt to read, write, or execute memory pages containing: code for attach functions 5436, attach subfunctions 5438, detach functions 5440, detach subfunctions 5442; data form permissions 5444 of driver data structures; and/or driver data structures 5446 themselves. In such an example, below-O/S security agent 5420 may be implemented fully or in part in a virtual machine monitor. In another example, below-O/S security agent 5420 may be configured to intercept requests that attempt to read, write, or execute memory addresses containing: code for attach functions 5436, attach subfunctions 5438, detach functions 5440, and/or detach subfunctions 5442; data form permissions 5444 of driver data structures; and/or driver data structures 5446 themselves.

Below-O/S security agent 5420 may be configured to intercept such a request of driver filter-related contents of memory 5403 and evaluate the request in light of contextual information. Such contextual information may include the entities that made the request, the nature of the request (e.g. read, write, or execute), values of an attempted write, the manner in which an entity made the request, previous attempts to request driver filter-related contents of memory 5403, and/or information from in-O/S security agent 5419 regarding the operation of entities at the level of operating system 5412 that may have attempted to access memory 5403.

Based on the evaluation of the request, below-O/S security agent 5420 may be configured to allow the request, deny the request, send a spoofed response back to the calling entity, or take any other suitable corrective action.

In operation, below-O/S security agent 5420 may be operating on electronic device 5401 to secure the attachment and/or detachment of driver filters. An application, driver, or other entity such as "Application2" may originate a filter attachment or detachment attempt. Application2 may be operating, for example, in user mode, kernel mode, at the same level of the operating system 5412, or at a higher level than the operating system 5412. Below-O/S security agent 5420 may access security rules 5408 to determine how to protect the attachment and detachment of driver filters on electronic device 5401. Below-O/S security agent 5420 may set control structure flags to capture, for example: attempted execution of memory pages or addresses for the code of attach function 5436, attach subfunction 5438, detach function 5440, and/or detach subfunction 5442; attempted writes of memory pages or addresses for permissions 5444 for driver data structures; and/or attempted reads or writes of driver data structures 5446. Application2 may attempt to access driver filters such as I/O filters 5426 through a variety of mechanisms, including by accessing contents of memory 5403 associated with such driver filters.

In one embodiment, Application2 may attempt the filter attachment or detachment through, for example, a direct manipulation of values in memory 5403, such as attempting to write to permissions 5444 for driver data structures. Such an attempted write may be an attempt to change read-only permissions on a driver data structure to read/write so that subsequently values of the data structures may be rewritten to attach or detach a driver filter. Such an attempt may bypass standardized and secured mechanisms for accessing driver filters such as I/O filters 5426. By bypassing such mechanisms, the attempt may be disguised from, hidden from, or otherwise thwart security measures of operating system 5412.

In another embodiment, Application2 may attempt the filter attachment or detachment by calling and running an attach or detach function 5432 provided by operating system 5412 for such operations. Such an attach or detach function 5432 may in turn call and run an instance of an attach or detach subfunction 5434a. The attach or detach subfunction 5434a may perform the specific calls that lead to an attempted access of the driver data structures 5446 or access to permissions 5444 for such driver data structures. The attach or detach function 5432 may be provided by operating system 5412 as a standardized, protected mechanism of accessing driver filters such as I/O filters 5426. The attach or detach function 5432 may be secured so that only certain processes of operating system 5412 may use the function to access the driver filters.

In yet another embodiment, Application2 may attempt the filter attachment by calling and running an instance to the attach or detach subfunction 5434b directly, without using the functions such as attach or detach function 5432 provided by operating system 5412 for standardized, protected access to driver data structures 5446. If operating system 5412 does not include mechanisms for securing and authorizing the use of attach or detach subfunction 5434b, as may be done for attach or detach function 5432, then direct use of subfunction 5434b may be used by malware to hide or disguise itself or otherwise thwart security measures of operating system 5412.

Below-O/S security agent 5420 may trap the attempted access to driver filter-related contents of memory 5403. Below-O/S security agent 5420 may include a control structure to determine how to process an intercepted access. Below-O/S security agent 5420 may access security rules 5408 or a protection server to determine how to handle such an attempted access.

For example, an attempt by Application2 to execute attach function 5436 or detach function 5440 may be trapped. The use of such functions, which may be provided by the operating system as a standardized or secured method for accessing I/O filters 5426, may be restricted to, for example, digitally signed drivers. Thus, in one embodiment below-O/S security agent 5420 may access security rules 5408 to determine the rule requiring that the driver be digitally signed, determine the calling application or driver, and determine whether the driver is signed or not. Below-O/S security agent 5420 may access in-O/S security agent 5419, which may be able to access operating system 5412 to determine the signed status of Application2. Such an access may be made by examining the calling stack of operating system 5412. In another embodiment, below-O/S security agent 5420 may determine whether Application2 is a on a blacklist, a whitelist, or is unknown as to malicious status based on, for example, a hash of Application2. Below-O/S security agent 5420 may determine that if Application2 is unknown, Application2 may be blocked as a precaution, or perhaps information regarding Application2 may be reported to a protection server. Furthermore, if Application2 is known, below-O/S security agent 5420 may monitor the operation of Application2 with greater scrutiny by trapping more of the operations of Application2. Below-O/S security agent 5420 may determine that Application2 comprises malware, block Application2, clean electronic device 5401 of Application2, or take other corrective action.

In another example, an attempt by Application2 to execute attach subfunction 5438 or detach subfunction 5442 may be trapped. The use of such functions may normally only be conducted through use of a standardized or secured mechanism such as attach function 5436 or detach function 5438. Thus, in one embodiment below-O/S security agent 5420 may trap based upon the routine that called attach subfunction 5438 or detach subfunction 5442 if the routine is not one of the standardized or secured mechanisms, which may be known and enumerated. In another embodiment, below-O/S security agent 5420 may trap all attempted accesses of attach subfunction 5438 or detach subfunction 5442, subsequently determine the calling routine, and deny the request if the calling routine is not one of the standardized or secured mechanisms. A calling routine may be determined, for example, through information in device stack 5424, driver data structures 5446, or by determining from which memory page or memory address in memory 5403 the command to execute the subfunction was made and correlating the page or address with a memory map. If the calling routine is determined to be an instance of attach function 5436 or detach function 5442, then the routine that called these functions may be verified as previously described. Below-O/S security agent 5420 may deny any call of attach subfunction 5438 or detach subfunction 5442 not arising out of a call of an authorized attach or detach function.

In yet another example, attempts by Application2 to write permissions 5444 for driver data structures or to read or write the driver data structures 5446 may be trapped by below-O/S security agent 5420. Trapping on all such attempts may include the trapping of such attempts arising out of the execution of detach or attach functions. Thus, upon trapping such attempts, below-O/S security agent 5420 may determine from what portion of memory or from what entity such an attempt was made. If such an attempt was made from an authorized function, then the attempt may be allowed. The caller of the authorized function itself may be verified as previously described. If such an attempt was not made from an authorized function, then the attempt may be indicative of a malicious attempt to directly manipulate device stack 5424 by Application2 and the attempt may be blocked.

Below-O/S security agent 5420 may consider the type of device when determining whether an attempt is malicious or not. For example, virtual disk volumes may be particularly prone to exploitation by filters. Thus, below-O/S security agent 5420 may access driver data structures 5446 such as an object to determine the type of device, and, if the type is "FILE_VIRTUAL_VOLUME," require that the requestor be digitally signed. Such a requirement may be independent of requirements by operating system 5412. Other types of device objects that may be considered when determining whether to trap an attempt or determine whether the attempt is malicious may include but are not limited to: write once media, virtual volumes, removable media, remote devices, floppy diskettes, read-only devices, mounted devices, plug-and-play devices, or devices with automatically generated names. Security rules 5408 may include considerations of such types of device objects. For example, a device of a modem type may be protected against all attachment if the calling driver is unknown. This may allow below-O/S security agent 5420 to prevent malicious drivers from sniffing on fax and modem operations. In another example, a driver of a device-scanner may be protected against all attachment if no known legitimate filter usage exists for drivers of the device-scanner.

As described above, below-O/S security agent 5420 may trigger or handle an attempt based upon the entity that attempted to access the I/O filters 5426. Furthermore, below-O/S security agent 5420 may determine the owning driver of the device that is to be accessed and consider such information when determining whether an attempt is malicious or not. Driver data structures 5446 or device data structures may each contain information linking the driver and device. Such data structures may be accessed to determine the relationship between the driver and the device. If, for example, an attempt to access I/O filters 5426 is made by Application2 but it is determined that Application1 owns I/O device 5430, then the request may be denied.

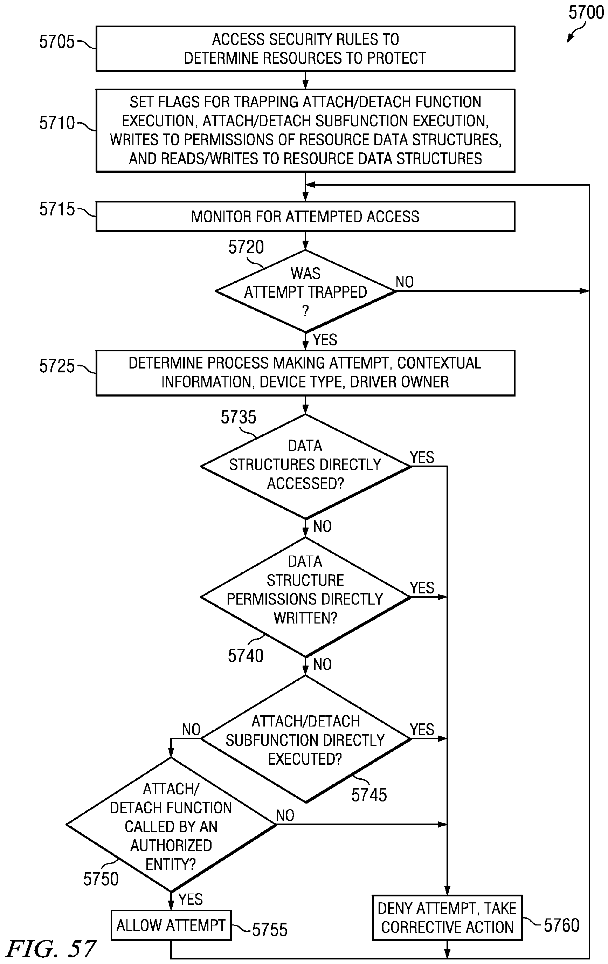

FIGURE 57 is an example embodiment of a method 5700 for below-operating-system trapping of driver filter attachments in an electronic device. In step 5705, security rules may be accessed to determine resources associated with driver filter attachment to be protected. Such security rules may identify the resources, as well as criteria by which attempted access to the resources will be trapped and evaluated.

In step 5710, flags may be set in a control structure below the level of operating systems within the electronic device. Flags may be set, for example, for trapping the attempted execution of attach functions or detach functions, execution of attach subfunctions or detach subfunctions, writes to the read/write/execute permissions of driver and device data structures, and/or reads or writes to the data structures themselves. Flags may be set for virtual memory access through memory pages and/or through physical memory access through memory addresses corresponding to the attempts described above.

In step 5715, the electronic device may be monitored for trapped attempts to access the resources associated with the attachment of driver filters. In step 5720, if no attempts have been trapped then the process 5700 may proceed to step 5715 to continue monitoring for trapped attempts. If an attempt has been trapped, then the attempt may be handled beginning in step 5725. Such handling may be conducted below the level of operating systems of the electronic device. In step 5725, information useful for analyzing whether the attempt may be malicious may be gathered. For example, the process, application, driver, or routine making the attempt may be determined. Contextual information from inside the operating system of the electronic device may be obtained from an in-O/S security agent. The device type of the device associated with the attempt may be determined, as may the owning driver of the device.

In step 5735, it may be determined whether data structures of the device object or driver stack were directly accessed without using an authorized function. In one embodiment, it may be determined whether the calling process or routine is unauthorized to access such data structures. If data structures have been directly accessed, then in step 5760 it may be determined that the attempt is suspicious and/or malicious, and the attempt may be denied. Any suitable corrective action may be taken. If data structures have not been directly accessed, then in step 5740 it may be determined whether permissions for data structure of the device object or device stack were attempted to be written directly. In one embodiment, it may be determined whether the calling process or routine is unauthorized to make such an attempt to write. If such data structures have been written directly, then in step 5760 it may be determined that the attempt is suspicious and/or malicious, and the attempt may be denied. If such data structures have not been written directly, then in step 5745 it may be determined whether an attach or detach subfunction was executed directly without using functions designated for such access. In one embodiment, it may be determined whether the calling process or routine is unauthorized to make such an attempt. If such subfunctions have been directly executed, then in step 5760 it may be determined that the attempt is suspicious and/or malicious, and the attempt may be denied. If such subfunctions have not been directly executed, then in step 5750 it may be determined whether the attach function or detach function was called by an authorized entity. If the function has not been called by an authorized entry, then in step 5760 it may be determined that the attempt is suspicious and/or malicious, and the attempt may be denied. If the function has been called by an authorized entry, in step 5755 the attempt may be allowed.

After execution of steps 5755 or 5760, the method 5700 may optionally return to step 5715 to continue monitoring for attempted accesses to resources of the electronic device for driver filter attachments.

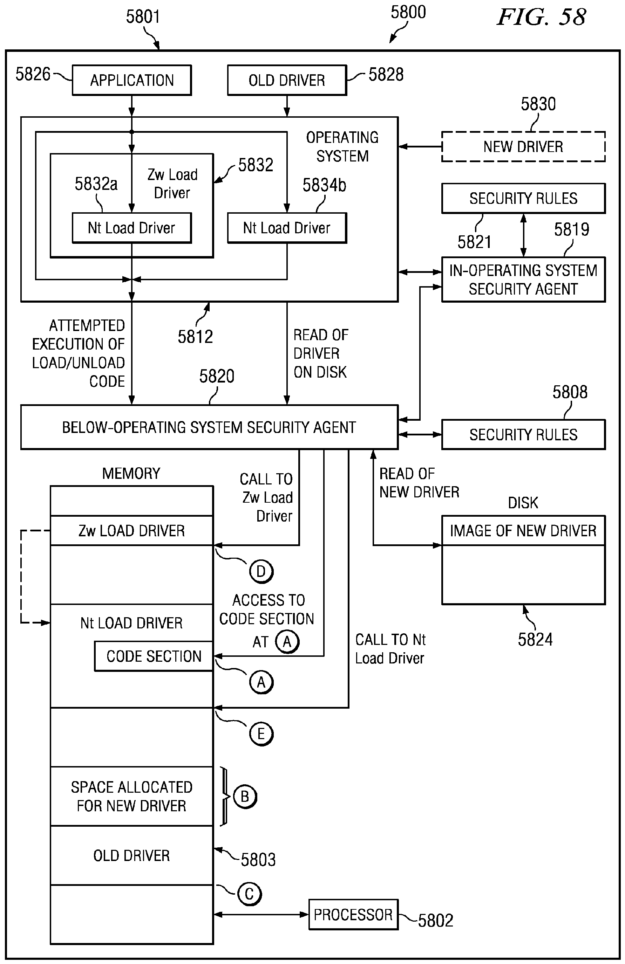

FIGURE 58 is an example embodiment of a system 5800 for securing the loading or unloading of drivers on an electronic device 5801. System 5800 may include a below-O/S security agent 5820 configured to operate on electronic device 5801 to detect malicious attempts to load or unload drivers in operating systems of electronic device 5801 such as operating system 5812. Furthermore, below-O/S security agent 5820 may be configured to use one or more security rules 5808 to determine what attempted loading or unloading of drivers may correspond to the trapped operation and whether the attempts are authorized based on the attempt and the entity conducting the attempt. Below-O/S security agent 5820 may be configured to allow, deny, or take other corrective action for the trapped event.

Electronic device 5801 may be implemented wholly or in part by or configured to implement the functionality of the electronic device 103 of FIGURE 1, electronic device 204 of FIGURE 2, electronic device 404 of FIGURE 4, electronic device 701 of FIGURE 7, electronic device 901 of FIGURE 9, electronic device 1201 of FIGURE 12, and/or any combination thereof. Electronic device 5801 may include one or more processors 5802 coupled to a memory such as memory 5803. Processor 5802 may be implemented wholly or in part by or configured to implement the functionality of processor 208 of FIGURE 2, processor 408 of FIGURE 4, processor 702 of FIGURE 7, processor 1202 of FIGURE 9, processor 1202 of FIGURE 12, or any combination thereof. Memory 5803 may be implemented wholly or in part by or configured to implement the functionality of memory 206 of FIGURE 2, memory 406 of FIGURE 4, memory 703 of FIGURE 7, memory 903 of FIGURE 9, physical memory 1203 or virtual memory 1204 of FIGURE 12, and/or any combination thereof. Electronic device 5801 may include an operating system 5812, which may include an in-O/S security agent 5819 coupled to one or more security rules 5821. Operating system 5812 may be implemented wholly or in part by or configured to implement the functionality of operating systems 112 of FIGURE 1, operating system 212 of FIGURE 2, operating system 412 of FIGURE 4, operating system 713 of FIGURE 7, operating system 913 of FIGURE 9, operating system 1213 of FIGURE 12, and/or any combination thereof. In-O/S security agent 5819 may be implemented wholly or in part by or configured to implement the functionality of in-O/S security agent 218 of FIGURE 1, in-O/S security agent 418 of FIGURE 4, and/or in-O/S security agent 719 of FIGURE 7, in-O/S security agent 919 of FIGURE 9, in-O/S security agent 1219 of FIGURE 12, or any suitable combination thereof.

Below-O/S security agent 5820 may be implemented by or configured to implement the functionality of below-O/S trapping agent 104 or triggered event handler 108 of FIGURE 1, SVMM 216 or SVMM security agent 217 of FIGURE 2, firmware security agents 440, 442, below-O/S agent 450, or PC firmware security agent 444 of FIGURE 4, firmware security agent 516 of FIGURE 5, or microcode security agent 708 or below-O/S agent 712 of FIGURE 7, below-O/S trapping agent 920 or triggered event handler 922 of FIGURE 9, below-O/S security agent 1220 of FIGURE 12, and/or any combination thereof.

Security rules 5808 may be implemented by or configured to implement the functionality of security rules 114 of FIGURE 1, security rules 222 of FIGURE 2, security rules 434, 436, 438 of FIGURE 4, security rules 518 of FIGURE 5, security rules 707, 723 of FIGURE 7, security rules 908 of FIGURE 9, security rules 1208 of FIGURE 12, and/or any combination thereof. Security rules 5821 may be implemented by or configured to implement the functionality of security rules 220 of FIGURE 2, security rules 420 of FIGURE 4, security rules 721 of FIGURE 7, security rules 921 of FIGURE 9, security rules 1221 of FIGURE 12, and/or any combination thereof.

Electronic device 5801 may include one or more applications, drivers, or other entities-for example, application 5826-that may try to access a resource of electronic device 5801 in order to load or unload a driver. Application 5826 may include any process, application, program, or driver. Application 5826 may attempt to access a resource such as memory 5803. In one embodiment, application 5826 may attempt to access memory 5803 through a memory page, wherein memory 5803 has been virtualized by operating system 5812. In another embodiment, application 5826 may attempt to access memory 5803 through access to an address of physical memory. Application 5826 may attempt to use processor 5802 to execute instructions in memory 5803.

Operating system 5812 may provide functions for entities such as application 5826 within electronic device 5801 to load and unload drivers. Such entities may normally call load and unload functions. By providing such functions, the operating system 5812 may provide controlled, secured, and efficient mechanisms for the entities of electronic device 5801 to load or unload drivers. Such functions may in turn rely upon a combination of load sub functions and unload subfunctions. Such load and unload subfunctions may be undocumented or otherwise discouraged from use by operating system 5812. Load and unload subfunctions may be intended only for use by associated load and unload functions. Malware may bypass the security and control mechanisms of the load and unload functions by calling individual instances of load subfunctions and unload subfunctions. Furthermore, malware may bypass the security and control mechanisms of the load and unload functions by jumping into the code sections of such functions or subfunctions directly. In addition, malware may attempt to alter a driver as it is loaded into memory for execution, wherein the image of the driver on disk is clean of malware, but code is injected by the malware as it is loaded into the driver, resulting in a corrupted driver.

Any suitable load or unload function providing by operating system 5812 may be used to load or unload drivers. For example, an operating system 5812 implemented by a Windows™ operating system may utilize the function ZwLoadDriver() to load drivers or the function ZwUnloadDriver() to unload drivers. Such load or unload functions may call any suitable number or kind of subfunctions. For example, ZwLoadDriver() may call NtLoadDriver(), which may in turn call IopLoadUnloadDriver(). IopLoadUnloadDriver() in turn may call IopUnloadDriver() to load drivers or IopUnloadDriver to unload drivers. Thus, a hierarchy of function calls may be used to load or unload drivers. In one embodiment, drivers may be loaded as a side effect of other operations. For example, an operating system 5812 implemented by a Windows™ operating system may utilize the function MmLoadSystemImage() to load an entire system image, during which drivers may be loaded as a consequence. The image that is loaded by this function may contain relative addresses for drivers, and such relative addresses must be relocated based on a relocation table. To accomplish such a task, a call to MmLoadSystemImage() may use the subfunction LdrRelocateImage. In another embodiment, certain auxiliary functions may be used to load drivers, such as MiMapViewOfDataSection(), MiMapViewOfImageSection(), or MiMapViewOfPhysicalSection().

In order to secure the loading and unloading of drivers, below-O/S security agent 5820 may be configured to access security rules 5808 to determine what portions of resources of electronic device 5801 should be trapped and what contextual information associated with an attempt should be determined. Below-O/S security agent 5820 may be configured to trap the attempted execution of any suitable function or subfunction. Below-O/S security agent 5820 may be configured to trap the attempted execution of these functions or subfunctions in any suitable manner.

In one embodiment, below-O/S security agent 5820 may be configured to set flags in a control structure for the execution of such functions in memory 5803. For example, below-O/S security agent 5820 may be configured to trap attempted execution of the function entry point of ZwLoadDriver() at address (D) in memory 5803. In another example, below-O/S security agent 5820 may be configured to trap attempted execution of the function entry point of NtLoadDriver() at address (E) in memory 5803.

In another embodiment, below-O/S security agent 5820 may be configured to trap executions of the code sections of such functions directly, which may be a strong indication of malware. For example, below-O/S security agent 5820 may be configured to trap any attempted "JMP" instruction or similar instruction resulting in a direct access of the code section of NtLoadDriver() at address (A) in memory 5803.

Upon an attempted load of a driver, below-O/S security agent 5820 may be configured to determine the potential effects of loading the driver before the load is permitted. Below-O/S security agent 5820 may be configured to examine the image of the driver in storage, such as on disk 5824. For example, upon trapping an attempted load of New Driver 5830, below-O/S security agent 5820 may be configured to scan the contents of the image of New Driver 5830 on disk 5824. Below-O/S security agent 5820 may be configured to determine a hash or digital signature of the contents of the image of New Driver 5830 on disk 5824 and/or a hash or signature of a portion of such contents (e.g., the code section). Below-O/S security agent 5820 may be configured to determine whether New Driver 5830 is known to be safe, malicious or unknown according to a whitelist, blacklist, or other information such as security rules 5808. Below-O/S security agent 5820 may be configured to evaluate the layout of New Driver 5830 as it resides on disk 5824 to confirm the identity of New Driver 5830. Below-O/S security agent 5820 may be configured to evaluate a digital signature provided by the creator of New Driver 5830, such as the signer same, signature information, or signing date. Below-O/S security agent 5820 may be configured to evaluate the names of files of the image New Driver 5830 as it resides in disk 5824.

In one embodiment, below-O/S security agent 5820 may be configured to allow an attempted load of a driver conditionally by allowing the load operation but enabling additional behavioral monitoring. For example, upon the trapping of an attempted load of New Driver 5830 by Application 5826, below-O/S security agent 5820 may determine that neither Application 5826 nor the image of New Driver 5830 on disk 5824 is known, but the driver to be loaded initially shows no signs of interfering with critical parts of operating system 5812. To prevent a false positive blocking of access, below-O/S security agent 5820 may be configured to allow the loading of New Driver 5830. However, since the true nature of the driver is not yet determined with certainty, below-O/S security agent 5820 may be configured to allocate additional flags or triggers in the memory space allocated for New Driver 5830 at address (B) in memory 5803. Thus, as code for New Driver 5830 is executed, and New Driver attempts to take various actions, below-O/S security agent 5820 may be configured to monitor the actions of New Driver 5830 to ensure that it does not take malicious actions in electronic device 5801.

In another embodiment, below-O/S security agent 5820 may be configured to allow an attempted load of a driver conditionally by allowing the load operation but then conducting additional security verifications of the driver as it resides in memory 5803. Below-O/S security agent 5820 may be configured to halt execution of the driver until such checks are completed. The security verifications conducted by below-O/S security agent 5820 on the image of the driver in memory 5803 may be similar to those conducted on the image of the driver as it resided in storage such as disk 5824. For example, below-O/S security agent 5820 may be configured to scan the contents of the image of New Driver 5830 in memory at the address range (B), determine a hash or digital signature of the contents of the image or a subsection of the image, compare the image to a whitelist or blacklist, and evaluate the file layout or the file names of the image of New Driver 5830 as it resides in memory 5803. Furthermore, below-O/S security agent 5820 may be configured to compare the results of analyzing the image of the driver in storage such as disk 5824 and the image of the driver in memory 5803. Some differences may indicate that code has been injected into the driver as it was loaded.

Upon an attempted unload of a driver, below-O/S security agent 5820 may be configured to determine the identity of the driver to be unloaded to determine whether such a driver is critical. In one embodiment, below-O/S security agent 5820 may be configured to consult a memory map indicating the correlation of values, such as those between address (C) and the memory range (B) in memory 5803, with associated drivers and entities. In the example of FIGURE 58, such a range may correspond to the memory space used by an Old Driver 5828. Depending upon the identity of the driver to be unloaded, below-O/S security agent 5820 may be configured to apply security rules 5808 specific to the identity of the driver to be unloaded. For example, to minimize false positive identification of malicious unload operations, security rules 5808 may only restrict removal of drivers that have been identified as critical to the security or operation of electronic device 5801 or are otherwise prone to malware.

Below-O/S security agent 5820 may be configured to trap an attempted direct manipulation of driver information. Such a direct manipulation may be attempted by malware avoiding use of system functions to unload a driver. In one embodiment, below-O/S security agent 5820 may be configured to trap an attempted access of a data structure of the driver related to loading or unloading within a specific address range, such as that for Old Driver 5828 in memory 5803 between the address (C) and the memory range (B). Below-O/S security agent 5820 may be configured to determine whether the attempt was conducted through an approved function call. If not, below-O/S security agent 5820 may be configured to determine that the attempt is suspicious.

Below-O/S security agent 5820 may be configured to determine the source of any attempted load or unload driver operation. Below-O/S security agent 5820 may be configured to evaluate the attempted access of resources for loading or unloading while considering the source of the attempt. For example, if the attempt is from a trusted source, wherein the application or driver making the operation is digitally signed and a hash of its code section is on a whitelist, then below-O/S security agent 5820 may be configured to allow such a source to load a driver whose malware status is unknown. In another example, if the attempt is from a source determined to be malicious, then below-O/S security agent 5820 may be configured to not allow it to load or unload any drivers. In yet another example, if a subfunction for loading or unloading has been accessed, and the calling process, application, driver or function is not a system-provided function designated to call the subfunction, then below-O/S security agent 5820 may be configured to not allow the access. In still yet another example, if the code section for a function or subfunction is accessed directly through a "JMP" or similar instruction, below-O/S security agent 5820 may be configured to determine from what memory location the attempt instruction was made and, if the attempt was not from within an authorized function or subfunction for loading or unloading drivers, deny the access. In all such examples, below-O/S security agent 5820 may be configured to walk through a call stack to determine the chain of calls that led to an attempted access of resources of electronic device 5801. At each step of the call chain, below-O/S security agent 5820 may be configured to evaluate the entity that made the call.

Furthermore, below-O/S security agent 5820 may be configured to determine whether an attempted load or unload operation is malicious based upon an administrator's settings. For example, an administrator of an enterprise in which electronic device 5801 operates may designate that no drivers may be loaded or unloaded if the user of electronic device 5801 is not logged in as an administrator.

In addition, below-O/S security agent 5820 may be configured to determine whether an attempted load or unload operation is malicious based upon prior trapped attempts to access the resources of electronic device 5801. Any suitable criteria for establishing that the attempt to load or unload is related to another suspicious action detected on electronic device 5801 may be used. For example, if application 5826 previously was denied in an attempt to unload a critical driver such as Old Driver 5828, below-O/S security agent 5820 may be configured to deny subsequent load or unload attempts by application 5826, since application 5826 has conducted suspicious activities.

In one embodiment, below-O/S security agent 5820 may be configured to trap execution of instructions by processor 5802 and access to memory 5803 on a per-memory page basis. In such an embodiment, operating system 5812 may be configured to virtualize access to processor 5802 and memory 5803 to the entities which depend on it to execute on electronic device 5801. In another embodiment, below-O/S security agent 5820 may be configured to trap execution of instructions by processor 5802 and access to memory 5803 on a physical memory address basis. In such an embodiment, although the contents of memory 5803 are shown as contiguous, such contents may be spread among disparate sections of physical memory.

Once an attempt to load or unload a driver has been detected, below-O/S security agent 5820 may be configured to take any suitable corrective action. For example, the entity making the attempt may be quarantined or removed from electronic device 5801. In another example, the driver which was loaded may be quarantined or removed from electronic device 5801.

In operation, below-O/S security agent 5820 may be running on electronic device 5801 to secure the loading and unloading of drivers. Below-O/S security agent 5820 may consult security rules 5808 to determine what resources of 5801 to guard for loading and unloading drivers. Below-O/S security agent 5820 may then set flags in one or more control structures to trap the attempted access of such resources. For example, below-O/S security agent 5820 may set flags for the execution of SwLoadDriver() in memory 5803 at address (D), the access of the code section of NtLoadDriver() at address (A), the execution of NtLoadDriver() at address (E), an access for the space allocated for New Driver in the memory range of (B), an access of the space of Old Driver in the range between (C) and (B), or a read of the image of New Driver on disk 5824.

Application 5826 may access one or more resources of electronic device 5801 to attempt to load a driver such as New Driver 5830 and/or unload a driver such as Old Driver 5828. For example, application 5826 may call an instance of ZwLoadDriver() 5832 to load New Driver 5830. Below-O/S security agent 5820 may trap an attempted execution of the function at address (D) and determine the identity of the calling entity, application 5826. Below-O/S security agent 5820 may scan application 5826, compute a digital hash or signature of its contents, and examine a whitelist, blacklist, security rules 5808 and/or a protection server to determine the identity of application 5826. Below-O/S security agent 5820 may determine whether the application 5826 is known to be safe, known to be malicious, or unknown. Based on the function called, the identity of the application 5826, and any contextual information gathered from in-O/S security agent 5819, below-O/S security agent 5820 may determine whether application 5826 is allowed to call the loading or unloading function such as ZwLoadDriver() 5832.

In another example, application 5826 may call an instance of NtLoadDriver() 5834 to load New Driver 5830. The call to NtLoadDriver() 5834 may be conducted directly through a direct call to NtLoadDriver() 5834b or by a call to, for example, ZwLoadDriver() 5832, which in turn calls an instance of NtLoadDriver() 5834a. Below-O/S security agent 5820 may trap the attempted execution of the function at address (E) and determine from what entity in electronic device 5801 the call was made. Below-O/S security agent 5820 may step through a function or execution stack repeatedly to make such determinations. For each entity found in the chain of execution, below-O/S security agent 5820 may make similar determinations as was made in the example above for ZwLoadDriver(). Specifically, below-O/S security agent 5820 may determine whether the subfunction was properly accessed through a function provided by the operating system 5812 for such purposes. Thus, if below-O/S security agent 5820 determines that the call was made from ZwLoadDriver(), then the call may be authorized. However, if the call was made directly from application 5826, and thus below-O/S security agent 5820 determines that the call was not made through an authorized channel, then the call may be determined to be malicious.

In yet another example, below-O/S security agent 5820 may trap an attempted jump, branch, or other execution into the code section of a function or subfunction for loading or unloading a driver, such as NtLoadDriver() at address (A). Below-O/S security agent 5820 may determine whether the attempted jump, branch, or execution was made from within NtLoadDriver(), or another authorized entity. If not, below-O/S security agent 5820 may determine that the attempted jump, branch or execution is malicious. Such an attempted jump, branch or execution may be the result of malware attempting to circumvent calling a function or subfunction, and directly load or unload a driver.

In still yet another example, below-O/S security agent 5820 may trap an attempt to load an image of a driver from storage into memory, such as the image of New Driver 5830 from disk 5824 into a space allocated for New Driver 5830 in range (B) of memory 5803. Before allowing the load, below-O/S security agent 5820 may inspect the contents of the image of New Driver 5830 on disk 5824 and/or characterize the calling entity. If the image does not indicate malware, or if the entity is unknown, or known to be safe, then below-O/S security agent 5820 may allow the driver to be loaded into memory. Below-O/S security agent 5820 may place additional flags on the execution or access of the address range (B) to provide additional guards against malicious activities by the newly loaded New Driver 5830. Below-O/S security agent 5820 may compare the image of New Driver 5830 as it resides in memory 5803 against the image observed on disk 5824, and determine whether any changes represent code that may have been injected during the load process. Any such code injections may be an indication of malware.

In a further example, below-O/S security agent 5820 may trap attempted accesses such as write commands to the memory space of drivers loaded in memory, such as the space allocated for Old Driver 5828 between location (C) and the memory range (B) in memory 5803. Below-O/S security agent 5820 may trap such access, determine the calling entity, and determine whether such an entity has the authority according to security rules 5808 to make such a change. Such attempted changes may be a part of a malware attempt to manually remove a driver from electronic device 5801.

Attempted actions trapped by below-O/S security agent 5820 while attempting to access resources for loading and unloading drivers may be allowed or denied. Below-O/S security agent 5820 may take additional corrective measures, such as recording the attempt for use in future evaluations, quarantining or removing the attempting entity, reporting the attempt to a protection server, or any other suitable action.

Anti-malware software running at the level of the operating system 5812 may be unable to fully address malicious loading and unloading of drivers, because malware conducting such activities may also be running at the same priority level.

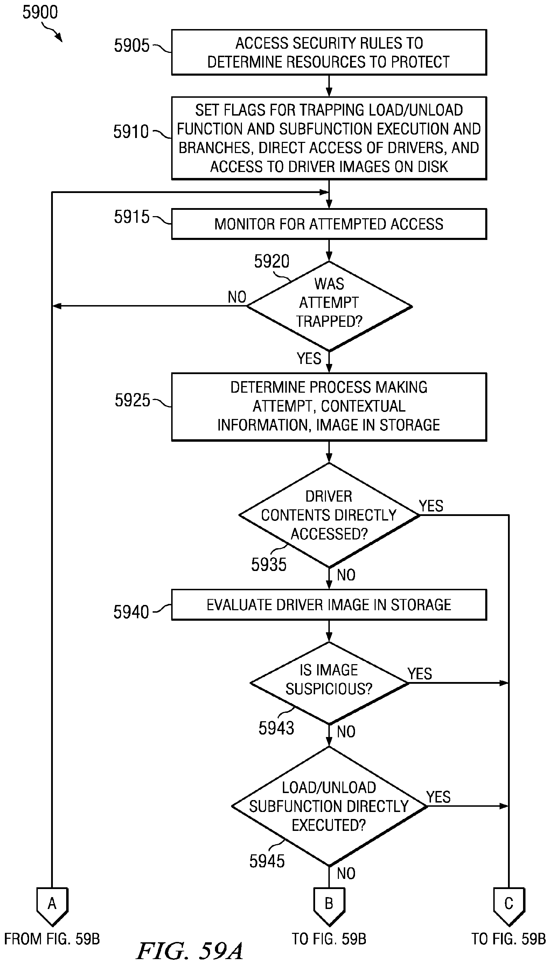

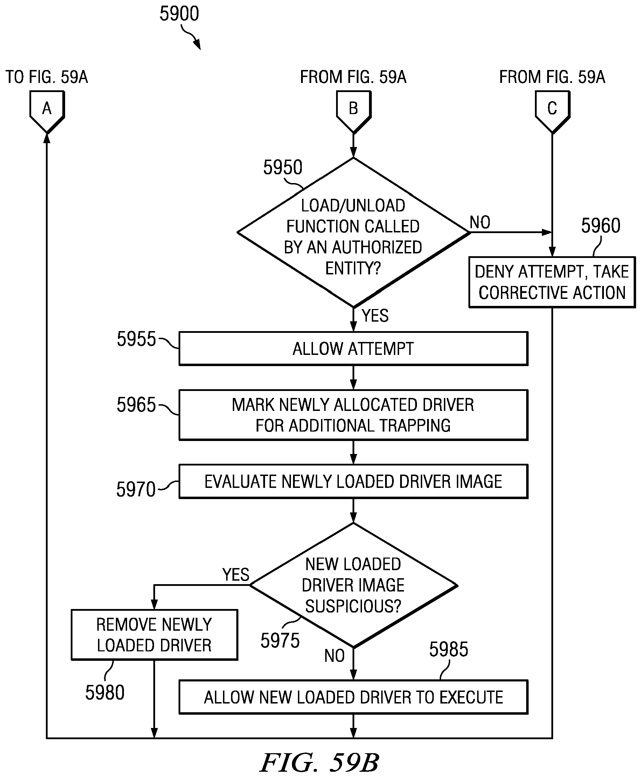

FIGURE 59A and 59B illustrate an example embodiment of a method 5900 for securing the loading and unloading of drivers in an electronic device. In step 5905, security rules may be accessed to determine resources associated with driver loading and unloading to be protected. Such security rules may identify the resources, as well as criteria by which attempted access to the resources will be trapped and evaluated.

In step 5910, flags may be set in a control structure below the level of operating systems within the electronic device. Flags may be set, for example, for trapping the attempted execution of load and unload functions, execution of load subfunctions or unload subfunctions, writes to the image of drivers loaded in memory, reads from images of drivers in storage upon a load execution, and/or jumps, branches, or other direct execution of code sections of driver load and unload functions and subfunctions. Flags may be set for virtual memory access through memory pages and/or through physical memory access through memory addresses corresponding to the attempts described above.

In step 5915, the electronic device may be monitored for trapped attempts to access the resources associated with the loading and unloading of drivers. In step 5920, if no attempts have been trapped, then the process 5900 may proceed to step 5915 to continue monitoring for trapped attempts. If an attempt has been trapped, then the attempt may be handled beginning in step 5925. Such handling may be conducted below the level of operating systems of the electronic device. In step 5925, information useful for analyzing whether the attempt may be malicious may be gathered. For example, the process, application, driver, or routine making the attempt may be determined. Contextual information from inside the operating system of the electronic device may be obtained from an in-O/S security agent. If an attempt to load a driver was made, then the image of the driver on disk may be evaluated.

In step 5935, it may be determined whether the contents of a driver for loading or unloading the driver were directly accessed without using an authorized function. In one embodiment, it may be determined whether the calling process or routine is unauthorized to access such portions of the driver. If the contents were directly accessed, then in step 5960 it may be determined that the attempt is suspicious and/or malicious, and the attempt may be denied. Any suitable corrective action may be taken. If the contents were not directly accessed with an unauthorized function or from an unauthorized memory location, then in step 5940 the contents of a driver image in storage associated with an attempted load operation may be evaluated. The image may be scanned for malicious content, the driver layout observed and recorded, a hash of the driver calculated, creator of a digital certificate evaluated, or any other suitable investigative action may be taken. In step 5943, it may be determined whether the information about the image of the disk in storage indicates that the contents are suspicious and/or malicious. If the contents are suspicious and/or malicious, then in step 5960 the request may be denied. If not, then in step 5945 it may be determined whether a load or unload subfunction was executed directly without using functions designated for such access. In one embodiment, it may be determined whether the calling process or routine is unauthorized to make such an attempt. If the calling process is unauthorized, then in step 5960 it may be determined that the attempt is suspicious and/or malicious, and the attempt may be denied. If not, then in step 5950 it may be determined whether the load function or unload function was called by an authorized entity, or whether an attempted branch, jump, or other direct execution was called by an authorized entity. If the function was not called by an authorized function, then in step 5960 it may be determined that the attempt is suspicious and/or malicious, and the attempt may be denied. If was called by an authorized function, in step 5955 the attempt may be allowed.

If the attempt is allowed, and the attempt is for loading a driver, then in step 5965 the memory allocated for the newly loaded driver may be marked for additional trapping. Such a step may especially be taken if the entity attempting to load the driver was unknown, or if the malware status of the driver that was loaded could not be conclusively determined. Thus, subsequent read, write, or execution of the driver memory may be trapped. In step 5970, the contents of the driver image as it has been loaded into memory may be evaluated and/or compared against the results of evaluating the image of the driver as it resided in storage before it was loaded. In step 5975, if the results are different and indicate an injection of malware, or if the evaluation of the newly loaded driver indicates malware, then in step 5980 the driver may be removed, quarantined, or other suitable corrective action taken against it. Otherwise, in step 5985 the driver may be allowed to execute.

After execution of steps 5960, 5980, or 5985 the method 5900 may optionally return to step 5915 to continue monitoring for attempted accesses to resources of the electronic device for driver loading and unloading.

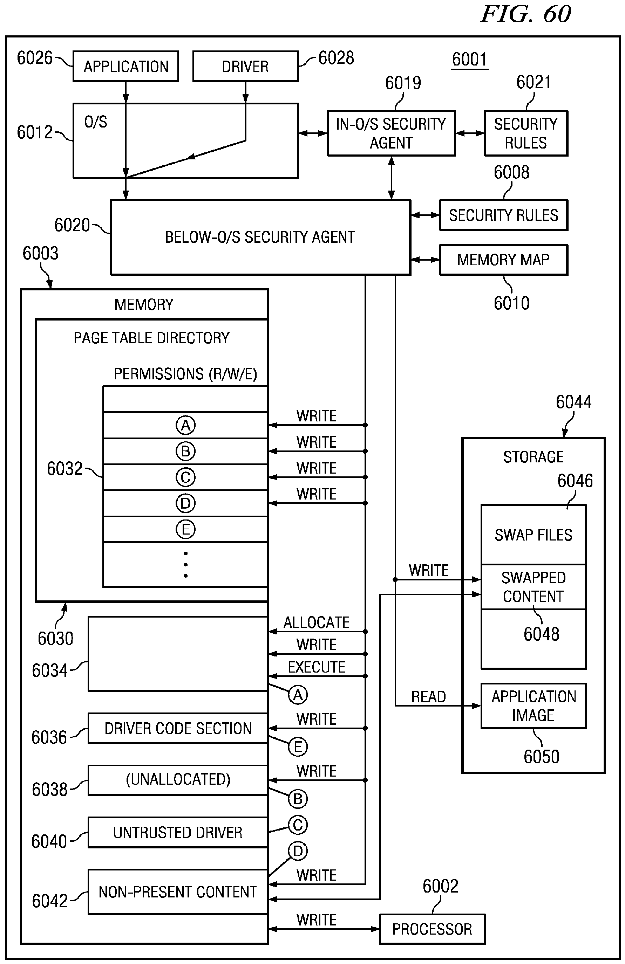

FIGURE 60 is an example embodiment of a system 6000 for below-operating system trapping and securing loading of code into memory. System 6000 may include a below-O/S security agent 6020 configured to operate on electronic device 6001 to trap attempts to load code into a memory such as memory 6003. In one embodiment, below-O/S security agent 6020 may be configured to trap attempts to load kernel mode code into memory 6003. Furthermore, below-O/S security agent 6020 may be configured to use one or more security rules 6008 to determine what resources of electronic device 6001 to secure to trap attempts to load kernel mode code into memory 6003 and whether such attempts are authorized based on the attempt and the entities involved in conducting the attempt. Below-O/S security agent 6020 may be configured to allow or deny the attempt or take other corrective action.

Electronic device 6001 may be implemented wholly or in part by or configured to implement the functionality of the electronic device 103 of FIGURE 1, electronic device 204 of FIGURE 2, electronic device 404 of FIGURE 4, electronic device 701 of FIGURE 7, electronic device 901 of FIGURE 9, electronic device 1201 of FIGURE 12, and/or any combination thereof. Electronic device 6001 may include one or more processors 6002 coupled to a memory such as memory 6003. Processor 6002 may be implemented wholly or in part by or configured to implement the functionality of processor 208 of FIGURE 2, processor 408 of FIGURE 4, processor 702 of FIGURE 7, processor 1202 of FIGURE 9, processor 1202 of FIGURE 12, and/or any combination thereof. Memory 6003 may be implemented wholly or in part by or configured to implement the functionality of memory 206 of FIGURE 2, memory 406 of FIGURE 4, memory 703 of FIGURE 7, memory 903 of FIGURE 9, physical memory 1203 or virtual memory 1204 of FIGURE 12, and/or any combination thereof. Electronic device 6001 may include an operating system 6012, which may include or be communicatively coupled to an in-O/S security agent 6019 coupled to one or more security rules 6021. In-O/S security agent 6019 may be communicatively coupled to below-O/S security agent 6020. Operating system 6012 may be implemented wholly or in part by or configured to implement the functionality of operating systems 112 of FIGURE 1, operating system 212 of FIGURE 2, operating system 412 of FIGURE 4, operating system 713 of FIGURE 7, operating system 913 of FIGURE 9, operating system 1213 of FIGURE 12, and/or any combination thereof. In-O/S security agent 6019 may be implemented wholly or in part by or configured to implement the functionality of in-O/S security agent 218 of FIGURE 1, in-O/S security agent 418 of FIGURE 4, and/or in-O/S security agent 719 of FIGURE 7, in-O/S security agent 919 of FIGURE 9, in-O/S security agent 1219 of FIGURE 12, or any suitable combination thereof.

Below-O/S security agent 6020 may be implemented by or configured to implement the functionality of below-O/S trapping agent 104 or triggered event handler 108 of FIGURE 1, SVMM 216 or SVMM security agent 217 of FIGURE 2, firmware security agents 440, 442, below-O/S agent 450, or PC firmware security agent 444 of FIGURE 4, firmware security agent 516 of FIGURE 5, or microcode security agent 708 or below-O/S agent 712 of FIGURE 7, below-O/S trapping agent 920 or triggered event handler 922 of FIGURE 9, below-O/S security agent 1220 of FIGURE 12, and/or any combination thereof.

Security rules 6008 may be implemented by or configured to implement the functionality of security rules 114 of FIGURE 1, security rules 222 of FIGURE 2, security rules 434, 436, 438 of FIGURE 4, security rules 518 of FIGURE 5, security rules 707, 723 of FIGURE 7, security rules 908 of FIGURE 9, security rules 1208 of FIGURE 12, and/or any combination thereof. Security rules 6021 may be implemented by or configured to implement the functionality of security rules 220 of FIGURE 2, security rules 420 of FIGURE 4, security rules 721 of FIGURE 7, security rules 921 of FIGURE 9, security rules 1221 of FIGURE 12, and/or any combination thereof.

Below-O/S security agent 6020 and/or in-O/S security agent 6019 may be communicatively coupled to a memory map 6010. Memory map 6010 may contain a mapping of the locations of the pages or addresses of various entities of operating system 6012 in memory 6003. Below-O/S security agent 6020 and/or in-O/S security agent 6019 may be configured to access memory map 6010 to determine, for a given memory location or page in memory 6003, what process, dynamically linked library ("DLL"), application, module or other entity of electronic device 6020 is associated with the location or page. Below-O/S security agent 6020 and/or in-O/S security agent 6019 may be configured to use such information to, for example, determine what portions of memory 6003 to trap, or upon a trapped access of memory 6003 or a trapped execution of a function, what entity in electronic device 6001 originated the attempt. Furthermore, below-O/S security agent 6020 may use memory map 6010 to associate additional trapped attempts to a region of memory 6003 as malicious, wherein a previous attempt to load code into memory 6003 was determined to be malicious and was associated with the region of memory 6003.

Storage 6044 may be communicatively coupled to electronic device 6001 or reside within electronic device 6001. Storage 6044 may include any suitable medium for mass storage, including a hard disk, flash drive, random access memory ("RAM") disk, compact disc, DVD media drive, or any other suitable memory. Storage 6044 may be communicatively coupled to electronic device 6001 through any suitable interface, such as peripheral component interconnect, serial advanced technology attachment, universal serial bus, or Firewire.

Electronic device 6001 may include one or more applications, drivers, or other entities-for example, application 6026 or driver 6028-that may try to access a resource of electronic device 6001 in order to load code into memory 6003. Application 6026 or driver 6028 may include any process, application, program, or driver. Application 6026 or driver 6028, directly or through calls to other routines, may attempt to load code into memory 6003 by, for example, accessing portions of memory 6003 or storage 6044 with read, write, or execute instructions. Below-O/S security agent 6020 may be configured to intercept such attempted calls or accesses, consult security rules 6008 and/or contextual information from in-O/S security agent 6019 to determine whether the attempt is indicative of malware, and take any appropriate corrective action. Below-O/S security agent 6020 may be configured to make such interceptions through trapping access to memory 6003 or storage 6044 and/or use of processor 6002. Below-O/S security agent 6020 may be configured to access security rules 6008 and/or memory map 6010 and determine what attempted access of memory 6003 or storage 6044 and/or use of processor 6002 will be trapped. Below-O/S security agent 6020 may be configured to set flags in a control structure corresponding to the actions that are to be trapped.

In one embodiment, entities such as application 6026 or driver 6028 may attempt to access portions of memory 6003 associated with loading code into memory 6003 through a memory page, wherein memory 6003 has been virtualized by operating system 6012. In such an embodiment, below-O/S security agent 6020 may be configured to trap attempted access or execution of memory 6003 on a memory page basis. In another embodiment, application 6026 or driver 6028 may attempt to access physical portions of memory 6003 associated with loading code into memory In such an embodiment, below-O/S security agent 6020 may be configured to trap attempted access or execution of memory 6003 on a memory address basis.

Memory 6003 may contain one or more contents or locations associated with actions for loading code into memory 6003. Below-O/S security agent 6020 may be configured to trap access to any such contents or locations. The following are given as illustrative examples. Memory 6003 may contain pages or ranges of addresses for hosting a page table directory 6030, which may contain permissions 6032 for other pages or address ranges within memory 6003. For example, permissions 6032 may contain settings for a combination of permissions to read, write, and/or execute the contents at memory locations (A), (B), (C), (D), and (E). Memory 6003 may contain an empty space 6034 at location (A) which may be allocated by, for example, application 6026 or driver 6028. Memory 6003 may contain code sections of entities or functions of electronic device 6001, such as driver code section 6036 at memory location (E). Memory 6003 may contain sections or ranges of memory that are unallocated, as far as operating system 6012 is concerned, to any entity, such as unallocated space 6038 at memory location (B). Memory 6003 may contain sections or ranges of memory for drivers whose malware status, either safe or malicious, are unknown, such as space for untrusted driver 6040 at memory location (C). Memory 6003 may contain sections or ranges of memory with non-present content 6042. Such non-present content 6042 in memory 6003 may include, for example, memory pages whose content has been swapped to disk and may reside, for example in swapped content 6048 in one or more swapped files 6046 on storage 6044.

Storage 6044 may contain one or more contents or locations associated with actions for loading code into memory 6003. Below-O/S security agent 6020 may be configured to trap access to any such contents or locations. The following are given as illustrative examples. Storage 6044 may contain swap files 6046 in which swapped content 6048 may be stored. Swapped content 6048 may appear to entities of electronic device 6001 to be present within memory 6003, but is actually stored in storage 6044. Storage 6044 may contain sections or addresses storing an application image 6050. Application image 6050 may include the image of an application, driver, DLL, or other entity for execution on electronic device 6001 such as application 6026 or driver 6028.

Below-O/S security agent 6020 and/or in-O/S security agent 6019 may be configured to scan portions of memory 6003 and/or storage 6044 for malware. Such scanning may include computing digital signatures, checksums, or hashes of contents within memory 6003 and/or storage 6044 to determine whether the contents are the same as contents determined to be malicious as defined by security rules 6008, 6021. However, some malware may attempt to attack electronic device 6001 by inserting itself or other malicious code into memory 6003 to be executed. By trapping attempts to load code into memory 6003, below-O/S security agent 6020 may be configured to trap, scan, or secure code that is not initially placed within, for example, a driver file, image in memory, or other normative method of storing code. By not initially placing such code within a driver file, image in memory or other normative method of storing code, malware may attempt to avoid the efforts previously described of below-O/S security agent 6020 and/or in-O/S security agent 6019 to scan portions of memory 6003 and/or storage 6044 for malware. Further, irregular methods of injecting code into memory 6003 may be an indication that the entity attempting such an injection is malicious, whether or not the content injected or the entity attempting the injection is already known as malicious.

Below-O/S security agent 6020 may be configured to determine safe or normative methods for loading code into memory 6003, such as use of an operating system loader. Such safe or normative methods may be benchmarked or mapped such that the logic or steps taken by operating system 6012 may be known. Upon trapping an attempt to load code into memory 6003, below-O/S security agent 6020 may determine whether such an attempt matches known methods for loading code. For example, if the attempt involved loading code into an already allocated portion of memory, and attempted to do so through bypassing the operating system loader with a direct write to memory, the attempt may be determined to be malicious.

To stop malware from injecting code into memory 6003 for execution by processor 6002, below-O/S security agent 6020 may be configured to trap one or more attempted steps required to inject code that avoid normal methods of loading code into memory 6003 for execution. Such normal methods of loading code into memory 6003 for execution may include, for example, using an operating system loader of operating system 6012 to read an image of an application, driver, or other entity to be executed from, for example, storage 6044, place code from such an image into memory 6003, and then execute the code that has been loaded. Below-O/S security agent 6020 may be configured to trap attempts to load code for execution that, for example, avoid use of the operating system loader and/or conduct any of these steps in an irregular manner. Such irregular methods may be defined by security rules 6008. Such irregular methods may include trapping any attempted loading of code that is not originally read from file in an authorized application image 6050 or placed into an equivalent application image in memory 6003.

In one embodiment, below-O/S security agent 6020 may be configured to trap an attempted writing of code into memory 6003 and an attempted subsequent execution of the code. For example, below-O/S security agent 6020 may be configured to trap an attempted write at address (A), which may be part of a newly allocated space 6034. Such an attempted write may itself not indicate malware, so the attempt may be recorded and used for future reference. The contents written may be scanned, recorded, or otherwise evaluated. Below-O/S security agent 6020 may be configured to trap a subsequent attempted execution of the code written to address (A). Below-O/S security agent 6020 may be configured to determine that because an attempted execution of contents followed a previously trapped loading of the contents, the loading of the contents comprises loading code into memory 6003. Below-O/S security agent 6020 may be configured to determine from contextual information, such as the source of the attempts, the targets of the attempts, the content loaded, information from in-O/S security agent 6019, or any other suitable information, whether or not the loading of code indicates malware. For example, upon detecting that code has been loaded into memory and execution attempted, below-O/S security agent 6020 may be configured to scan the contents that were loaded and determine whether the code is known to be malware. In another example, upon detecting the loading and attempted execution of the code, below-O/S security agent 6020 may be configured to determine if the code was loaded using normal functions of the operating system 6012, such as the operating system loader. If the code was loaded using other, nonstandard methods, such as a direct write from an unknown driver, then below-O/S security agent 6020 may be configured to determine that the attempted loading of code is suspicious and block the execution of the code. Other examples of the methods by which below-O/S security agent 6020 may trap attempted loading and execution of code in memory 6103, and by which below-O/S security agent 6020 may determine that such attempts are suspicious or malicious, are described below.

In one embodiment, below-O/S security agent 6020 may be configured to trap the attempted reading of an application image 6050 from storage 6044, and a subsequent writing of the contents to a new section of memory 6003 such as portion 6034, and a subsequent execution. Below-O/S security agent 6020 may be configured to compare the image as it resides on disk versus the image as it resides in memory. If the two images are different, such as signatures of code sections, or a file layout, then such differences may indicate that code has been injected into the image as it resides in memory 6003. Such an injection may be determined to be malicious. However, below-O/S security agent 6020 may not trap an attempted reading of an application image 6050 from disk, and thus below-O/S security agent 6020 may not be able to compare the image against that which is loaded in memory 6003.

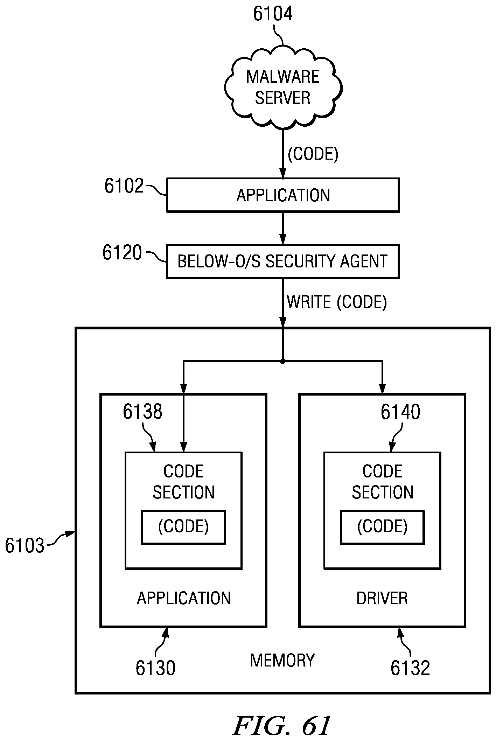

FIGURE 61 is an example illustration of how such injected code may be gathered by an application and placed inside memory 6003 for execution. Application 6102 may be implemented by the application 6026 or driver 6028 of FIGURE 60. Below-O/S security agent 6120 may be implemented by the below-O/S security agent 6020 of FIGURE 60. Memory 6103 may be implemented by the memory 6003 of FIGURE 60. Memory 6103 may include memory spaces for application 6130 and driver 6132. Each memory space 6130, 6132 may include space for code sections 6138, 6140 for their respective entities. Application 6102 may download code from a malware server 6104. Malware server 6104 may be a website, another electronic device on a network, or any other entity communicatively coupled to application 6102. Application 6102 may write such code into the code sections 6138, 6140 of application 6130 itself, or into another entity such as driver 6132. Below-O/S security agent 6120 may be configured to intercept and evaluate such an attempt according to the various teachings given herein. For example, below-O/S security agent 6120 may be configured to trap the attempted write and execution, evaluate the contents of the write attempt, evaluate the identity of application 6102, and evaluate the target memory locations.

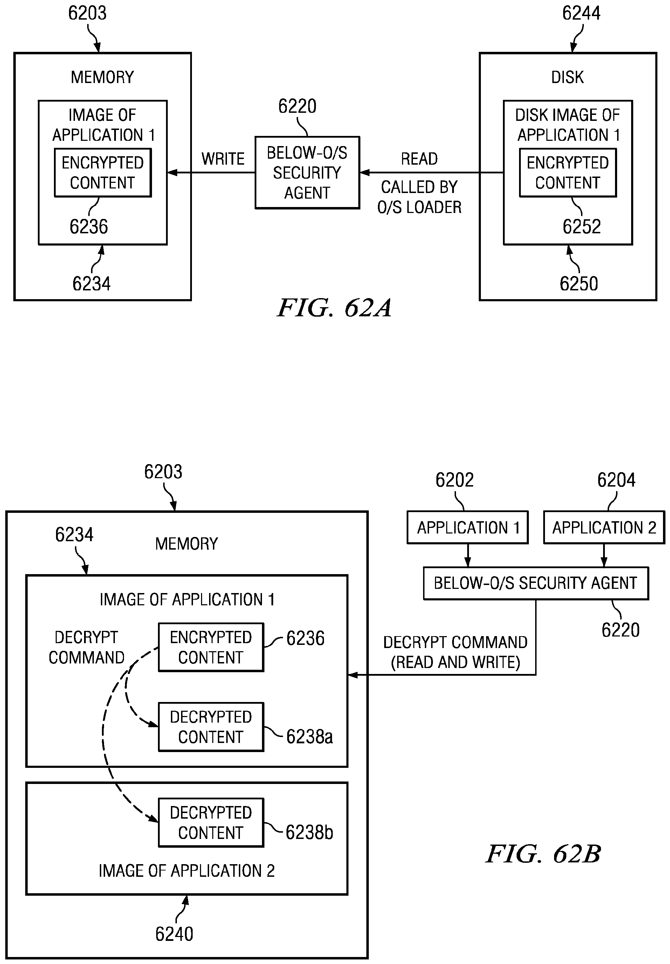

FIGURES 62A and 62B illustrate another example of how injected code may be gathered by an application to place inside memory 6003. Application1 6202 and Application2 6204 may be implemented by the application 6026 or driver 6028 of FIGURE 60, or by other similar entities. Below-O/S security agent 6220 may be implemented by the below-O/S security agent 6020 of FIGURE 60. Memory 6203 may be implemented by the memory 6003 of FIGURE 60. Disk 6244 may be implemented by the storage 6044 of FIGURE 60.

FIGURE 62A shows an example illustration of the loading of an image 6252 of an application such as Application1 from disk 6244 to memory 6203. An operating system loader may be configured to read the disk image 6250 of Application1 6250 and write it to an image 6234 of Application1 in memory 6203. Disk image 6250 of Application1 may include encrypted content 6252, which may be copied and remain in the image 6234 of Application1 in memory 6203 as encrypted content 6236. Below-O/S security agent 6220 may trap the attempted reads and writes called by the operating system loader. However, in one embodiment the below-O/S security agent 6220 may have no reason to suspect any malicious activities are involved in the loading of the image, since the two images will not differ, and the action was conducted by normal mechanisms of the operating system.

FIGURE 62B shows an example illustration of possible actions conducted after the image of the application is loaded in memory. Application2 6204 may be operating on an electronic device. Application1 6202 may be operating on the electronic device and may send an instruction to decrypt encrypted content 6236. Such a command may result in the encrypted content 6236 being decrypted and decrypted content 6238a being written in the memory space of the image 6234 of Application1, and/or being written in the memory space of the image 6240 of Application2 as decrypted content 6238b. Thus, Application1 6202 may attempt to inject code into its own code section or into the code section of another entity. Application1 6202 may write the decrypted content 6238a in place over the previous encrypted content 6236 or into another memory portion of the image 6234 of Application1. The code from decrypted content 6238 may be malicious. Thus, below-O/S security agent 6220 may be configured to trap and evaluate the attempted writing and execution of code such as decrypted content 6238 according to the various teachings given herein. For example, below-O/S security agent 6220 may be configured to intercept the attempted write and execution, evaluate the contents of the write attempt, evaluate the identity of application 6102, and evaluate the target memory locations.

Returning to FIGURE 60, below-O/S security agent 6020 may determine the layout of portions of memory 6003, including the location of known entities of electronic device 6001. In one embodiment, such a layout may include a layout of the kernel virtual memory as it contains kernel images of operating system 6012 and its components, as well as trusted drivers (and their code and data sections) and other drivers (and their code and data sections). Such a layout may be stored in memory map 6010. Below-O/S security agent 6020 may determine such a layout from security rules 6008 or a protection server, by profiling the startup and operation of operating system 6012, by verifying the components of operating system 6012 and trusted drivers by scanning or verifying digital certificates, or any other suitable methods. Below-O/S security agent 6020 may also determine which portions of memory 6003 are not allocated to any of the entities of electronic device 6001. Mappings of kernel memory to physical memory may be contained in memory map 6010, describing associated physical memory addresses for a given page in kernel memory. Memory map 6010 may also contain descriptions of what portions of memory have been allocated, not allocated, are associated with non-present contents, or swap files. Operating system 6012 may have information in a database, such as a Page Frame Number Database ("Pfh"), describing virtual pages managed by the operating system 6012. Traversal of such a database may be used to determine memory pages that are allocated, mapped, contain non-present contents, etc.

Once the layout of memory 6003 is known, below-O/S security agent 6020 may be configured to monitor the allocation and execution of memory in unallocated areas. Below-O/S security agent 6020 may be configured to trap such attempted operations and scan the content to be written. The steps for such operations may include an entity allocating portions of memory 6003 with write permissions enabled, writing new content to the portions of memory 6003, changing the permissions of the portion of memory 6003 to enable execution, and calling the portion of memory 6003 for execution. Below-O/S security agent 6020 may be configured to trap these steps and stop the attempted execution before determining whether the steps are indicative of malware. For example, below-O/S security agent 6020 may be configured to trap an attempted allocation of an unallocated portion 6034 of memory 6003 at location (A), an attempt to write contents to the portion 6034, a write to permissions 6032 of page table directory 6030 to change the permission of location (A) from "write" to "write/execute," and an attempted execution of the permission at location (A). Below-O/S security agent 6020 may be configured to trap any suitable function for allocating memory, such as the Windows™ functions:
- MmAllocateContiguousMemory
- MmAllocateContiguousMemorySpecifyCache
- MmAllocateSpecialPool
- MmAllocateContiguousMemorySpecifyCacheNode
- MmAllocateIndependentPages
- MmAllocateMappingAddress
- MmAllocateNonCachedMemory
- MmAllocatePagesForMdl or
- MmAllocatePagesForMdlEx
Below-O/S security agent 6020 may be configured to trap the execution of the pages in memory 6003 or the execution of the physical addresses in memory 6003 corresponding to these functions to trap the attempted allocation of memory. Below-O/S security agent 6020 determines the caller of the functions and scans the contents of the caller for known malware. If, for example, the attempt to allocate was made with a subfunction of a known, secured allocation function, then such an attempt may be indicative of malware attempting to circumvent security associated with the function. Below-O/S security agent 6020 may be configured to add the allocated memory portion to memory map 6010 for future reference. Below-O/S security agent 6020 may be configured to record the attempted memory allocation, along with contextual information such as the caller.

Below-O/S security agent 6020 may be configured to trap any suitable function or method for writing code to memory. Entities such as application 6026 or driver 6028 may use functions or methods provided by operating system 6012 to enter code into memory 6003. However, these entities may write directly to memory in an attempt to avoid detection. Thus, if below-O/S security agent 6020 traps an attempt to enter code in memory 6003, wherein the attempt was made without using such designated functions, below-O/S security agent 6020 may be configured to determine that the attempt to load code into memory 6003 is suspicious.

Below-O/S security agent 6020 may be configured to trap any suitable function or method for changing the permission of a memory location. For example, to change a memory page permission, one of the following Windows™ functions may be called:
- MmProtectMdlSystemAddress
- NtProtectVirtualMemory
- MiGetPageProtection
- MiQueryAddressState
- MiSetProtectionOnSection
- MiGetpageProtection
- MiProtectPrivateMemory
Thus below-O/S security agent 6020 may be configured to trap the execution of any of these functions by monitoring for an execution of their location in memory. The below-O/S security agent 6020 may be configured to trap any attempted write to page table directory 6030 and its permissions 6032 contained therein. If an attempted write to permissions 6032 is trapped, while an execution of an approved function for changing permissions 6032 (such as those listed above) is not trapped, then below-O/S security agent 6020 may be configured to determine that the attempt to write is indicative of malware. Such an attempt may be the result of malware directly editing an entry in the page table directory for permissions for a memory location (e.g. "read" to "write" or to "execute"), such that the corresponding location may be written to with malicious content or executed without incurring security associated with operating system 6012 functions.

If an attempted write to memory followed by an attempted execution is trapped, and below-O/S security agent 6020 determines that such an attempt has been made on unallocated portions of memory, such as the unallocated memory portion 6038 at location (B), then below-O/S security agent 6020 may be configured to determine that such an attempt is malicious. Below-O/S security agent 6020 may be configured to determine whether the attempt to write and execute contents has been made to unallocated space such as unallocated portion 6038 at location (B). Below-O/S security agent 6020 may be configured to make such a determination by accessing memory map 6010 or referencing previously trapped executions of allocation functions. In one embodiment, if the attempted write and execution are made in memory 6003 determined to be unallocated, malware may have allocated the memory without the use of the routines defined by the operating system 6012. In such an embodiment, below-O/S security agent 6020 may determine that the attempt is a malicious attempt to load code into memory 6003 for execution. In another embodiment, if the attempted write and execution are made in memory 6003 already allocated to an entity of electronic device 6001 as shown in memory map 6010, then below-O/S security agent 6020 may be configured to examine whether the caller of the instructions has permission or is authorized to write code into another entity. If not, then such an attempt may be indicative of malware attempting to inject code into a portion of memory 6003 belonging to another function, which may be malicious.

Below-O/S security agent 6020 may be configured to trap any attempted writes, reads, or executes in portions of memory 6003 designated as unallocated, such as portion 6038 at location (B), or attempts to change the permissions of unallocated portions 6038 in permissions 6032. Any such attempts arising from entities other than authorized allocation functions, called in turn by authorized entities of operating system 6012, may be determined to be malicious regardless of whether the malware status of the caller is unknown. If the memory location experiences an attempted write, then it may be determined that the attempt is an indication of code being loaded in memory. If the memory location experiences an attempted execution, then it may be determined that the attempt is an indication of newly loaded code being executed.

Below-O/S security agent 6020 may be configured to trap any attempted writes or executions by an untrusted driver 6040 or a change in permissions 6032 for the memory location (C) associated with the untrusted driver 6040. Untrusted driver 6040 may include a driver whose malware status is unknown. There may be no entries in either a blacklist or whitelist for a signature or hash of untrusted driver 6040. Untrusted driver 6040 may be a safe, new driver not encountered by system 6000 or similar systems, or untrusted driver 6040 may be a permutation of malware not encountered by system 6000. Once an attempted write or execution of untrusted driver 6040 is trapped, below-O/S security agent 6020 may be configured to apply additional security rules 6008 to evaluate such trapped operations. In particular, attempts to write and subsequently execute code may be trapped and closely examined by below-O/S security agent 6020 to determine whether such operations are attempted upon known elements, such as kernel modules of operating system 6012 or known drivers. If so, such attempts may be blocked and the untrusted driver 6040 determined to be malware.

Below-O/S security agent 6020 may be configured to trap attempted writes or execution of portions of memory 6003 that have non-present content, such as portion 6042 at address (D). Portion 6042 of memory 6003 may be allocated in terms of virtual memory allocation, but the contents of portion 6042 may not be actually present in the physical memory of memory 6003. Instead, contents of such portion 6042 may be present elsewhere, such as in storage 6044. The non-present content may reside in storage 6044 in a swap file 6046 containing swapped content 6048 as part of a page swap operation, wherein contents of a virtualized memory 6003 are moved to disk to make room for other elements in the physical memory of memory 6003. Operating system 6012 may be configured to conduct such swapping operations and may be configured to reload the swapped content 6048 into physical memory when it is needed. Thus, while portion 6042 contains non-present content, attempted writes to or executions of portion 6042 may be trapped by below-O/S security agent 6020. If such an attempted write originated from an entity other than operating system 6012 conducting a page swap, then the write may be malicious. For example, attempted writes to portion 6042 not originating from a virtual memory manager of operating system 6012 may be denied. Further, if an attempted execution of portion 6042 is made while its contents are non-present, then such an attempted execution may be malicious.

Furthermore, an attempted access such as a write to the swapped content 6048 of swapped file 6046 on storage 6044 may be trapped by below-O/S security agent 6020. If such an attempted access originated from an entity other than an authorized entity, then the write may be malicious. For example, attempted writes to swapped content 6048 not originating from a virtual memory manager of operating system 6012 may be denied and determined to be indicative of malware. Such trapping may be made, for example, by trapping disk write functions or by trapping input/output commands in storage 6044. Such trapping of input/output commands in storage 6044 may be accomplished, for example, by a firmware security agent running on storage 6044.

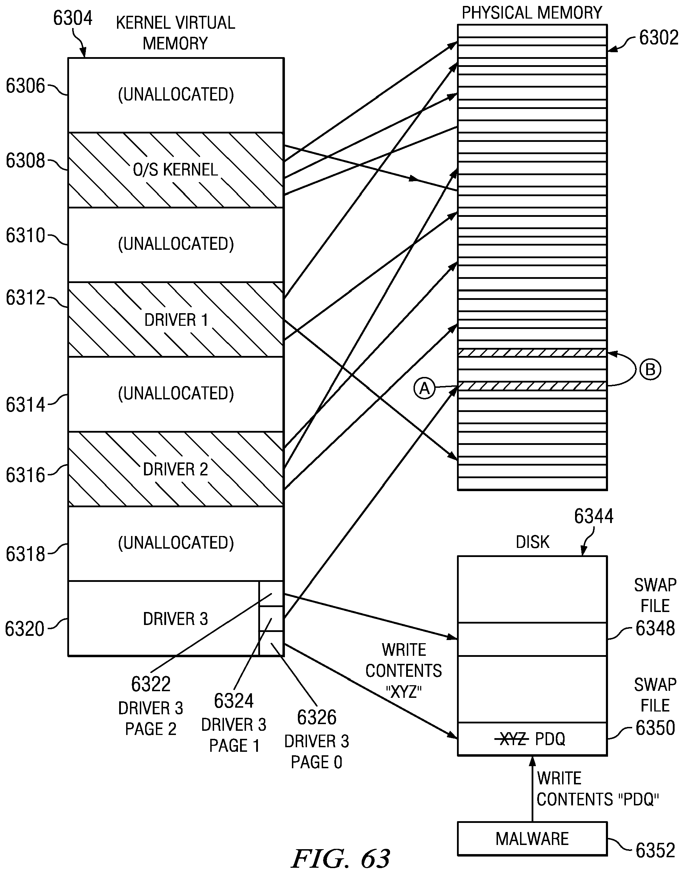

FIGURE 63 illustrates an additional example of malicious attacks on swapped content to inject code. Kernel virtual memory 6304 may represent portions of memory 6003 as they have been virtualized. The contents of kernel virtual memory 6304 may be mapped to the locations where they reside. Such contents may be mapped, for example, to physical memory 6302 and/or disk 6344. Physical memory 6302 may illustrate a physical layout of memory 6003 as it physically resides in electronic device 6001. Disk 6344 may be implemented by storage 6044 of FIGURE 60. Some portions 6306, 6310, 6314, 6318 of kernel virtual memory 6304 may be unallocated, and available to a user of virtual memory. Other portions of kernel virtual memory 6304 may include portions for the operating system kernel 6308 and drivers such as driver1 6312, driver2 6316, and driver3 6320. The portions of allocated memory in kernel virtual memory 6304 may map to various noncontiguous parts of physical memory 6302 and/or disk 6344. Example pages included in driver3 6320 are shown, including pages 6322, 6324, and 6326. Page 6326, corresponding to driver3 page 0, may be mapped to a swap file 6350 on disk 6344. Page 6324, corresponding to driver3 page 1, may be mapped to an address in physical memory 6302 at address (A) and continuing on to address (B). Page 6322, corresponding to driver 3 page 2, may be mapped to a swap file 6348 in disk 6344.

When a swap file operation is conducted, the contents of driver3 page 0, which may be "XYZ" may be written to swap file 6350. The contents of driver 3 page 0 may thus be non-present. In the meantime, malware 6352 may rewrite the contents of swap file 6350 to "PDQ." Thus, when the swap file operation is reversed and the contents are read from the disk 6344 and swap file 6350, the new code will be loaded into kernel virtual memory 6304. Also possible may be the action of malware 6352 to write values directly in to physical memory 6302 for other pages, such as page 6324.

Returning to FIGURE 60, below-O/S security agent 6020 may be configured to prevent loading code into swap files 6046 associated with pages with non-present content 6042. Below-O/S security agent 6020 may be configured to trap attempted write operations to swap files 6046 from memory 6003 or vice-versa, and determine a snapshot, signature, cryptographic hash, checksums or other indication of the contents. Below-O/S security agent 6020 may be configured to trap such an attempt by setting flags corresponding to locations on storage 6044 or upon functions or routines for swapping memory pages. Below-O/S security agent 6020 may be configured to trap attempted read operations from swap files 6046 and/or writes back to memory portions for non-present content 6042. Below-O/S security agent 6020 may be configured to trap attempted execution of swap functions to accomplish such tasks. Such functions may include or call, for example, IoPageRead(), IoAsynchronousPageWrite(), or IoAsynchronousPageWrite(). Below-O/S security agent 6020 may be configured to determine a snapshot, signature, cryptographic hash, checksums, or other indication of the contents being read from swap file 6046 and/or being written to non-present content 6042 and determine whether the contents have been changed. If so, below-O/S security agent 6020 may be configured to determine that the contents of the swap file 6046 have been injected with code. Below-O/S security agent 6020 may be configured to block the execution of the new content or take any other corrective measure.

Below-O/S security agent 6020 may be configured to determine that a particular write to memory 6003 is a loading of code by trapping a subsequent attempt to change permissions 6032 for the memory location of the contents to give execution permissions. Furthermore, below-O/S security agent 6020 may be configured to determine the entity writing to memory 6003 and subsequently attempting to write to permissions 6032 to allow the memory to be executed. Such an entity may typically be a known, trusted entity such as an operating system loader. Thus, below-O/S security agent 6020 may be configured to determine whether an attempt to lode code into memory 6003 was generated by a known, trusted entity such as an operating system loader. If not, then below-O/S security agent 6020 may be configured to deny such an attempt and determine that the attempt and/or the entity is indicative of malware.

Below-O/S security agent 6020 may be configured to trap an attempt to copy legitimate function code from memory 6003, copy the function code to a new location such as a newly allocated portion 6034, and then execute the copied code. Such an attempt may be an attempt by malware to run a system function without having to gain authorization from, for example, operating system 6012 or a driver owning the function.

When trapping an attempted operation, below-O/S security agent 6020 may be configured to identify the caller of the operation, based upon contextual information from in-O/S security agent 6019, calling stacks of drivers, and/or memory map 6010. Using security rules 6008, including behavioral rules, whitelists or blacklists, below-O/S security agent 6020 may be configured to determine whether the caller is known to be malicious. If such a malicious status is unknown, then below-O/S security agent 6020 may be configured to allow a write operation to continue. However, below-O/S security agent 6020 may be configured to halt a subsequent execution attempt. Some operations may involve multiple attempted writes to fully load injected code. Below-O/S security agent 6020 may allow such writes before halting execution to fully determine and characterize the code that is injected.

As memory 6003 is allocated, deallocated, or written to by trusted or untrusted entities, below-O/S security agent 6020 may be configured to record such information in memory map 6010. Below-O/S security agent 6020 may mark portions of memory 6003 susceptible to code injection attacks without permission to execute. An attempted execution of such portions of memory 6003 may cause a trapped operation. Below-O/S security agent 6020 may be configured to locate the portion of memory in memory map 6010 associated with the attempted execution and determine the associated entity. Below-O/S security agent 6020 may scan the code bytes for indications of known malware or evaluate the possibly malicious behavior observed in writing the code.

If an attempted loading of code and subsequent attempted execution is determined to be suspicious or otherwise indicative of malware, below-O/S security agent 6020 may be configured to take an suitable corrective action. In one embodiment, below-O/S security agent 6020 may be configured to fill the written code with dummy information, such as "NOOP" instructions or other patterns. In addition, the memory locations of the entity that made the attempts may be filled with dummy information. In another embodiment, below-O/S security agent 6020 may be configured to pass execution on to a remediation engine to clean and quarantine the source and target of the attempts. In yet another embodiment, below-O/S security agent 6020 may be configured to mark the memory locations of the caller and the target with permissions 6032 disallowing read, write, or execution. Similarly, below-O/S security agent 6020 may be configured to trap any subsequent attempted read, write, or execute of the memory locations of the caller or target of the attempts. The memory locations associated with the attempts may be marked as malicious in memory map 6010.

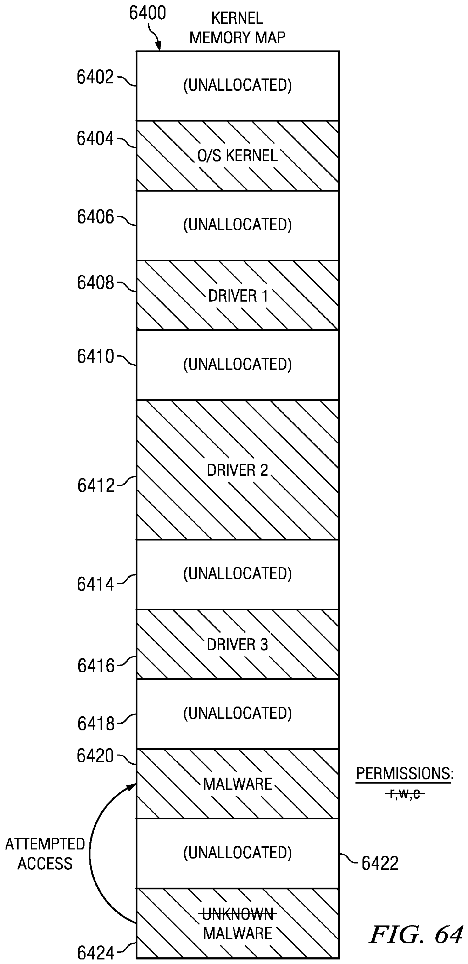

FIGURE 64 is an example embodiment of a memory map 6400, such as memory map 6010 in FIGURE 60 after a portion of memory has been determined to be malicious. Portions 6402, 6406, 6410, 6414, 6418, 6422 of memory map 6400 may be shown as unallocated. The memory map may show locations for operating system kernel 6404, Driver1 6408, Driver2 6412, and Driver3 6416. A portion of memory determined to be associated with a malicious attempt to inject and execute code may be designated as malware 6420. Permissions denying read, write, and execution of the malware section 6420 may be set. Malware section 6420 may reflect, for example, portions of memory into which code was injected or portions of memory from where an injection attempt was made. Subsequently, an attempted access of malware section 6420 from an unknown section 6424 may be trapped by a below-O/S security agent, such as the below-O/S security agent 6020 of FIGURE 60. Such a below-O/S security agent may be configured to set flags for trapping access to portions of memory 6003 corresponding to malware section 6420. For example, an attempt to read code previously written to section 6420 may be made by the unknown section 6424. In another example, an attempt to execute code previously written to section 6420 may be made by the unknown section 6424. A below-O/S security agent may be configured to determine that any such attempted access of memory designated as malware is itself malicious. Thus, a below-O/S security agent may block the attempt and redesignate the previously unknown section 6424 as a malware section 6424. The below-O/S security agent may be configured to take corrective actions on the newly designated malware section 6424, such as filling it with dummy data, passing it to a process for cleaning and quarantining it, marking the malware section 6424 with permissions to deny read, write, or execute access, and/or trapping subsequent access to malware section 6424.

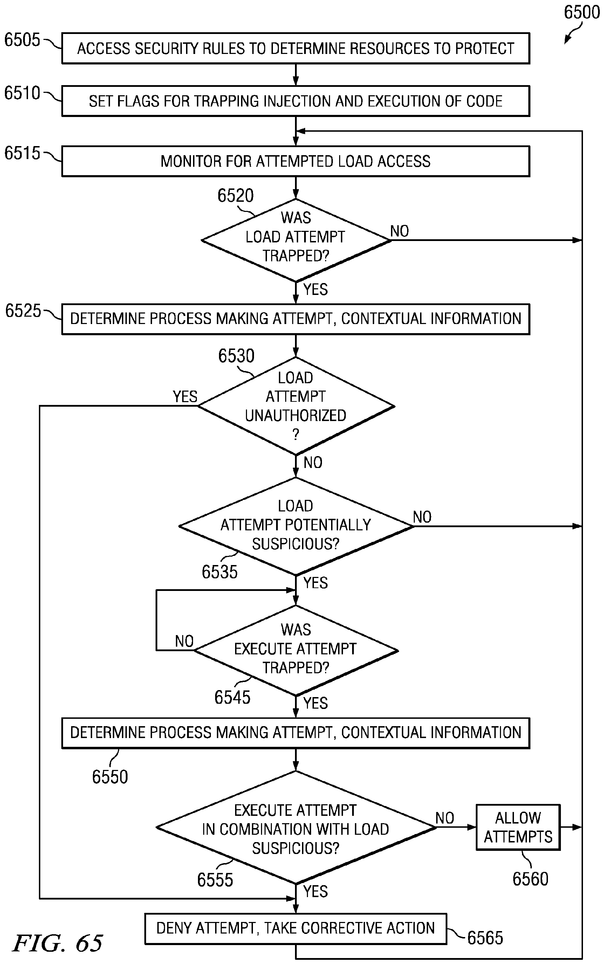

FIGURE 65 is an example embodiment of a method 6500 for below-operating-system trapping of loading and executing code in memory in an electronic device. In step 6505, security rules may be accessed to determine resources associated with loading and executing code in memory. Such security rules may identify the resources, as well as criteria by which attempted access to the resources will be trapped and evaluated.

In step 6510, flags may be set in a control structure below the level of operating systems within the electronic device. Flags may be set, for example, for trapping the attempted injecting of code and subsequent execution. Flags may be set for virtual memory access through memory pages and/or through physical memory access through memory addresses corresponding to the attempts described above.

In step 6515, the electronic device may be monitored for trapped attempts to access the resources associated with the injection of code into memory. In step 6520, if no attempts have been trapped then the process 6500 may proceed to step 6515 to continue monitoring for trapped attempts. If an attempt has been trapped, then the attempt may be handled beginning in step 6525. Such handling may be conducted below the level of operating systems of the electronic device. In step 6525, information useful for analyzing whether the attempt may be malicious may be gathered. For example, the process, application, driver, or routine making the attempt may be determined, as well as the target of the attempt. Contextual information from inside the operating system of the electronic device may be obtained from an in-O/S security agent. If an attempt to inject code was made, then the image of the caller may be scanned.

In step 6530, it may be determined whether the entity making the load or injection attempt is known to be unauthorized to make such an attempt. If so, then in step 6565, the attempt may be denied and any suitable corrective action taken. In not, meaning that the malware status of the entity may yet be unknown, then in step 6535 the load attempt may be allowed, and it may be determined whether the load attempt is potentially suspicious, depending upon the circumstances of subsequent attempted execution. If the load attempt is not potentially suspicious, then the method may proceed to step 6515 to continue monitoring the electronic device.

If the load attempt is still potentially suspicious, then in step 6545 the electronic device may be monitored for a subsequent execution attempt of the code that was written. If no attempts have been trapped then the process 6500 may repeat step 6545 or proceed to step 6515 in parallel to continue monitoring for trapped attempts. If an execution attempt has been trapped, then the attempt may be handled beginning in step 6550. Such handling may be conducted below the level of operating systems of the electronic device. In step 6550, information useful for analyzing whether the execution attempt in combination with the load attempt may be malicious may be gathered. For example, the process, application, driver, or routine making the attempt may be determined, as well as the target of the attempt. Contextual information from inside the operating system of the electronic device may be obtained from an in-O/S security agent. The image of the caller of the execute attempt may be scanned for indications of malware.

In step 6555, it may be determined whether or not the attempted execution in combination with the attempted load indicates malware. If so, then in step 6565 the attempt may be denied and any suitable corrective action taken. If not, then in step 6560 the execution and load attempts may be allowed, and the method 6500 may continue to step 6515 to optionally continue monitoring the electronic device.

Methods 300, 600, 800, 1100, 1400, 1900, 2400, 2500, 2800, 3000, 3200, 3400, 3600, 3700, 4000, 4200, 4300, 4400, 4600, 4900, 5300, 5700, 5900, 6500 may be implemented using any of the systems of FIGURES 1-2, 4-5, 7, 9-10, 12-13, 15-18, 20-23, 26-27, 29, 31, 33, 35, 38-39, 41, 45, 47-48, 50-52, 54-56, 58, or 60-64 or any other system operable to implement methods 300, 600, 800, 1100, 1400, 1900, 2400, 2500, 2800, 3000, 3200, 3400, 3600, 3700, 4000, 4200, 4300, 4400, 4600, 4900, 5300, 5700, 5900, 6500. As such, the preferred initialization point for methods 300, 600, 800, 1100, 1400, 1900, 2400, 2500, 2800, 3000, 3200, 3400, 3600, 3700, 4000, 4200, 4300, 4400, 4600, 4900, 5300, 5700, 5900, 6500 and the order of their respective steps may depend on the implementation chosen. Although FIGURES 3, 6, 8, 11, 14, 19, 24-25, 28, 30, 32, 34, 36-37, 40, 42-44, 46, 49, 53, 57, 59 and 65 disclose a particular number of steps to be taken with respect to example methods 300, 600, 800, 1100, 1400, 1900, 2400, 2500, 2800, 3000, 3200, 3400, 3600, 3700, 4000, 4200, 4300, 4400, 4600, 4900, 5300, 5700, 5900, and 6500, the methods may be executed with more or fewer steps than those depicted in the figures. In addition, FIGURES 3, 6, 8, 11, 14, 19, 24-25, 28, 30, 32, 34, 36-37, 40, 42-44, 46, 49, 53, 57, 59 and 65 disclose a certain order of steps to be taken with respect to the methods, the steps comprising these methods may be completed in any suitable order. Furthermore, some or all steps of methods 300, 600, 800, 1100, 1400, 1900, 2400, 2500, 2800, 3000, 3200, 3400, 3600, 3700, 4000, 4200, 4300, 4400, 4600, 4900, 5300, 5700, 5900, and 6500 may be combined with steps from other the methods. In some embodiments, some steps may be optionally omitted, repeated, or combined. In some embodiments, some steps of one or more of methods 300, 600, 800, 1100, 1400, 1900, 2400, 2500, 2800, 3000, 3200, 3400, 3600, 3700, 4000, 4200, 4300, 4400, 4600, 4900, 5300, 5700, 5900, and 6500 may be executed in parallel with other steps of each other. In certain embodiments, methods 300, 600, 800, 1100, 1400, 1900, 2400, 2500, 2800, 3000, 3200, 3400, 3600, 3700, 4000, 4200, 4300, 4400, 4600, 4900, 5300, 5700, 5900, and 6500 may be implemented partially or fully in software embodied in computer-readable media.

For the purposes of this disclosure, computer-readable media may include any instrumentality or aggregation of instrumentalities that may retain data and/or instructions for a period of time. Computer-readable media may include, without limitation, storage media such as a direct access storage device (e.g., a hard disk drive or floppy disk), a sequential access storage device (e.g., a tape disk drive), compact disk, CD-ROM, DVD, random access memory (RAM), read-only memory (ROM), electrically erasable programmable read-only memory (EEPROM), and/or flash memory; as well as non-transitory communications media; and/or any combination of the foregoing.

One or more of the systems of FIGURES 1-2, 4-5, 7, 9-10, 12-13, 15-18, 20-23, 26-27, 29, 31, 33, 35, 38-39, 41, 45, 47-48, 50-52, 54-56, 58, or 60-64 may be combined with other portions of the same systems.

## Claims

1. A method for securing an electronic device (204) against malware, comprising:
using a first security agent (216) embodied in microcode of a processor of an electronic device (204) to
intercept a communication comprising a request made by an operating system (212) to a resource (214) of the electronic device (204) or information generated from the resource of the electronic device (204), the resource (214) coupled to the processor;
consult one or more security rules; and
based on the one or more security rules, determining whether the communication is indicative of malware,
wherein the communication comprises a processor instruction,
**characterized in that** determining whether the communication is indicative of malware comprises a second security agent (218) embedded in the operating system (212) to monitor for file writes performed by one or more drivers of the operating system (212),
wherein the first security agent (216) monitors input and output commands of the operating system (212), and determines whether more write operations are performed than monitored by the second security agent (218); and
wherein said one or more security rules are determined based on a number of times said one or more drivers are reported by the first security agent (216).

2. The method of Claim 1, wherein the resource comprises physical memory, and determining whether the communication is indicative of malware is based upon whether the request of the physical memory is malicious.

3. The method of Claim 1, wherein the resource comprises a processor flag, and determining whether the communication is indicative of malware is based upon whether the request of the processor flag is malicious.

4. The method of Claim 1, wherein the resource comprises a processor exception, and determining whether the communication is indicative of malware is based upon whether the request of the processor exception is malicious.

5. The method of Claim 1, wherein the resource comprises a register, and determining whether the communication is indicative of malware is based upon whether the request of the register is malicious.

6. The method of Claim 1, wherein the resource comprises a processor interrupt, and determining whether the communication is indicative of malware is based upon whether the request of the processor interrupt is malicious.

7. The method of Claim 1, wherein determining whether the communication is indicative of malware comprises evaluating whether a source address of the processor instruction is indicative of malware.

8. The method of Claim 1, wherein determining whether the communication is indicative of malware comprises evaluating whether a target address of the processor instruction is indicative of malware.

9. The method of Claim 1, wherein determining whether the communication is indicative of malware comprises evaluating whether an operand of the processor instruction is indicative of malware.

10. An article of manufacture comprising:
a computer readable medium; and
computer-executable instructions carried on the computer readable medium, the instructions readable by a processor, the instructions, when read and executed, for causing the processor to execute the method of any of claims 1-9.

11. A system for securing an electronic device, comprising:
a processor comprising microcode;
a resource coupled to the processor; an operating system;
a first security agent embedded in the microcode and a second security agent embedded in the operating system configured to execute the method of claims 1-9.

## Patentansprüche

1. Verfahren zur Sicherung einer elektronischen Vorrichtung (204) gegen Malware, umfassend:
Nutzen eines ersten Sicherheitsagenten (216), der in Mikrocode eines Prozessors einer elektronischen Vorrichtung (204) enthalten ist, um
eine Kommunikation, die eine Anfrage umfasst, die von einem Betriebssystem (212) an eine Ressource (214) der elektronischen Vorrichtung (204) gestellt wird, oder Informationen, die aus der Ressource der elektronischen Vorrichtung (204) erzeugt werden, abzufangen, wobei die Ressource (214) mit dem Prozessor gekoppelt ist;
eine oder mehrere Sicherheitsregeln abzufragen; und
auf Grundlage der einen oder der mehreren Sicherheitsregeln zu ermitteln, ob die Kommunikation auf Malware hinweist,
wobei die Kommunikation eine Prozessoranweisung umfasst,
**dadurch gekennzeichnet, dass** das Ermitteln, ob die Kommunikation auf Malware hinweist, einen zweiten Sicherheitsagenten (218) umfasst, der in das Betriebssystem (212) eingebettet ist, um zu überwachen, ob Dateischreibvorgänge durch einen oder mehrere Treiber des Betriebssystems (212) durchgeführt werden, wobei der erste Sicherheitsagent (216) Eingabe- und Ausgabebefehle des Betriebssystems (212) überwacht und ermittelt, ob mehr Operationen durchgeführt werden, als von dem zweiten Sicherheitsagenten (218) überwacht werden; und
wobei die eine oder mehreren Sicherheitsregeln auf Grundlage einer Anzahl von Malen ermittelt werden, die der eine oder die mehreren Treiber von dem ersten Sicherheitsagenten (216) gemeldet werden.

2. Verfahren nach Anspruch 1, wobei die Ressource physischen Speicher umfasst und das Ermitteln, ob die Kommunikation auf Malware hinweist, darauf beruht, ob die Anfrage des physischen Speichers bösartig ist.

3. Verfahren nach Anspruch 1, wobei die Ressource ein Prozessor-Flag umfasst und das Ermitteln, ob die Kommunikation auf Malware hinweist, darauf beruht, ob die Anfrage des Prozessor-Flags bösartig ist.

4. Verfahren nach Anspruch 1, wobei die Ressource eine Prozessorausnahme umfasst und das Ermitteln, ob die Kommunikation auf Malware hinweist, darauf beruht, ob die Anfrage der Prozessorausnahme bösartig ist.

5. Verfahren nach Anspruch 1, wobei die Ressource ein Register umfasst und das Ermitteln, ob die Kommunikation auf Malware hinweist, darauf beruht, ob die Anfrage des Registers bösartig ist.

6. Verfahren nach Anspruch 1, wobei die Ressource einen Prozessor-Interrupt umfasst und das Ermitteln, ob die Kommunikation auf Malware hinweist, darauf beruht, ob die Anfrage des Prozessor-Interrupts bösartig ist.

7. Verfahren nach Anspruch 1, wobei das Ermitteln, ob die Kommunikation auf Malware hinweist, Bewerten, ob eine Quelladresse der Prozessoranweisung auf Malware hinweist, umfasst.

8. Verfahren nach Anspruch 1, wobei das Ermitteln, ob die Kommunikation auf Malware hinweist, Bewerten, ob eine Zieladresse der Prozessoranweisung auf Malware hinweist, umfasst.

9. Verfahren nach Anspruch 1, wobei das Ermitteln, ob die Kommunikation auf Malware hinweist, Bewerten, ob ein Operand der Prozessoranweisung auf Malware hinweist, umfasst.

10. Fertigungsartikel, umfassend:
ein computerlesbares Medium; und
computerausführbare Anweisungen, die auf dem computerlesbaren Medium getragen werden, wobei die Anweisungen von einem Prozessor gelesen werden können, wobei die Anweisungen dazu dienen, den Prozessor zu veranlassen, das Verfahren nach einem der Ansprüche 1 bis 9 auszuführen, wenn sie gelesen und ausgeführt werden.

11. System zur Sicherung einer elektronischen Vorrichtung, umfassend:
einen Prozessor, der Mikrocode umfasst;
eine Ressource, die mit dem Prozessor gekoppelt ist;
ein Betriebssystem;
einen ersten Sicherheitsagenten, der in den Mikrocode eingebettet ist, und einen zweiten Sicherheitsagenten, der in das Betriebssystem eingebettet ist, der konfiguriert ist, das Verfahren nach den Ansprüchen 1 bis 9 auszuführen.

## Revendications

1. Procédé pour sécuriser un dispositif électronique (204) contre un logiciel malveillant, consistant :
à utiliser un premier agent de sécurité (216) intégré dans un microcode d'un processeur d'un dispositif électronique (204)
pour intercepter une communication comprenant une demande faite par un système d'exploitation (212) à une ressource (214) du dispositif électronique (204) ou des informations générées depuis la ressource du dispositif électronique (204), la ressource (214) étant couplée au processeur,
pour consulter une ou plusieurs règles de sécurité ; et
en se basant sur la ou les règles de sécurité, à déterminer si la communication indique un logiciel malveillant,
dans lequel la communication comprend une instruction de processeur,
**caractérisé en ce que** la détermination que la communication indique un logiciel malveillant comprend un second agent de sécurité (218) intégré dans le système d'exploitation (212) pour surveiller des écritures de fichier réalisées par un ou plusieurs pilotes du système d'exploitation (212),
dans lequel le premier agent de sécurité (216) surveille des commandes d'entrée et de sortie du système d'exploitation (212) et détermine si des opérations d'écriture sont davantage réalisées que surveillées par le second agent de sécurité (218) ; et
dans lequel ladite ou lesdites règles de sécurité sont déterminées en se basant sur un nombre de fois où ledit ou lesdits pilotes sont rapportés par le premier agent de sécurité (216).

2. Procédé selon la revendication 1, dans lequel la ressource comprend une mémoire physique et la détermination que la communication indique un logiciel malveillant est basée sur le fait que la demande de la mémoire physique est malveillante.

3. Procédé selon la revendication 1, dans lequel la ressource comprend un drapeau de processeur et la détermination que la communication indique un logiciel malveillant est basée sur le fait que la demande du drapeau de processeur est malveillante.

4. Procédé selon la revendication 1, dans lequel la ressource comprend une exception de processeur et la détermination que la communication indique un logiciel malveillant est basée sur le fait que la demande de l'exception de processeur est malveillante.

5. Procédé selon la revendication 1, dans lequel la ressource comprend un registre et la détermination que la communication indique un logiciel malveillant est basée sur le fait que la demande du registre est malveillante.

6. Procédé selon la revendication 1, dans lequel la ressource comprend une interruption de processeur et la détermination que la communication indique un logiciel malveillant est basée sur le fait que la demande de l'interruption de processeur est malveillante.

7. Procédé selon la revendication 1, dans lequel la détermination que la communication indique un logiciel malveillant, consiste à évaluer si une adresse source de l'instruction de processeur indique un logiciel malveillant.

8. Procédé selon la revendication 1, dans lequel la détermination que la communication indique un logiciel malveillant, consiste à évaluer si une adresse cible de l'instruction de processeur indique un logiciel malveillant.

9. Procédé selon la revendication 1, dans lequel la détermination que la communication indique un logiciel malveillant, consiste à évaluer si un opérande de l'instruction de processeur indique un logiciel malveillant.

10. Article manufacturé comprenant :
un support lisible par ordinateur ; et
des instructions exécutables par ordinateur réalisées sur le support lisible par ordinateur, les instructions pouvant être lues par un processeur, les instructions, lorsqu'elles sont lues et exécutées, étant destinées à contraindre le processeur à exécuter le procédé selon l'une quelconque des revendications 1 à 9.

11. Système pour sécuriser un dispositif électronique comprenant :
un processeur comprenant un microcode ;
une ressource couplée au processeur ;
un système d'exploitation ;
un premier agent de sécurité intégré dans le microcode et un second agent de sécurité intégré dans le système d'exploitation configurés pour exécuter le procédé selon les revendications 1 à 9.
